(19)

**Europäisches Patentamt**

**European Patent Office**

**Office européen des brevets**

(11) **EP 4 365 086 B1**

(12) **EUROPEAN PATENT SPECIFICATION**

(45) Date of publication and mention
of the grant of the patent:
**21.01.2026 Bulletin 2026/04**

(21) Application number: **23167455.7**

(22) Date of filing: **11.04.2023**

(51) International Patent Classification (IPC):
*F17C 3/00* (2006.01)   *B64D 37/30* (2006.01)
*B64D 37/32* (2006.01)   *B64D 37/14* (2006.01)
*B64D 37/06* (2006.01)

(52) Cooperative Patent Classification (CPC):
**B64D 37/30; B64D 37/06; B64D 37/14;**
**B64D 37/32; F17C 3/00;** F17C 2203/0391;
F17C 2203/0629; F17C 2203/0639;
F17C 2203/0646; F17C 2203/0663;
F17C 2205/0138; F17C 2205/0142;
F17C 2205/0332; F17C 2205/0355;
F17C 2205/0367;               (Cont.)

(54) **INTEGRATED CRYOGENIC HYDROGEN TANK SYSTEMS AND METHODS FOR OPERATING THE SAME**

INTEGRIERTE KRYOGENE WASSERSTOFFTANKSYSTEME UND VERFAHREN ZUM BETRIEB DAVON

SYSTÈMES DE RÉSERVOIR D'HYDROGÈNE CRYOGÉNIQUE INTÉGRÉS ET PROCÉDÉS DE FONCTIONNEMENT DE CEUX-CI

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**

(30) Priority: **07.11.2022 US 202217982114**

(43) Date of publication of application:
**08.05.2024 Bulletin 2024/19**

(73) Proprietor: **General Electric Company**
**Evendale, OH 45215 (US)**

(72) Inventors:
• **MINAS, Constantinos**
**Niskayuna, 12309 (US)**
• **STAUTNER, Ernst Wolfgang**
**Niskayuna, 12309 (US)**

(74) Representative: **Openshaw & Co.**
**8 Castle Street**
**Farnham, Surrey GU9 7HR (GB)**

(56) References cited:
**EP-A1- 3 470 252      EP-A2- 2 466 188**
**US-A- 5 421 162       US-A1- 2008 141 684**
**US-A1- 2009 071 171   US-A1- 2022 136 656**

(52) Cooperative Patent Classification (CPC): (Cont.)
F17C 2221/012; F17C 2223/0161; F17C 2225/0169;
F17C 2227/0107; F17C 2227/0135;
F17C 2227/0157; F17C 2227/0178;
F17C 2227/0304; F17C 2227/0325;
F17C 2227/0339; F17C 2227/0374;

F17C 2227/0393; F17C 2250/01; F17C 2250/03;
F17C 2250/043; F17C 2250/0439; F17C 2250/0631;
F17C 2250/0636; F17C 2260/016; F17C 2260/027;
F17C 2265/017; F17C 2265/031; F17C 2265/065;
F17C 2270/0189

## Description

FEDERALLY SPONSORED RESEARCH

This invention was made with Government support under contract number 80NSSC19M0125 awarded by the National Aeronautics and Space Administration. The Government has certain rights in this invention.

FIELD OF THE DISCLOSURE

This disclosure relates generally to hydrogen aircraft fuel storage and, more particularly, to integrated cryogenic hydrogen tank systems and methods for operating the same.

BACKGROUND

In recent years, hydrogen aircraft have been developed that include multiple onboard cryogenic tanks to store liquid hydrogen fuel. As opposed to some land-based hydrogen vehicles that typical include one onboard cryogenic tank, hydrogen aircraft include multiple tanks to store more fuel while efficiently occupying space in the fuselage and to provide redundancies in the event of tank failure (e.g., pressure build-up, temperature increases above cryogenic limits, etc.). EP 2466188 A2 discloses a thermodynamic pump for providing gaseous hydrogen employing a plurality of liquid hydrogen tanks sequentially pressurized with gaseous hydrogen from an accumulator. US 2009/071171 A1 discloses a cryogenic liquid storage system in which cryogenic liquid is stored within an active cryogenic liquid storage tank and one or more passive cryogenic storage tanks.

BRIEF DESCRIPTION OF THE DRAWINGS

FIG. 1 is an illustration of an example first aircraft that can implement example integrated cryogenic hydrogen tank systems disclosed herein.
FIG. 2 is an illustration of a cross-sectional view of the example first aircraft.
FIG. 3 is an illustration of multiple views of an example second aircraft that can implement the example integrated cryogenic hydrogen tank systems disclosed herein.
FIG. 4 is a schematic illustration of an example cryogenic hydrogen tank that can be included in example integrated cryogenic hydrogen tank systems disclosed herein.
FIG. 5 is a schematic illustration of an example first integrated cryogenic hydrogen tank system, which does not fall within the scope of the claims, in accordance with the teachings disclosed herein.
FIG. 6 is a schematic illustration of an example second integrated cryogenic hydrogen tank system, which does not fall within the scope of the claims, in accordance with the teachings disclosed herein.
FIG. 7 is a schematic illustration of an example third integrated cryogenic hydrogen tank system, which does not fall within the scope of the claims, in accordance with the teachings disclosed herein.
FIG. 8 is a schematic illustration of an example fourth integrated cryogenic hydrogen tank system in accordance with the teachings disclosed herein.
FIG. 9 is a schematic illustration of an example fifth integrated cryogenic hydrogen tank system in accordance with the teachings disclosed herein.
FIG. 10 is an illustration representing thermodynamic properties of liquid hydrogen.
FIG. 11 is a flowchart representative of example machine readable instructions and/or example operations that can be executed by example processor circuitry to implement the example fourth and/or fifth integrated cryogenic hydrogen tank systems of FIGS. 8 and 9.
FIG. 12 is a block diagram of an example processing platform including processor circuitry structured to execute the example machine readable instructions and/or the example operations of FIG. 11 to implement the example fourth and/or fifth integrated cryogenic hydrogen tank systems of FIGS. 8 and 9.
FIG. 13 is a schematic illustration of a fuel tank used in example integrated cryogenic hydrogen tank systems disclosed herein.
FIG. 14 is a schematic illustration of a cross section of the fuel tank shown in FIG. 13 taken along line 14-14 of FIG. 13.
FIG. 15 is a magnified view of the fuel tank showing section 15 of FIG. 14.
FIG. 16 is a magnified view of the fuel tank showing detail 16 of FIG. 14.
FIG. 17 is a cross-sectional perspective view of an inner vessel of the fuel tank shown in FIG. 13 taken along line 14-14 of FIG. 13.

FIGS. 18A to 18C are schematic views illustrating normal operating conditions of an aircraft and an angle of a fuel extraction line of the fuel tank shown in FIG. 13 during those conditions. FIG. 18A illustrates a ground (idle) condition and a cruise condition. FIG. 18B illustrates takeoff and climb. FIG. 18C illustrates descent.

FIG. 19 is a schematic illustration of a system for refueling an onboard cryogenic fuel tank.

FIG. 20A is a schematic illustration of a first example sub-cooling system to refuel example integrated cryogenic hydrogen tank systems disclosed herein.

FIG. 20B is a schematic illustration of a second example sub-cooling system to refuel example integrated cryogenic hydrogen tank systems disclosed herein.

FIG. 20C is a schematic illustration of a third example sub-cooling system to refuel example integrated cryogenic hydrogen tank systems disclosed herein.

FIG. 21 is a flow diagram illustrating an operation of the sub-cooling system.

FIG. 22 is a flow diagram illustrating an operation of a sub-cooler in the sub-cooling system.

FIG. 23 is a flow diagram illustrating example machine readable instructions and/or operations that can be executed and/or instantiated by example processor circuitry to implement a sub-cooler controller that controls the sub-cooler in the sub-cooling system.

FIG. 24 illustrates an example processing platform including processor circuitry structured to execute the example machine readable instructions of FIG. 23.

FIG. 25 illustrates a liquid hydrogen (LH2) pump system connected to an LH2 tank.

FIG. 26 illustrates a phase separator to separate vapor from cryogenic liquid.

FIG. 27 illustrates an example first phase separating LH2 pump system for separating liquid and gaseous hydrogen phases pumped from example integrated cryogenic hydrogen tank systems disclosed herein.

FIG. 28 illustrates an example second phase separating LH2 pump system for separating liquid and gaseous hydrogen phases pumped from example integrated cryogenic hydrogen tank systems disclosed herein.

FIG. 29 illustrates an example phase separator assembly integrated into the example first and/or second phase separating LH2 pump systems of FIGS. 27 and/or 28.

FIG. 30 illustrates an example first chart representing LH2 density and hydrogen vapor density as functions of saturated pressure.

FIG. 31 illustrates an example second chart representing LH2 density, hydrogen vapor density, and temperature as functions of saturated pressure.

FIG. 32 illustrates an example third chart representing LH2 density and hydrogen vapor density as functions of temperature.

FIG. 33 is a flow diagram illustrating an operation of the second example phase separating LH2 pump system of FIG. 28.

FIG. 34 illustrates an example processing platform including processor circuitry structured to execute the example machine readable instructions of FIG. 33.

FIG. 35 is a schematic illustration of an example aircraft having a fuel cell power system to which example integrated cryogenic hydrogen tank systems disclosed herein can be connected.

FIG. 36 is a schematic, cross-sectional illustration of an example gas turbine engine.

FIG. 37 is a schematic, cross-sectional illustration of an example electric fan assembly.

FIG. 38 is a schematic illustration of an example fuel cell power system to which example integrated cryogenic hydrogen tank systems disclosed herein can be connected.

FIG. 39 is a schematic illustration of the an example turbomachine shown along the axial direction.

FIG. 40 is a schematic illustration of the engine in which a bypass airflow passage and low-pressure compressor provide compressed air to the example fuel cell power system.

FIG. 41 is a schematic illustration of the example engine where a bypass airflow passage provides compressed air to the example fuel cell power system.

FIG. 42 is a schematic illustration of an example fuel cell power system with a coolant system.

FIG. 43 is a schematic illustration of the example fuel cell power system with the coolant system and an example startup tank containing hydrogen gas.

FIG. 44 is a schematic illustration of an example fuel cell power system with a power converter and at least one electric machine.

FIG. 45 is a schematic illustration of an example fuel cell power system with a pump motor, a power converter, and a propulsion motor.

FIG. 46 is a schematic illustration of an example fuel cell power system with a liquid hydrogen fuel pump, a pump motor, and a power converter.

FIG. 47 is a flow diagram of a method for operating an aircraft with a fuel cell power system.

FIG. 48 is a simplified illustration including a hydrogen fuel distribution system which can include example integrated cryogenic hydrogen tank systems disclosed herein.

FIG. 49 is a schematic illustration of a first example fuel distribution system which can include example integrated cryogenic hydrogen tank systems disclosed herein.

FIG. 50 is a schematic illustration of a second example fuel distribution system which can include example integrated cryogenic hydrogen tank systems disclosed herein.

FIG. 51 is a block diagram of an example implementation of the controller of FIG. 48.

FIGS. 52A and 52B are diagrams depicting the average mass loss of the fuel distribution systems of FIGS. 49 and/or 50.

FIG. 53 is a flowchart representative of example machine readable instructions and/or example operations that can be executed by example processor circuitry to implement the controller of FIGS. 48 and 51.

FIG. 54 is a block diagram of an example processing platform including processor circuitry structured to execute the example machine readable instructions of FIG. 53 to implement the controller circuitry of FIG. 51.

FIG. 55 is a schematic illustration of an example fuel system that can be connected to example integrated cryogenic hydrogen tank systems disclosed herein.

FIG. 56 is a schematic illustration of an example engine that can be included in the example fuel system of FIG. 55.

FIG. 57 is a schematic illustration of the example fuel system 5500 of FIG. 55 including example compartments.

FIG. 58 is an illustration of an example ventilation device that can be implemented in the example fuel system of FIG. 57.

FIG. 59 is an illustration of an example quick release panel that can be implemented in the example fuel system of FIG. 57

FIG. 60 is an illustration of an example aircraft that can include the example fuel system 5500 of FIG. 57.

FIG. 61 is an illustration of an example engine that can be included in the example aircraft of FIG. 60.

FIG. 62 is a cross-sectional illustration of a portion of the example engine of FIG. 61.

FIG. 63 is a schematic illustration of an example system for controlling the example fuel system of FIG. 57.

FIGS. 64-66 are flowcharts representative of example machine readable instructions and/or example operations that can be executed by example processor circuitry to implement the example fuel system of FIG. 57.

In general, the same reference numbers will be used throughout the drawing(s) and accompanying written description to refer to the same or like parts. The figures are not to scale. Instead, the thickness of the layers or regions may be enlarged in the drawings. Although the figures show layers and regions with clean lines and boundaries, some or all of these lines and/or boundaries may be idealized. In reality, the boundaries and/or lines may be unobservable, blended, and/or irregular.

As used herein, unless otherwise stated, the term "above" describes the relationship of two parts relative to Earth. A first part is above a second part, if the second part has at least one part between Earth and the first part. Likewise, as used herein, a first part is "below" a second part when the first part is closer to the Earth than the second part. As noted above, a first part can be above or below a second part with one or more of: other parts therebetween, without other parts therebetween, with the first and second parts touching, or without the first and second parts being in direct contact with one another.

As used herein, stating that any part (e.g., a layer, film, area, region, or plate) is in any way on (e.g., positioned on, located on, disposed on, or formed on, etc.) another part, indicates that the referenced part is either in contact with the other part, or that the referenced part is above the other part with one or more intermediate part(s) located therebetween.

As used herein, connection references (e.g., attached, coupled, connected, and joined) may include intermediate members between the elements referenced by the connection reference and/or relative movement between those elements unless otherwise indicated. As such, connection references do not necessarily infer that two elements are directly connected and/or in fixed relation to each other. As used herein, stating that any part is in "contact" with another part is defined to mean that there is no intermediate part between the two parts.

Unless specifically stated otherwise, descriptors such as "first," "second," "third," etc., are used herein without imputing or otherwise indicating any meaning of priority, physical order, arrangement in a list, and/or ordering in any way, but are merely used as labels and/or arbitrary names to distinguish elements for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for identifying those elements distinctly that might, for example, otherwise share a same name.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc., may be present without falling outside the scope of the corresponding claim or recitation. As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, or (7) A with B and with C. As used herein in the context of describing structures, components, items, objects and/or things, the phrase "at least one of A and B" is intended to refer to implementations including any of (1) at least one A, (2) at least one B, or (3) at least one A and at least one B. Similarly, as used herein in the context of describing structures, components, items, objects and/or things, the phrase "at least one of A or B" is intended to refer to implementations including any of (1) at least one A, (2) at least one B, or (3) at least one A and at least one B. As used herein in the context of describing the performance or execution of processes, instructions, actions, activities and/or steps, the phrase "at least one of A and B" is intended to refer to implementations including any of (1) at least one A, (2) at least one B, or (3) at least one A and at least one B. Similarly, as used herein in the context of describing the performance or execution of processes, instructions, actions, activities and/or steps, the phrase "at least one of A or B" is intended to refer to implementations including any of (1) at least one A, (2) at least one B, or (3) at least one A and at least one B.

As used herein, singular references (e.g., "a", "an", "first", "second", etc.) do not exclude a plurality. The term "a" or "an" object, as used herein, refers to one or more of that object. The terms "a" (or "an"), "one or more", and "at least one" are used interchangeably herein. Furthermore, although individually listed, a plurality of means, elements or method actions may be implemented by, e.g., the same entity or object. Additionally, although individual features may be included in different examples or claims, these may possibly be combined, and the inclusion in different examples or claims does not imply that a combination of features is not feasible and/or advantageous.

As used herein, "approximately" and "about" modify their subjects/values to recognize the potential presence of variations that occur in real world applications. For example, "approximately" and "about" may modify dimensions that may not be exact due to manufacturing tolerances and/or other real world imperfections as will be understood by persons of ordinary skill in the art. For example, "approximately" and "about" may indicate such dimensions may be within a tolerance range of +/- 10% unless otherwise specified in the below description.

As used herein, the phrase "in communication," including variations thereof, encompasses direct communication and/or indirect communication through one or more intermediary components, and does not require direct physical (e.g., wired) communication and/or constant communication, but rather additionally includes selective communication at periodic intervals, scheduled intervals, aperiodic intervals, and/or one-time events.

As used herein, "processor circuitry" is defined to include (i) one or more special purpose electrical circuits structured to perform specific operation(s) and including one or more semiconductor-based logic devices (e.g., electrical hardware implemented by one or more transistors), and/or (ii) one or more general purpose semiconductor-based electrical circuits programmable with instructions to perform specific operations and including one or more semiconductor-based logic devices (e.g., electrical hardware implemented by one or more transistors). Examples of processor circuitry include programmable microprocessors, Field Programmable Gate Arrays (FPGAs) that may instantiate instructions, Central Processor Units (CPUs), Graphics Processor Units (GPUs), Digital Signal Processors (DSPs), XPUs, or microcontrollers and integrated circuits such as Application Specific Integrated Circuits (ASICs). For example, an XPU may be implemented by a heterogeneous computing system including multiple types of processor circuitry (e.g., one or more FPGAs, one or more CPUs, one or more GPUs, one or more DSPs, etc., and/or a combination thereof) and application programming interface(s) (API(s)) that may assign computing task(s) to whichever one(s) of the multiple types of processor circuitry is/are best suited to execute the computing task(s).

In some examples used herein, "upstream" and "downstream" refer to the location along a fluid flow path relative to the direction of fluid flow. For example, with respect to a fluid flow, "upstream" refers to a location from which the fluid flows, and "downstream" refers to a location toward which the fluid flows. For example, when a system includes a tank and a pump, and when fluid flows from the tank to the pump, then the tank is said to be upstream of the pump, and the pump is said to be downstream of the tank.

The following table of conversion from the Imperial Units to the International Units is to be applied hereinafter:

1 pound= 453.592 g
1 inch=0.0254 m
1 psi= 6894.76 Pa

A system to integrate multiple cryogenic tanks on an aircraft is defined in claim 1. A method is defined in claim 10.

Examples and teachings disclosed herein are summarized for purposes of reading the description below. Example integrated cryogenic hydrogen tank systems ("integrated tank systems") are disclosed herein. Multiple cryogenic tanks are connected together to enable example integrated tank systems disclosed herein to operate as a single vessel on a hydrogen aircraft. A number of (e.g., two, three, six, etc.) example cryogenic hydrogen tanks described below can be fluidly coupled in parallel and/or in series via vacuum jacketed flowlines to freely and/or controllably transmit liquid hydrogen (LH2) and hydrogen vapor (gaseous hydrogen (GH2)) across the example integrate tank systems. Thus, example integrated tank systems disclosed herein can include example LH2 refueling systems to refuel the number of cryogenic tanks substantially simultaneously via a refueling flowline connected to one of the cryogenic tanks. Furthermore, example integrated tank systems disclosed herein can include example phase separating LH2 pump systems to extract LH2 from the number of cryogenic tanks substantially simultaneously via an extraction flowline connected to one of the cryogenic tanks. In some examples, extraction flowlines of example integrated tank systems disclosed herein transmit LH2 and/or GH2 to hydrogen fuel cell power systems to electronically power various onboard systems. Example integrated cryogenic hydrogen tank systems disclosed herein can further include monitoring systems to detect the health and safety of cryogenic hydrogen tanks, flowlines, fuel supply systems, and/or fuel consumption systems associated with disclosed examples. In some examples, integrated tank systems disclosed herein include example fuel systems for detecting and diluting hydrogen leaks that may occur. The example fuel systems include compartments to contain various components of example integrated tank systems. As such, the example fuel systems can detect hydrogen leaks from the example integrated tank systems and dilute the leaks in the compartments.

Hydrogen aircraft use hydrogen fuel (diatomic hydrogen) to eliminate carbon dioxide emissions relative to commercial aircraft that combust hydrocarbon fuels (e.g., Jet-A) for propulsion. However, hydrogen fuel poses a number of challenges as compared with combustible hydrocarbon liquid fuel. For example, in its gaseous form, hydrogen fuel has a much lower power density than Jet-A fuel. Even when hydrogen fuel is stored in the liquid phase, the liquid hydrogen (LH2) fuel requires approximately four times the volume of Jet-A fuel to operate the aircraft over a given range. Moreover, hydrogen fuel has a relatively low boiling point and must be stored at cryogenic temperatures to be maintained in the liquid phase. A storage tank holding liquid hydrogen cryogenically requires more space overall and has an increased weight as compared with a storage tank holding a comparable volume of Jet-A fuel.

To extend a given flight range, hydrogen aircraft can be designed with multiple cryogenic tanks rather than a larger single cryogenic tank to store more LH2 fuel. Increasing the size and capacity of a single onboard cryogenic tank in the aircraft can restrict storage space, passenger space, weight distribution, etc. The larger cryogenic tank can also include more robust designs including stronger materials, thicker wall dimensions, and/or internal support structures. These cumulative weight increases for a single cryogenic tank can far exceed increased weight costs associated with including multiple (e.g., six) onboard cryogenic tanks to supplement aircraft range. However, there can be some challenges when multiple cryogenic hydrogen tanks are included onboard an aircraft to operate as distinct/separate tanks. For example, multiple disparate onboard LH2 tanks may have inconsistent fuel levels during flight, separate refueling lines, separate refueling processes, separate fuel extraction systems, separate monitoring systems, separate pressure safety systems, etc.

For example, when refueling multiple individual cryogenic tanks, each tank may have a separate refueling port, and a refueling line may need to be connected/disconnected to/from each port when refueling each respective tank. Furthermore, after disconnecting from a first tank and before connecting to a second tank, the refueling line is purged to remove any excess LH2 or GH2 that can warm new incoming LH2 fuel from an LH2 fuel supply tank. Similarly, separate cryogenic tanks may have individual extraction lines to transmit LH2 or GH2 fuel to hydrogen engines, fuel management systems, and/or hydrogen fuel cells. Coordinating fuel extraction from separate tanks at disparate times can result in multiple flowlines/valves and/or complex control systems to extract fuel in a manner that would not reduce fuel contents in any one tank more so than another tank, which can cause a weight imbalance on the aircraft.

Furthermore, cryogenic tanks onboard hydrogen aircraft must follow safety standards (e.g., Federal Aviation Administration (FAA), International Organization for Standardization (ISO), etc.) regarding pressure safeguards. For example, an onboard cryogenic tank can be connected to a pressure safety system, which includes a pressure safety valve and a burst disc. The pressure safety valve is included to vent GH2 when vapor pressures rise above a maximum operating pressure (e.g., a safety threshold). The burst disc is included to rupture and quickly expel GH2 in case flow through the pressure safety valve is not fast enough to adequately account for the rising vapor pressures. When using separate, discrete, and/or unconnected cryogenic tanks, individual pressure safety systems can be included and coupled to each tank. Having a separate pressure safety system for each tank can invoke excessive costs, increased weight, decreased space, and design complexities.

In examples disclosed herein, integrated cryogenic hydrogen tank systems are utilized on an example hydrogen aircraft to provide increased LH2 fuel capacity while operating as a single tank system. The example integrated cryogenic hydrogen tank systems include at least two tanks (e.g., two, four, six cryogenic LH2 tanks, etc.) connected via LH2 flowlines and hydrogen vapor flowlines. These example flowlines can communicate (e.g., transfer, transmit, share, etc.) LH2 and GH2 between tanks in the integrated tank system. Thus, when LH2 fuel is being refueled to the first tank, the fuel can propagate to the second tank as well as third, fourth, fifth, sixth tanks, etc. Similarly, when LH2 (or GH2) is extracted from one of the integrated cryogenic hydrogen tanks, the level(s) of LH2 and/or GH2 can remain consistent among the tanks in the integrated system.

In example integrated cryogenic hydrogen tank systems disclosed herein, valves are included in the communication flowlines to isolate one or more tanks from the system. For example, when a first group of tanks (e.g., a first group of three tanks) is isolated from a second group of tanks (e.g., a second group of three tanks), then LH2 fuel can be extracted from the first group and not the second group, or vice versa. When the example first group is low on fuel, LH2 can be trimmed from the second group to redistribute and balance out the integrated tank system. Furthermore, if a first tank in the first group were to fail, uncontrollably leak, depressurize during flight, etc., the first tank can be isolated from the other tanks in the first group of tanks as well as from the second group of tanks. As used herein, "trim," "trimmed," "trimming," or other instances of the term refer to refueling of a first tank by supplying LH2 from one or more other tanks in the example integrated system.

In examples disclosed herein, the first group of tanks in the integrated tank system can be connected to a first pressure safety system and the second group of tanks can be connected to a second pressure safety system. Thus, if one or more of the tanks in the first group were to fail, uncontrollably leak, depressurize during flight, etc., the first group of tanks can be isolated from the second group of tanks and the first pressure safety system can relieve the rising pressures. Accordingly, the second group of tanks can be used for the remainder of the flight, and the second pressure safety system can safeguard the vapor pressures therein. In other words, the example integrated cryogenic hydrogen tank systems disclosed herein can provide redundancies to aircraft fuel storage systems and fuel management system(s).

During storage of the LH2 in the onboard LH2 tank, the hydrogen molecules undergo exothermic reactions causing temperatures to steadily increase. This temperature increase can cause the LH2 to boil, hence the term "boil-off," which is used herein to describe the warming and evaporation process of contained LH2. In other words, despite an insulation quality of the onboard LH2 tank, the temperature of the LH2 can rise, and the LH2 can boil-off. Hydrogen vapor bubbles formed from boil-off can enter extraction flowlines with LH2 fuel and flow downstream to an LH2 pump.

When an example LH2 tank is refueled, the LH2 forms a first portion of the internal volume of the LH2 tank (e.g., 90%), and hydrogen vapor forms a second portion of the internal volume of the LH2 tank (e.g., 10%). As used herein, the "vapor pressure" refers to pressure acting on the interior walls of a tank (e.g., an onboard LH2 tank) and the surface of a liquid (e.g., LH2) within the tank. As used herein, "saturated pressure" refers to the vapor pressure when the LH2 and the hydrogen vapor are in equilibrium. That is, when the evaporation rate of the LH2 is equal to the condensation rate of the hydrogen vapor, the LH2 and the hydrogen vapor are in equilibrium and the vapor pressure is substantially similar to a saturated pressure at the given temperature. The saturated pressure is dependent on the temperature within the tank. Thus, when the temperature of the LH2 remains substantially constant, and when the LH2 settles after a given period (e.g., one hour, two hours, 12 hours, etc.), the LH2 and the hydrogen vapor are considered to be in equilibrium, and the vapor pressure is substantially similar to the saturated pressure.

The saturated pressure can be determined based on the temperature within the tank. Thus, when the onboard LH2 tank is isolated and is left to settle (e.g., without refueling or extracting hydrogen) for a given time (e.g., two hours, three hours, 12 hours, etc.) without heat addition, the temperature can remain substantially similar over time, the evaporation and condensation rates can equalize, and the vapor pressure can become substantially similar (e.g., equal) to the saturated pressure. Alternatively, when heat is added to the tank (e.g., via a thermosiphon loop, a heater, etc.), the evaporation rate of the LH2 increases and causes the vapor pressure to increase above the saturated pressure. In other words, when the temperature of the LH2 increases from a first temperature to a second temperature, the saturated pressure and the evaporation rate increase accordingly. However, the vapor pressure associated with the increased evaporation rate is greater than the saturated pressure associated with the second temperature. During operation, when the vapor pressure becomes substantially similar to the saturated pressure, there is not enough net positive pressure to drive the LH2 into extraction flowlines and cavitation can occur in the LH2. Thus, during operation, the vapor pressure is kept sufficiently higher than the saturated pressure. For example, the vapor pressure is maintained at levels that satisfy a safety threshold and an operational threshold of example integrated tank systems disclosed herein.

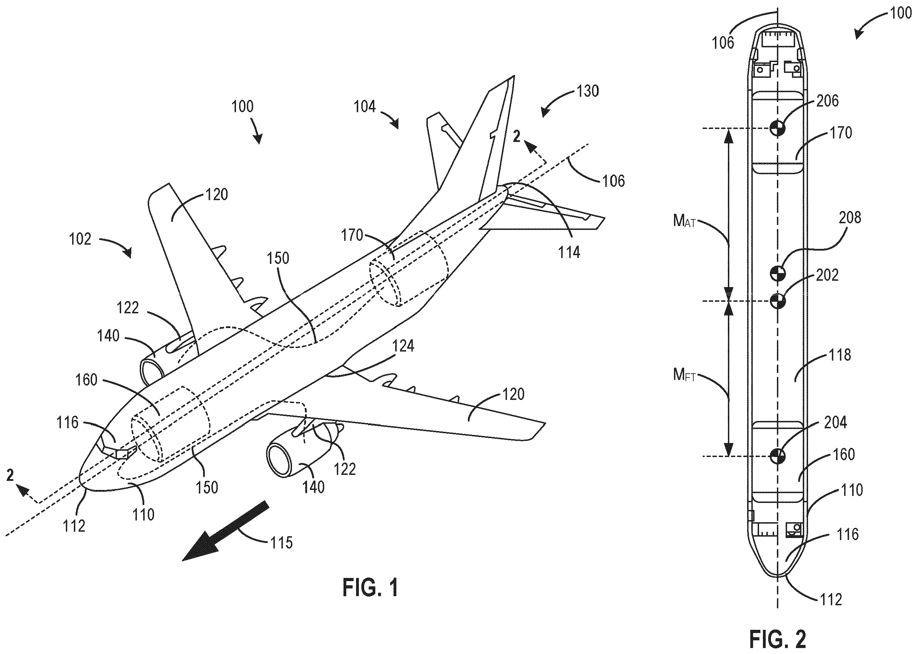

FIG. 1 is an illustration of an example first perspective view of an example first aircraft 100 that can include example integrated cryogenic hydrogen tank systems disclosed herein. The first aircraft 100 includes a forward portion 102 and an aft portion 104 axially aligned along a centerline 106. The first aircraft 100 includes a fuselage 110, wings 120 attached to the fuselage 110, and an empennage 130. In the example of FIG. 1, the first aircraft 100 includes a pair of wings 120, one on a port side of the first aircraft 100 (a port wing) and one on a starboard side of the first aircraft 100 (a starboard wing). Although the first aircraft 100 illustrated in FIG. 1 is a commercial airplane, examples described herein can also be applicable to other types of fixed-wing aircraft, such as cargo aircraft, unmanned aerial vehicles (UAV), etc. The fuselage 110 includes a nose 112 and a tail 114, and the centerline extends axially between the nose 112 and the tail 114. In the example of FIG. 1, the first aircraft 100 is substantially symmetric about the centerline 106. The first aircraft 100 can generate lift to perform flight operations when the aircraft 100 propels itself in a forward direction 115, wherein the forward direction 115 is generally aligned with the centerline 106 and points from the aft potion 104 toward the forward portion 102 of the aircraft 100.

The first aircraft 100 illustrated in FIGS. 1 is a commercial passenger aircraft including a cockpit 116 to allow operation of the first aircraft 100. The first aircraft 100 also includes a passenger compartment 118 to accommodate passenger seating. In the illustrated example, a first cryogenic hydrogen tank 160 ("first tank 160) is placed aft of the cockpit 116 to separate the cockpit 116 from the passenger compartment 118, and a second cryogenic hydrogen tank 170 ("second tank 170") is placed aft of the passenger compartment 118 to separate the passenger compartment 118 from the empennage 130 and the tail 114. In some examples, the first aircraft 100 is a cargo aircraft including storage bays to replace and/or accompany the passenger compartment 118.

The first aircraft 100 also includes a propulsion system that produces a propulsive thrust required to propel the first aircraft 100 in flight, during taxiing operations, and the like. The propulsion system for the first aircraft 100 shown in FIG. 1 includes engines 140. In the example of FIG. 1, the engines 140 are attached to the wings 120 by pylons 122 in an under-wing configuration. Although the engines 140 are shown attached to the wings 120 in an under-wing configuration in FIG. 1, in some other examples, the engines 140 can have alternative configurations and/or can be coupled to other portions of the first aircraft 100. For example, the engines 140 can additionally or alternatively include one or more engines (e.g., engines 140) coupled to other parts of the first aircraft 100, such as, for example, the empennage 130 and the fuselage 110.

The wings 120 are attached to the fuselage 110 at example attachment points 124. As the first aircraft 100 is propelled through the air, the wings 120 generate lift and the resultant lift acts on the first aircraft 100 at a wing center of lift (described below), sometimes also referred to as a center of pressure.

The engines 140 shown in FIG. 1 are hydrogen turbine engines that are each capable of selectively generating a propulsive thrust for the first aircraft 100. The amount of propulsive thrust can be controlled at least in part based on a volume of fuel provided to the hydrogen turbine engines 140 via a fuel system. In some examples, the LH2 fuel is stored in the first cryogenic hydrogen tank 160 and the second cryogenic hydrogen tank 170. The first and second hydrogen tanks 160, 170 are included in example integrated cryogenic hydrogen tank systems disclosed herein and, as such, can communicate LH2 and GH2 between the first and second tanks 160, 170. Example integrated tank systems disclosed herein include a fuel delivery assembly 150 providing the fuel flow from the first tank 160 and/or the second tank 170 to the engines 140, and, more specifically, to a fuel manifold of the combustion section of the turbomachine of the hydrogen turbine engines 140. The fuel delivery assembly 150 includes tubes, pipes, and the like, to fluidly connect the various components of example integrated tank systems to the hydrogen turbine engine 140. The fuel delivery assembly 150 can also include various other components and systems used to distribute LH2 fuel in example integrated tank systems to the gas turbine engines 140, such as pumps, vaporizers, and the like.

Example integrated cryogenic hydrogen tank systems disclosed herein are described as including first tank 160, second tank 170, and/or other cryogenic hydrogen tanks to provide LH2 fuel to be combusted in the hydrogen turbine engines 140. However, in some examples, integrated cryogenic hydrogen tank systems disclosed herein can be used to supply LH2 and/or GH2 to other power systems, such as hydrogen fuel cells, power generators, and/or other electrical generators that rely on hydrogen fuel to function.

Example integrated cryogenic hydrogen tank systems disclosed herein are configured to hold the hydrogen fuel at least partially within the liquid phase and are configured to provide hydrogen fuel to the fuel delivery assembly 150 substantially completely in the liquid phase. However, due to refueling processes, in-flight sloshing, boil-off, etc., the LH2 can include vapor bubbles which can flow into LH2 extraction flowlines. Such vapor bubbles can cause cavitation damage to LH2 pumps driving flow from example integrated tank systems. Thus, example phase separating LH2 pump systems are included in example integrated tank system disclosed herein. Such phase separating LH2 pump systems are described in greater detail below.

As used herein, the term "substantially completely" is used to describe a liquid phase of the hydrogen fuel and refers to a unit mass (e.g., one kilogram (kg), one pound (lb.), etc.) of LH2 that includes near 100% hydrogen in the liquid phase, such as at least 99%, such as at least 97.5%, such as at least 95%, such as at least 92.5%, such as at least 90%, such as at least 85%, or such as at least 75% of LH2 per unit mass. For example, one unit mass of LH2 substantially completely in the liquid phase can include 95% liquid hydrogen and 5% hydrogen vapor bubbles.

To store the hydrogen fuel substantially completely in the liquid phase, the hydrogen fuel is stored in example integrated tank systems at cryogenic temperatures. For example, the first and second tanks 160, 170 can store hydrogen fuel at a temperature of -253 degrees Celsius (°C) (20 Kelvin (K)) and a saturated pressure of 15 pounds per square inch (psi) to maintain the hydrogen fuel substantially completely in the liquid phase. In some examples, example integrated tank systems can store hydrogen fuel at temperatures from -259 °C (14 K) to -243 °C (30 K) and saturated pressures from 0 psi to 122 psi, and in some other examples, at temperatures from -253 °C (20 K) to -243 °C (30 K) and saturated pressures from 15 psi to 122 psi. As noted above, storing hydrogen fuel in the liquid phase within a volume sufficient to power the first aircraft 100 over a range of a typical continental flight, international flight, overseas flight, etc., can require larger cryogenic hydrogen tank(s) (e.g., first tank 160, second tank 170, etc.). However, in examples disclosed herein, integrated cryogenic hydrogen tank systems can include two or more tanks (e.g., with equal or lesser volume) to increase the range of the example first aircraft 100.

FIG. 2 is a schematic illustration of a cross section of the fuselage 110 taken along line 2-2 in FIG. 1. As mentioned above, the wings 120 are configured to generate a center of lift 202. In this example, the first and second cryogenic hydrogen tanks 160, 170 are located entirely within fuselage 110. The first and second tanks 160, 170 are located within the fuselage 110 such that the first and second tanks 160, 170 are substantially equidistant from the wing center of lift 202. As noted above, the first aircraft 100 is symmetrical about the centerline 106 and the wing center of lift 202 is located on the centerline 106. Locating the first and second tanks 160, 170 substantially equidistant in the forward and aft directions from the wing center of lift 202 promotes the balance and stability of the aircraft 100 during flight. More specifically, the first tank 160 defines a first center of gravity 204 and defines a moment arm $M_{FT}$ extending between the wing center of lift 202 and the first center of gravity 204. Likewise, the second tank 170 defines a second center of gravity 206 and defines a moment arm $M_{AT}$ extending between the wing center of lift 202 and the second center of gravity 206. As shown in FIG. 2, the first and second tanks 160, 170 define a third center of gravity 208. In some examples, a position of the third center of gravity 208 is based on a combination of the first center of gravity 204 and the second center of gravity 206. In the illustrated example, the third center of gravity 208 is positioned aft of the wing center of lift 202. However, in some examples, the third center of gravity 208 is aligned with the wing center of lift 202.

The first tank 160 and the second tank 170 are positioned within the fuselage 110 such that the moment arms $M_{FT}$, $M_{AT}$ are balanced when fuel levels therein are substantially similar. When the first and second tanks 160, 170 are separated and not included in example integrated tank systems disclosed herein, the fuel delivery assemblies 150 are to extract LH2 from the first and second tanks 160, 170 substantially simultaneously so as not to significantly unbalance the aircraft 100. Such synchronization can lead to complex control systems of the fuel delivery assemblies 150. Furthermore, when separated, the first and second tanks 160, 170 cannot trim and/or redistribute fuel if fuel extraction becomes unsynchronized. Thus, the first and second tanks 160, 170 can be included in example integrated tank systems disclosed herein to refuel and/or extract LH2 to/from the first and second tanks 160, 170 substantially simultaneously without complex and/or multiple control systems for the fuel delivery assemblies 150.

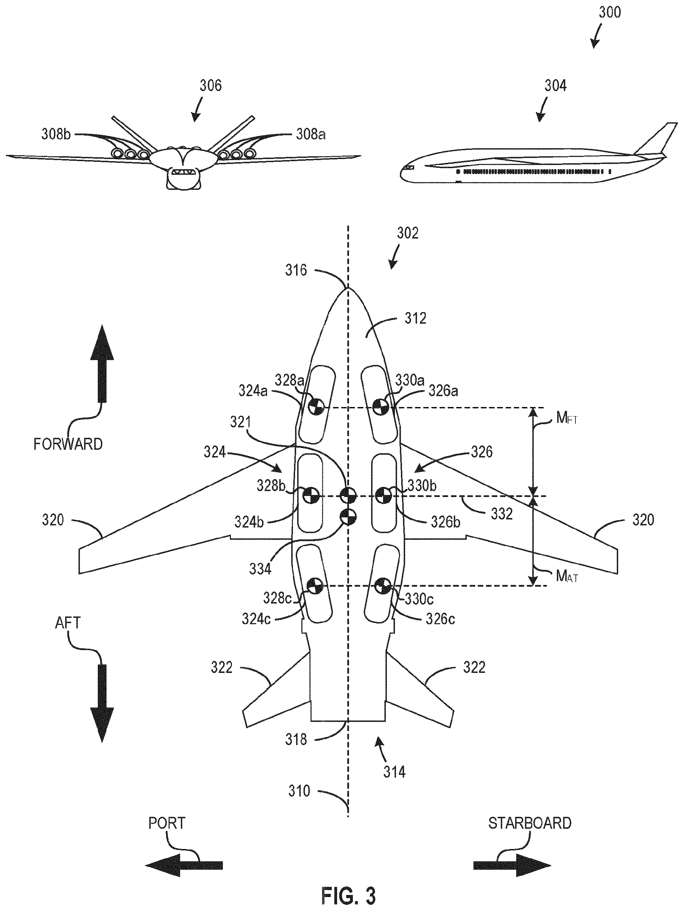

FIG. 3 is an illustration of multiple views of an example second aircraft 300 that can include example integrated cryogenic hydrogen tank systems disclosed herein. The example illustration of FIG. 3 includes a top-down view 302, a side view 304, and a front view 306 of the second aircraft 300. The example top-down view 302 is intended to show placements and/or locations of various elements of the second aircraft 300 relative to such a view but not intended to illustrate a cross-sectional view of the second aircraft 300. For example, the second aircraft 300 includes a first group of engines 308a and a second group of engines 308b that can be viewed in the front view 306 but not in the top-down view 302 or the side view 304. Although the views 302, 304, 306 include viewpoints of the same second aircraft 300, some elements of the example second aircraft 300 (e.g., the first and second groups of engines 308a, 308b) are not included in some or all of the illustrated views 302, 304, 306.

The second aircraft 300 illustrated in FIG. 3 is substantially symmetric about a centerline 310 and includes a fuselage 312 and an empennage 314. The example centerline 310 extends from a nose 316 to a tail 318 of the second aircraft 300. Similar to the example first aircraft 100 (FIGS. 1 and 2), the second aircraft 300 includes wings 320 attached to the fuselage 312, wherein one wing is positioned on a port side of the second aircraft 300 (a port wing), and another wing is positioned on a starboard side of the second aircraft 300 (a starboard wing). As the second aircraft 300 is propelled through the air, the wings 320 generate lift and the resultant lift acts on the second aircraft 300 at a wing center of lift 321, sometimes also referred to as a center of pressure. The example second aircraft 300 also includes stabilizers 322 attached the empennage 314, wherein one stabilizer is positioned on the port side of the second aircraft 300 (a port stabilizer), and another stabilizer is positioned on the starboard side of the second aircraft 300 (a starboard stabilizer). As illustrated in FIG. 3, a forward direction (toward the nose 316), an aft direction (toward the tail 318), a port direction (toward the left side of FIG. 3), and a starboard direction (toward the right side of FIG. 3) are associated with the second aircraft 300. Although the second aircraft 300 shown in FIG. 3 is a commercial passenger aircraft, examples described herein can also be applicable to other fixed-wing aircraft, including, cargo aircraft, unmanned aerial vehicles (UAV), etc.

In some examples, the second aircraft 300 includes a fuel delivery system to provide LH2 fuel from example integrated tank systems to the first and second groups of engines 308a, 308b. The first and second groups of engines 308a, 308b can combust the fuel to generate a propulsive thrust and propel the second aircraft 300 in flight, during taxiing operations, and the like. In the example of FIG. 3, each engine of the first and second groups of engines 308a, 308b is attached to an upper portion of the pair of wings 320 via a pylon or some other connective structure not shown in FIG. 3. Although the first and second groups of engines 308a, 308b are attached to the upper portion of the pair of wings 320 in FIG. 3, in other examples, one or more of the engines of the first and/or second groups of engines 308a, 308b can have alternative configurations and/or can be coupled to other portions of the second aircraft 300.

Similar to the example first aircraft 100 of FIG. 1, the first and second groups of engines 308a, 308b illustrated in FIG. 3 are hydrogen turbine engines that are each able to selectively generate a propulsive thrust for the second aircraft 300. The amount of propulsive thrust can be controlled at least in part based on a volume of liquid hydrogen (LH2) fuel provided to the first and second groups of engines 308a, 308b via an example fuel delivery system. Although the fuel delivery system is not illustrated in FIG. 3, the fuel delivery system included in the second aircraft 300 can include elements (e.g., the fuel delivery assembly 150) that are substantially similar to those illustrated in FIGS. 1 and/or 2.

Example integrated cryogenic hydrogen tank systems disclosed herein can store LH2 fuel in a first group of cryogenic hydrogen tanks 324 ("first group of tanks 324") and a second group of cryogenic hydrogen tanks 326 ("second group of tanks 326"). The first group of tanks 324 includes a first tank 324a, a second tank 324b, and a third tank 324c. The second group of tanks 326 includes a fourth tank 326a, a fifth tank 326b, and a sixth tank 326c. In some examples, the tanks 324a-324c, 326a-326c are substantially similar to the first and second tanks 160, 170 described in connection with FIGS. 1 and 2.

In the illustrated example of FIG. 3, the first and second groups of tanks 324, 326 are located entirely within the fuselage 312. The first and fourth tanks 324a, 326a are positioned forward of the second and fifth tanks 324b, 326b. The third and sixth tanks 324c, 326c are positioned aft of the second and fifth tanks 324b, 326b. As illustrated in FIG. 3, each of the first tank 324a defines a first center of gravity 328a, the second tank 324b defines a second center of gravity 328b, the third tank 324c defines a third center of gravity 328c, the fourth tank 326a defines a fourth center of gravity 330a, the fifth tank 326b defines a fifth center of gravity 330b, and the sixth tank 326c defines a sixth center of gravity 330c. In some examples, the second center of gravity 328b, the fifth center of gravity 330b, and the wing center of lift 321 are substantially aligned along a reference line 332 oriented transverse (or substantially perpendicular) to the centerline 310.

In some examples, the first and second groups of tanks 324, 326 are located in the fuselage 312 such that, relative to the forward and aft directions, the first, third, fourth, and sixth centers of gravity 328a, 328c, 330a, 330c are substantially equidistant from the wing center of lift 321. Similarly, relative to the port and starboard directions, the first, third, fourth, and sixth centers of gravity 328a, 328c, 330a, 330c are substantially equidistant from the centerline 310. An example forward tank moment arm, $M_{FT}$, extends from the wing center of lift 321 to the centers of gravity of the two forward tanks, and an example aft tank moment arm, $M_{AT}$, extends from the wing center of lift 321 to the centers of gravity of the two aft tanks. When the first and second groups of tanks 324, 326 are of substantially similar sizes/geometries, are filled/trimmed to substantially similar LH2 capacities, and are included in example integrated tank systems, the moments generated by the front and aft centers of gravity, the $M_{FT}$, and the $M_{AT}$ are substantially equal. As shown in FIG. 3, the first and second groups of tanks 324, 326 define a seventh center of gravity 334. In some examples, a position of the seventh center of gravity 334 is based on a combination of the first, second, third, fourth, fifth, and sixth centers of gravity 228a-228c, 230a-230c. In the illustrated example, the seventh center of gravity 334 is positioned aft of the wing center of lift 321. However, in some examples, the seventh center of gravity 334 is aligned with the wing center of lift 321.

The second aircraft 300 illustrated in FIG. 3 is a commercial passenger aircraft similar to the first aircraft shown in FIG. 1. However, since the first and second groups of tanks 324, 326 include six tanks, the second aircraft 300 has a longer range than the first aircraft 100 (FIGS. 1 and 2). As mentioned previously, to increase the LH2 fuel capacity and range of hydrogen aircraft, more cryogenic tanks are included rather than developing one larger onboard tank. Having multiple cryogenic tanks distributes fuel weight more evenly throughout the fuselage 312 than a single tank. For example, during takeoff, the second aircraft 300 can pitch up to an angle of attack (e.g., 10 degrees, 15 degrees, etc.). If the second aircraft 300 included one onboard tank to carry the same fuel capacity as six individual tanks, the majority of the LH2 would transfer behind the wing center of lift 321 during takeoff, move a center of gravity of the one onboard tank in the aft direction, and impart some undesirable instability to the second aircraft 300. However, because the second aircraft 300 includes six tanks, the respective centers of gravity 328a-328c, 330a-330c would not shift as significantly in the aft direction during takeoff relative to the example singular onboard tank, thus allowing the second aircraft 300 to maintain controllability and stability during most stages of flight (e.g., takeoff, cruise, landing, etc.).

Some disadvantages and/or challenges arise in hydrogen aircraft (e.g., the first and/or second hydrogen aircraft 100 (FIGS. 1 and 2), 300 (FIG. 3)) with multiple (e.g., two, three, six, etc.) separate cryogenic hydrogen tanks. For example, during a refueling process, individual tanks are filled separately and subsequently via inlet ports on each tank. The refueling process for multiple individual tanks includes connecting a refueling flowline to a first tank, filling the first tank to capacity with LH2, disconnecting the refueling flowline, purging the refueling flowline, connecting the refueling flowline to a second tank in the group of tanks (e.g., the first group of tanks 324a), and repeating the refueling process until each of the individual tanks are filled to capacity.

Another example disadvantage and/or challenge includes a fuel extraction system and/or process associated with the multiple individual tanks. For example, each of the multiple individual tanks include separate outlet valves connected to separate extraction flowlines and/or separate fuel delivery systems leading to a same destination (e.g., main fuel lines, engines, hydrogen fuel cells, etc.). Including extraction flowlines, valves, LH2 pumps, etc. for each individual tank incurs excessive weight and/or financial costs for the first and/or second aircraft 100 (FIGS. 1 and 2), 300 (FIG. 3). Additionally, extracting fuel evenly from the individual tanks such that no one tank contains significantly more or less capacity than the other tank(s) can be complex and inefficient for processor circuitry, memory access, electrical power, etc. associated with control system(s) of the fuel delivery system.

Another example disadvantage and/or challenge associated with multiple individual/separate tanks onboard hydrogen aircraft (e.g., the first and/or second hydrogen aircraft 100 (FIGS. 1 and 2), 300 (FIG. 3)) includes pressure safety systems of the tanks. As mentioned previously, there exists some governmental and/or regulatory organizations that standardize safety precautions that must be held for hydrogen aircraft and/or hydrogen storage devices on said aircraft. One such example precaution is to connect pressure safety system(s) to the onboard cryogenic hydrogen tank(s) without intermediary valves in the connection flowlines. Such example pressure safety systems are described in greater detail below. Thus, hydrogen aircraft with multiple separate cryogenic tanks must also include multiple separate pressure safety systems. Including individual pressure safety systems for each of the multiple individual tanks on the hydrogen aircraft can be spatially, financially, and/or gravitationally excessive.

Example integrated cryogenic hydrogen tank systems and methods for operating the same are disclosed herein. Example integrated tank systems enable hydrogen aircraft (e.g., the first and/or second aircraft 100 (FIGS. 1 and 2), 300 (FIG. 3)) to include multiple cryogenic hydrogen tanks within the fuselage (e.g., fuselage 110 and/or fuselage 312) that operate similarly to a single cryogenic vessel. That is, tanks of example integrated tank systems described herein can be refueled substantially simultaneously from one or more inlet port(s), can be discharged substantially simultaneously from one or more LH2 or GH2 flowlines, and can be protected by one or more pressure safety system(s). Furthermore, tanks included in example integrated tank systems described herein can be maintained at a consistent LH2 fuel capacity and saturated pressure (e.g., via a thermo-siphoning system and/or a heating system) during operation. Example integrated tank systems disclosed herein also enable the cryogenic hydrogen tanks to be isolated from one another such that, if one of the tanks in the system fails (e.g., becomes over/under pressurized), the other tanks in the system are unaffected. Additionally, for example, when LH2 fuel is extracted from the first group of tanks 324a instead of the second group of tanks 324b, LH2 can be trimmed (e.g., via submerged pump(s)) from the second group of tanks 324b to the first group of tanks 324a to redistribute the LH2 and balance the fuel weight in the second aircraft 300.

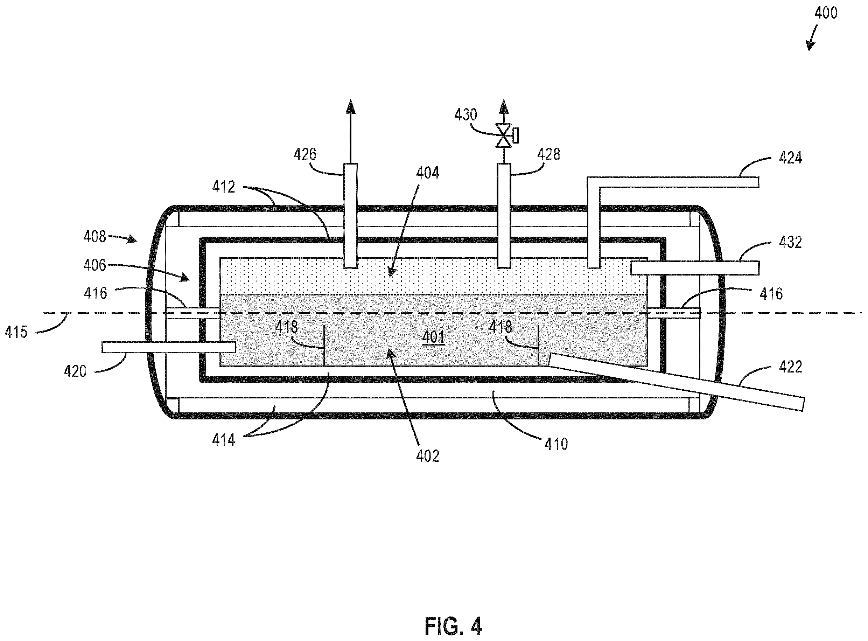

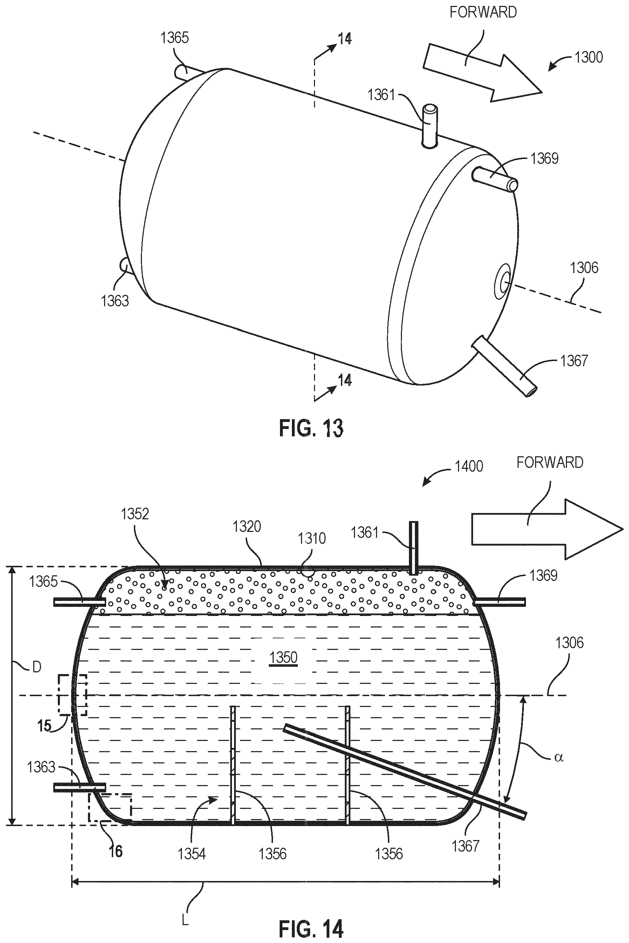

FIG. 4 is a schematic illustration of a cross-section of an example cryogenic hydrogen tank 400 that can be included in example integrated cryogenic hydrogen tank systems disclosed herein. The example cryogenic hydrogen tank 400 ("tank 400") of FIG. 4 can include some or all of the same components, dimensions, structures, etc. as other cryogenic hydrogen tanks described in detail below, such as cryogenic hydrogen tanks described with reference to FIGS. 13-17 and 18A-C. Therefore, example integrated cryogenic hydrogen tank systems disclosed herein can include one or more of the tank 400, other cryogenic hydrogen tank(s) described herein, and/or combinations thereof.

The example tank 400 illustrated in FIG. 4 includes an internal chamber 401 with a lower portion 402 and an upper portion 404. The example lower portion 402 includes the volume of the internal chamber 401 in which LH2 fuel occupies, and the example upper portion 404 includes the volume of the internal chamber 401 in which gaseous hydrogen (GH2) occupies. In some examples, the tank 400 always includes the lower and upper portions 402, 404 because LH2 has a low boiling point (-252.8 °C or 20.35 K) and experiences boil-off when stored at cryogenic temperatures (e.g., temperatures below -180 °C or 93.15 K).

The example tank 400 includes an inner vessel 406, an outer vessel 408, and an insulation layer 410 between the inner and outer vessels 406, 408. The combined use of the inner and outer vessels 406, 408 and the insulation layer 410 enables the tank 400 to maintain internal cryogenic temperatures and to keep hydrogen in the liquid phase without significant and/or excessive warming, boil-off, and/or saturated pressure increases. In some examples, the insulation layer 410 is multi-layer insulation (MLI), which includes multiple (e.g., 5, 10, 30, etc.) layers of thin sheets (e.g., polyimide and/or polyester) and is typically used in vacuum environments (e.g., in space) due to the proficiency of MLI to reduce heat transfer due to radiation. Thus, the insulation layer 410, otherwise referred to as a vacuum layer, is depressurized to near-zero pressures (e.g., $1.322*10^{-11}$ Pascal (Pa)) to maintain the substantially cryogenic temperature of the LH2 fuel.

Additionally, as used herein, the term "vacuum jacketed flowline" refers to a flowline with an MLI medium between an inner flowline and an outer flowline, wherein the MLI medium is depressurized to a near-zero pressure. Example vacuum jacketed flowlines referred to herein can be rigid and/or flexible flowlines and can be connected to tanks, valves, ports, and/or other flowlines via a bayonet connection. An example bayonet connection includes a male bayonet and female port that are precisely manufactured with a low tolerance (e.g., 0.001, 0.005 inches, etc.) to provide a slip fit. Bayonet connections can also include O-ring(s) and clamp(s) to inhibit leakage and insulative materials to inhibit heat loss at the connection.

The example tank 400 illustrated in FIG. 4 includes a composite shell 412 encasing a metallic shell 414 of the inner and outer vessels 406, 408. The example metallic shells 414 provide some strength to the inner and outer vessels 406, 408 of the tank 400 and provide a framework for the composite shell 412 to be wrapped and/or layered around. In some examples, the metallic shells 414 are fabricated from an aluminum-based material. In some examples, the composite shells 412 include alternating orientations of carbon fiber layup sheets. A first layer or a base layer of carbon fiber can be adhered (e.g., with a resin or other adhesive) to the metallic shells 414 in a first orientation (e.g., perpendicular to a central axis 415), a second layer of carbon fiber can be adhered to the first layer in a second orientation (e.g., 45 degrees rotated relative to the first orientation), a third layer can be adhered in a third orientation (e.g., 90 degrees rotated relative to the first orientation or parallel to the central axis 415), and so forth until a sufficient number of layers are overlayed onto the metallic shells 414. In some examples, the sufficient number of layers corresponds to a number of layers that can withstand the pressure differential between atmosphere and the vacuum layer (e.g., for the outer vessel 408) or the pressure differential between the vapor pressure and the vacuum layer (e.g., for the inner vessel 406).

The example tank 400 illustrated in FIG. 4 includes a suspension device 416 to retain a position of the inner vessel 406 within the outer vessel 408. The example tank 400 further includes baffles 418 to inhibit sloshing, currents, or other substantially excessive movements of the LH2 that can cause bubble formation or accelerated boil-off in the LH2. Additionally, the example tank 400 includes an inlet port 420, an LH2 extraction flowline 422, a first GH2 extraction flowline 424, a second GH2 extraction flowline 426, a third GH2 extraction flowline 428, a pressure relief valve 430, and a GH2 (or hydrogen vapor) return flowline 432. As mentioned previously, the inlet port 420, the LH2 extraction flowline 422, the GH2 return flowline 432, and/or the first, second, and/or third GH2 extraction flowlines 424, 426, 428 can be vacuum jacketed flowlines that impede heat transfer from atmosphere to the internal cryogenic conditions.

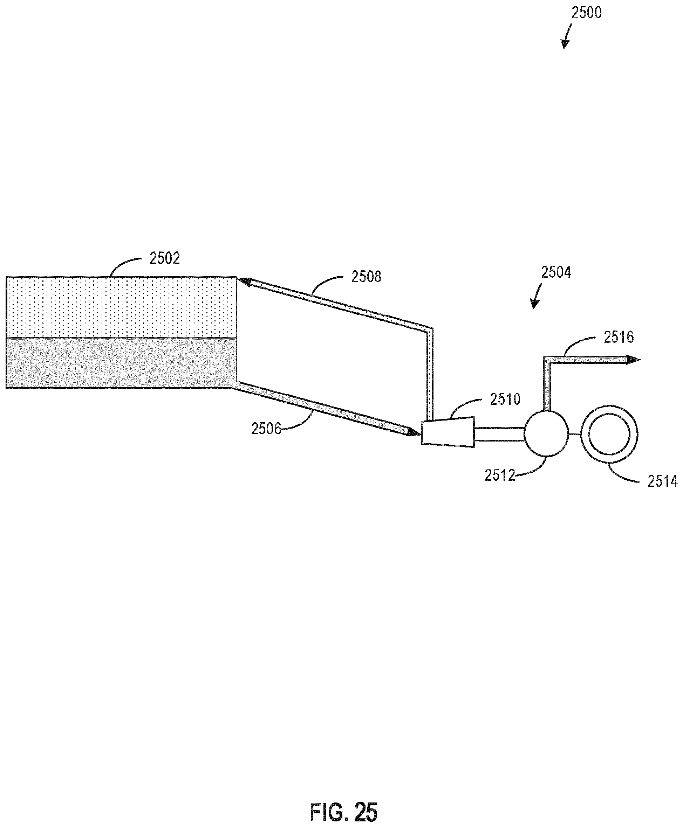

In the illustrated example, the LH2 extraction flowline 422 is fluidly coupled to the lower portion 402 of the internal chamber 101. In some examples, the LH2 extraction flowline 422 is also fluidly coupled to a cryogenic LH2 pump to transmit LH2 to example power generators, such as a fuel cell power system, a gas turbine engine, and/or the like. In some examples, the tank 400, the LH2 extraction flowline 422, and the cryogenic LH2 pump are implemented in an example phase separating LH2 pumping system as described in connection with FIGS. 25-34.

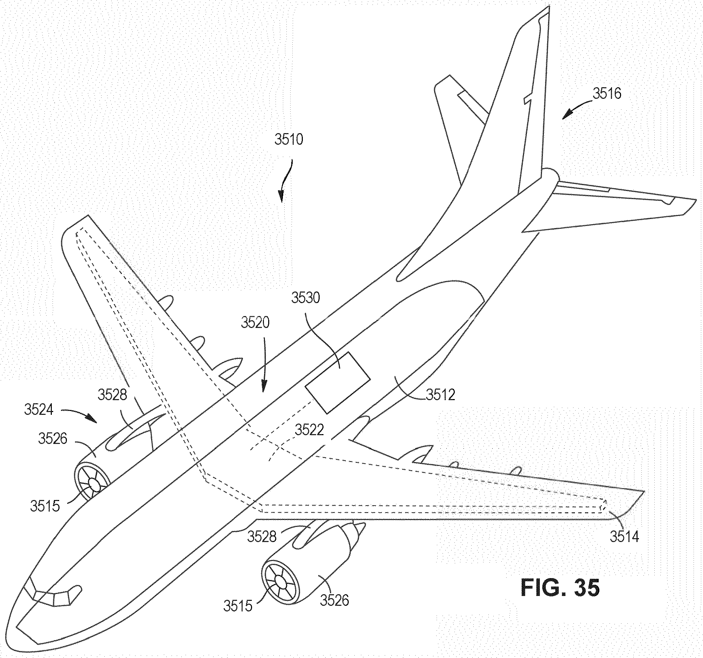

The example second GH2 extraction flowline 426 is included in the tank 400 to discharge hydrogen vapor (GH2) to a power supply system. For example, the second GH2 extraction flowline 426 can lead to a pump and/or compressor that direct(s) GH2 to a hydrogen fuel cell power system where energy released from chemical bonding between hydrogen vapor and oxygen (e.g., extracted from the air) is captured and converted to electrical energy. Example hydrogen fuel cell power systems that can be powered via example integrated tank systems disclosed herein are described in detail below with reference to FIGS. 35-47.

The example third GH2 extraction flowline 428 is included in the tank 400 to release GH2 via the pressure relief valve 430 when the vapor pressure does not satisfy (e.g., exceeds) a safety threshold. In some examples, the safety threshold is a vapor pressure value, such as 150 psi, 175 psi, 200 psi, etc. In some examples, the safety threshold corresponds to some amount of pressure (e.g., 10 psi, 20 psi, 25 psi, etc.) below a catastrophic limit of the tank 400 and/or example integrated tank systems disclosed herein. In some examples, the catastrophic limit corresponds to a saturated pressure (e.g., 200 psi, 225 psi, 250 psi, etc.) or a range of saturated pressures (e.g., between 175 psi and 225 psi, etc.) at which significant damage can occur to the tank 400 and/or example integrated tank systems disclosed herein. Thus, in some examples, the safety threshold corresponds to a vapor pressure or a range of vapor pressures (e.g., between 160 psi and 180 psi) below the catastrophic limit.

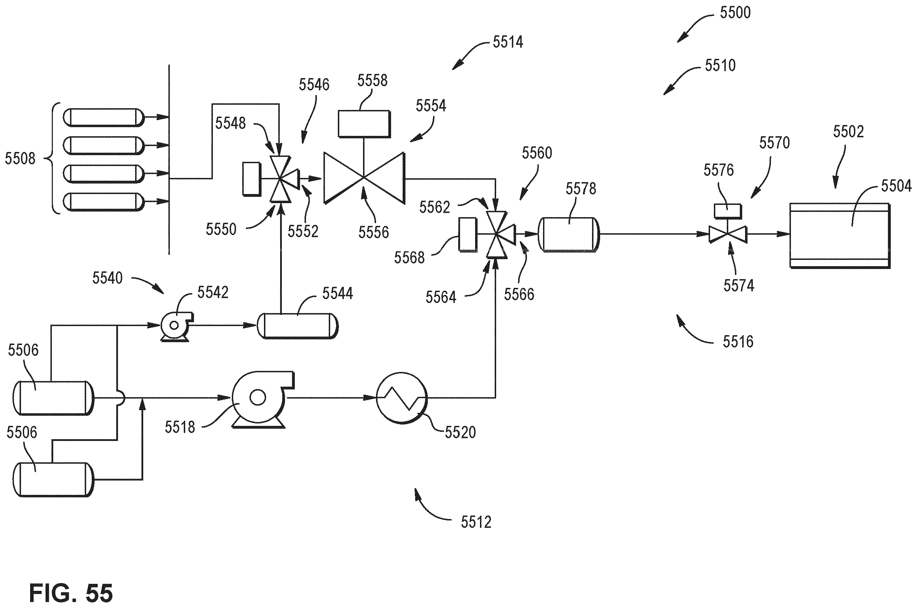

The pressure relief valve 430 can be of a spring-loaded and/or diaphragm configuration that is designed to automatically open in response to the saturated pressure not satisfying the safety threshold and/or exceeding a maximum allowable working pressure (MAWP) of the tank 400. In other words, when the temperature of the LH2 increases, the evaporation rate and the vapor pressure also increases, and, thus, the quantity of GH2 in the upper portion 404 increases due to boil-off. In some examples, the tank 400 includes pressure sensor(s) in the upper portion 404 to measure and/or determine the vapor pressure of the internal chamber 401. When the vapor pressure exceeds the safety threshold (e.g., the MAWP), the pressure relief valve 430 opens/actuates and releases a portion of the GH2 from the upper portion 404. In some examples, as described below, the tank 400 and/or a group of tanks is/are connected to a pressure safety system that also releases GH2 when the vapor pressure does not satisfy the safety threshold. In such examples, the pressure relief valve 430 is included in the tank 400 and/or the group of tanks to open and release GH2 when the vapor pressure does not satisfy another safety threshold (e.g., a second safety threshold) that is less than the safety threshold (e.g., the MAWP) as described above. Thus, in such examples, the pressure relief valve 430 can be included in example integrated tank systems disclosed herein as a safety redundancy. In some examples, the third GH2 extraction flowline 428 leads to another tank for receiving and storing the discharged hydrogen vapor. Additionally or alternatively, the second GH2 flowline 426 and/or the third GH2 extraction flowline 428 can lead to frangible panels on the first aircraft 100 and/or the second aircraft 300 to discharge hydrogen vapor to surrounding atmosphere. Such frangible panels (or quick release panels) are described in greater detail below with reference to FIGS. 55-66.

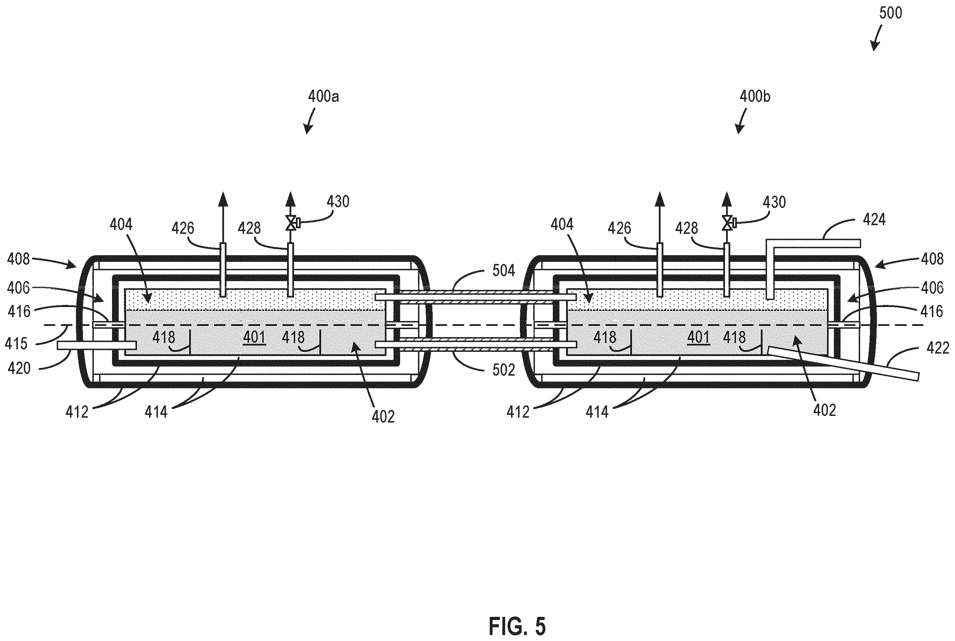

Although not always shown, in some examples, integrated cryogenic hydrogen tank systems illustrated in FIGS. 5-9 can also include the second GH2 extraction flowline 426, the third GH2 extraction flowline 428, and the pressure relief valve 430. Furthermore, example integrated cryogenic hydrogen tank systems illustrated in FIGS. 5-9 include multiple tanks that can correspond to the components, structures, capabilities, etc. of the tank 400 illustrated in FIG. 4, other cryogenic tank(s) described in greater detail below with reference to FIGS. 13-17 and 18A-C, and/or any combination thereof.

FIG. 5 is a schematic illustration of an example first integrated cryogenic hydrogen tank system 500, which does not fall within the scope of the claims, in accordance with teachings disclosed herein. The example first integrated cryogenic hydrogen tank system 500 ("first integrated system 500") includes an example first cryogenic hydrogen tank 400a ("first tank 400a") and an example second cryogenic hydrogen tank 400b ("second tank 400b") that are the same as or similar to the tank 400 as illustrated in FIG. 4 and/or other tank(s) described in reference to FIGS. 13-18. The first and second tanks 400a, 400b of the first integrated system 500 may be implemented as the first and second tanks 160, 170 of FIGS. 1 and 2. Thus, in some examples, the fifth integrated system 500 defines the third center of gravity 208 positioned aft of the wing center of lift 202. Furthermore, the position of the third center of gravity 208 is based on a combination of the first and second centers of gravity 204, 206.

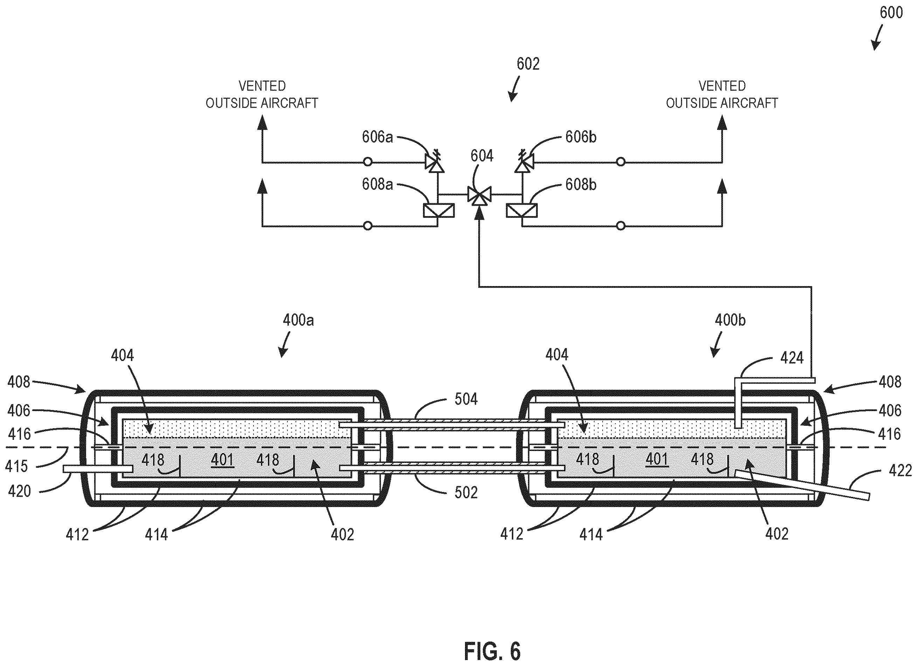

The example first and second tanks 400a, 400b are connected by an example LH2 transfer flowline 502 and an example GH2 transfer flowline 504. The example LH2 and GH2 transfer flowlines 502, 504 are vacuum jacketed flowlines as mentioned previously and as indicated in FIG. 5. Although the example LH2 and GH2 transfer flowlines 502, 504 are shown with an illustrative vacuum layer, in some examples, some or all of the flowlines and/or ports, etc. are also include a vacuum jacketed insulation layer. Furthermore, although the example illustration of FIG. 5 and other examples illustrations of FIGS. 6-9 include one LH2 transfer flowline 502 and one GH2 transfer flowline 504 to connect two cryogenic tanks (e.g.,

the first and second tanks 400a, 400b), there can be one or more LH2 and GH2 transfer flowlines 502, 504 to connect two adjacent cryogenic hydrogen tanks in example integrated systems disclosed herein.

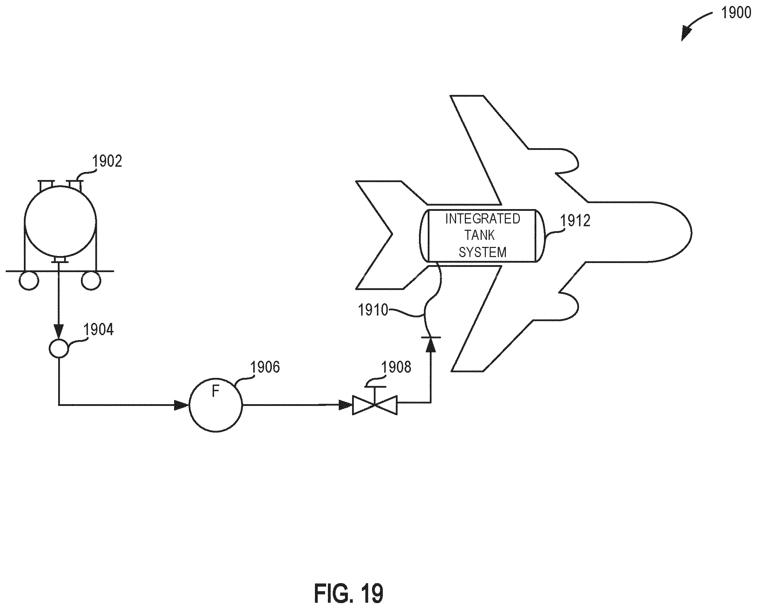

The example first integrated system 500 illustrated in FIG. 5 includes the LH2 transfer flowline 502 to allow LH2 fuel to freely flow between the first and second tanks 400a, 400b. When the first tank 400a is refueled with a sub-cooling LH2 refueling system as described in detail below with reference to FIGS. 19-24, the second tank 400b is refueled substantially simultaneously. Similarly, when LH2 is extracted from the second tank 400b via a phase separating LH2 pump system as described in greater detail below with reference to FIGS. 25-34 to another system (e.g., fuel management system) and/or component (e.g., high-pressure receiver tank), the quantity of LH2 in the lower portions 402 of both the first and second tanks 400a, 400b depletes substantially simultaneously. Thus, the amount of LH2 in the first and second tanks 400a, 400b remains consistent prior to and during flight operations of the first and second aircraft 100 (FIGS. 1 and 2), 300 (FIG. 3) or another example hydrogen aircraft.

The first integrated system 500 includes the GH2 transfer flowline 504 to allow GH2 to freely flow between the first and second tanks 400a, 400b. For example, when LH2 in the lower portion 402 of the first tank 400a generates hydrogen vapor due to boil-off, the hydrogen vapor can enter the upper portion 404 of the second tank 400b, and vice versa. Since quantities of LH2 and GH2 can be consistent between the first and second tanks 400a, 400b, the vapor pressure, saturated pressure, and temperature can likewise be consistent across the first integrated system 500. That is, when thermodynamic properties (e.g., saturated pressure, temperature, etc.) of the first tank 400a change, the corresponding thermodynamic properties of the second tank 400b adjust substantially simultaneously and by a same or similar amount.

FIG. 6 is a schematic illustration of an example second integrated cryogenic hydrogen tank system 600, which does not fall within the scope of the claims, in accordance with teachings disclosed herein. The example second integrated cryogenic hydrogen tank system 600 ("second integrated system 600") includes the first tank 400a, the second tank 400b, the LH2 transfer flowline 502, and the GH2 transfer flowline 504 of FIGS. 4 and 5. The second integrated system 600 also includes a pressure safety system 602 with a switch valve 604, a first pressure safety valve 606a, a second pressure safety valve 606b, a first burst disc 608a, and a second burst disc 608b.

The example pressure safety system 602 releases hydrogen vapor from the second integrated system 600 to outside atmosphere when the vapor pressure does not satisfy (e.g., exceeds) the safety threshold. In some examples, the second integrated system 600 (or another integrated system disclosed herein) includes the pressure relief valve 430 of FIG. 4. In such examples, the pressure safety system 602 is included to quickly release hydrogen vapor when the pressure relief valve 430 does not adequately account for the rate of rising vapor pressure. In other words, in such examples, the pressure safety system 602 can release GH2 when the vapor pressure does not satisfy a second safety threshold that is some amount (e.g., 5 psi, 10 psi, 20 psi, etc.) above the safety threshold described herein.

When the vapor pressure in the first and/or second tank 400a, 400b do(es) not satisfy (e.g., exceed(s)) the safety threshold, the pressure safety system 602 can take effect. In some examples, the first and second pressure safety valves 606a, 606b are designed to fully open automatically (e.g., via a deadweight, collapsible gate, etc.) in response to pressure(s) at or above the safety threshold. In some examples, unlike the pressure relief valve 430, the first and second pressure safety valves 606a, 606b open in an irreversible manner such that the first and second pressure safety valves 606a, 606b cannot close when upstream pressure reduces and/or satisfies the safety threshold.

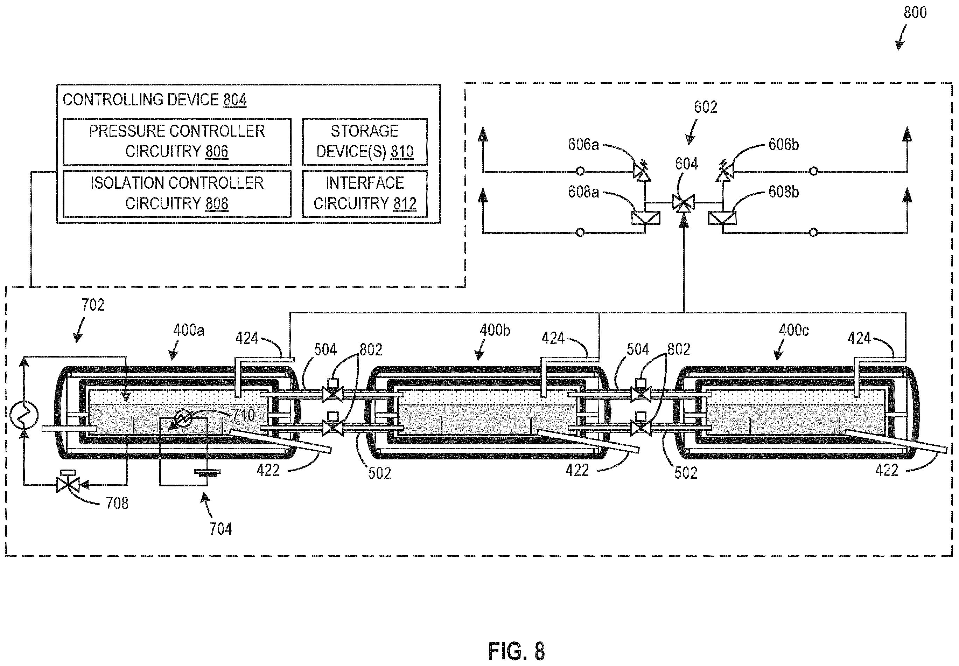

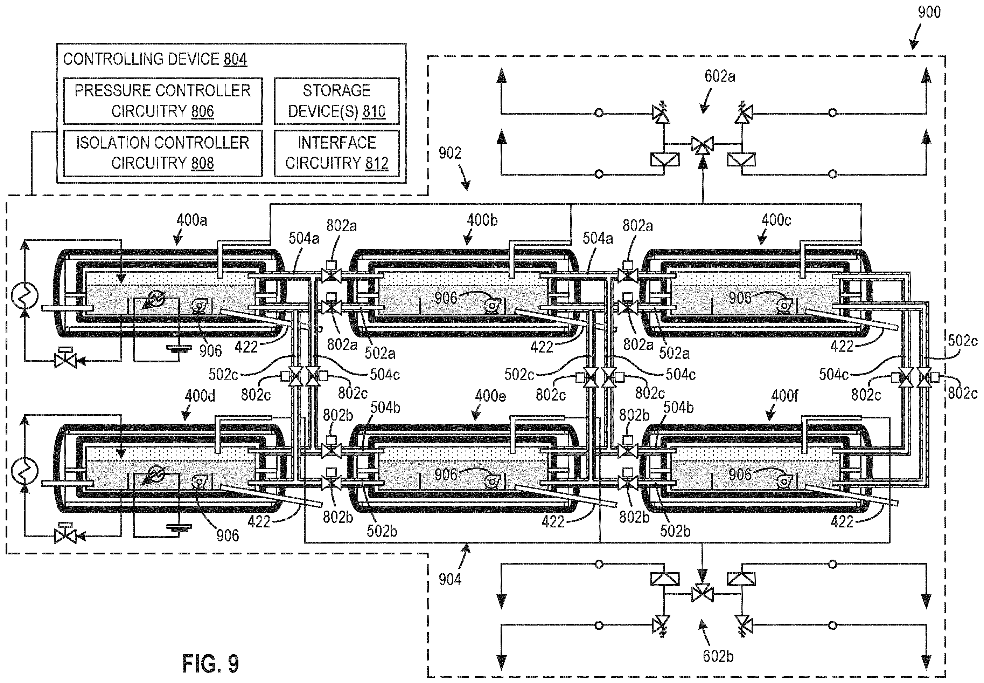

The example pressure safety system 602 illustrated in FIG. 6 includes the example switch valve 604 to divert the GH2 to either the first pressure safety valve 606a and the first burst disc 608a or the second pressure safety valve 606b and the second burst disc 608b. The switch valve 604 can be actuated by example control systems described below with reference to FIGS. 8 and/or 9. As mentioned previously, some safety regulations standardize that there can be no valves between a cryogenic tank (e.g., the second integrated system 600) and a pressure safety system (e.g., the pressure safety system 602). Similarly, there are regulations in place that mandate routine maintenance and checks to the components of the pressure safety system 602. Thus, when viability checks are performed on the first pressure safety valve 606a and the first burst disc 608a, the switch valve 604 directs the GH2 to the second pressure safety valve 606b and the second burst disc 608b, and vice versa.

As mentioned previously, the example pressure safety system 602 includes the example first and second pressure safety valves 606a, 606b to automatically actuate to a fully open state to release hydrogen vapor when the vapor pressure does not satisfy the safety threshold. The first and second pressure safety valves 606a, 606b differ from the example pressure relief valve 430 (FIG. 5) in that the pressure relief valve 430 is designed to gradually open in response to a change in the vapor pressure. In some examples, the vapor pressure increases at such a rate that the pressure relief valve 430 cannot open quickly enough to discharge the excess GH2. In some examples, a mechanism of the pressure relief valve 430 fails and prevents the pressure relief valve 430 from opening to an intended aperture. In either example, the first and second pressure safety valves 606a, 606b are designed to fully open when the pressure relief valve 430 cannot adequately regulate the vapor pressure to a value that satisfies the safety threshold.

In some examples, the first and/or second pressure safety valves 606a, 606b do not open quickly enough and/or a mechanism of the valve(s) may fail to operate as intended. The example pressure safety system 602 includes the example first and second burst discs 608a, 608b as safeguards against such example cases. The example first and second burst discs 608a, 608b include a one-time-use membrane made of one or more layers of metal and/or other materials. The example membrane is designed to rupture at a given pressure differential and can rupture near instantaneously (e.g., within one millisecond) when the vapor pressure no longer satisfies the safety threshold. In some examples, the first and second burst discs 608a, 608b are designed to another safety threshold (e.g., a third safety threshold) which is a value (e.g., 1 psi, 3 psi, 5 psi, etc.) greater than the safety threshold (or the example second safety threshold mentioned previously) to provide the first and/or second pressure safety valves 606a, 606b with some time to open prior to the burst discs rupturing.

As mentioned previously, in some examples, the second GH2 extraction flowline 426, the third GH2 extraction flowline 428, and the pressure relief valve 430 as described with regard to FIGS. 4 and 5, can be included in the second integrated system 600 of FIG. 6. Additionally or alternatively, one or more other flowlines and/or relief valves can be included in the second integrated system 600 to provide the GH2 to a power management system or to regulate the vapor pressure to satisfy the safety threshold or an operational threshold.

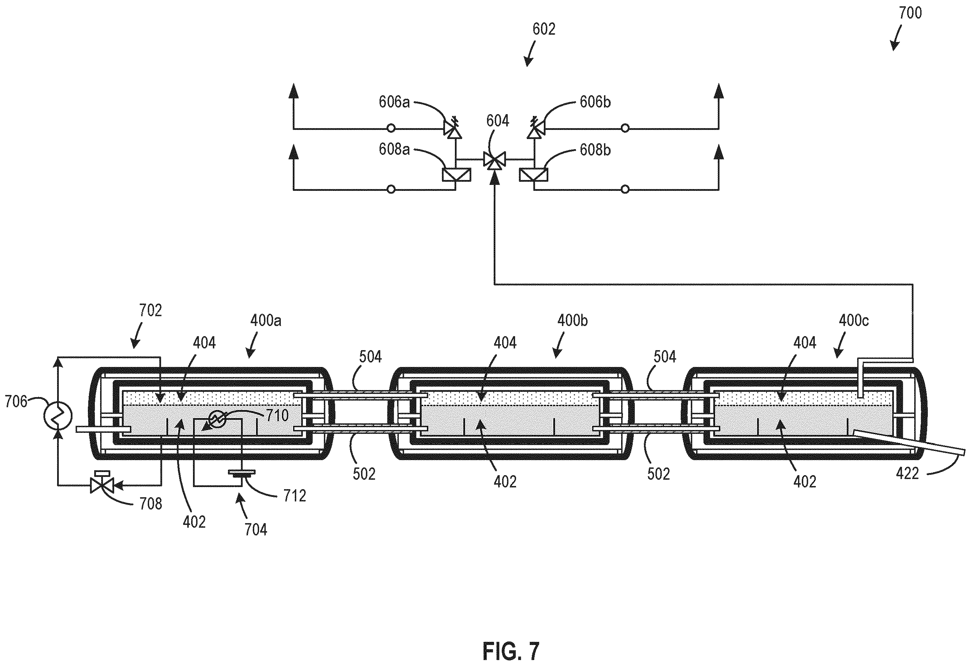

FIG. 7 is a schematic illustration of an example third integrated cryogenic hydrogen tank system 700, which does not fall within the scope of the claims, in accordance with teachings disclosed herein. The example third integrated cryogenic hydrogen tank system 700 ("third integrated system 700") includes the first tank 400a, the second tank 400b, the LH2 transfer flowline 502, the GH2 transfer flowline 504, and the pressure safety system 602 of FIGS. 4-6. The third integrated system 700 also includes a third cryogenic hydrogen tank 400c ("third tank 400c"), a thermosiphon loop 702, and a heating system 704. The example thermosiphon loop 702 includes a heat exchanger 706 and an automatic valve 708. The example heating system 704 includes a heater 710, and a battery cell 712. As mentioned previously with regard to other systems, components, capabilities, etc. of the illustrative examples of FIGS 4-6, the thermosiphon loop 702 and the heating system 704 can be included in some or all of the example integrated cryogenic hydrogen tank system disclosed herein.

The example third integrated system 700 illustrated in FIG. 7 includes the thermosiphon loop 702 and the heating system 704 to regulate the vapor pressure within the third integrated system 700. In some examples, the LH2 extraction flowline 422 directs the LH2 fuel to a phase separating LH2 pump system described in reference to FIGS. 25-34 to pressurize the LH2 fuel for a high-pressure receiver tank, a fuel delivery assembly, a fuel management system, etc. To ensure that LH2 is driven toward the LH2 pump via the LH2 extraction flowline 422, there must be a net positive suction head (NPSH) in the third integrated system 700. In other words, the vapor pressure is intended to be sufficiently high enough to drive the LH2 into the LH2 extraction flowline 422 and the example LH2 pump. Thus, the thermosiphon loop 702, and more particularly, the automatic valve 708 opens when the vapor pressure does not satisfy an operational threshold (e.g., when the NPSH is too low). In some examples, the operational threshold is a vapor pressure value (e.g., 50, 60, 75 psi, etc.) associated with an increased temperature and/or evaporation rate of the LH2. For example, an example control system (e.g., as described below in reference to FIGS. 8 and 9) can detect (e.g., via an example pressure sensor) that the vapor pressure is 50 psi. Furthermore, the example control system can recognize that the operational threshold for the example third integrated system 700 is 60 psi and that the saturated pressure does not satisfy the operational threshold. In such an example, the control system can open the automatic valve 708 to direct LH2 to the example heat exchanger 706.

The example thermosiphon loop 702 includes the heat exchanger 706 to convert the LH2 to hydrogen vapor by introducing heat to the LH2. The example heat exchanger 706 uses a fluid heat source (e.g., water, oil, supercritical carbon dioxide, etc.) that can transfer heat to the LH2 and cause the LH2 to boil-off at a designated rate. The heat exchanger 706 can control the temperature and pressure of the output hydrogen vapor based on the temperature of the fluid heat source, the amount of LH2 exposed to the heat source in the heat exchanger 706, the amount of LH2 that the automatic valve 708 discharges, the flowrate of the LH2 in the heat exchanger 706, etc. The example heat exchanger 706 can output hydrogen vapor at a pressure that is greater than a current vapor pressure within the third integrated system 700 such that GH2 flows back into the upper portion 404 of the third integrated system 700 until the vapor pressure satisfies (e.g., is greater than or equal to) the operational threshold. As illustrated in FIG. 7, the example thermosiphon loop 702 is connected to the first tank 400a. However, in some examples, one or more other thermosiphon loops 702 can be included in the second and/or third tanks 400b, 400c. Additionally or alternatively, more heat exchangers 706 can be included in the thermosiphon loop 702 either in series or in parallel to adjust a vapor pressure output or to increase a rate at which the thermosiphon loop 702 increases the vapor pressure in the third integrated system 700.

The example third integrated system 700 includes the heating system 704 to complement the thermosiphon loop 702 and accelerate the increase of the saturated pressure. The heating system 704 is also included as a redundancy in case the thermosiphon loop 702 or one or more components therein fail(s) to function as intended. For example, the thermosiphon loop 702 may not produce hydrogen vapor at a high enough vapor pressure to drive the GH2 back into the third integrated system 700. In another example, the automatic valve 708 may fail to open causing the thermosiphon loop 702 to produce any hydrogen vapor. Thus, the example heating system 704 can supplement or replace the thermosiphon loop 702. The example heating system 704 includes the example heater 710 to increase the temperature of the LH2 and cause the rate of boil-off (evaporation rate) to increase. As the rate of boil-off increases, more hydrogen vapor is created, which accordingly increases the vapor pressure within the third integrated system 700. In some examples, one or more other heaters 710 are included in the second and/or third tanks 400b, 400c. The example heating system 704 includes the battery cell 712 to provide electrical power to the heater 710 for operation.

FIG. 8 is a schematic illustration of an example fourth integrated cryogenic hydrogen tank system 800 in accordance with teachings disclosed herein. The example fourth integrated cryogenic hydrogen tank system 800 ("fourth integrated system 800") includes the first tank 400a, the second tank 400b, the third tank 400c, the LH2 transfer flowlines 502, the GH2 transfer flowlines 504, the pressure safety system 602, the thermosiphon loop 702, and the heating system 704 of FIGS. 4-7. The fourth integrated system 800 also includes a plurality of example isolation valves 802 and an example controlling device 804. The controlling device 804 includes pressure controller circuitry 806, isolation controller circuitry 808, storage device(s) 810, and interface circuitry 812. As mentioned previously with regard to other systems, components, capabilities, etc. of the illustrative examples of FIGS. 4-7, the isolation valves 802 and/or the controlling device 804 can be included in some or all of the example integrated cryogenic hydrogen tank systems disclosed herein.

The example fourth integrated system 800 illustrated in FIG. 8 includes the isolation valves 802 to prevent LH2 and/or GH2 from transferring between adjacent cryogenic tanks (e.g., between the first and second tanks 400a, 400b and/or between the second and third tanks 400b, 400c). The isolation valves 802 can be automatic valves, and the controlling device 804 can electronically actuate one or more of the isolation valves 802 to open and/or closed positions based on conditions within the fourth integrated system 800. As illustrated in FIG. 8, the isolation valves 802 are interposed between the first, second, and third tanks 400a-c.

In an example use case of the fourth integrated system 800, all isolation valves 802 are initially open to synchronize conditions across the fourth integrated system 800, and the vapor pressure in the third tank 400c rapidly rises to a level that no longer satisfies the safety threshold. Even though conditions (e.g., temperature and pressure) in the second and first tanks 400b, 400a eventually increase, the conditions in the third tank 400c increase to the safety threshold first, indicating that the third tank 400c is the origin of the high-pressure event. Therefore, the controlling device 804 causes the isolation valves 802 between the second tank 400b and the third tank 400c to close. The pressure safety system 602 can release the pressure in the third tank 400c such that significant damage(s) do(es) not occur. Thus, the third tank 400c is depressurized, the isolation valves 802 between the second and third tanks 400b, 400c are closed, and GH2 from the first and second tanks 400a, 400b can flow into the third tank 400c via the GH2 extraction flowlines 424. Therefore, the vapor pressure can still be consistent across the fourth integrated system 800. Furthermore, LH2 extraction flowlines 422 are included in each of the first, second, and third tanks 400a, 400b, 400c to allow LH2 fuel to still be extracted from the fourth integrated system 800 when one or more of the isolation valves 802 are closed.

The example fourth integrated system 800 illustrated in FIG. 8 includes the controlling device 804 to open or close the isolation valves 802, change the directed flow of the switch valve 604, open or close the automatic valve 708, control the temperature output of the heater 710, etc. The example controlling device 804 may be instantiated (e.g., creating an instance of, bring into being for any length of time, materialize, implement, etc.) by processor circuitry such as a central processing unit executing instructions. Additionally or alternatively, the controlling device 804 of FIG. 8 may be instantiated (e.g., creating an instance of, bring into being for any length of time, materialize, implement, etc.) by an application-specific integrated circuit (ASIC) or a field-programmable gate array (FPGA) structured to perform operations corresponding to the instructions. It should be understood that some or all of the circuitry of FIG. 8 may, thus, be instantiated at the same or different times. Some or all of the circuitry may be instantiated, for example, in one or more threads executing concurrently on hardware and/or in series on hardware. Moreover, in some examples, some or all of the circuitry of FIG. 8 may be implemented by microprocessor circuitry executing instructions to implement one or more virtual machines and/or containers.

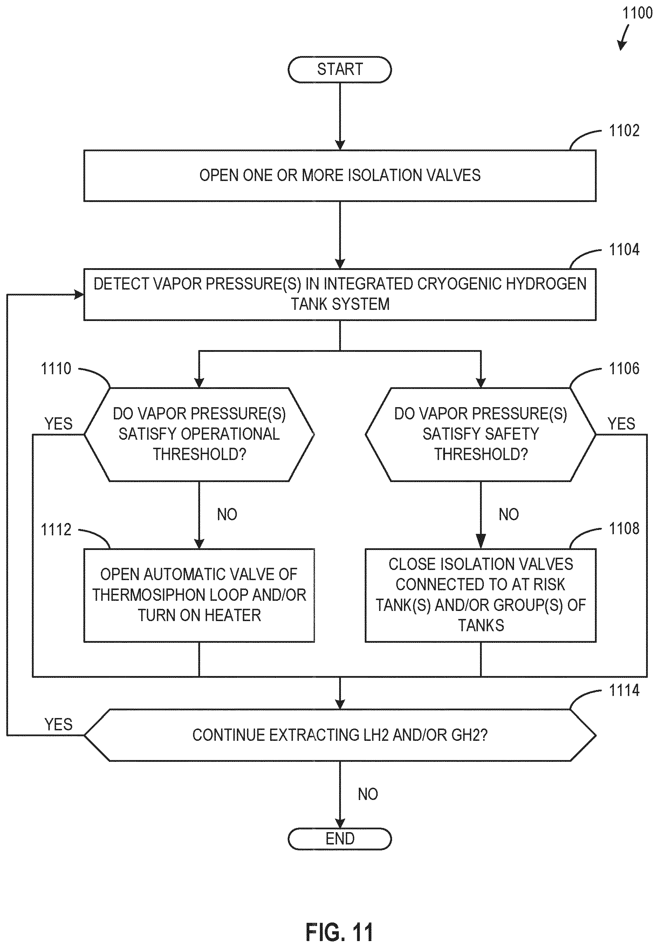

The controlling device 804 includes the example pressure controller circuitry 806 to detect vapor pressure(s) within the fourth integrated system 800, determine whether the vapor pressure(s) satisfy the operational threshold, and/or to cause the thermosiphon loop 702 and/or the heating system 704 to increase the vapor pressure in the fourth integrated system 800 when the vapor pressure(s) do not satisfy the operational threshold. In some examples, the pressure controller circuitry 806 is instantiated by processor circuitry executing pressure controller instructions and/or configured to perform operations such as those represented by the flowchart of FIG. 11. The example pressure controller circuitry 806 can be closed loop controlling hardware or can execute closed loop controlling instructions to continually (e.g., every five, 30, 60 seconds, etc.) monitor the vapor pressures (e.g., via pressure sensors) in respective tanks (e.g., the first, second, third tanks 400a, 400b, 400c, etc.) of the fourth integrated system 800. In some examples, the pressure controller circuitry 806 obtains and/or determines the operational threshold(s) based on written instructions and/or operations stored in memory (e.g., storage device(s) 810). In some other examples, the pressure controller circuitry 806 obtains and/or determines the operational threshold(s) based on input(s) to the controlling device 804 from a user, operator, pilot, co-pilot, etc.

In yet some other examples, the operational threshold corresponds to a difference between the vapor pressure and the saturated pressure, such as 1 psi, 5 psi, 10 psi, 25 psi, etc. In such examples, the fourth integrated system 800 can include one or more temperature sensors in the tanks 400a-c, and the pressure controller circuitry 806 can determine the saturated pressure based on the measured temperature of the LH2 in the fourth integrated system 800. In such examples, the pressure controller circuitry 806 can determine whether the difference between the vapor pressure and the saturated pressure satisfies the operational threshold and, when the difference does not satisfy the operational threshold, cause the thermosiphon loop 702 and/or the heating system 704 to increase the vapor pressure until the operational threshold is satisfied.

The example pressure controller circuitry 806 can determine whether the vapor pressure satisfies the operational threshold. For example, the operational threshold of the fourth integrated system 800 can be a vapor pressure of 50 psi. In such an example, the pressure controller circuitry 806 determines that the vapor pressure is 45 psi based on pressure measurements via one or more pressure sensor(s). Since the current vapor pressure does not satisfy the operational threshold, the pressure controller circuitry 806 causes the automatic valve 708 of the thermosiphon loop 702 to open and/or causes the heater 710 of the heating system 704 to activate, in turn, causing the vapor pressure to increase until the operational threshold is satisfied.

The controlling device 804 includes the example isolation controller circuitry 808 to detect vapor pressure(s) within the fourth integrated system 800, determine whether the vapor pressure(s) satisfy the safety threshold, cause one or more isolation valves 802 to open such that LH2 and/or GH2 is evenly extracted from the fourth integrated system 800, and/or cause one or more isolation valves 802 to close when the vapor pressure(s) do not satisfy the safety threshold. In some examples, the isolation controller circuitry 808 is instantiated by processor circuitry executing isolation controller instructions and/or configured to perform operations such as those represented by the flowchart of FIG. 11. The example isolation controller circuitry 808 can be closed loop controlling hardware or can execute closed loop controlling instructions to continually monitor the vapor pressures in respective tanks of the fourth integrated system 800. In some examples, the isolation controller circuitry 808 obtains and/or determines the safety threshold(s) based on written instructions and/or operations stored in memory (e.g., storage device(s) 810). In some other examples, the isolation controller circuitry 808 obtains and/or determines the safety threshold(s) based on input(s) to the controlling device 804 from a user, operator, pilot, co-pilot, etc.

The example isolation controller circuitry 808 can determine whether the vapor pressure satisfies the safety threshold. For example, the safety threshold for the fourth integrated system 800 can be a vapor pressure of 160 psi. In such an example, the isolation controller circuitry 808 determines that the vapor pressure is 162 psi based on pressure measurements via one or more pressure sensor(s). Since the current vapor pressure does not satisfy the safety threshold, the isolation controller circuitry 808 causes the isolation valves 802 between the second tank 400b and the third tank 400c to close. In some examples, the isolation controller circuitry 808 can also detect whether the first burst disc 608a and/or the second burst disc 608b has/have ruptured. In response to detecting that one of the first or second burst discs 608a, 608a has ruptured, the isolation controller circuitry 808 can switch the direction of the switch valve 604 to an intact valve/burst disc side.

The controlling device 804 includes the example storage device(s) 810 to store machine readable instructions and measurement and/or position data obtained from the example pressure sensors and/or valves mentioned above. The example storage device(s) 810 can be volatile memory device(s), non-volatile memory device(s), and/or mass storage device(s). The example controlling device 804 includes the example interface circuitry 812 to communicate with example pressure sensors, temperature sensors, valves, etc. described above. In some examples, the interface circuitry 812 facilitates communication between programmable circuitry (e.g., processor circuitry such as the pressure controller circuitry 806, the isolation controller circuitry 808, etc.) and the storage device(s) 810. In some examples, the interface circuitry 812 enables the controlling device 804 to receive command inputs from an external source. The interface circuity 812 is able to receive and/or transmit commands via wired and/or wireless connections.

FIG. 9 is a schematic illustration of an example fifth integrated cryogenic hydrogen tank system 900 in accordance with the teachings disclosed herein. The example fifth integrated cryogenic hydrogen tank system 900 ("fifth integrated system 900") includes the first tank 400a, the second tank 400b, the third tank 400c, the LH2 transfer flowlines 502, the GH2 transfer flowlines 504, the thermosiphon loop 702, the heating system 704, the isolation valves 802, and the controlling device 804 of FIGS. 4-8. The fifth integrated system 900 also includes a fourth cryogenic hydrogen tank 400d ("fourth tank 400d"), a fifth cryogenic hydrogen tank 400e ("fifth tank 400e"), and a sixth cryogenic hydrogen tank 400f ("sixth tank 400f"), wherein the first, second, and third tanks 400a, 400b, 400c are include in a first group of tanks 902, and the fourth, fifth, and sixth tanks 400d, 400e, 400f are included in a second group of tanks 904. As illustrated in FIG. 9, the example fifth integrated system 900 also includes a first pressure safety system 602a connected to the first group of tanks 902, a second pressure safety system 602b connected to the second group of tanks 904, and cryogenic pumps 906 in respective tanks of the fifth integrated system 900. As mentioned previously with regard to other systems, components, capabilities, etc. of the illustrative examples of FIGS 4-8, the first group of tanks 902, the second group of tanks 904, the cryogenic pumps 906, the first pressure safety system 602a, and/or the second pressure safety system 602b can be included in some or all of the example integrated cryogenic hydrogen tank systems disclosed herein.

The fifth integrated system of FIG. 9 includes the first group of tanks 902 and the second group of tanks 904 to provide a larger and more distributed quantity of LH2 fuel to the example first aircraft 100 (FIGS. 1 and 2), the example second aircraft 300 (FIG. 3), and/or another example hydrogen aircraft. As shown, the example fifth integrated system 900 includes a first set of LH2 transfer flowlines 502a and a first set of GH2 transfer flowlines 504a to couple the first group of tanks 902 in series. The fifth integrated system 900 also includes a second set of LH2 transfer flowlines 502b and a second set of GH2 transfer flowlines 504b to couple the second group of tanks 904 in series. Furthermore, the fifth integrated system 900 includes a third set of LH2 transfer flowlines 502c and a third set of GH2 transfer flowlines 504c to couple the first group of tanks 902 and the second group of tanks 904 in parallel. In the illustrated example, the third set of LH2 transfer flowlines 502c connect respective ones of the first set of LH2 transfer flowlines 502a to respective ones of the second set of LH2 transfer flowlines 502b. Similarly, the third set of GH2 transfer flowlines 504c connect respective ones of the first set of GH2 transfer flowlines 504a to respective ones of the second set of GH2 transfer flowlines 504b.

As illustrated in FIG. 9, the fifth integrated system 900 includes a first set of isolation valves 802a coupled to the first sets of LH2 and GH2 transfer flowlines 502a, 504a. The first set of isolation valves 802a are interposed between the first, second, and third tanks 400a-c. The fifth integrated system 900 also includes a second set of isolation valves 802b coupled to the second sets of LH2 and GH2 transfer flowlines 502b, 504b. The second set of isolation valves 802b are interposed between the fourth, fifth, and sixth tanks 400d-f. Furthermore, the fifth integrated system 900 includes a third set of isolation valves 802c coupled to the third sets of LH2 and GH2 transfer flowlines 502c, 504c. The third set of isolation valves 802c are interposed between the first and second groups of tanks 902, 904.

In some examples, the third set of isolation valves 802c between the first and second groups of tanks 902, 904 can be initially closed and remain closed during flight until the controlling device 804 (e.g., the isolation controller circuitry 808) detects or generates a command to open the third set of isolation valves 802c. In some examples, the LH2 is extracted from the first group of tanks 902 (e.g., via one or more LH2 extraction flowlines 422) prior to extracting LH2 from the second group of tanks 904. In some examples, an operator (e.g., a pilot, co-pilot, engineer, etc.) of an example aircraft can cause the third set of isolation valves 802c to open such that LH2 is trimmed from the second group of tanks 904 to the first group of tanks 902 until the quantity of LH2 in the tanks is consistent across the fifth integrated system 900.

Additionally or alternatively, the fifth integrated system 900 includes the first and second groups of tanks 902, 904 to provide added redundancy to the fifth integrated system 900 in response to tank failure(s). In some examples, when the third set of isolation valves 802c are open, the example isolation controller circuitry 808 can cause the third set of isolation valves 802c to close in response to the vapor pressure not satisfying the safety threshold. Thus, for example, when one or more of the tanks of the second group of tanks 904 fails and/or is significantly damaged, the first group of tanks 902 can operate as intended without losing a significant amount of LH2, becoming depressurized, and/or warming to a substantially high temperature.

The example fifth integrated system 900 includes the example cryogenic pumps 906 to trim LH2 from one tank to another tank and/or from one group of tanks to another group of tanks. For example, when LH2 is extracted from the first group of tanks 902, and the operator trims the LH2 fuel from the second group of tanks 904 to the first group of tanks 902, the operator can also activate one or more of the cryogenic pumps 906 in the second group of tanks 904 to accelerate the trimming process. In some examples, one cryogenic pump 906 is included in respective ones of the first group of tanks 902 and the second group of tanks 904.

It should be appreciated that components and/or elements of the example integrated cryogenic hydrogen tank systems 500-900 can be altered, rearranged, and/or modified in a configuration not illustrated in FIGS. 5-9 and/or not described above while still conforming to the scope of teachings disclosed herein. For example, although the third tank 400c of the third integrated system 700 includes the LH2 extraction flowline 422, the first tank 400a and/or the second tank 400a of the third integrated system 700 can additionally or alternatively include the LH2 extraction flowline 422. Similarly, although the GH2 return flowline 432 is included in the tank 400 of FIG. 4, the GH2 return flowline 432 can be included in any of the first, second, third, fourth, fifth, and/or sixth tanks 400a-400f of FIGS. 5-9.

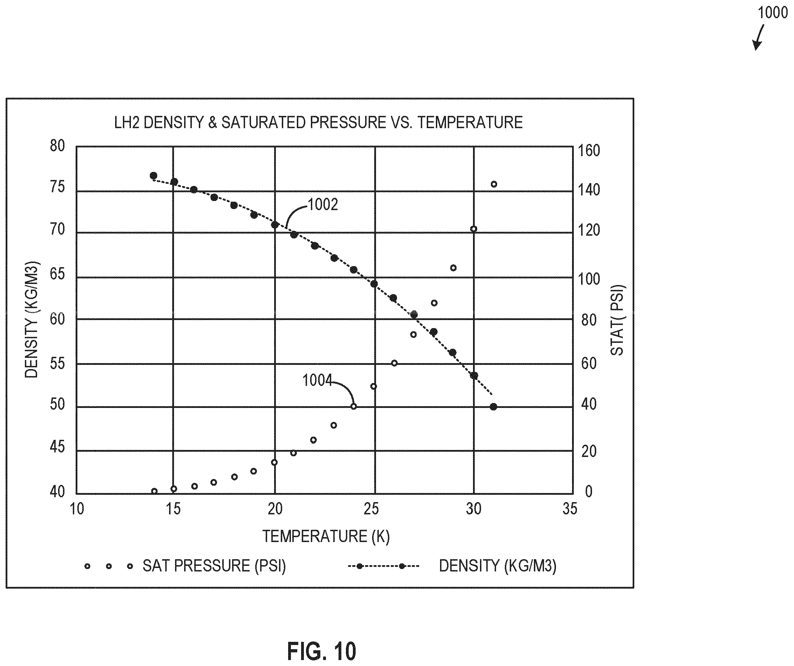

FIG. 10 is an example chart 1000 representing thermodynamic properties of LH2. The example chart 1000 includes a first curve 1002 to represent density of LH2 (in units of kilograms per cubic meter ($kg/m^3$)) as a function of temperature (in units of K). The example chart 1000 also includes a second curve 1004 to represent saturated pressure of LH2 (in units of psi) as a function of temperature. In some examples, the pressure controller circuitry 806 of the controlling device 804 of FIGS. 8 and 9, can use the thermodynamic properties represented by the second curve 1004 to determine the saturated pressure of LH2 in the example integrated tank systems 500-900 of FIGS. 5-9 based on a measured temperature. As mentioned previously, in such examples, the operational threshold can correspond to a difference between the vapor pressure and the saturated pressure. Thus, to determine whether the operational threshold is satisfied, the pressure controller circuitry 806 can obtain the LH2 temperature in the system (e.g., system 500, 600, 700, 800, and/or 900), determine the associated saturated pressure of the LH2, obtain the vapor pressure in the system, and determine whether the difference between the vapor and saturated pressures satisfies the operational threshold. Therefore, in such examples, determinations of whether the operational threshold are satisfied can depend on the thermodynamic properties of the chart 1000 illustrated in FIG. 10.

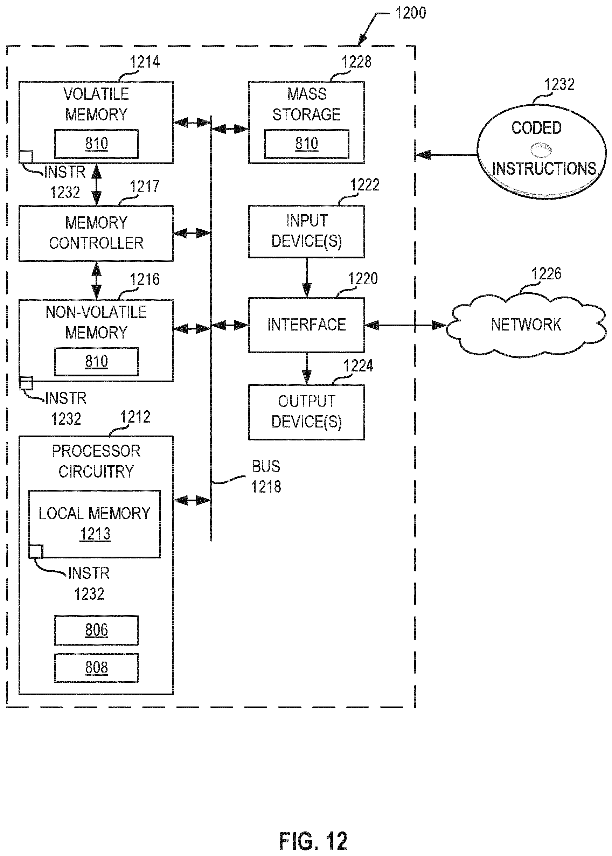

A flowchart representative of example machine readable instructions, which may be executed to configure processor circuitry to implement the controlling device 804 of FIGS. 8 and 9, is shown in FIG. 11. The machine readable instructions may be one or more executable programs or portion(s) of an executable program for execution by processor circuitry, such as the processor circuitry 1212 shown in the example processor platform 1200 discussed below in connection with FIG. 12. The program may be embodied in software stored on one or more non-transitory computer readable storage media such as a compact disk (CD), a floppy disk, a hard disk drive (HDD), a solid-state drive (SSD), a digital versatile disk (DVD), a Blu-ray disk, a volatile memory (e.g., Random Access Memory (RAM) of any type, etc.), or a non-volatile memory (e.g., electrically erasable programmable read-only memory (EEPROM), FLASH memory, an HDD, an SSD, etc.) associated with processor circuitry located in one or more hardware devices, but the entire program and/or parts thereof could alternatively be executed by one or more hardware devices other than the processor circuitry and/or embodied in firmware or dedicated hardware. The machine readable instructions may be distributed across multiple hardware devices and/or executed by two or more hardware devices (e.g., a server and a client hardware device). For example, the client hardware device may be implemented by an endpoint client hardware device (e.g., a hardware device associated with a user) or an intermediate client hardware device (e.g., a radio access network (RAN)) gateway that may facilitate communication between a server and an endpoint client hardware device). Similarly, the non-transitory computer readable storage media may include one or more mediums located in one or more hardware devices. Further, although the example program is described with reference to the flowchart illustrated in FIG. 11, many other methods of implementing the example controlling device 804 may alternatively be used. For example, the order of execution of the blocks may be changed, and/or some of the blocks described may be changed, eliminated, or combined. Additionally or alternatively, any or all of the blocks may be implemented by one or more hardware circuits (e.g., processor circuitry, discrete and/or integrated analog and/or digital circuitry, an FPGA, an ASIC, a comparator, an operational-amplifier (op-amp), a logic circuit, etc.) structured to perform the corresponding operation without executing software or firmware. The processor circuitry may be distributed in different network locations and/or local to one or more hardware devices (e.g., a single-core processor (e.g., a single core central processor unit (CPU)), a multi-core processor (e.g., a multi-core CPU, an XPU, etc.) in a single machine, multiple processors distributed across multiple servers of a server rack, multiple processors distributed across one or more server racks, a CPU and/or a FPGA located in the same package (e.g., the same integrated circuit (IC) package or in two or more separate housings, etc.).

The machine readable instructions described herein may be stored in one or more of a compressed format, an encrypted format, a fragmented format, a compiled format, an executable format, a packaged format, etc. Machine readable instructions as described herein may be stored as data or a data structure (e.g., as portions of instructions, code, representations of code, etc.) that may be utilized to create, manufacture, and/or produce machine executable instructions. For example, the machine readable instructions may be fragmented and stored on one or more storage devices and/or computing devices (e.g., servers) located at the same or different locations of a network or collection of networks (e.g., in the cloud, in edge devices, etc.). The machine readable instructions may require one or more of installation, modification, adaptation, updating, combining, supplementing, configuring, decryption, decompression, unpacking, distribution, reassignment, compilation, etc., in order to make them directly readable, interpretable, and/or executable by a computing device and/or another machine. For example, the machine readable instructions may be stored in multiple parts, which are individually compressed, encrypted, and/or stored on separate computing devices, wherein the parts when decrypted, decompressed, and/or combined form a set of machine executable instructions that implement one or more operations that may together form a program such as that described herein.

In another example, the machine readable instructions may be stored in a state in which they may be read by processor circuitry, but require addition of a library (e.g., a dynamic link library (DLL)), a software development kit (SDK), an application programming interface (API), etc., in order to execute the machine readable instructions on a particular computing device or other device. In another example, the machine readable instructions may need to be configured (e.g., settings stored, data input, network addresses recorded, etc.) before the machine readable instructions and/or the corresponding program(s) can be executed in whole or in part. Thus, machine readable media, as used herein, may include machine readable instructions and/or program(s) regardless of the particular format or state of the machine readable instructions and/or program(s) when stored or otherwise at rest or in transit.

The machine readable instructions described herein can be represented by any past, present, or future instruction language, scripting language, programming language, etc. For example, the machine readable instructions may be represented using any of the following languages: C, C++, Java, C#, Perl, Python, JavaScript, HyperText Markup Language (HTML), Structured Query Language (SQL), Swift, etc.

As mentioned above, the example operations of FIG. 11 may be implemented using executable instructions (e.g., computer and/or machine readable instructions) stored on one or more non-transitory computer and/or machine readable media such as optical storage devices, magnetic storage devices, an HDD, a flash memory, a read-only memory (ROM), a CD, a DVD, a cache, a RAM of any type, a register, and/or any other storage device or storage disk in which information is stored for any duration (e.g., for extended time periods, permanently, for brief instances, for temporarily buffering, and/or for caching of the information). As used herein, the terms non-transitory computer readable medium, non-transitory computer readable storage medium, non-transitory machine readable medium, and non-transitory machine readable storage medium are expressly defined to include any type of computer readable storage device and/or storage disk and to exclude propagating signals and to exclude transmission media. As used herein, the terms "computer readable storage device" and "machine readable storage device" are defined to include any physical (mechanical and/or electrical) structure to store information, but to exclude propagating signals and to exclude transmission media. Examples of computer readable storage devices and machine readable storage devices include random access memory of any type, read only memory of any type, solid state memory, flash memory, optical discs, magnetic disks, disk drives, and/or redundant array of independent disks (RAID) systems. As used herein, the term "device" refers to physical structure such as mechanical and/or electrical equipment, hardware, and/or circuitry that may or may not be configured by computer readable instructions, machine readable instructions, etc., and/or manufactured to execute computer readable instructions, machine readable instructions, etc.

FIG. 11 is a flowchart representative of example machine readable instructions and/or example operations 1100 that may be executed and/or instantiated by processor circuitry to adjust the vapor pressure(s) of the example integrated cryogenic hydrogen tank systems 500-900 and/or isolate one or more tanks of the integrated cryogenic hydrogen tank systems 500-900 illustrated in FIGS. 5-9. The machine readable instructions and/or the operations 1100 of FIG. 11 begin at block 1102, at which the controlling device 804 cause(s) one or more isolation valves 802 to open. For example, the isolation controller circuitry 808 can send a signal to one or more of the isolation valves 802 to open when the LH2 and/or GH2 is to be extracted from one or more of the tanks 400a-f, the first group of tanks 902, and/or the second group of tanks 904. That is, in some examples, when fuel (e.g., LH2 and/or GH2) is to be extracted, pumped, and/or released from the integrated tank system(s) 500-900, the isolation controller circuitry 808 causes all of the isolation valves 802 of FIGS. 8 and/or 9 to open. In some other examples, the isolation controller circuitry 808 causes the isolation valves 802 of FIG. 9 to open except for the isolation valves 802 that connect the first and second groups of tanks 902, 904. In such examples, the LH2 and/or GH2 can be extracted from the first group of tanks 902 and/or the second group of tanks 904 either synchronously or asynchronously.

At block 1104, the example controlling device 804 detects the vapor pressure(s) in one or more of the example integrated cryogenic hydrogen tank system(s) 500-900. For example, the pressure controller circuitry 806 and the isolation controller circuitry 808 obtain pressure measurements from pressure sensor(s) in each of the tanks (e.g., one or more of tanks 400a-f) of the integrated cryogenic hydrogen tank system(s) 500-900. In some other examples, the pressure and isolation controller circuitry 806, 808 obtain pressure measurements of the first and second groups of tanks 902, 904. In general, the controlling device 804 can determine which of the isolation valves 802 are closed and can obtain vapor pressure measurements from each of the isolated portions of the one or more integrated tanks systems 500-900.

Blocks 1106 and 1110 can occur concurrently, substantially simultaneously, synchronously, and/or asynchronously in the example operations 1100. At block 1106, the controlling device 804 determines whether the vapor pressure(s) in the integrated cryogenic hydrogen tank system(s) 500-900 satisfy the safety threshold. For example, the isolation controller circuitry 808 can determine whether the vapor pressure(s) in the first, second, third, fourth, fifth, and/or sixth tanks 400a-f is/are less than the safety threshold. The example isolation controller circuitry 808 repeats block 1106 until such determinations are made for portions (e.g., the first, second, third, fourth, fifth, and/or sixth tanks 400a-f, the first group of tanks 902, the second group of tanks 904, etc.) of the integrated cryogenic hydrogen tank system(s) 500-900. When the isolation controller circuitry 808 determines that the vapor pressure(s) do(es) satisfy the second safety threshold, then the example operations 1100 proceed to block 1114.

When the isolation controller circuitry 808 determines that the vapor pressure(s) do not satisfy the second safety threshold (e.g., the vapor pressure is greater than or equal to the safety threshold), the example operations 1100 proceed to block 1108. At block 1108, the controlling device 804 closes the isolation valves 802 connected to the at-risk tank(s) and/or group(s) of tanks. For example, when the vapor pressure of the first tank 400a in FIG. 9 is greater than the safety threshold, the isolation controller circuitry 808 can send a signal to the isolation valves 802 between the first and second tanks 400a, 400b and the isolation valves 802 between the first and fourth tanks 400a, 400d to close a gate, ball, stopper, plunger, etc. to restrict or prevent LH2 and GH2 flow. Additionally or alternatively, the isolation controller circuitry 808 can cause the isolation valves 802 between the first and second groups of tanks 902, 904 to close.

At block 1110, the controlling device 804 determines whether the vapor pressure(s) in the integrated cryogenic hydrogen tank system(s) 500-900 satisfy the operational threshold. For example, the pressure controller circuitry 806 can determine whether the vapor pressure(s) in the first, second, third, fourth, fifth, and/or sixth tanks 400a-f is/are greater than or equal to the operational threshold. The example pressure controller circuitry 806 repeats block 1110 until such determinations are made for portions (e.g., the first, second, third, fourth, fifth, and/or sixth tanks 400a-f, the first group of tanks 902, the second group of tanks 904, etc.) of the integrated cryogenic hydrogen tank system(s) 500-900. When the pressure controller circuitry 806 determines that the vapor pressures do satisfy the operational threshold, then the example operations 1100 proceed to block 1114.

When the pressure controller circuitry 806 determines that the vapor pressure(s) do not satisfy the operational threshold (e.g., the saturated pressure is less than the operational threshold), the example operations 1100 proceed to block 1112. At block 1112, the controlling device 804 causes the automatic valve 708 of the thermosiphon loop 702 to open and/or causes the heater 710 of the heating system 704 to activate. For example, when vapor pressure in the first tank 400a of FIG. 9 is less than the operational threshold, the pressure controller circuitry 806 can send a signal to the automatic valve 708 to open and allow LH2 to flow to the heat exchanger 706. Additionally or alternatively, the pressure controller circuitry 806 can send a signal to the heater 710 to turn on to a given output temperature. In some examples, the isolation controller circuitry 808 can cause the thermosiphon loop 702 and/or the heating system 704 in each of the tanks (e.g., tanks 400a-c, tanks 400d-f, etc.) in each of the isolated groups of tanks (e.g., first group of tanks 902, second group of tanks 904, etc.) to synchronously activate and cause the vapor pressure to increase across the integrated portion(s) of the system(s) 500-900.

At block 1114, the controlling device 804 determines whether an input to stop extracting the LH2 and/or GH2 has been detected, obtained, received, commanded, etc. When the controlling device 804 determines that an example system (e.g., example LH2 pumping systems described below) is to continue extracting LH2 and/or GH2 fuel from the example integrated cryogenic hydrogen tank system(s) 500-900, then the example operations 1100 return to block 1104. When the controlling device 804 determines that the example system is to stop extracting LH2 and/or GH2 fuel from the example integrated cryogenic hydrogen tank system(s) 500-900, then the example operations 1100 end. Additionally or alternatively, when extraction of the LH2 and/or GH2 is to cease, the isolation controller circuitry 808 can cause one or more of the isolation valves 802 to close.

FIG. 12 is a block diagram of an example processor platform 1200 structured to execute and/or instantiate the machine readable instructions and/or the operations of FIG. 11 to implement the controlling device 804 of FIGS. 8 and 9. The processor platform 1200 can be, for example, full authority digital engine control (FADEC), a cockpit control panel assembly, avionics systems, a laptop, a mobile device (e.g., a cell phone, a smart phone, a tablet such as an iPad®), etc.

The processor platform 1200 of the illustrated example includes processor circuitry 1212. The processor circuitry 1212 of the illustrated example is hardware. For example, the processor circuitry 1212 can be implemented by one or more integrated circuits, logic circuits, FPGAs, microprocessors, CPUs, GPUs, DSPs, and/or microcontrollers from any desired family or manufacturer. The processor circuitry 1212 may be implemented by one or more semiconductor based (e.g., silicon based) devices. In this example, the processor circuitry 1212 implements the pressure controller circuitry 806 and the isolation controller circuitry 808.

The processor circuitry 1212 of the illustrated example includes a local memory 1213 (e.g., a cache, registers, etc.). The processor circuitry 1212 of the illustrated example is in communication with a main memory including a volatile memory 1214 and a non-volatile memory 1216 by a bus 1218. The volatile memory 1214 may be implemented by Synchronous Dynamic Random Access Memory (SDRAM), Dynamic Random Access Memory (DRAM), RAMBUS® Dynamic Random Access Memory (RDRAM®), and/or any other type of RAM device. The non-volatile memory 1216 may be implemented by flash memory and/or any other desired type of memory device. Access to the main memory 1214, 1216 of the illustrated example is controlled by a memory controller 1217.

The processor platform 1200 of the illustrated example also includes interface circuitry 1220. The interface circuitry 1220 may be implemented by hardware in accordance with any type of interface standard, such as an Ethernet interface, a universal serial bus (USB) interface, a Bluetooth® interface, a near field communication (NFC) interface, a Peripheral Component Interconnect (PCI) interface, and/or a Peripheral Component Interconnect Express (PCIe) interface.

In the illustrated example, one or more input devices 1222 are connected to the interface circuitry 1220. The input device(s) 1222 permit(s) a user to enter data and/or commands into the processor circuitry 1212. The input device(s) 1222 can be implemented by, for example, a keyboard, a button, a mouse, a touchscreen, a trackpad, a trackball, an isopoint device, and/or a voice recognition system.

One or more output devices 1224 are also connected to the interface circuitry 1220 of the illustrated example. The output device(s) 1224 can be implemented, for example, by display devices (e.g., a light emitting diode (LED), an organic light emitting diode (OLED), a liquid crystal display (LCD), a cathode ray tube (CRT) display, an in-place switching (IPS) display, a touchscreen, etc.), a printer, and/or speaker. The interface circuitry 1220 of the illustrated example, thus, typically includes a graphics driver card, a graphics driver chip, and/or graphics processor circuitry such as a GPU.

The interface circuitry 1220 of the illustrated example also includes a communication device such as a transmitter, a receiver, a transceiver, a modem, a residential gateway, a wireless access point, and/or a network interface to facilitate exchange of data with external machines (e.g., computing devices of any kind) by a network 1226. The communication can be by, for example, an Ethernet connection, a digital subscriber line (DSL) connection, a telephone line connection, a coaxial cable system, a satellite system, a line-of-site wireless system, a cellular telephone system, an optical connection, etc.

The processor platform 1200 of the illustrated example also includes one or more mass storage devices 1228 to store software and/or data. Examples of such mass storage devices 1228 include magnetic storage devices, optical storage devices, floppy disk drives, HDDs, CDs, Blu-ray disk drives, redundant array of independent disks (RAID) systems, solid state storage devices such as flash memory devices and/or SSDs, and DVD drives.

The machine readable instructions 1232, which may be implemented by the machine readable instructions of FIG. 11, may be stored in the mass storage device 1228, in the volatile memory 1214, in the non-volatile memory 1216, and/or on a removable non-transitory computer readable storage medium such as a CD or DVD.

From the foregoing, it will be appreciated that example systems, methods, apparatus, and articles of manufacture have been disclosed to integrate multiple cryogenic hydrogen tanks onboard an aircraft and enable the integrated tank system to operate as a single vessel. Disclosed systems, methods, apparatus, and articles of manufacture improve: (i) the efficiency of a hydrogen-powered aircraft via pressure and temperature control of LH2 fuel onboard the aircraft, (ii) the stability and control of a hydrogen-powered aircraft via even storage distribution of LH2 onboard the aircraft, (iii) the range of the aircraft via increased available LH2 storage onboard the aircraft, (iv) the refueling/extraction processes of the multi-tank hydrogen aircraft via interconnections of the multiple cryogenic hydrogen tanks, and so forth. As such, disclosed systems, methods, apparatus, and articles of manufacture can accordingly be directed to one or more improvement(s) in the operation of a machine such as a hydrogen powered aircraft or another hydrogen-powered vehicle.

Example integrated cryogenic hydrogen tank systems described above can be further improved based on types and/or configurations of tanks used therein. Decreasing the size of the tanks used in the integrated systems can provide more space for cargo bays, passenger seating, artillery storage, etc. Decreasing the weight of the tanks used in the integrated systems can extend the range, the empty weight, the power-to-weight ratio, etc. of the aircraft. Described below are example cryogenic tanks/tank systems for liquid hydrogen that can be used in example integrated tank systems described above.

The cryogenic tanks/tank systems can store liquid hydrogen (diatomic hydrogen) onboard an aircraft for use as a fuel to power the aircraft or components thereof. In some examples, the fuel tank discussed below is a lightweight tank made from dual wall composite cylinders. Despite a vacuum layer of insulation, an amount of heat can transfer to the LH2 from surrounding ambient air, resulting in boil-off. The LH2 fuel is preferably extracted from the fuel tank without GH2 bubbles caused by boil-off. As LH2 is extracted from the fuel tank, the volume of LH2 therein decreases and the volume of GH2 therein increases, which increases the possibility of entrainment of hydrogen vapor bubbles in the extracted LH2. Examples of hydrogen fuel tanks discussed below are configured to reduce or to eliminate the presence of such hydrogen vapor (GH2) entrained in the LH2 provided to the fuel system of the aircraft. Example fuel tanks discussed below account for disturbances (e.g., sloshing, swirling, etc.) of the LH2 due to movements of the aircraft during flight (e.g., pitches, rolls, rotations, etc.).

Referring now to FIG. 13, a perspective view of an example cryogenic hydrogen fuel tank 1300 ("tank 1300") is illustrated. The tank 1300 is configured to hold the hydrogen fuel at least partially within the liquid phase and is configured to provide hydrogen fuel to a fuel delivery assembly (e.g., fuel delivery assemblies 150) substantially completely in the liquid phase, such as completely in the liquid phase. The tank 1300 has a fixed volume and contains a volume of the hydrogen fuel in the liquid phase (LH2). As the tank 1300 provides hydrogen fuel to the fuel delivery assembly substantially completely in the liquid phase, the volume of the liquid hydrogen fuel in the tank 1300 decreases and the remaining volume in the tank 1300 is made up by, for example, hydrogen substantially completely in the gaseous phase (GH2).

The tank 1300 stores hydrogen fuel at substantially low (cryogenic) temperatures to keep the LH2 substantially completely in the liquid phase. For example, the tank 1300 can store LH2 at about -253 °C (20 K) or less at atmospheric pressure, or at other temperatures and corresponding saturated pressures shown in the chart 1000 of FIG. 10. In some examples, the tank 1300 stores LH2 at temperatures from -259 °C (14 K) to -243 °C (30 K), and in some other examples, from -253 °C (20 K) to -243 °C (30 K).

FIG. 14 is a cross sectional view 1400 of the tank 1300 along line 14-14 in FIG. 13. The tank 1300 is configured to hold the hydrogen fuel in a liquid phase. In some examples, the tank 1300 is cylindrical and has an outer diameter D. The tank 1300 also includes a longitudinal axis 1306 and a length L in the direction of the longitudinal axis 1306. In this embodiment, the length L is greater than the diameter D. A ratio of the outer diameter of the fuel tank to the maximum internal diameter of a fuselage (e.g., the fuselage 110) is referred to herein as a tank-to-fuselage ratio. In some examples, the tank-to-fuselage ratio is from eight-tenths to nine-tenths, and example diameters D of the tank 1300 for existing airframes are shown in Table 1 below.

**Table 1**

| Aircraft | Maximum Internal Diameter of the Fuselage (ft) | Outer Diameter D of Fuel Tank (ft) | Tank-to-Fuselage Ratio |
|---|---|---|---|
| Embraer E175 | 9.0 | 8 | 0.89 |
| Airbus A320 | 11.9 | 10 | 0.84 |
| Boeing 787 | 17.9 | 15 | 0.84 |

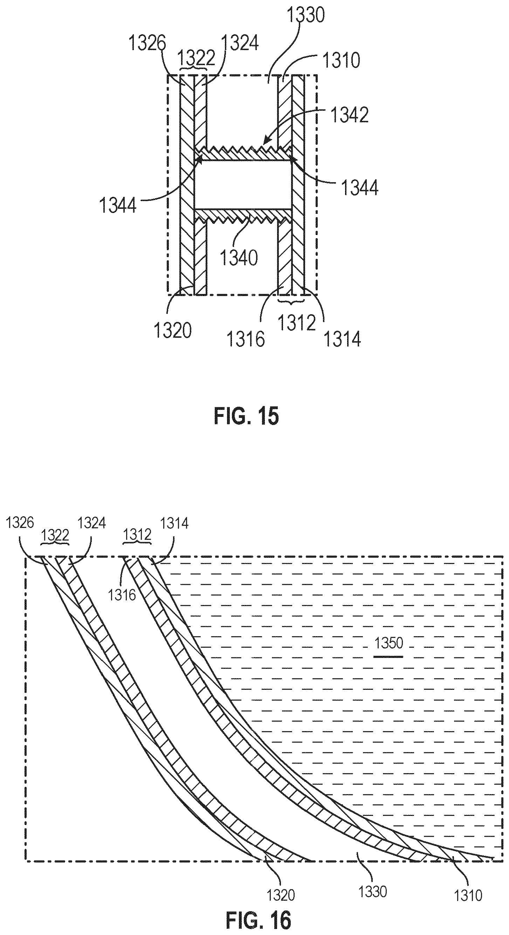

The tank 1300 can function as a cryostat to store and maintain the hydrogen fuel in the liquid phase. The tank 1300 is a dual wall tank and includes an inner vessel 1310 (inner cryogenic liquid tank) and an outer vessel 1320 (vacuum vessel). FIGS. 15 and 16 are magnified views showing sections 15 and 16 of FIG. 14. As shown in FIGS. 15 and 16, the inner vessel 1310 has an inner vessel wall 1312, and the outer vessel 1320 also has an outer vessel wall 1322. The inner vessel 1310 is positioned within the outer vessel 1320 with a gap 1330 formed between the inner vessel 1310 and the outer vessel 1320. More specifically, the gap 1330 is formed between the inner vessel wall 1312 and the outer vessel wall 1322. The inner vessel 1310 is positioned within the outer vessel 1320 and connected to the outer vessel 1320 by a suspension 1340, as will be discussed further below.

As shown in FIG. 14, the inner vessel wall 1312 defines a chamber 1350 in which the hydrogen fuel in the liquid phase (liquid hydrogen) is stored. As noted above, some amount of gaseous hydrogen will also be present in the chamber 1350. The chamber 1350 includes an upper portion 1352 and a lower portion 1354. The gaseous hydrogen will collect in the upper portion 1352 of the chamber 1350 and the liquid hydrogen will be located in the lower portion 1354 of the chamber 1350. As the tank 1300 provides hydrogen fuel, the volume of the liquid hydrogen fuel in the tank 1300 decreases, with the remaining volume in the fuel tank made up of gaseous hydrogen.

FIG. 15 is a magnified view showing section 15 in FIG. 14. FIG. 15 is a detail view of the tank 1300, showing the suspension 1340. In this embodiment, the suspension 1340 connects longitudinal ends of the inner vessel 1310 to longitudinal ends of the outer vessel 1320. Here, the suspension 1340 is a hollow tube having male threads 1342 on at least each end. The threads 1342 of the suspension 1340 are configured to engage with female threads 1344 formed in each of the inner vessel 1310 and the outer vessel 1320. Although, one suspension 1340 is shown in FIG. 15 at least two suspensions 1340 are included in the tank 1300. In some examples, the suspension 1340 is made from a material having a low thermal conductivity, such as a composite material like carbon fiber. The hollow, composite tubes are advantageous as they reduce thermal losses. Other suitable suspensions may be used to position the inner vessel 1310 within the outer vessel 1320 with the gap 1330 formed therebetween. Such other suspensions include, for example, radial straps.

FIG. 16 is a magnified view of the tank 1300, showing the inner vessel wall 1312, the gap 1330, and the outer vessel wall 1322. FIG. 16 is a magnified view showing section 16 in FIG. 14. The inner vessel wall 1312 is a multi-layer wall, having an inner layer 1314 and an outer layer 1316. The inner layer 1314 can be metal, such as aluminum or steel, and the outer layer 1316 can be a composite material, such as a carbon fiber composite. The carbon fiber outer layer 1316 provides strength to the inner vessel 1310 at a relatively low weight, which improves the empty weight of aircraft applications discussed herein. Carbon fiber composite material can become embrittled when exposed to LH2 at cryogenic temperatures. Thus, the metal inner layer 1314 acts as a barrier to prevent hydrogen from diffusing from the chamber 1350 to the carbon fiber outer layer 1316. The metal inner layer 1314 also acts as a structural member of the inner vessel wall 1312. In some examples, the inner layer 1314 is at least two millimeters thick to at least three millimeters thick. In some examples, the outer layer 1316 is at least three millimeters thick to at least eight millimeters thick.

The outer vessel wall 1322 also is a multi-layer wall, having an inner layer 1324 and an outer layer 1326. Based on similar considerations as discussed above for the inner vessel wall 1312, the inner layer 1324 of the outer vessel wall 1322 can be constructed of metal, such as aluminum or steel, and the outer layer 1326 of the outer vessel wall 1322 can be constructed of a composite material, such as carbon fiber. Each of the inner layer 1324 and the outer layer 1326 can include similar thicknesses as discussed above.

As noted above, the inner vessel 1310 is positioned within the outer vessel 1320 with the gap 1330 formed between the inner vessel 1310 and the outer vessel 1320 and, more specifically, between the inner vessel wall 1312 and the outer vessel wall 1322. To provide thermal isolation for the inner vessel 1310, the gap 1330 has a vacuum pressure, such as from zero to one millitorr. In some examples, the gap 1330 includes void space. Additionally or alternatively, the gap 1330 includes multi-layer insulation (MLI) in the gap 1330. Suitable MLIs included in the gap 1330, such as aluminized Mylar®, are known to persons having ordinary skill in the art.

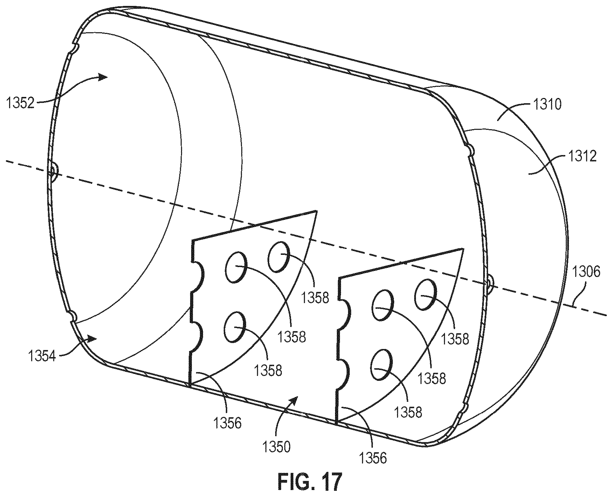

FIG. 17 is a cross-sectional perspective view of the inner vessel 1310 taken along line 14-14 in FIG. 13. In FIG. 17, the outer vessel 1320 and fluid lines (discussed further below) of the tank 1300 are omitted. The tank 1300 includes a plurality of baffles 1356 located in the chamber 1350. In this embodiment, the baffles 1356 are located in the lower portion 1354 of the chamber 1350. The baffles 1356 of this embodiment are perforated panels. The baffles 1356 are oriented substantially transverse/perpendicular to the longitudinal axis 1306 of the tank 1300. The baffles 1356 include a plurality of holes 1358 formed in the panels. The holes 1358 allow LH2 to flow through the baffles 1356. Although shown as circular and uniform in FIG. 17, the holes 1358 can have any suitable uniform or nonuniform geometry, such as circles, rectangles, slits, vents, etc. The baffles 1356 are positioned within the chamber 1350 and configured to restrict the flow of the liquid hydrogen in the forward direction and the aft direction, which helps prevent sloshing during operation of an aircraft.

As shown in FIGS. 13 and 14, the tank 1300 includes a plurality of refueling and extraction flowlines lines. The flowlines fluidly connect the chamber 1350 to systems outside of the tank 1300. The flowlines penetrate each of the inner vessel wall 1312 and the outer vessel wall 1322. The flowlines can be vacuum jacketed flowlines as described above. A gaseous hydrogen extraction line 1361 is fluidly connected to the upper portion 1352 of the chamber 1350, and, in some examples, extends radially outward from the tank 1300. The gaseous hydrogen extraction line 1361 can be used to remove (extract) the gaseous hydrogen from the chamber 1350, such as by venting the chamber 1350 to atmosphere. The gaseous hydrogen extraction line 1361 can also be used to regulate the vapor pressure in the chamber 1350. A control valve, such as the pressure relief valve 430, can be connected to the gaseous hydrogen extraction line 1361 to regulate the pressure and to control venting the chamber 1350.

The tank 1300 is refueled via at least one liquid hydrogen fill line 1363, 1365. In some examples, the tank 1300 includes a lower liquid hydrogen fill line 1363 and an upper liquid hydrogen fill line 1365. The lower liquid hydrogen fill line 1363 and the upper liquid hydrogen fill line 1365 can extend from the chamber 1350 to a coupling located on the exterior of an aircraft, such as on the exterior of the fuselage 110, the fuselage 312, etc. In some examples, a valve is incorporated into the coupling or positioned between the coupling and the chamber 1350. Example sub-cooling LH2 refuelers described below with reference to FIGS. 19-24 can be coupled to the coupling and fill the tank 1300 with LH2. The lower liquid hydrogen fill line 1363 is fluidly connected to the chamber 1350 at the lower portion 1354 and can be used to fill the tank 1300 from the bottom (bottom fill). The upper liquid hydrogen fill line 1365 is fluidly connected to the chamber 1350 at the upper portion 1352 and can be used to fill the tank 1300 from the top (top fill). In some examples, one of the lower liquid hydrogen fill line 1363 and the upper liquid hydrogen fill line 1365 is used to fill the tank 1300. In other examples, both the lower liquid hydrogen fill line 1363 and the upper liquid hydrogen fill line 1365 are used to fill the tank 1300 with a favorable hydrogen quality, such as desired temperatures, pressures, and/or degrees of saturation for the hydrogen in the tank 1300.

A fuel extraction line 1367 is included to fluidly couple the chamber 1350 to example LH2 pump(s) (e.g., example phase separating LH2 pump systems described below with reference to FIGS. 25-34). As described below, LH2 pump(s) can provide hydrogen fuel to the fuel delivery assemblies, engines, receiving tanks, etc. As the volume of LH2 fuel in the tank 1300 decreases, hydrogen vapor from LH2 pump(s) can be returned to the upper portion 1352 via vapor return line(s) 1369. Examples of phase separating LH2 pump systems that can be used with the tank 1300 and the integrated tank systems 500-900 are described in greater detail below.

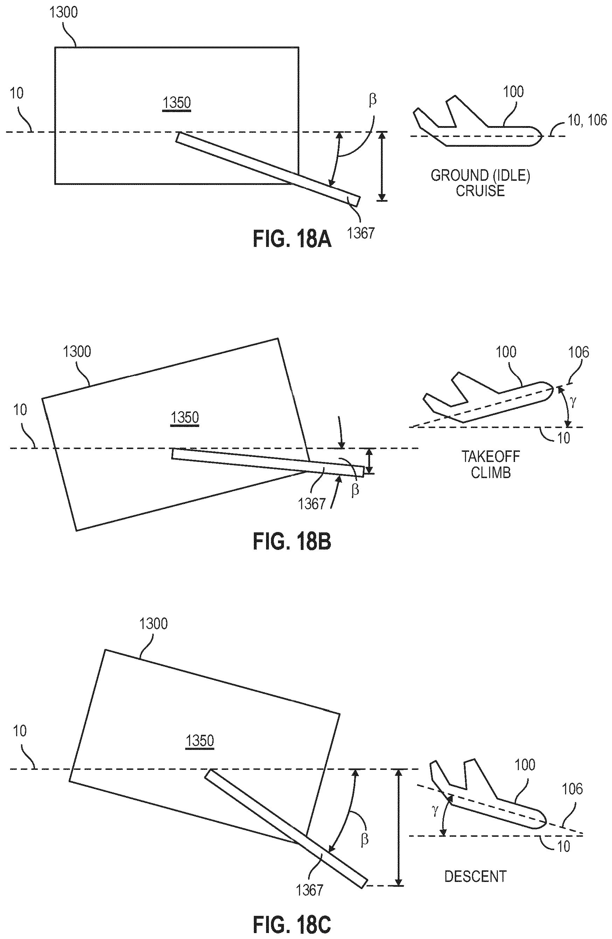

As shown in FIG. 14, the fuel extraction line 1367 has a downward angle $\alpha$ relative to the longitudinal axis 1306 of the tank 1300 to further provide a net positive pressure. The downward angle $\alpha$ can also be measured relative to the centerline 106 of the aircraft 100, as illustrated in FIGS. 18A-C. In other words, when the centerline 106 of the aircraft 100 and the longitudinal axis 1306 of the tank 1300 are substantially parallel, the downward angle relative to the centerline 106 of the aircraft 100 is substantially similar to the angle $\alpha$. In some examples, the downward angle $\alpha$ is set such that the fuel extraction line 1367 is pointing downward during all normal operating conditions.

FIGS. 18A, 18B, and 18C are schematic views illustrating the normal operating conditions of the aircraft 100 and an angle $\beta$ of the fuel extraction line 1367 relative to a horizontal plane 10 during such conditions. FIGS. 18A-C also illustrate the pitch (angle $\gamma$) of the aircraft 100 during these conditions. The pitch (angle $\gamma$) of the aircraft 100 may be the angle between the horizontal plane 10 and the centerline 106 of the aircraft 100. Table 2 below shows an expected upper bound for the pitch (angle $\gamma$) of a commercial, passenger aircraft during the various normal operating conditions. The maximum pitch (angle $\gamma$) expected is twenty degrees.

**Table 2**

| Operating Condition | Pitch (Angle $\gamma$) of Aircraft (degrees) | Angle $\beta$ of Fuel Extraction Line (degrees) |
|---|---|---|
| Ground (Idle) | 0 | 25 |
| Takeoff | 15 | 10 |
| Climb | 20 | 5 |
| Cruise | 0 | 25 |
| Descent | -5 | 30 |

In some examples, the angle $\alpha$ of the fuel extraction line 1367 is at least the maximum pitch of the aircraft 100, such as at least twenty degrees. In some other examples, the angle $\alpha$ is set to be at least five degrees greater than the maximum pitch of the aircraft 100, such as at least twenty-five degrees. For example, the fuel extraction line 1367 angles downward at an angle $\alpha$ of twenty-five degrees relative to the longitudinal axis 1306 and the centerline 106. In such an example, the centerline 106 of the aircraft 100 is substantially parallel to the horizontal plane 10. At the beginning of a mission (flight), the aircraft 100 is on the ground and at idle, as illustrated in FIG. 18A, and the fuel extraction line 1367 is angled downward relative to the horizontal plane 10 (angle $\beta$) by about twenty-five degrees, as shown in Table 2. During takeoff, the aircraft 100 can pitch upward, as illustrated in FIG. 18B, by about fifteen degrees, and the fuel extraction line 1367 remains angled downward relative to the horizontal plane 10 (angle $\beta$) by about ten degrees, as shown in Table 2. After takeoff, the aircraft 100 can pitch upward to twenty degrees, and the fuel extraction line 1367 still remains angled downward relative to the horizontal plane 10 (angle $\beta$) by about five degrees, as shown in Table 2. The aircraft 100 levels off as it reaches a cruising altitude and returns to a horizontal (zero) pitch condition, as illustrated in FIG. 18A. During cruise, the fuel extraction line 1367 is angled downward relative to the horizontal plane 10 (angle $\beta$) by about twenty-five degrees, as shown in Table 2. When the aircraft 100 descends for landing, the pitch of the aircraft 100 is a about negative five degrees, as illustrated in FIG. 18C, increasing the downward angle $\beta$ of the fuel extraction line 1367 relative to the horizontal plane 10 to about thirty degrees, as shown in Table 2. In general, the fuel extraction line 1367 is angled downward relative to the horizontal plane 10 (angle $\beta$) through the duration of the flight.

In some examples, the fuel extraction line 1367 is located on the forward end of the tank 1300 and extends in the forward direction of the aircraft 100. To the extent that the liquid hydrogen flows away from the fuel extraction line 1367 when the pitch of the aircraft 100 is upward, such as during takeoff and climb, the volume of liquid hydrogen in the tank 1300 is near full and the upward pitch of the aircraft 100 does not prevent the supply of fuel to the fuel extraction line 1367. As the flight progresses, the volume of the liquid hydrogen fuel in the tank 1300 decreases and may be near empty at the end of the flight. As the aircraft 100 descends, the liquid hydrogen fuel remaining in the tank 1300 flows toward the forward end of the tank 1300. With the fuel extraction line 1367 located on the forward end of the tank 1300 and extending in the forward direction of the aircraft 100, the liquid hydrogen fuel flows toward the fuel extraction line 1367 and continues to supply the fuel extraction line 1367. When the tank 1300 is included in example integrated tank systems described above, LH2 can be trimmed to the tank 1300 from another tank when the LH2 levels are below the horizontal plane 10 of FIGS. 18A-C.

The example cryogenic tank(s) 1300 described above with reference to FIGS. 13-17 and 18A-C can be used in the example integrated cryogenic hydrogen tank systems 500-900 in the first aircraft 100, second aircraft 300, other hydrogen aircraft, and/or other hydrogen-powered vehicles. The example tank(s) 1300 can inhibit temperature increases of stored LH2 to reduce boil-off, control vapor pressures, and, in general, allow the example integrated tank system(s) 500-900 to operate more efficiently.

Example integrated cryogenic hydrogen tank systems described above include multiple interconnected tanks that can be refueled substantially simultaneously, similar to a single vessel. Sub-cooling refuelers described below can control temperatures and pressures of the flowing LH2 fuel during refueling processes of hydrogen aircraft. The integrated tank systems can store LH2 more efficiently when refueled with sub-coolers because the LH2 can be introduced to the integrated tank system at desired cryogenic conditions to increase the density of the LH2, and thus, the storage capacity of the integrated tank system.

The operations of some refueling systems for onboard cryogenic fuel tanks refuel cryogenic fuels at temperatures similar to the temperatures at which the cryogenic fuels are stored prior to refueling. In some examples, a cryogenic fuel is stored in a supply tank at a temperature corresponding to a saturated pressure that is above atmospheric pressure. In such examples, the cryogenic fuel is stored at saturated pressures above atmospheric pressure in the onboard cryogenic fuel tanks. In some examples, a supply tank is driven to a take-off and/or a launch site to refuel the onboard tank with cryogenic fuel (e.g., liquid hydrogen (LH2)). In such examples, the LH2 is stored in an insulated supply tank but the temperature of the LH2 is still unregulated, in which case the mass of the onboard LH2 is neither controllable nor functionally optimized.

In examples described below, a sub-cooler in refueling system for a hydrogen aircraft reduces the temperature and increases the density of LH2 during refueling such that smaller onboard cryogenic fuel tank(s) (e.g., tanks 400, tanks 1300, etc.) can be used to store the same mass of LH2, and the mass of LH2 supplied to the onboard cryogenic fuel tank(s) can be precisely controlled. For example, when LH2 is provided by a supply tank at 25 Kelvin (K), the density of the LH2 fuel is about 64 $kg/m^3$ onboard an example hydrogen aircraft. The example sub-cooler described below can reduce the temperature of the LH2 to 20 K while refueling, thus increasing the density of LH2 to about 71 $kg/m^3$ and reducing the onboard tank volume by about 10%.

The example illustration of FIG. 19 is a block diagram representing a non-sub-cooling cryogenic refueling system 1900. As shown in FIG. 19, the non-sub-cooling cryogenic refueling system 1900 ("system 1900") includes components coupled together series via vacuum jacketed (VJ) flowlines 1910. In general, the cryogenic refueling system 1900 includes a manually operated or electronically actuated flow control valve 1904 (e.g., cryogenic globe valve) to regulate flow of the cryogenic fuel provided by a supply tank 1902.

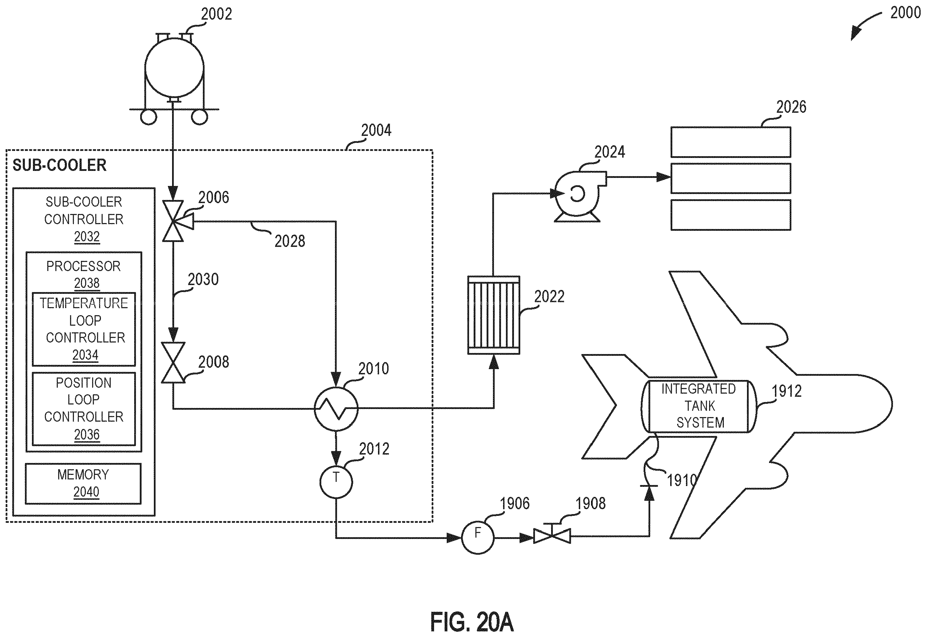

The flow control valve 1904 operates at working temperatures lower than 233 K and can be used for transmitting low temperature cryogenic fluid (e.g., liquefied natural gas, liquid oxygen, liquid hydrogen, etc.). In some examples, the flow control valve 1904 regulates the flow of the cryogenic fluid such that a known mass of fuel can be provided to an integrated tank system 1912. The example flow control valve 1904 is constructed to thermally insulate the cryogenic fuel during transmission so that the fluid does not heat up, vaporize, and leak out as a gas. In some examples, the flow control valve 1904 is connected to the supply tank 1902 by one or more VJ flowlines 1910. The integrated tank system 1912 of FIGS. 19 and 20A-20C may be implemented as one or more of the example integrated cryogenic hydrogen tank systems 500-900 of FIGS. 5-9.

The example cryogenic refueling system 1900 can further include a manually operated or electronically actuated cryogenic valve 1908. In some examples, the cryogenic valve is a shut-off valve to quickly terminate flow to the integrated tank system 1912 such that the integrated tank system 1912 does not overfill. The example cryogenic valve 1908 is constructed to thermally insulate the cryogenic fuel during transmission so that the fluid does not heat up, vaporize, and leak out as a gas. In some examples, the cryogenic valve 1908 is connected to the integrated tank system 1912 by one or more VJ flowlines 1910.

In some examples, the VJ flowlines 1910 illustrated in FIG. 19 are used to connect the components of the cryogenic refueling system 1900. The VJ flowlines 1910 of the example cryogenic refueling system 1900 maintain the temperatures of cryogenic fluids so the fluids do not heat up and leak out of the system 1900 as gases. In some examples, the VJ flowlines 1910 can include VJ pipes, flexible lines, VJ valves, vapor vents, vapor vent heaters, VJ manifolds, etc. In general, the example VJ flowlines 1910 include an inner and an outer pipe or line. The inner pipe of the example VJ flowlines 1910 carries the cryogenic liquid and is insulated with multiple alternating layers of a heat barrier and a non-conductive spacer. The insulating layers create a space between the inner and outer pipes in the example VJ flowlines 1910 that is depressurized using a vacuum pump to create a static vacuum shield. The vacuum shield safeguards the example cryogenic fuel from heat transfer due to conduction, convection, and radiation.

The example cryogenic refueling system 1900 illustrated in FIG. 19 includes a flowmeter 1906. In some examples, the flowmeter 1906 is a cryogenic flowmeter that measures the volumetric flowrate of the cryogenic fuel over multiple time periods. The term time period refers to the length of time over which the example cryogenic flows at a particular volumetric flowrate. The volume of the example cryogenic fuel supplied to the integrated tank system 1912 is determined by aggregating volumetric flowrates multiplied by the corresponding time periods for the duration of refueling. The density of the example cryogenic fuel supplied to the integrated tank system 1912 is a thermodynamic property dependent on the temperature of the cryogenic fuel. Since the example VJ flowlines 1910 prevent the cryogenic fuel from absorbing heat during the refueling process, the temperature at which the cryogenic fuel is stored in the supply tank 1902 is similar to the temperature at which the cryogenic fuel is stored on the integrated tank system 1912. Therefore, the density of the example cryogenic fuel within the integrated tank system 1912 can be determined at multiple occurrences during the refueling process either from a temperature reading of the integrated tank system 1912 or the supply tank 1902. Furthermore, the example flowmeter 1906 allows determination of cryogenic fuel mass stored in the integrated tank system 1912. However, the density and mass of the example cryogenic fuel in the integrated tank system 1912 is dependent on the temperature of the cryogenic fuel within the supply tank 1902, which is generally not adjustable. For example, the supply tank 1902 can be filled at a liquid cryogen industrial facility with LH2 at 20 Kelvin (K) prior to transporting the cryogenic fuel to the hydrogen aircraft for refueling. The example LH2 temperature of 20 K correlates to an example LH2 saturated pressure of 14 pounds per square inch (psi), which is similar to atmospheric pressure and is therefore a desired saturated pressure for example LH2 stored in the integrated tank system 1912. However in transit, the example temperature of LH2 within the supply tank 1902 can increase to a temperature of 24 K. The example LH2 temperature of 24 K correlates to an example LH2 saturated pressure of 40 psi, which can be an undesirable saturated pressure for stored LH2 in the integrated tank system 1912.

As shown in FIG. 19, the example integrated tank system 1912 is located on a hydrogen aircraft to supply liquid or gaseous hydrogen to hydrogen engine(s). The example hydrogen-powered turbine engine(s) combust a mixture of hydrogen fuel and compressed air to generate thrust. The example integrated tank system 1912 stores cryogenic fuel at low temperatures (e.g., 20 K) relative to non-cryogenic fuel tanks. The example integrated tank system 1912 thermally insulates the cryogenic fuel to prevent temperature increases (e.g., from 20 K to 24 K) which can cause boil-off and saturated pressure increases (e.g., from 14 psi to 40 psi).

FIG. 20A illustrates a sub-cooling cryogenic refueling system 2000 ("system 2000") that includes a supply tank 2002 connected to a sub-cooler 2004. The example sub-cooler 2004 can be used in place of the flow control valve 1904 of FIG. 19. In the illustrated example of FIG. 20A, the sub-cooler 2004 includes a first valve 2006, a second valve 2008, a cryogenic heat exchanger 2010, and a temperature sensor 2012. In the illustrated example of FIG. 20A, the system 2000 includes the flowmeter 1906, the cryogenic valve 1908, the VJ flowlines 1910, the integrated tank system 1912 (e.g., example integrated cryogenic hydrogen tank systems 500-900), a vaporizer 2022, a compressor 2024, and storage tank(s) 2026.

The example sub-cooler 2004 illustrated in FIG. 20A includes the first valve 2006 to separate the flowing cryogenic fuel into a primary flowline 2028 and an auxiliary flowline 2030. The example first valve 2006 can vary the volumetric flowrate into the primary flowline 2028 and auxiliary flowline 2030. The example sub-cooler 2004 further includes a second valve 2008 to reduce the saturated pressure of the cryogenic fuel in the auxiliary flowline 2030, which reduces the temperature of the cryogenic fuel flowing through the auxiliary flowline 2030. The example sub-cooler 2004 further includes a cryogenic heat exchanger 2010 to transfer heat from the warmer cryogenic fuel in the primary flowline 2028 to the cooler cryogenic fuel in the auxiliary flowline 2030. The example sub-cooler 2004 further includes a temperature sensor 2012 that measures the temperature of the cryogenic fuel in the primary flowline 2028 and feeds the measured temperature back to a sub-cooler controller 2032 to determine the actuator position in the first valve 2006. Thus, the primary flowline 2028 of the sub-cooler 2004 is fluidly coupled a tank of the integrated tank system 1912 such that the sub-cooler can provide sub-cooled LH2 fuel to each tank of the integrated tank system 1912 substantially simultaneously.

The example sub-cooler 2004 illustrated in FIG. 20A includes the first valve 2006 which can be an electronically actuated proportional valve and/or servo valve, for example. Traditional directional control valves generally operate in fully open, fully closed, or fully switched states of flow. Changing flow direction during operation with traditional directional control valves would require separate individual valves for each direction and would involve complex hydraulic circuits. Proportional valves and/or servo valves can adjust the spool positions within the valves to control the flowrates through one or more outlets. The variable positioning allows spools to be designed with metering notches to provide directional control functions in a single valve. The example first valve 2006 can be a proportional valve that inputs one flowline of cryogenic fuel and outputs two flowlines of variable and controllable volumetric flow, for example. The example first valve 2006 can adjust the area of an inlet to the primary flowline 2028 and the area of an inlet to the auxiliary flowline 2030 by adjusting the spool position within the example first valve 2006. By adjusting the inlet areas of the primary flowline 2028 and the auxiliary flowline 2030, the example first valve 2006 adjusts the flowrate within the primary flowline 2028 and the auxiliary flowline 2030.

The example sub-cooler 2004 illustrated in FIG. 20A includes the second valve 2008, such as a thermal expansion valve, etc. A thermal expansion valve is a metering device that can input a cryogenic fluid and, in some examples, change the state of part of the cryogenic liquid to a gas, thus reducing the saturated pressure (e.g., from 40 psi to 4 psi) and temperature (e.g., from 24 K to 16 K) within the auxiliary flowline 2030. When the saturated pressure of LH2 is decreased, the temperature of LH2 also decreases. Therefore, by thermally expanding the example LH2 in the second valve 2008, the temperature in the auxiliary flowline 2030 decreases. The relationship of temperature versus saturated pressure for example LH2 is described above with reference to chart 1000 of FIG. 10. The example second valve 2008 can maintain a consistent saturated pressure in the auxiliary flowline downstream of the second valve 2008 by mechanically and/or electronically adjusting the flow of fluid from the upstream inlet to the downstream outlet during operation. The saturated pressure the example second valve 2008 outputs can be calibrated prior to operation.

The example sub-cooler 2004 illustrated in FIG. 20A includes the cryogenic heat exchanger 2010. The example cryogenic heat exchanger 2010 can transfer heat from a warmer flowline (e.g., the primary flowline 2028) to a cooler flowline (e.g., the auxiliary flowline 2030). The primary flowline 2028 and the auxiliary flowline 2030 enter the cryogenic heat exchanger 2010 and flow through sets of tubes and/or plates within a casing and/or a shell. The tubes can be supported by other components, for example fans, condensers, coolants, plates, baffles, tie-rods, spacers, etc. The primary flowline 2028 indirectly contacts the auxiliary flowline 2030 such that the fluids do not mix, but the primary flowline 2028 can freely transfer heat to the auxiliary flowline 2030. The example cryogenic heat exchanger 2010 can be of single pass and/or multi pass designs with fluid flowing in a cross flow, counter flow, or parallel flow pattern. In some examples, the cryogenic heat exchanger 2010 uses a cross flow method wherein the primary flowline 2028 and the auxiliary flowline 2030 enter the cryogenic heat exchanger 2010 at two different points and cross paths perpendicularly. In some examples, the cryogenic heat exchanger 2010 uses a parallel flow method wherein the primary flowline 2028 and the auxiliary flowline 2030 enter the cryogenic heat exchanger 2010 at the same end, flow in parallel paths, and exit at the other end. In some examples, the cryogenic heat exchanger 2010 uses a counter flow method wherein the primary flowline 2028 and the auxiliary flowline 2030 enter the cryogenic heat exchanger 2010 at opposite ends, flow in parallel paths, and exit at opposite ends. The example sub-cooler 2004 illustrated in FIG. 20A includes a temperature sensor 2012. The example temperature sensor 2012 can measure the temperature of the cryogenic fuel within the primary flowline 2028 and feed the measured temperature back to the sub-cooler controller 2032. The example temperature sensor 2012 can be a cryogenic silicon sensor, platinum resistance sensor, cryogenic temperature monitor, etc.

The example sub-cooler 2004 illustrated in FIG. 20A includes a sub-cooler controller 2032. The example sub-cooler controller 2032 is a closed-loop control system including a first controller and a second controller. In some examples, the first controller is a temperature loop controller 2034. In some examples, the second controller is a position loop controller 2036. The temperature loop controller 2034 and/or the position loop controller 2036 of FIG. 20A may be instantiated (e.g., creating an instance of, bring into being for any length of time, materialize, implement, etc.) by processor circuitry 2038 such as a central processing unit executing instructions. In some examples, the temperature loop controller 2034 and the position loop controller 2036 are integrated on the processor circuitry 2038 as shown in FIG. 20A. The example temperature loop controller 2034 determines a commanded first valve actuator position based on at least a source temperature and a target temperature. In some examples, the source temperature is a temperature of the cryogenic fuel in the supply tank 2002. In some examples, the target temperature is a temperature of the cryogenic fuel stored in the integrated tank system 2014. The temperature in the example supply tank 2002 can be read manually from a temperature gauge and entered into the temperature loop controller 2034, read and entered electronically by the temperature loop controller 2034, or any combination of those options. The example temperature loop controller 2034 determines an error between a measured temperature from the temperature sensor 2012 and the target temperature. The example temperature loop controller 2034 determines (e.g., adjusts) the commanded first valve actuator position based on the error and a preceding commanded first valve actuator position.

The example position loop controller 2036 determines an actual first valve actuator position based on the commanded first valve actuator position. The example position loop controller 2036 generates a primary first valve effective area and an auxiliary first valve effective area based on the actual first valve actuator position. In some examples, the primary first valve effective area is at the inlet of the primary flowline 2028. In some examples, the auxiliary first valve effective area is at the inlet of the auxiliary flowline 2030. By increasing the primary first valve effective area in conjunction with decreasing the auxiliary first valve effective area, the temperature of the cryogenic fuel in the primary flowline 2028 (measured by the temperature sensor 2012) increases. By decreasing the primary first valve effective area in conjunction with increasing the auxiliary first valve effective area, the temperature of the cryogenic fuel in the primary flowline 2028 (measured by the temperature sensor 2012) decreases.

The example cryogenic heat exchanger 2010 of the sub-cooler 2004 illustrated in FIG. 20A can input cryogenic fuel in the primary flowline 2028 at one temperature (e.g., 24 K) and can output the cryogenic fuel in the primary flowline 2028 at a lower temperature (e.g., 20 K). The temperature output in the primary flowline 2028 from the example cryogenic heat exchanger 2010 is dependent on the amount of cryogenic liquid and/or vapor that is input to the cryogenic heat exchanger 2010 via the auxiliary flowline 2030. In some examples, the amount of cryogenic liquid and/or vapor input to the cryogenic heat exchanger 2010 via the auxiliary flowline 2030 is determined based on the primary first valve effective area and the auxiliary first valve effective area generated by the position loop controller 2036. Two examples disclosed below illustrate operational cases of the sub-cooler 2004, wherein the example LH2 temperature in the supply tank 2002 is 24 K, the LH2 temperature in the auxiliary flowline 2030 downstream of the second valve 2008 is 16 K, and the target temperature in the integrated tank system 1912 is 20 K. In a first example, the first valve 2006 is actuated by the sub-cooler controller 2032 such that the primary first valve effective area is 90% of the maximum area of the inlet to the primary flowline 2028 and the auxiliary first valve effective area is 10% of the maximum area of the inlet to the auxiliary flowline 2030. The first example case can result in the LH2 temperature measured by the temperature sensor 2012 to be 22 K. In a second example, the sub-cooler controller 2032 actuates the first valve 2006 such that the primary fist valve effective area is 80% of the maximum area of the inlet to the primary flowline 2028 and the auxiliary first valve effective area is 20% of the maximum area of the inlet to the auxiliary flowline 2030. The second example case can result in the LH2 temperature measured by the temperature sensor 2012 to be 230 K, which matches the target temperature.

The example sub-cooling cryogenic refueling system 2000 illustrated in FIG. 20A includes the supply tank 2002. In some examples, the supply tank 2002 is a cryogenic transport trailer and/or mobile tanker that brings cryogenic fuel to the refueling location. For example, the supply tank 2002 can be driven on a tarmac to refuel a hydrogen aircraft preflight. In some examples, the supply tank 2002 contains an integrated and/or separate system and/or apparatus for equalizing vapor pressure within the supply tank 2002 and providing a pressure differential between the supply tank 2002 and the integrated tank system 1912. The term source temperature refers to the temperature of the cryogenic fuel stored in the example supply tank 2002 prior to refueling of the example integrated tank system 1912. Further examples of systems and/or apparatus for providing a pressure differential to the system 2000 are described below.

The example sub-cooling cryogenic refueling system 2000 illustrated in FIG. 20A includes the vaporizer 2022. The example vaporizer 2022 can be a cryogenic vaporizer that converts liquid cryogens into a gaseous state. The example vaporizer 2022 can use fins to absorb heat from surrounding ambient air and transfer that heat to the cryogenic fuel flowing though the tube. The example cryogenic fuel can be partially or fully converted to a gaseous state by the second valve 2008 and/or the cryogenic heat exchanger 2010. The example vaporizer 2022 ensures that the unused cryogenic fuel in the auxiliary flowline 2030 is converted to a gas for storage and reuse. The pressure setting of the example vaporizer 2022 refers to the pressure of vaporized cryogenic liquid exiting the example vaporizer 2022. The pressure setting can be adjusted by the sub-cooler controller 2032 or by another controller located on and/or connected to the example vaporizer 2022. Alternatively, the cryogenic fuel can be vaporized and released into ambient air.

The example vaporizer 2022 illustrated in FIG. 20A leads to the compressor 2024 and the storage tank(s) 2026. The example compressor 2024 pressurizes the gas leaving the vaporizer 2022 and directs the pressurized gas into the storage tank 2026. The pressure of the gas exiting the example compressor 2024 divided by the pressure of the gas entering the example compressor 2024 is referred to as the compression ratio of the compressor 2024. The example compression ratio can be adjusted by the sub-cooler controller 2032 or another controller and/or control system located on and/or connected to the compressor 2024. The unused gas in the storage tank 2026 can be converted back into a cryogenic fluid and used at a later time as a cryogenic fuel.

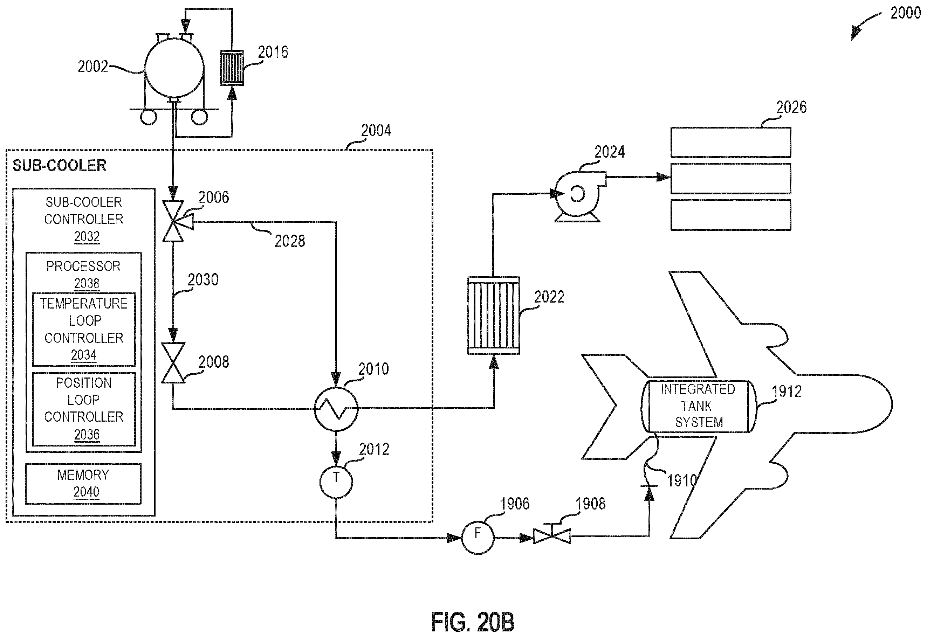

FIG. 20B illustrates the sub-cooling cryogenic refueling system 2000 ("system 2000") that includes the supply tank 2002 connected to the sub-cooler 2004 as previously described. The example system 2000 of FIG. 20B, includes the same parts, components, systems, etc. as the system 2000 of FIG. 20A. However, the example system 2000 as illustrated in FIG. 20B also includes the supply tank 2002 with an example pressure building coil 2016 integrated therein.

The example supply tank 2002 of FIG. 20B includes a flowline leading to the pressure building coil 2016. In some examples, the flowline leading to the pressure building coil 2016 is separate from the flowline leading to the sub-cooler 2004. The example pressure building coil 2016 includes a flowline leading back to the supply tank 2002. In some examples, the cryogenic fuel in the supply tank 2002 is extracted through the flowline into the pressure building coil 2016 in accordance with the flow direction illustrated in FIG. 20B. In some examples, the pressure building coil 2016 increases the vapor pressure in the supply tank 2002 prior to refueling such that the vapor pressure in the supply tank is greater than the vapor pressure in the integrated tank system 1912. The integrated tank system 1912 can include the pressure relief valve(s) 430 of FIG. 4 to reduce the vapor pressure within the integrated tank system 1912. In some examples, increasing the vapor pressure in the supply tank 2002 and reducing the vapor pressure in the integrated tank system 2014 provides a pressure differential to the system 2000.

The example pressure building coil 2016 of FIG. 20B is used to regulate and maintain vapor pressure for consistent refueling speed in the system 2000. In some examples the pressure building coil 2016 is a vaporizer with fins heated by ambient air, which cause flowing cryogenic liquid to phase change into vapor. The pressure building coil 2016 of this example feeds the vapor back into the supply tank 2002, thus increasing the vapor pressure within the supply tank 2002. In some examples, the rising vapor pressure applies a distributed force to the surface of the cryogenic fuel, which drives the cryogenic fuel to flow through the pressure building coil 2016, and thus forms a pressure building loop. The example pressure building coil 2016 includes a controller that actuates the input valve to the pressure building loop in response to the output vapor pressure of the pressure building coil 2016. For example, prior to refueling, the integrated tank system 1912 has a vapor pressure of 2200 psi and the supply tank 2002 has a vapor pressure of 15 psi. The example valve to the pressure building coil 2016 is opened and the output pressure is set to 100 psi with the controller. At the same time, for instance, the vent valve on the integrated tank system 1912 is opened and the vapor pressure is reduced to 70 psi. In such examples, the refueling speed of the system 2000 will be a first speed. If, for example, the vapor pressure was increased to 80 psi in the supply tank 2002 by the pressure building coil 2016, and the vapor pressure was reduced to 70 psi in the integrated tank system 1912, then the refueling speed would be less than the first speed.

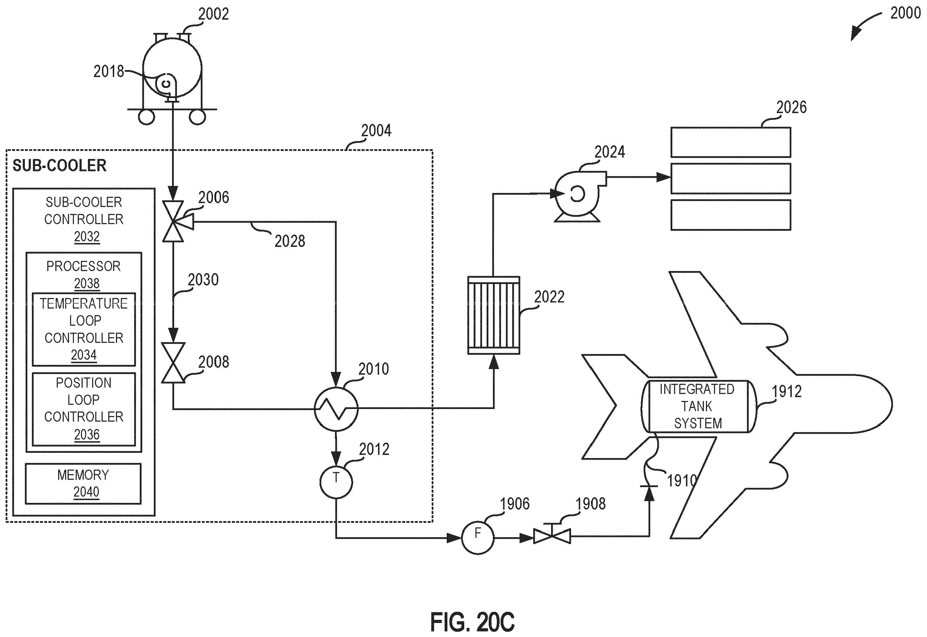

FIG. 20C illustrates the sub-cooling cryogenic refueling system 2000 ("system 2000") that includes the supply tank 2002 connected to the sub-cooler 2004 as previously described. The example system 2000 of FIG. 20C, includes the same parts, components, systems, etc. as the systems 2000 of FIGS. 20A-B. However, the example system 2000 as illustrated in FIG. 20C also includes the supply tank 2002 with an example transfer pump 2018 integrated therein.

The example transfer pump 2018 of FIG. 20C can be a cryogenic centrifugal pump that is electronically and/or hydraulically driven. In some examples, the transfer pump is submerged in the cryogenic liquid with the supply tank 2002 and/or externally connected to the supply tank 2002. In some examples, the transfer pump 2018 is electronically actuated, controllable, and provides variable flow speeds of cryogenic fuel from the supply tank 2002 to the system 2000. In some examples, the transfer pump 2018 includes a gearbox that provides fixed and/or variable flow speeds of cryogenic fuel from the supply tank 2002 to the system 2000. The example transfer pump 2018 illustrated in FIG. 20C provides a vapor pressure to the system 2000 that is greater than the vapor pressure within the integrated tank system 1912. In some examples, the pressure relief valve(s) 430 on the integrated tank system 1912 can be opened to reduce the pressure within the integrated tank system 1912 to adjust the flowrate within the system 2000 and/or to alleviate the work required by the transfer pump 2018 to pump the cryogenic fuel into the system 2000.

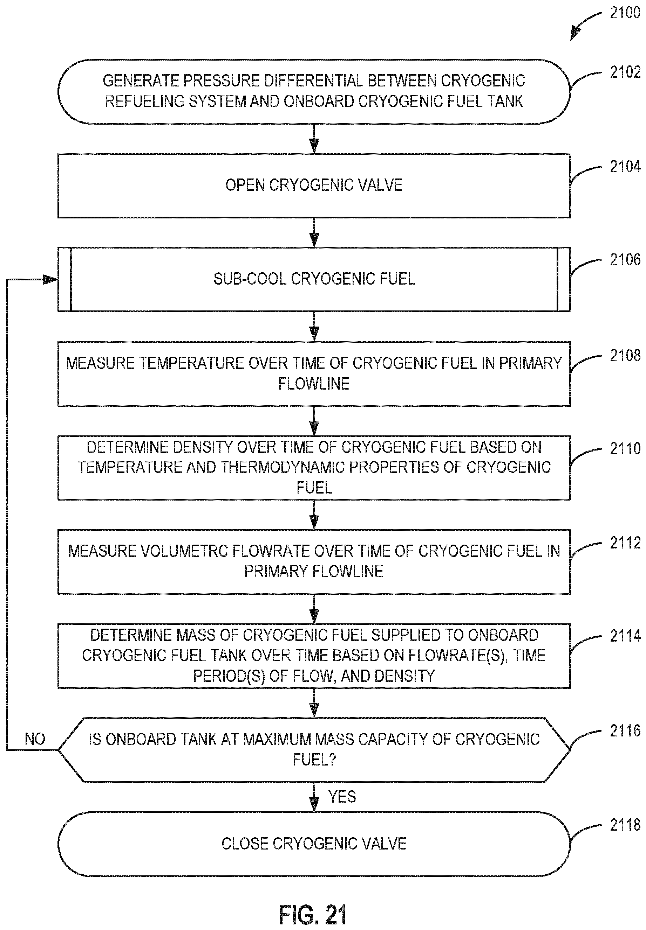

FIG. 21 is a flow diagram illustrating an example process/operation 2100 to control operation of the sub-cooling cryogenic refueling system 2000 as described above. While the example process/operation 2100 is described with primary reference to sub-cooling LH2 with the sub-cooling cryogenic refueling system 2000 of FIGS. 20A-20C, the process/operation 2100 can be used to refuel an integrated tank system with another sub-cooled cryogenic fuel.

At block 2102, the supply tank 2002 increases vapor pressure within the supply tank 2002 and/or increases the vapor pressure within the system 2000. The supply tank 2002 has a pressure building coil 2016 as illustrated in FIG. 20B, a transfer pump 2018 as illustrated in FIG. 20C, and/or another pressure building system as illustrated in FIG. 20A incorporated with the supply tank 2002 and/or with the system 2000 upstream of the sub-cooler 2004. In conjunction with increasing the vapor pressure in the supply tank 2002 and/or in the system 2000, the vapor pressure in the integrated tank system 2014 is decreased by opening vent valves on the integrated tank system 2014. This combination of pressure changes generates a pressure differential across the system 2000.

At block 2104, the cryogenic valve 1908 is opened either manually or electronically by the sub-cooler controller 2032 or another controller integrated into the system 2000. Opening the cryogenic valve 1908 begins the refueling of the integrated tank system 2014, allowing the cryogenic fuel to pass through the sub-cooler 2004 into the integrated tank system 2014.

At block 2106, the cryogenic fuel is sub-cooled by the sub-cooler 2004. For example, the cryogenic fuel from the supply tank 2002 flows to a first valve 2006 that splits the flow into a primary flowline 2028 and an auxiliary flowline 2030. The auxiliary flowline 2030 directs the cryogenic fuel to a second valve 2008 that lowers the saturated pressure and temperature of the cryogenic fuel. Both the primary flowline 2028 and the auxiliary flowline 2030 flow to a cryogenic heat exchanger 2010, where heat is transferred from the primary flowline 2028 to the auxiliary flowline 2030. The sub-cooled cryogenic fuel in the primary flowline 2028 is then directed to a temperature sensor 2012 and ultimately to an integrated tank system 2014.

At block 2108, the temperature of the cryogenic fuel is measured by the temperature sensor 2012 and stored at multiple intervals over the duration of the refueling operation. The measured temperatures can be stored in the sub-cooler controller memory 2040 and/or in some other memory located in the system 2000.

At block 2110, the density of the cryogenic fuel is determined and stored at the same intervals over the duration of the refueling operation based on example thermodynamic properties as illustrated in FIG. 10. The determined densities can be stored in the sub-cooler controller memory 2040 and/or in another memory located in the system 2000, for example.

At block 2112, the volumetric flowrate is measured by the flowmeter 1906 and stored at the same intervals over the duration of the refueling operation. The measured flowrates can be stored in the sub-cooler controller memory 2040 and/or in another memory located in the system 2000.

At block 2114, the sub-cooler controller 2032 and/or another computing device located in the system 2000 can determine the total mass of cryogenic fuel stored in the integrated tank system 2014 based on the temperatures, densities, and flowrates measured and/or determined over the duration of the refueling operation. For example, the sub-cooler 2004 can refuel LH2 to the integrated tank system 2014 at 20 K, which corresponds to an LH2 density of 71 kg/m$^3$. In such an example, the integrated tank system 2014 can have a maximum volume capacity for LH2 of 18 m$^3$. If the flowmeter measures the volumetric flowrate to be 0.01 m$^3$/s, while the example LH2 is 20 K, then the time it takes to refuel the integrated tank system 2014 is 30 minutes and the total mass of refueled LH2 is 1278 kg.

At block 2116, the sub-cooler controller 2032 or another controlling device located in the system 2000 can determine if the total mass of cryogenic fuel stored in the integrated tank system 2014 is at the target total mass (e.g., 1278 kg). If the total mass of the cryogenic fuel in the integrated tank system 2014 is not at the target capacity, then the sub-cooling cryogenic refueling operation continues as control reverts to block 2106.

At block 2118, if the total mass of the cryogenic fuel in the integrated tank system 2014 is at the target capacity, then the sub-cooler controller 2032 or another controlling device located in the system 2000 can send an electronic signal to the cryogenic valve 1908 to shut off the flow and end the refueling operation. Alternatively, if the total mass of the cryogenic fuel in the integrated tank system 2014 is at the target capacity, then the cryogenic valve can be shut off manually.

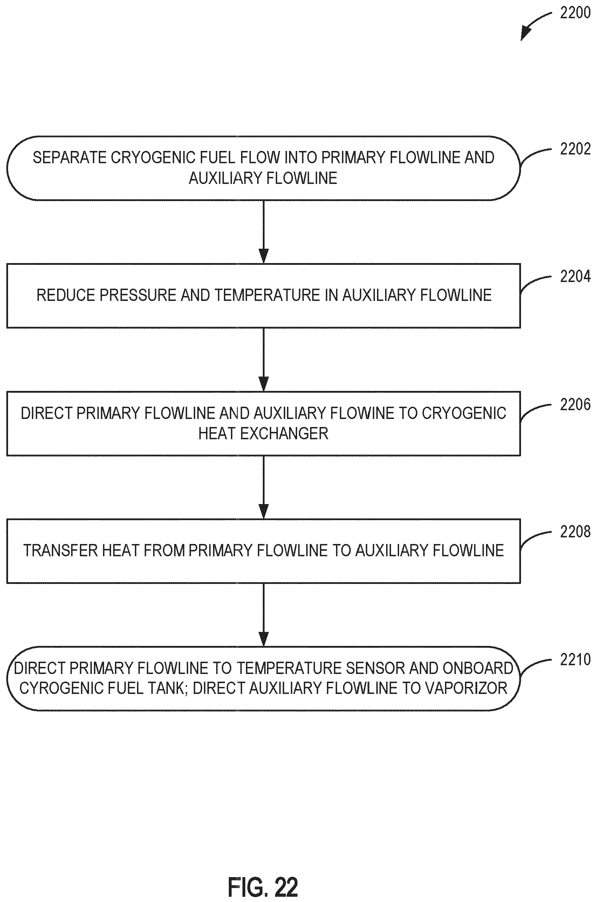

FIG. 22 is a flow diagram illustrating an example process or operation 2200 according to block 2106 of FIG. 21 to sub-cool the cryogenic fuel by the sub-cooler 2004 (e.g., block 2106 of the example of FIG. 21) that may be followed by the sub-cooler 2004 as described above. While the operation 2200 is described with primary reference to sub-cooling LH2 with the sub-cooler 2004 of FIGS. 20A-20C, the operation 2200 can be used to refuel an integrated tank system with another sub-cooled cryogenic fuel.

At block 2202, the first valve 2006 of the sub-cooler 2004 separates the flow of cryogenic fuel from the supply tank 2002 into a primary flowline 2028 and an auxiliary flowline 2030. For example, the controller can actuate the first valve 2006 such that the primary first valve effective area is 90% of the maximum area of the inlet to the primary flowline 2028 and the auxiliary first valve effective area is 10% of the maximum area of the inlet to the auxiliary flowline 2030. Therefore, 90% of the cryogenic fuel from the supply tank 2002 flows into the primary flowline 2028 and 10% of the cryogenic fuel from the supply tank 2002 flows into the auxiliary flowline 2030.

At block 2204, the second valve 2008 of the sub-cooler 2004 reduces the saturated pressure of the cryogenic fuel in the auxiliary flowline 2030, thereby reducing the temperature of the cryogenic fuel in the auxiliary flowline 2030. For example, the second valve 2008 can expand LH2 in the auxiliary flowline 2030 such that the LH2 temperature drops from 24 K to 16 K and the LH2 saturated pressure drops from 40 psi to 14 psi.

At block 2206, the sub-cooler 2004 directs the primary flowline 2028 and the auxiliary flowline 2030 to the cryogenic heat exchanger 2010. At block 2208, the cryogenic heat exchanger 2010 processes the cryogenic fuel from the primary flowline 2028 and the auxiliary flowline 2030 to transfer heat from the primary flowline 2028 to the auxiliary flowline 2030, which sub-cools the cryogenic fuel flowing through the primary flowline 2028. For example, the cryogenic fuel temperature entering the cryogenic heat exchanger 2010 via the primary flowline 2028 can be 24 K and the cryogenic fuel temperature entering the cryogenic heat exchanger 2010 via the auxiliary flowline 2030 can be 16 K. In such an example, the cryogenic fuel temperature exiting the cryogenic heat exchanger 2010 via the primary flowline 2028 can be 20 K, depending on how much cryogenic fuel was diverted to the auxiliary flowline 2030 by the first valve 2006.

At block 2210, the sub-cooler 2004 directs the primary flowline 2028 to the temperature sensor 2012 and then, to the integrated tank system 2014. The sub-cooler 2004 also directs the auxiliary flowline to the vaporizer 2022.

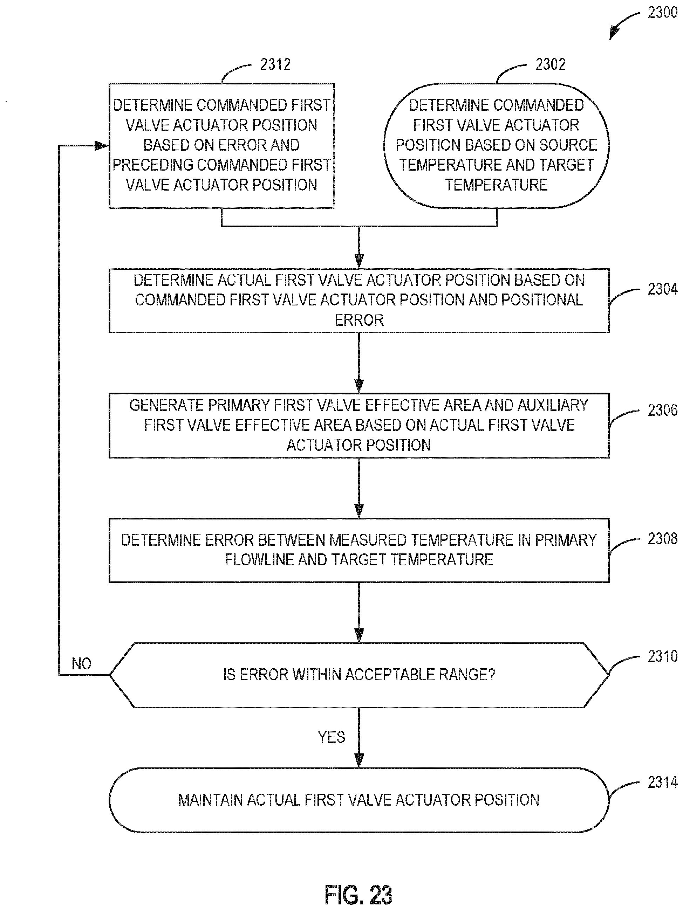

Similar to the example operations of FIGS. 11, the example operations of FIG. 23 may be implemented using executable instructions (e.g., computer and/or machine readable instructions) stored on one or more non-transitory computer and/or machine readable media such as optical storage devices, magnetic storage devices, an HDD, a flash memory, a read-only memory (ROM), a CD, a DVD, a cache, a RAM of any type, a register, and/or any other storage device or storage disk in which information is stored for any duration (e.g., for extended time periods, permanently, for brief instances, for temporarily buffering, and/or for caching of the information). As used herein, the terms non-transitory computer readable medium and non-transitory computer readable storage medium are expressly defined to include any type of computer readable storage device and/or storage disk and to exclude propagating signals and to exclude transmission media.

FIG. 23 is a flow diagram illustrating an operation 2300 that may be followed by the sub-cooler controller 2032 as described above. While the operation 2300 is described with primary reference to the sub-cooler controller 2032 of FIGS. 20A-20C, the operation 2300 can be used to control any sub-cooler in a sub-cooling cryogenic refueling system.

At block 2302, the temperature loop controller 2034 determines a commanded first valve actuator position based on the temperature of the cryogenic fuel in the supply tank 2002 and the target temperature of the cryogenic fuel to be stored in the integrated tank system 2014. For example, the cryogenic fuel temperature stored in the supply tank 2002 can be 24 K and the target cryogenic fuel temperature to be stored in the integrated tank system 2014 can be 20 K. The example temperature loop controller 2034 can determine that to achieve the target temperature, the first valve actuator position shall be actuated to a position in which the primary first valve effective area is 80% of the maximum area of the inlet to the primary flowline 2028 and the auxiliary first valve effective area is 20% of the maximum area of the inlet to the auxiliary flowline 2030.

At block 2304, the position loop controller 2036 determines an actual first valve actuator position based on the commanded first valve actuator position. The commanded first valve actuator position is the position to which the spool(s) inside the first valve 2006 are to be actuated by a servomotor to achieve a desired primary and auxiliary first valve effective areas. The position loop controller 2036 obtains the actual first valve actuator position from a servomotor sensor in the first valve 2006. The position loop controller 2036 determines the error/difference between the actual first valve actuator position from the servomotor sensor and the commanded first valve actuator position from the temperature loop controller 2034. The position loop controller 2036 uses a feedback loop to control the servomotor in the first valve 2006 and reduce the error between the actual and commanded first valve actuator positions to near zero.

At block 2306, the position loop controller 2036 generates a primary first valve effective area and an auxiliary first valve effective area based on the actual first valve actuator position. The primary first valve effective area and the auxiliary first valve effective area affect the volumetric flowrates in the primary flowline 2028 and the auxiliary flowline 2030, respectively.

At block 2308, the temperature loop controller 2034 determines an error between the measured temperature from the temperature sensor 2012 and the target temperature.

At block 2310, the temperature loop controller 2034 determines if the error is within an acceptable range and/or sufficiently near zero.

At block 2312, if the temperature loop controller 2034 determines that the error is not within the acceptable range, then the temperature loop controller 2034 determines an adjusted commanded first valve actuator position based on the error and the preceding commanded first valve actuator position.

At block 2314, if the temperature loop controller 2034 determines that the error is within the acceptable range, then the position loop controller 2036 maintains the current actual first valve actuator position.

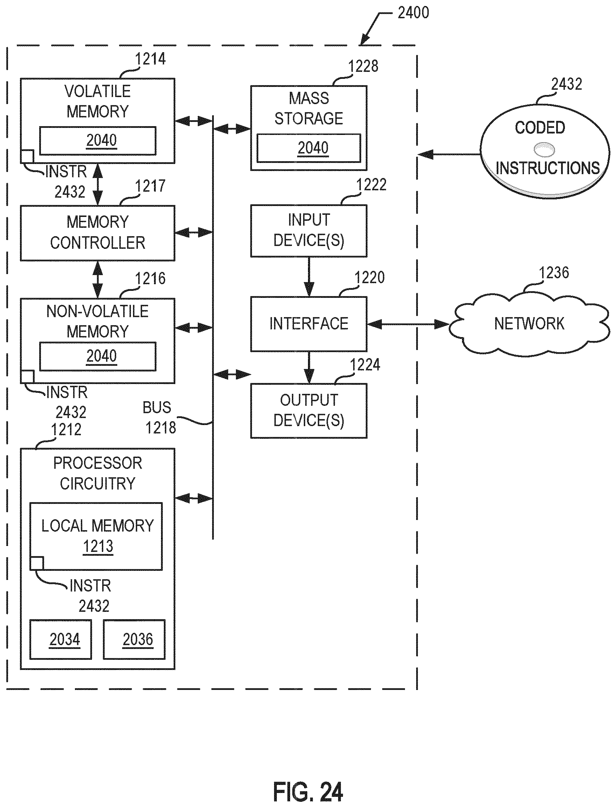

FIG. 24 is a block diagram of an example processor platform 2400 structured to execute and/or instantiate the machine readable instructions and/or operations of FIG. 23 to implement the sub-cooler controller 2032 of FIGS. 20A-20C. The processor platform 2400 can be, for example, full authority digital engine control (FADEC), a cockpit control panel assembly, avionics systems, a supply tank control panel assembly, a laptop, a mobile device (e.g., a cell phone, a smart phone, a tablet such as an iPad™), etc. The processor platform 2400 can be the same as, integrated into, and/or connected to the processor platform 1200 illustrated in FIG. 12. As such, repeated reference numbers illustrated in FIG. 24 can be the same as and/or substantially similar to corresponding reference numbers illustrated in FIG. 12. In this example, the processor circuitry 1212 of the processor platform 2400 and/or the processor platform 1200 implements the example temperature loop controller 2034 and the example position loop controller 2036. The machine executable instructions 2432, which can be implemented by the machine readable instructions of FIG. 23, can be stored in the mass storage device 1228, in the volatile memory 1214, in the non-volatile memory 1216, and/or on a removable non-transitory computer readable storage medium.

The example sub-cooling refueling systems 2000 described above with reference to FIGS. 20A-C and 21-24 can control temperatures and pressures of flowing LH2 fuel during refueling processes of hydrogen aircraft. The example sub-cooling systems 2000 can add LH2 to the integrated tank systems 500-900 at desired cryogenic conditions to increase the density of the LH2, which increases the storage capacity of the integrated tank systems 500-900. Thus, the sub-cooling systems 2000 can extend the range of the hydrogen aircraft and increase the efficiency of the integrated tank systems 500-900.

Example integrated cryogenic hydrogen tank system(s) 500-900 described above can be further improved based on types and/or configurations of LH2 pumps used to extract LH2 fuel therefrom. Example phase separating LH2 pump systems are described below that enable separation of GH2 from LH2 fuel extracted from the integrated tank system(s) 500-900. Example phase separating LH2 pump systems can return the separated GH2 back to the integrated tank system(s) 500-900 to increase the vapor pressure therein. Thus, example phase separating LH2 pump systems can reduce the use of or remove the need for vapor pressure regulation systems (e.g., the thermosiphon loop(s) 702, the heating system(s) 704, etc.) in the integrated tank system(s) 500-900. Furthermore, example phase separating LH2 pump systems described below can prevent and/or inhibit reduction of LH2 mass flowrates from the integrated tank systems 500-900 by reducing and/or elimination cavitation in an LH2 pump. Furthermore, hydrogen vapor separated from the LH2 fuel can be diverted to other hydrogen power systems (e.g., hydrogen fuel cells, engines, etc.) onboard the aircraft to reduce the use of or remove the need for GH2 flowlines, valves, compressors, and/or pumps connected to and/or leading from the integrated tank system(s). Thus, example phase separating LH2 pump systems described below can be included in the integrated tank system(s) 500-900 to improve the weight costs, performance, and/or efficiency of the integrated tank system(s) 500-900 disclosed herein.

Cryogenic pumping systems (e.g., liquid hydrogen (LH2) pumping systems, liquid nitrogen (LN2) pumping systems, etc.) are included in vehicles (e.g., aircraft, cars, trucks, ships, etc.), such as hydrogen powered vehicles, to transfer cryogenic fuel to component(s) (e.g., high-pressure receiver tanks) and/or other system(s) (e.g., hydrogen fuel cells, fuel management system(s), hydrogen engines, etc.). Such cryogenic pumping systems are described with reference to LH2 pumping systems, but it should be appreciated that such cryogenic pumping systems can apply to other types of cryogenic liquid such as LN2, liquid helium, etc. Such LH2 pumping systems include an onboard LH2 tank, a first flowline to transmit LH2 from the LH2 tank to the LH2 pump, and a second flowline to transmit hydrogen vapor from the LH2 pump back to the onboard LH2 tank. The LH2 pump includes a suction adapter, a motor, a belt-driven crank drive, and a cold end compression chamber (e.g., cylinder) with a reciprocating piston. The suction adapter enables the LH2 to flow into the compression chamber when the piston moves from a top-dead center (TDC) position to a bottom-dead center (BDC) position. The motor and the crank drive move the piston back to the TDC position to compress the LH2. The compressed LH2 (e.g., cryo-compressed hydrogen) is fed through a pump discharge flowline that leads to the component(s) and/or other system(s) of the hydrogen powered vehicle. The suction adapter can also remove some hydrogen vapor present in the first flowline and send the vapor back to the LH2 tank via the second flowline. However, in many cases, the suction adapter alone is not able to remove a sufficient quantity of hydrogen vapor from the LH2.

Hydrogen vapor bubbles, or "cavities", can form in the onboard LH2 tank for many reasons. For example, during a refueling process of the onboard LH2 tank or any cryogenic hydrogen tank, turbulence, currents, or high flowrates can cause hydrogen vapor bubbles form in the LH2. Standard cryogenic practices stipulate that the cryogenic tank should rest for a duration (e.g., 24 hours) after the tank is refueled to allow the LH2 to settle and the vapor bubbles to dissipate. However, for hydrogen powered aircraft, there is a limited time (e.g., 30 minutes) that the aircraft is permitted to idle at an airport gate. When the hydrogen powered aircraft is refueled with LH2, there will inevitably be hydrogen vapor bubbles present within the onboard LH2 tank prior to takeoff.

In another example, during flight, the hydrogen powered aircraft can ascend or descend at non-zero angles (e.g., +/- 10 degrees) relative to cruising angle (e.g., zero degrees). Additionally, the hydrogen powered aircraft can experience turbulent conditions that can cause unexpected and unstable movement of the aircraft. As the aircraft ascends, descends, and/or experiences turbulence, the LH2 fuel can migrate (e.g., slosh) in the onboard LH2 tank and new hydrogen vapor bubbles can form.

In yet another example, during storage of the LH2 in the onboard LH2 tank, the hydrogen molecules undergo exothermic reactions causing temperatures to steadily increase. This temperature increase can cause the LH2 to boil and cause a decrease in stored LH2 mass due to evaporation (boil-off). In other words, despite an insulation quality of the onboard LH2 tank, the temperature of the LH2 can rise, and the LH2 can boil-off. Hydrogen vapor bubbles formed from boil-off can enter the first flowline with the LH2 and flow downstream to the LH2 pump.

As used herein, the "suction head" refers the to the difference between the vapor pressure and the actual (static) pressure of the LH2. During the pumping process of the LH2, a net positive suction head (NPSH) is achieved when the vapor pressure is greater than the static pressure of the LH2. Furthermore, to maintain the NPSH, the vapor pressure is regulated to a value greater than the saturated pressure at the given temperature of the LH2. In some cases, the quantity of hydrogen vapor can be increased in the LH2 tank (e.g., via a thermosiphon loop, a submerged heater, a vapor return line from the suction adaptor of the LH2 pump, etc.) to increase the vapor pressure above the saturated pressure and maintain the NPSH. The NPSH is utilized during the pumping process to cause the LH2 to flow from the upstream end (e.g., the onboard LH2 tank) to the downstream end (e.g., the LH2 pump and the discharge line). In other words, a sufficiently high NPSH (e.g., 10 pounds per square inch (psi)) is created in the system to cause the LH2 to flow into the LH2 pump and allow the LH2 pump to operate properly. When the static pressure falls below the vapor pressure (e.g., when the NPSH is formed), cavitation can occur, and hydrogen vapor bubbles can form in the LH2. As used herein, "cavitation" refers to the formation of bubbles (e.g., "cavities") in a liquid (e.g., LH2) due to movement (e.g., surface vibrations, sloshing, pouring, flowing, etc.,), boil-off, and/or the NPSH.

Since cavitation can occur in the onboard LH2 tank, the first flowline transfers both LH2 and hydrogen vapor-filled cavities from the onboard LH2 tank to the suction adapter. The suction adapter of the LH2 pump includes a conical metal grid filter that can rupture some of the bubbles and release hydrogen vapor into the second flowline to be returned to the onboard LH2 tank. However, due to the mass flow of the LH2 and the size of the filter, the suction adapter cannot eliminate all of the cavities, and some bubbles can enter into the cold end compression chamber along with the LH2.

When hydrogen vapor-filled cavities are present in the compression chamber, the piston compresses the bubbles, which causes the bubbles to collapse and generate shock waves that can damage the compression chamber, the piston, the suction adapter, the pump discharge flowline, etc. The damage caused by the collapse of the vapor cavities is referred to herein as "cavitation damage." The shock waves formed are generally strong near the point of collapse and weaken as they propagate outward. The bubbles near the walls of the compression chamber, the piston, and/or the suction adapter can cause the most catastrophic cavitation damage. Cavitation damage can cause high stresses, pitting, and/or erosion of wetted parts and can significantly damage the LH2 pump to the point where parts included therein may be replaced sooner than anticipated. Since components of LH2 pumps are associated with high costs (e.g., tens of thousands of United States dollars), frequent repair and replacement of damaged parts or systems is inefficient, expensive, and desirable to avoid. Furthermore, cavitation can cause a significant reduction in mass flowrate of LH2 through the LH2 pump. In some cases, cavitation can be detected by a sudden increase in a discharge temperature of the compressed mixture, a sudden drop in mass flow rate, a sudden drop in pump motor oscillations, and/or a sudden decrease in vibrations of the LH2 pump.

In examples described below, phase separating LH2 pump systems can be used to remove hydrogen vapor cavities from LH2 before the LH2 reaches the suction adapter of the LH2 pump. Example phase separation systems described below include a phase separator integrated directly into the first and second flowlines mentioned above. The example phase separator is a vacuum jacketed apparatus with a sintered metal portion through which the LH2 flows. The sintered metal portion can be a porous structure constructed from additive manufacturing; wherein multiple layers of metal alloy(s) are fused together. Such metal alloy(s) are compatible with LH2 at cryogenic temperatures (e.g., metal alloys tested at 297 Kelvin (K)). As such, the sintered metal portion of the phase separator is capable of withstanding cryogenic temperatures without becoming embrittled. When LH2 flows through the phase separator, the porous channels cause the LH2 and the hydrogen vapor to separate while also reducing the temperature and saturated pressure of the LH2. As the saturated temperature decreases, the density of the LH2 increases, and the density of the hydrogen vapor decreases. Due to a phenomenon referred to herein as "buoyancy-driven flow," density reduction of the hydrogen vapor causes the GH2 to rise out of the phase separator, into the second flowline (the hydrogen vapor return flowline), and back into the onboard LH2 tank. The density increase of the LH2 causes the LH2 to continue flowing through the sintered metal portion, into the first flowline (the LH2 flowline), and, eventually, into the LH2 pump.

Downstream of the phase separator, the first flowline includes LH2 and a substantially small amount of hydrogen vapor bubbles. In examples described below, a "substantially small" amount of hydrogen vapor bubbles corresponds to a range of quantities from zero bubbles to a quantity of bubbles (e.g., 2%, 5%, 10%, etc. of vapor per unit volume of LH2) that the suction adapter is capable of removing (e.g., via the metal grid filter) and transmitting back to the LH2 tank. In examples described below, phase separation systems for removing hydrogen gas bubbles from LH2 prior to the LH2 entering the LH2 pump results in less cavitation damage to the LH2 pump and a longer lifespan of the LH2 pump and/or components included therein, relative to current LH2 pump systems.

Example phase separating LH2 pump systems described below improve the ability to separate hydrogen vapor from the LH2/GH2 mixture extracted from the onboard LH2 tank. Thus, more hydrogen vapor can be separated from the LH2 extraction flowline and returned to the onboard LH2 tank via the vapor return flowline to increase the vapor pressure in the onboard LH2 tank. Therefore, example phase separating LH2 pump systems described below improve the ability/efficiency of LH2 pumps to extract LH2 from the onboard LH2 tanks because of the increased vapor pressure (in the onboard LH2 tanks) which maintains an increased NPSH in the system. Furthermore, increasing the vapor pressure in the onboard LH2 tank also increases the boiling point (e.g., temperature at which boil-off occurs) of the LH2. Thus, example phase separating LH2 pump systems described below reduce the amount of boil-off in the onboard LH2 tank, which reduces mass loss of LH2 fuel due to evaporation and reduces cavitation in the LH2. In some examples, the vapor return flowline can completely or partially divert the hydrogen vapor to other systems (e.g., hydrogen fuel cells, hydrogen engine fuel injectors, etc.) onboard the vehicle either at the given vapor pressure or after increasing the vapor pressure (e.g., via a compressor). For example, vapor return flowlines can direct at least a portion of the separated hydrogen vapor to a compressor, which can pressurize the vapor prior to combustion in gas turbine engine(s) (e.g., hydrogen powered engine(s)). In another example, the vapor return flowlines can direct at least a portion of the separated hydrogen vapor to a hydrogen fuel cell to convert chemical energy to electrical energy and power other onboard systems (e.g., auxiliary power, cabin air conditioning, etc.). Thus, example phase separating LH2 pump systems described below increase the amount of hydrogen fuel (e.g., GH2) available to other systems onboard the vehicle (e.g., aircraft).

For the figures described below, identical numerals indicate the same elements throughout the figures. The example illustration of FIG. 25 is a schematic representing an LH2 pumping system 2500. As shown in the example of FIG. 25, the LH2 pumping system 2500 ("system 2500") includes an onboard LH2 tank 2502 connected to an LH2 pump 2504 via an LH2 flowline 2506 and a GH2 flowline 2508. The example onboard LH2 tank 2502 includes LH2 and hydrogen vapor (gaseous hydrogen (GH2)). The example LH2 pump 2504 includes a suction adapter 2510, a pump cold end 2512, a motor 2514, and a discharge flowline 2516. In general, the system 2500 is integrated into a hydrogen vehicle to pump LH2 to components (e.g., high-pressure receiver tanks, heat exchangers, compressors, buffer tanks, etc.) and/or other systems (e.g., fuel management systems, cooling systems, hydrogen engines, etc.). In some cases, the system 2500 cryogenically compresses the LH2 into a supercritical state referred to as cryo-compressed hydrogen (CcH2) for combustion in some types of hydrogen engines.

The example system 2500 illustrated in FIG. 25 includes the onboard LH2 tank 2502 to provide LH2 fuel to the LH2 pump 2504 via the LH2 flowline 2506 and to receive hydrogen vapor from the LH2 pump 2504 via the GH2 flowline 2508. The example onboard LH2 tank 2502 includes insulating materials and/or insulating structures (e.g., a vacuum layer between an inner shell and an outer shell) to maintain cryogenic temperatures of the LH2 and limit excessive boil-off. During storage, the LH2 temperature may slightly increase (e.g., by one or two K), and some LH2 may boil-off. In some examples, the LH2 supply tank 2502 includes venting and/or pressure relief mechanisms to release hydrogen vapor into atmosphere and reduce excessive pressure build up. Although the supply tank 2502 is illustrated in FIGS. 25-34 and is described as a single tank, the supply tank 2502 can be replaced with and/or implemented by one or more of the integrated cryogenic hydrogen tank systems 500-900 disclosed herein. Thus, although the supply tank 2502 illustrated as one tank, the supply tank 2502 may be implemented as a tank (e.g., the first tank 400a, etc.) of one or more of the integrated cryogenic hydrogen tank systems 500-900.

The example onboard LH2 tank 2502 is not exclusively full of LH2, but rather includes two different states of hydrogen (e.g., LH2 and GH2) with an associated saturated pressure. The saturated pressure in the onboard LH2 tank 2502 is dependent on the temperature of the LH2 and GH2. Thus, when internal temperatures gradually increase, the saturated pressure of the onboard LH2 tank 2502 proportionally increases. Similarly, as boil-off occurs and/or when hydrogen vapor returns to the onboard LH2 tank 2502 via the GH2 flowline 2508, the vapor pressure in the onboard LH2 tank 2502 increases. In some examples, the onboard LH2 tank 2502 includes one or more pressure sensors to monitor the vapor pressure and transmit vapor pressure values to an example control system described in further detail below. In some examples, the vapor pressure is allowed to reach a value that satisfies a safety threshold while also providing a NPSH to the system 2500. As illustrated in FIG. 25, the example onboard LH2 tank 2502 is in an elevated position above the example LH2 pump 2504. The example onboard LH2 tank 2502 is above the LH2 pump 2504 to provide a portion of the NPSH as a result of static pressures of the LH2 and/or gravity acting on the LH2.

The example system 2500 illustrated in FIG. 25 includes the first and second flowlines 2506, 2508 to connect, couple, and/or otherwise transmit fluid between the onboard LH2 tank 2502 and the LH2 pump 2504. More specifically, the LH2 flowline 2506 is included in the system 2500 to transfer LH2 to the LH2 pump 2504, and the GH2 flowline 2508 is included in the system 2500 to transfer hydrogen vapor (GH2) to the onboard LH2 tank 2502. The example system 2500 Includes the discharge flowline 2516 to transmit compressed LH2 and/or CcH2 from the LH2 pump and/or the pump cold end 2512 to other components and/or systems in the example hydrogen vehicle.

In some examples, the LH2 flowline 2506, the GH2 flowline 2508, the discharge flowline 2516, and/or other flowlines are vacuum jacketed (VJ) flowlines that are rigid, flexible, or a combination thereof. The example VJ flowlines (e.g., the first, second, and/or discharge flowlines 2506, 2508, and/or 2516) are designed with an inner line, an outer line, and an intermediary layer. The example intermediary layer can include multiple alternating layers of a heat barrier and a non-conductive spacer to form gap between the inner line and the outer line. The example intermediary layer can be depressurized using a vacuum pump to create a static vacuum shield. The example vacuum shield can safeguard the cryogenic fuel from heat transfer caused by radiation, conduction, and/or convection. Thus, the LH2 flowline 2506, the second flowline108, the discharge flowline 2516, and/or the other flowlines transport LH2 and/or GH2 throughout the example system 2500 and/or other systems described below while maintaining cryogenic temperatures and, in some examples, preventing or inhibiting boil-off. In some examples, the LH2 flowline 2506, the second flowline 2508, the discharge flowline 2516 include VJ valves, vapor vents, vapor vent heaters, VJ manifolds, etc., to further control the temperatures of the LH2 fuel.

The example system 2500 illustrated in FIG. 25 includes the suction adapter 2510 to provide a connection between the first and second flowlines 2506, 2508 and the pump cold end 2512. As mentioned previously, the example suction adapter 2510 can include a conical metal grid filter to depressurize and/or separate some hydrogen vapor bubbles from the LH2. In some examples, the suction adapter 2510 includes an inlet, a first outlet, and a second outlet. The first outlet in this example leads from the suction adapter 2510 to the pump cold end 2512. In some examples, the suction adapter 2510 is connected to the pump cold end 2512 via a bolted flange connection with a Teflon® gasket. In some examples, the LH2 flowline 2506 is fixed (e.g., welded, connected via airtight connections, etc.) to the suction adapter 2510 at the inlet, and the GH2 flowline 2508 is fixed (e.g., welded, connected via airtight connections, etc.) to the suction adapter 2510 at the second outlet. The connection points ensure that no LH2 of hydrogen vapor can escape the system 2500 and depressurize the example LH2 pump 2504. As illustrated in FIG. 25, the second outlet of the example suction adapter 2510 is substantially perpendicular to the inlet of the suction adapter 2510. However, in some examples, the second outlet can be skewed and/or non-perpendicular to the inlet of the suction adapter 2510.

The example system 2500 illustrated in FIG. 25 includes the pump cold end 2512 to compress the LH2 at cryogenic temperatures (e.g., 18-33 Kelvin (K)). The example pump cold end 2512 includes a cylinder connected to the suction adapter and a piston to stroke from the bottom-dead center (BDC) position to the top-dead center (TDC) position. When the LH2 pump 2504 and the pump cold end 2512 are cooled to an operational temperature (e.g., 110 K, 115 K, etc.), the piston can be moved from the BDC position to the TDC position to compress the LH2 and drive the compressed mixture through the discharge flowline 2516. The example motor 2514 illustrated in FIG. 25 is included in the example system 2500 to stroke the piston between the BDC and the TDC positions via at least a belt drive and a crank shaft. In some examples, one pump cold end 2512 is included in the LH2 pump 2504 to pump LH2 at a first flowrate. In some examples, multiple (e.g., three) pump cold ends 2512 are included in the LH2 pump to pump LH2 at a second flowrate greater than the first flowrate. Additionally or alternatively, an operational speed of the example motor 2514 can be increased to stroke the piston of the pump cold end 2512 at a higher rate and, thus, cause the LH2 flowrate to increase.

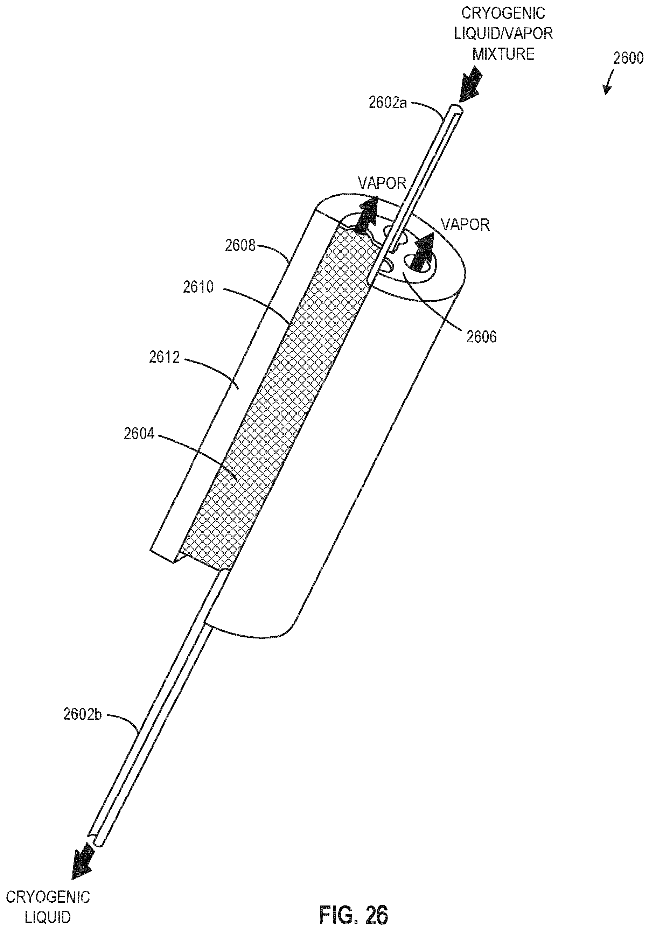

FIG. 26 is an illustration of a phase separator 2600 to separate vapor from cryogenic liquid. The phase separator illustrated in FIG. 26 includes an upstream flowline 2602a, a downstream flowline 2602b, a separation material 2604, a grated endcap 2606, an outer shell 2608, an inner shell 2610, and an insulation material 2612. A mixture of cryogenic liquid (e.g., LH2, LN2, etc.) and vapor (e.g., gaseous hydrogen vapor (GH2), gaseous nitrogen vapor (GN2), etc.) enters in the upstream flowline 2602a and flows through the separation material 2604. The separation material 2604 can be coarse steel wool, loosely packed within the inner shell 2610. The separation material 2604 includes a plurality of small channels through which an LH2 and GH2 mixture can travel. Since the LH2 and GH2 mixture is directed from a single channel (upstream flowline 2602a) to multiple channels, the flowrate, pressure, and temperature of the LH2 and/or the GH2 decreases. As the pressures of the LH2 and the GH2 decrease, the density of the LH2 increases and the density of the GH2 decreases. When the density of the GH2 decreases to a sufficient value, the GH2 rises up out of the separation material 2604 and through the grated endcap 2606.

The outer shell 2608 and the inner shell 2610 can be fabricated from stainless steel sheet metal pressed and/or stamped into cylindrical shapes as illustrated in FIG. 26. In some examples, the inner shell 2610 and the outer shell 2608 are welded or otherwise attached to the grated endcap 2606 and/or other endcap(s) at an end of the phase separator 2600 opposite the grated endcap 2606. The insulation material 2612 is included between the inner shell 2610 and the outer shell 2608 to inhibit heat transfer between the LH2 in the phase separator 2600 and the surrounding environment. The insulation material 2612 can include foam, fiberglass, plastics, and/or another type of material that reduces the rate of heat transfer across the outer shell 2608 and the inner shell 2610.

Although the phase separator 2600 can separate some GH2 present in an LH2/GH2 mixture, some limitations are imposed by the current design. For example, the separation material 2604 is constructed of steel wool that includes multiple small channels through which the LH2 can travel, thus reducing the saturation pressure of the LH2 and reducing the density of the hydrogen vapor to some degree. However, the separation material 2604 is loosely packed in the phase separator 2600 such that the structure/design/topology/consistency of the channels is random and not optimized. Furthermore, the insulation material 2612 occupies the volume between the outer and inner shells 2608, 2610 to reduce heat transfer but cannot provide the same heat transfer protection as a vacuum-insulating layer. If examples of insulation materials 2612 given above were introduced to a vacuum pressure environment, the insulation materials 2612 would likely damage and/or collapse due to insufficient internal structuring thereby lose some insulative properties. Furthermore, the outer and inner shells 2608, 2610 are made of sheet metal and lack any intermediate structures (e.g., trusses, suspensions, beams, rods, etc.) or additional materials (e.g., composites) that may enable the outer and inner shells 2608, 2610 to withstand pressure differentials between a possible vacuum insulation layer and the internal pressure or a vacuum insulation layer and the atmosphere. Since no vacuum layer is present, the phase separator 2600 cannot be integrated into vacuum jacketed flowlines of an LH2 pumping system without introducing significant heat transfer to the system. Lastly, based on the configuration, the phase separator 2600 vents the separated GH2 into atmosphere instead of capturing the vapor with a vapor return flowline. Thus, the phase separator 2600 wastes separated hydrogen vapor rather than utilizing the hydrogen vapor to increase the vapor pressure in an LH2 supply tank (e.g., onboard LH2 tank), maintain the NPSH in the pump system, fuel other onboard systems (e.g., hydrogen fuel cells, hydrogen powered engines, etc.).

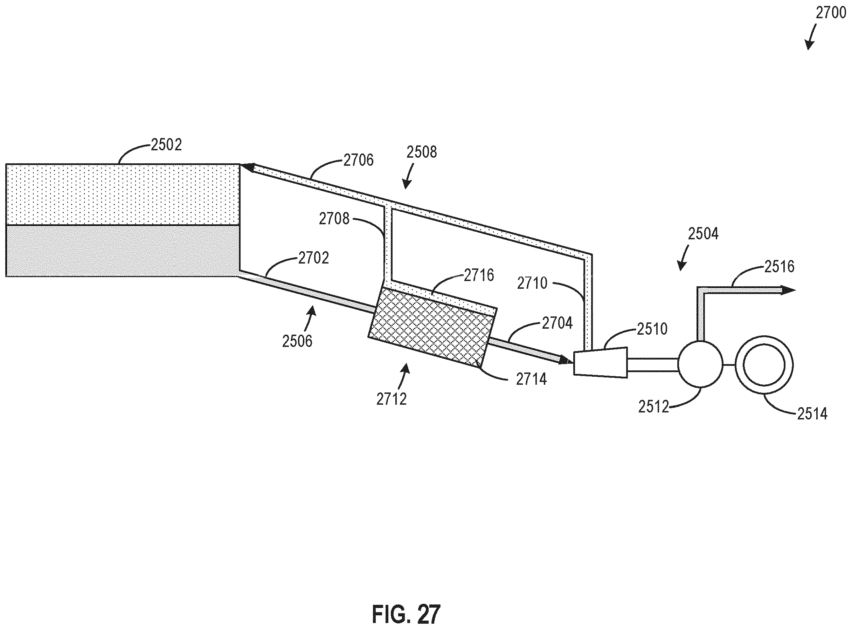

FIG. 27 is an illustration of an example first phase separating LH2 pump system 2700 in accordance with the teachings described herein. The example first phase separating LH2 pump system 2700 ("system 2700") is used for separating hydrogen vapor from LH2 before the LH2 enters the compression chamber portion (e.g., the pump cold end 2512) of the example LH2 pump 2504. The first example phase separation system 2700 includes the onboard LH2 tank 2502, the LH2 pump 2504, the LH2 flowline 2506 including a first LH2 portion 2702 and a second LH2 portion 2704, the GH2 flowline 2508 including a first GH2 portion 2706, a second GH2 portion 2708, and a third GH2 portion 2710, the suction adapter 2510, the pump cold end 2512, the motor 2514, and the discharge flowline 2516. The example system 2700 also includes a phase separator 2712, a filtration structure 2714, and a vapor accumulator 2716.

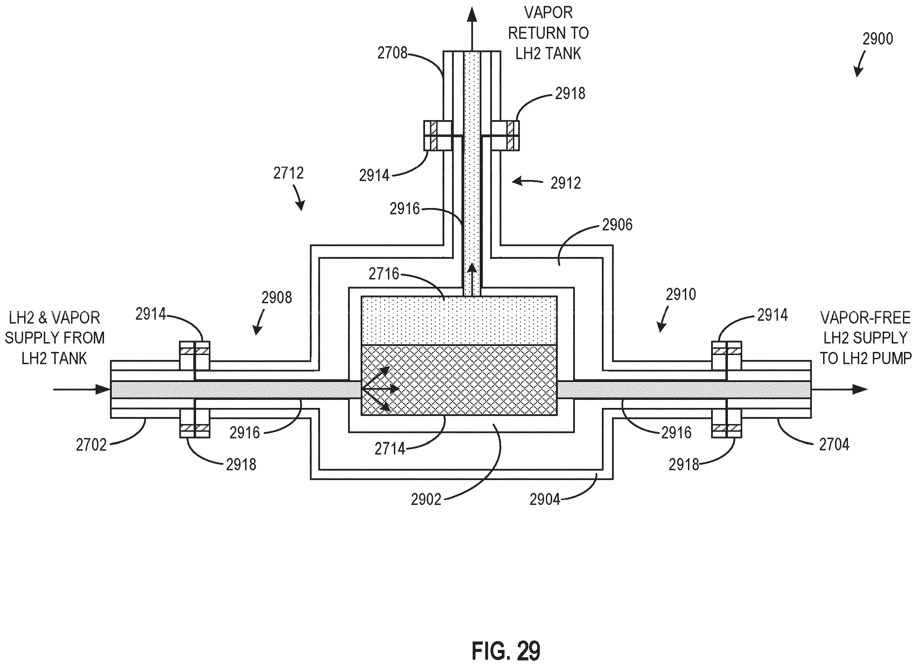

The example system 2700 illustrated in FIG. 27 includes the phase separator 2712 to extract the GH2 from the LH2 flowline 2506. The example phase separator 2712 is described in greater detail below with reference to FIG. 29 and includes a vacuum insulation layer similar to that described for the first and second flowlines 2506, 2508 above. The example phase separator 2712 is said to be integrated into the LH2 flowline 2506 and the GH2 flowline 2508. That is, the first LH2 portion 2702, the second LH2 portion 2704, the second GH2 portion 2708, and the phase separator 2712 are coupled together via bayonet connections such that respective vacuum insulation layers are proximal to each other. In some examples, the vacuum insulation layers of the first LH2 portion 2702, the second LH2 portion 2704, and the second GH2 portion 2708 are in contact with the vacuum insulation layer of the phase separator 2712. Thus, the first LH2 portion 2702, the second LH2 portion 2704, and the second GH2 portion 2708 may be connected to the phase separator 2712 before the vacuum insulation layers of the flowlines 2506-2508 and the phase separator 2712 are depressurized substantially simultaneously.

The example system 2700 illustrated in FIG. 27 includes the example filtration structure 2714 to reduce the saturated pressure of the LH2 and GH2 that enter the phase separator 2712 from the first LH2 portion 2702 of the LH2 flowline 2506. In some examples, the filtration structure 2714 is a porous metallic structure. Furthermore, the filtration structure 2714 may be a sintered metal structure that is constructed of multiple layers of powdered metal fused together. More specifically, the filtration structure can be formed from additive manufacturing that includes pressing (or shaping) powdered metal into a layer (or portion) of the structure and applying heat to fuse the powdered metal together and permanently hold the layer of the structure. Many layers can be formed in succession to ultimately fabricate the filtration structure 2714. The example filtration structure 2714 can be additively manufactured using automated manufacturing methods such as direct metal laser sintering (DMLS).

In some examples, the filtration structure 2714 is composed of one or more metals with a sufficient tolerance against hydrogen embrittlement. Hydrogen embrittlement is a process that decreases the fracture toughness or ductility of a metal due to the presence of atomic and/or gaseous hydrogen. To test the tolerance of metal against hydrogen embrittlement, metal degradation due to hydrogen environmental embrittlement (HEE) is measured. The HEE occurs when controlled stresses are applied to the metal while being exposed to a gaseous hydrogen environment at cryogenic temperatures (e.g., 297 K) and high pressures (e.g., 100 psi). A standardized HEE index is determined for the metal based on the level of degradation experienced as a result of the HEE testing. Metallic material(s) (e.g., pure metal, metal alloy, etc.) chosen for the filtration structure 2714 are chosen based on the HEE index and embrittlement testing at room temperature. In other words, the materials of the filtration structure 2714 do not show embrittlement at cryogenic temperatures or at room temperatures. Some example metals with a sufficient HEE index for use in the filtration structure 2714 include but are not limited to austenitic steel alloys (e.g., A286, 216, 316, 22-13-5 (Nitronic 50), etc.), aluminum-based alloys (e.g., 1100-T0, 2011, 2024, 5086, 6061-T6, 6063, 7039, 7075-T73, etc.), copper alloys (e.g., copper, aluminum bronze, GRCop-84 (Cu-3Ag-0.5Zr), NARloy-Z, 70-30 brass, etc.), and/or pure titanium.

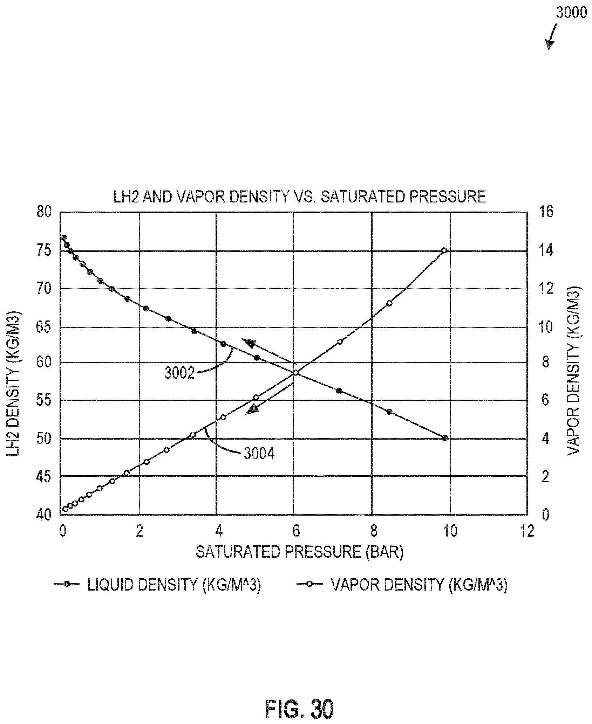

Due to the porous material that composes the filtration structure 2714, the flowrate of the two-phase (LH2 and GH2) mixture reduces and branches into multiple flow pathways in the filtration structure 2714. The flowrate reduction and flow splitting results in a decrease of temperature and saturated pressure in the two-phase mixture. When the temperature and saturated pressure of the two-phase mixture decreases, the density of the LH2 phase decreases and the density of the GH2 phase increases (shown in FIGS. 30-32). As the density of the GH2 decreases, the hydrogen vapor molecules rise out of the filtration structure 2714 and into the vapor accumulator 2716 of the phase separator 2712. The example vapor accumulator 2716 occupies a portion of the internal volume of the phase separator 2712 and is included to collect the hydrogen vapor that rises out of the filtration structure 2714 and direct the GH2 into the second GH2 portion 2708.

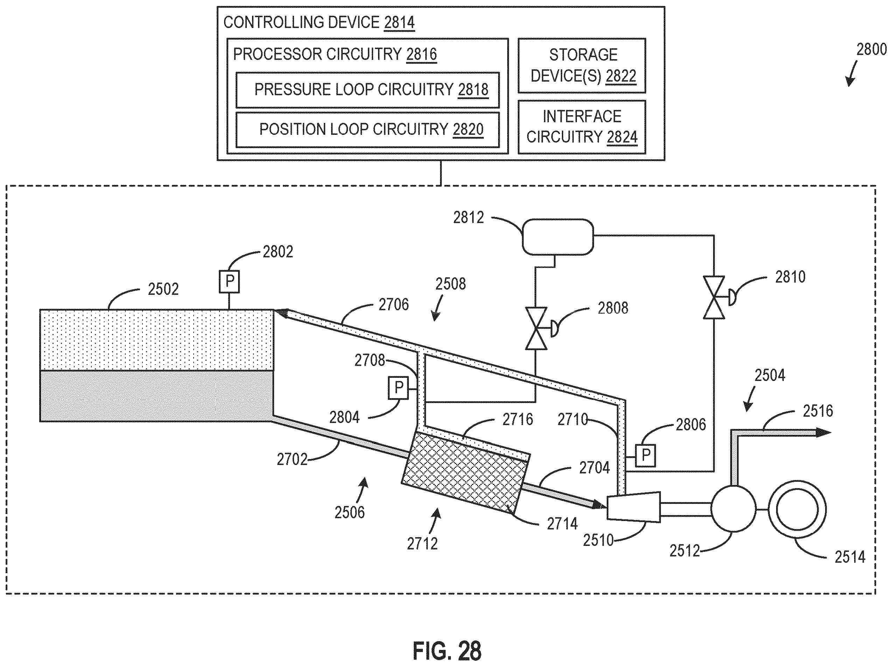

FIG. 28 is an illustration of an example second phase separating LH2 pump system 2800 in accordance with the teachings described herein. The example second phase separating LH2 pump system 2800 ("system 2800") is used for separating hydrogen vapor from LH2 before the LH2 enters the compression chamber portion (e.g., the pump cold end 2512) of the example LH2 pump 2504. The first example phase separating LH2 pump system 2800 includes the onboard LH2 tank 2502, the LH2 pump 2504, the first LH2 portion 2702, the second LH2 portion 2704, the first GH2 portion 2706, the second GH2 portion 2708, the third GH2 portion 2710, the suction adapter 2510, the pump cold end 2512, the motor 2514, the discharge flowline 2516, the phase separator 2712, the filtration structure 2714, and the vapor accumulator 2716. The example system 2800 also includes a first pressure sensor 2802, a second pressure sensor 2804, and a third pressure sensor 2806, a first regulator valve 2808, a second regulator valve 2810, a GH2 tank 2812, a controlling device 2814, processor circuitry 2816, pressure loop circuitry 2818, position loop circuitry 2820, storage device(s) 2822, and interface circuitry 2824.

The example system 2800 illustrated in FIG. 28 includes the first, second, and third pressure sensors 2802-2806 to measure the vapor pressure in different portions of the system 2800. In some examples, the first, second, and third pressure sensors 2802-2806 are cryogenic pressure transducers that can operate in temperatures ranging from 40 K to 70 K and pressures ranging from 0 bar to 415 bar. The example first pressure sensor 2802 monitors the vapor pressure in the onboard LH2 tank 2502. The example second pressure sensor 2804 monitors the vapor pressure in the vapor accumulator 2716 and/or the second GH2 portion 2708 downstream of the vapor accumulator 2716. The example third pressure sensor 2806 monitors the vapor pressure in the suction adapter 2510 and/or the third GH2 portion 2710 downstream of the suction adapter 2510.

The example system 2800 illustrated in FIG. 28 includes the example first and second regulator valves 2808, 2810 to permit and/or inhibit flow from the example GH2 tank 2812 to the second and/or third GH2 portions 2708 and/or 2710. In some examples, the regulator valves 2808, 2810 are pressure reducing regulators that reduce an input pressure (e.g., 100 bar) to a lower output pressure (e.g., 20 bar) despite fluctuations in the input pressure (e.g., pressure reductions from 100 bar to 90 bar). In other words, the regulator valves 2808, 2810 can provide a consistent output pressure at a consistent flowrate.

The example system 2800 illustrated in FIG. 28 includes the example GH2 tank 2812 to provide GH2 to the second and/or third GH2 portions 2708 and/or 2710. The example controlling device 2814 can use hydrogen in the GH2 tank 2502 to drive the flow of hydrogen vapor back into the onboard LH2 tank 2502. In the illustrated example of FIG. 28, flowlines are connected to both sides of the first and second regulator valves 2808, 2810. In some examples, the first and second regulator valves 2808, 2810 are integrated into the GH2 tank 2812 and provide male and/or female ports to which flowlines (e.g., vacuum jacketed flowlines) are connected. The example GH2 tank 2812 can store GH2 at cryogenic temperatures (e.g., 20-33K) that are same as or similar to the temperature of the hydrogen vapor or LH2 in the system 2800. The GH2 tank 2812 can also store GH2 at pressures and densities (e.g., 0.10-1.30 megapascal (MPa) and 1-28 kilograms per cubic meter ($kg/m^3$)) that do not cause the GH2 to shift into the liquid phase.

The example system 2800 illustrated in FIG. 28 includes the controlling device 2814 to open and/or close the first and/or second regulator valves 2808, 2810 and cause the hydrogen vapor to flow from the phase separator 2712 and/or the suction adapter 2510 to the onboard LH2 tank 2502 via the GH2 flowline 2508. The controlling device 2814 of FIG. 28 may be instantiated (e.g., creating an instance of, bring into being for any length of time, materialize, implement, etc.) by the example processor circuitry 2816 such as a central processing unit executing instructions. Additionally or alternatively, the controlling device 2814 of FIG. 28 may be instantiated (e.g., creating an instance of, bring into being for any length of time, materialize, implement, etc.) by an application specific integrated circuit (ASIC) or a field programmable gate array (FPGA) structured to perform operations corresponding to the instructions. It should be understood that some or all of the circuitry of the controlling device 2814 may, thus, be instantiated at the same or different times. Some or all of the circuitry may be instantiated, for example, in one or more threads executing concurrently on hardware and/or in series on hardware. Moreover, in some examples, some or all of the circuitry of the controlling device 2814 may be implemented by microprocessor circuitry executing instructions to implement one or more virtual machines and/or containers.

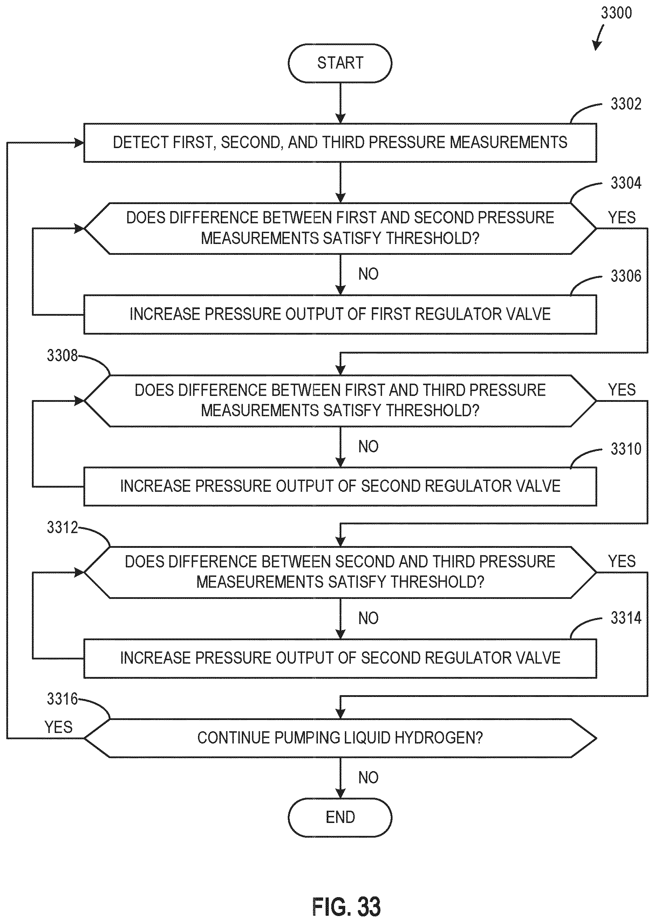

The example controlling device 2814 illustrated in FIG. 28 includes the pressure loop circuitry 2818 to determine a target pressure output of the first and second regulator valves 2808, 2810. In some examples, the pressure loop circuitry 2818 is instantiated by processor circuitry executing pressure loop instructions and/or configured to perform operations such as those represented by the flowchart of FIG. 33. The example pressure loop circuitry 2818 can detect the vapor pressures in the onboard LH2 tank 2502, the second GH2 portion 2708, and the third GH2 portion 2710 based on measurements obtained by the first, second, and third pressure sensors 2802-2806. The pressure loop circuitry 2818 can determine whether a pressure differential between an upstream and downstream pressure satisfies a threshold. For example, the pressure loop circuitry 2818 can determine a first pressure differential between the first and second pressures, a second pressure differential between the first and third pressures, and a third pressure differential between the second and third pressures. The example pressure loop circuitry 2818 can also determine whether the first, second, and third pressure differentials satisfy (e.g., are less than, greater than, equal to, etc.) the threshold. As used herein, the first pressure is the vapor pressure in the onboard LH2 tank 2502, the second pressure is the vapor pressure within the second GH2 portion 2708 and/or the vapor accumulator 2716, and the third pressure is the vapor pressure within the third GH2 portion 2710 and/or the suction adapter 2510.

The threshold may be a predetermined value written into the pressure loop instructions. In some examples, there are multiple thresholds for the different possible pressure differentials to be determined. For example, there can be a first threshold (e.g., 0.1 MPa) for a first pressure differential (e.g., between the first and second pressures), a second threshold (e.g., 0.3 MPa) for a second pressure differential (e.g., between the first and third pressures), and a third threshold (e.g., 0.2 MPa) for a third pressure differential (e.g., between the second and third pressures).

The example controlling device 2814 illustrated in FIG. 28 includes the example position loop circuitry 2820 to determine target position(s) of stopper(s), plunger(s), diaphragm(s), and/or other electronically actuated mechanical device(s) of the first and second regulator valves 2808, 2810 to achieve the target output pressure(s). In some examples, the position loop circuitry 2820 is instantiated by processor circuitry executing position loop instructions and/or configured to perform operations such as those represented by the flowchart of FIG. 33. In some examples, when the pressure loop circuitry 2818 determines that one or more of the pressure differentials do not satisfy the threshold(s), the pressure loop circuitry 2818 sends a signal (e.g., including the current pressure and the target output pressure) to the example position loop circuitry 2820 to open the first and/or second regulator valves 2808, 2810. The example position loop circuitry 2820 can detect (e.g., via displacement sensor(s) such as a laser sensor, a hall effect sensor, etc.) the current position of the mechanism(s) within the first and/or second regulator valves 2808, 2810 and determine the target position(s) based on the current output pressure, the target output pressure, and the current position. While the position loop circuitry 2820 causes the first and/or second regulator valve(s) 2808, 2810 to open, the position loop circuitry 2820 monitors the position(s) of the mechanical device(s) in the first and/or second regulator valve(s) 2808, 2810. In some examples, the position loop circuitry 2820 causes the mechanical device(s) to actuate until an error between the current position and the target position is substantially zero (e.g., 0.001, 0.005 inches, etc.).

In some examples, the pressure loop circuitry 2818 is configured to operate as a closed-loop controller based on the example pressure loop instructions. That is, the example pressure loop circuitry 2818 can continually monitor pressure measurements, calculate pressure differentials, and determine whether newly calculated differentials satisfy the threshold(s). In some examples, the pressure loop circuitry 2818 continually signals the position loop circuitry 2820 to open/close the first and/or second regulator valve(s) 2808, 2810 until the pressure differential(s) satisfy the threshold(s). For example, the pressure loop circuitry 2818 can detect that the first pressure is 1.0 MPa and the second pressure is 0.9 MPa. Given that the threshold is 0.2 MPa, the example pressure loop circuitry 2818 can send a signal the position loop circuitry 2820 to open the first regulator valve 2808 until the second pressure sensor 2804 measures a target output pressure of 1.2 MPa (assuming the first pressure remains unchanged).

The example controlling device 2814 illustrated in FIG. 28 includes the storage device(s) 2822 to accumulate and save data provided to and generated by the controlling device 2814. The example storage device(s) 2822 can include volatile memory device(s) that store measurement data obtained by the pressure sensor(s) 2802-2806, target pressure results determined by the pressure loop circuitry 2818, target position results determined by the position loop circuitry 2820, etc. The example storage device(s) 2822 can also include non-volatile memory device(s) and/or mass storage device(s) that store instructions and/or operations to be executed, such as the pressure loop instructions and the position loop instructions mentioned previously. The example controlling device 2814 includes the interface circuitry 2824 to communicate with the pressure sensors 2802-2806, the regulator valves 2808, 2810, the LH2 pump 2504, etc. In some examples, the interface circuitry 2824 enables the controlling device 2814 to receive command inputs from an external source. The interface circuity 2824 is able to receive and/or transmit commands via wired and/or wireless connections.

FIG. 29 is an illustration of an example phase separator assembly 2900 of the phase separator 2712 integrated into the first and/or second phase separating LH2 pump systems 2700, 2800 in accordance with the teachings described herein. The example phase separator assembly 2900 illustrated in FIG. 29 includes the first LH2 portion 2702, the second LH2 portion 2704, the second GH2 portion 2708, the phase separator 2712, the filtration structure 2714, and the vapor accumulator 2716 as mentioned previously. The example phase separator assembly 2900 also includes an inner vessel 2902, an outer vessel 2904, a vacuum insulation layer 2906, a first port 2908, a second port 2910, a third port 2912, first flanges 2914, internal passages 2916, and second flanges 2918. As shown in FIG. 29, the example phase separator 2712 can input the two-phase LH2 and hydrogen vapor (GH2) supply from the onboard LH2 tank 2502, output single-phase LH2 to the LH2 pump 2504, and output single phase hydrogen vapor back to the onboard LH2 tank 2502.

The example phase separator 2712 illustrated in FIG. 29 includes the inner vessel 2902 to house the filtration structure 2714 and the vapor accumulator 2716. The example inner vessel 2902 can be manufactured from materials with a sufficient HEE index as those mentioned previously in reference to the filtration structure 2714. In some examples, the inner vessel 2902 or a portion of the inner vessel 2902 is additively manufactured in conjunction with the filtration structure 2714 such that no binding (e.g., welding, adhesion, coupling, etc.) is needed for the interface between the inner vessel 2902 and the filtration structure 2714.

The example phase separator 2712 illustrated in FIG. 29 includes the outer vessel 2904 to frame the inner vessel 2902 and the vacuum insulation layer 2906. The outer vessel 2904 also frames the first, second, and third ports 2908-2912 to connect the first and second LH2 portions 2702, 2704 of the LH2 flowline 2506 to the filtration structure 2714 and to connect the second GH2 portion 2708 to the vapor accumulator 2716. Since the example outer vessel 2904 does not come into direct contact with LH2 or hydrogen vapor, the outer vessel 2904 may be fabricated out of metal alloy(s) (e.g., aluminum, steel, etc.) and/or composite materials (e.g., carbon fiber, fiberglass, etc.) that are not tested in a hydrogen embrittlement environment and do not have an associated HEE index. In some examples, the phase separator 2712 includes supporting structures such as suspension device(s) to couple the inner and outer vessels 2902, 2904 statically or dynamically.

The example phase separator 2712 illustrated in FIG. 29 includes the vacuum insulation layer 2906 to inhibit heat transfer from surrounding atmosphere to the LH2 and/or GH2 in the filtration structure 2714, the vapor accumulator 2716, and/or the inner flowlines of the first LH2 portion 2702, the second LH2 portion 2704, and the second GH2 portion 2708. The example vacuum insulation layer 2906 can include multi-layer insulation (MLI), which is a thermal insulation that includes multiple layers of thin sheets of material(s) (e.g., plastics such as polyethylene terephthalate, polyimide, etc.) coated on one or both sides with a thin layer of metal (e.g., silver, aluminum, gold, etc.). Some types of MLI are used in applications that operate in vacuum conditions (e.g., cryogenic tanks, satellites, orbital telescopes, etc.) because of MLI's effectiveness in impeding radiation heat transfer common in such environments. In some examples, the vacuum insulation layer 2906 includes MLI and/or other insulating materials (e.g., foam, ceramic fibers, etc.) used in combination to inhibit the heat transfer into the phase separator 2712. As shown in FIG. 29, the vacuum insulation layer 2906 occupies the space between the inner and outer vessels 2902, 2904 as well as within the first, second, and third ports 2908-2912. In some examples, the vacuum insulation layer 2906 is installed in the phase separator 2712, the outer vessel 2904 is sealed, and a vacuum depressurizes the vacuum insulation layer 2906 to near zero pressure (e.g., $1.3*10^{-11}$ Pa).

The example phase separator 2712 includes the first, second, and third ports 2908-2912 to integrate the phase separator 2712 into the first and second flowlines 2506, 2508. As mentioned previously, the first and second flowlines 2506, 2508 are vacuum jacketed flowlines that can connect to other cryogenic devices (e.g., valves, tanks, other flowlines, etc.) via bayonet connections to provide seamless connection points with sufficient insulation where heat losses likely occur. A bayonet connection includes a male bayonet that fits inside of and is fixed to a female port. In some examples the male bayonets and female ports are machined to a tight tolerance (e.g., 0.001, 0.005 inches, etc.) to provide a slip fit and reduce and/or eliminate intermediary space that may not be depressurized to vacuum conditions. In some examples, the male bayonets and female ports include flanges (e.g., first flanges 2914 and second flanges 2918) with seals (e.g., O-rings, high vacuum gaskets, etc.) that are bolted together to form an air-tight coupling between the first and second flowlines 2506, 2508 and the cryogenic device (e.g., the phase separator 2712).

As illustrated in FIG. 29, the first, second, and third ports 2908-2912 are female ports of bayonet connections, and the first and second flowlines 2506, 2508 include the male bayonets of the bayonet connections. The example inner vessel 2902 includes the inner passages 2916 through which the inner lines (male bayonets) of the first and second flowlines 2506, 2508 can fit into and extend to the filtration structure 2714 and the vapor accumulator 2716 respectively. The example internal passages 2916 of the inner vessel 2902 protrude outward from the interior of the phase separator 2712 and terminate at outer surfaces of the first flanges 2914. Likewise, the outer vessel 2904 protrudes outward from the phase separator 2712 to the first flanges 2914 to frame the first, second, and third ports 2908-2912 and to house the vacuum insulation layer 2906 within the first, second, and third ports 2908-2912. The example first flanges 2914 can be fixed to the outer vessel 2904 via mechanical couplings such as welding.

As shown in FIG. 29, the example first flanges 2914 are coupled to the example second flanges 2918 via bolts. In some examples, the first and second flanges 2914, 2918 are coupled via other mechanisms such as adhesives, clamps, radial pins, and/or other fastening mechanisms. In the illustrated example of FIG. 29, the first flanges 2914 are fixed to the outer vessel 2904, and the second flanges 2918 are fixed to an outer lining of the first and second flowlines 2506, 2508. This example assembly allows the vacuum insulation layer 2906 to be open to and/or be in contact with the vacuum insulation layer of the first and second flowlines 2506, 2508. Thus, the phase separator 2712 can be said to be integrated into the first and second flowlines 2506, 2508 because the respective vacuum insulation layers can be depressurized to vacuum conditions at a same or similar instance. In some examples, the first and second flanges 2914, 2918 are not included, and the bayonet connections at the first, second, and/or third ports 2908-2912 are fastened via springs, pins, "L-shaped" slots, etc.

The example phase separator assembly 2900 illustrated in FIG. 29 includes the first LH2 portion 2702, the second LH2 portion 2704, and the second GH2 portion 2708 as the male bayonets and the first, second, and third ports 2908-2912 as the female ports of the bayonet connections mentioned previously. In some examples, the first, second, and third ports 2908-2912 are the male bayonets that fit into female ports of the first LH2 portion 2702, the second LH2 portion 2704, and the second GH2 portion 2708. In such examples, the internal passages 2916 can include flowlines that are fixed to the filtration structure 2714 and the vapor accumulator 2716 and insert into the first LH2 portion 2702, the second LH2 portion 2704, and the second GH2 portion 2708.

The phase separator 2712 integrated into the first and second phase separating LH2 pump systems 2700, 2800 as described above with reference to FIGS. 27-5 provide multiple advantages to LH2 pumping systems, LH2 tanks, other onboard power systems, etc. Since the GH2 flowline 2508 and/or the second GH2 portion 2708 are directly connected to the phase separator 2712 and/or the vapor accumulator 2716, the hydrogen vapor is able to return to the onboard LH2 tank 2502, which increases the ability of the onboard LH2 tank 2502 to increase the vapor pressure therein. For example, the onboard LH2 tank 2502 can include a means for increasing the vapor pressure (e.g., a thermosiphon loop, a heater, a separate GH2 tank, etc.) to maintain a desired NPSH. However, since a larger quantity of hydrogen vapor can be returned to the onboard LH2 tank 2502 due to the phase separator 2712, less energy and/or work is required to increase the vapor pressure and maintain the desired NPSH. Furthermore, as the vapor pressure increases in the onboard LH2 tank 2502, the boiling point of the LH2 also increases, which can reduce the amount of boil-off therein. Therefore, since the phase separator 2712 and/or the vapor accumulator 2716 is/are integrated into the GH2 flowline 2508 and/or the second GH2 portion 2708, the amount of boil-off (or evaporation of LH2 fuel) in the onboard LH2 tank 2502 decreases. Additionally or alternatively, since the phase separator 2712 causes more vapor to be removed from the LH2 flowline 2506 and/or the first LH2 portion 2702, the first and/or second phase separating LH2 pump systems 2700 and/or 2800 can provide hydrogen fuel (e.g., GH2) to other systems (e.g., hydrogen fuel cells, hydrogen powered turbine engines, cooling systems, etc.) onboard a vehicle, such as an aircraft.

FIG. 30 is an illustration of an example first chart 3000 that represents LH2 and GH2 densities as functions of saturated pressure. The example first chart 3000 includes a first curve 3002 to illustrate LH2 density (kg/m$^3$) as a function of saturated pressure (bar). The example first chart 3000 includes a second curve 3004 to illustrate hydrogen vapor density (kg/m$^3$) as a function of saturated pressure (bar). As mentioned previously, the example phase separator 2712 causes the saturated pressure of the two-phase mixture (LH2 and GH2 entering from the first LH2 portion 2702 of the LH2 flowline 2506) to decrease. The example chart 3000 includes arrows along the first and second curves 3002, 3004 to show how the densities of the LH2 and GH2 within the phase separator 2712 change as a result of the changing saturated pressures. That is, as a result of the saturated pressure reduction, the density of the LH2 increases, and the density of the GH2 increases. Thus, as the LH2 continues to flow through the filtration structure 2714, the hydrogen vapor rises up to the vapor accumulator 2716 and into the GH2 flowline 2508 due to the reduced density and buoyancy-driven flow.

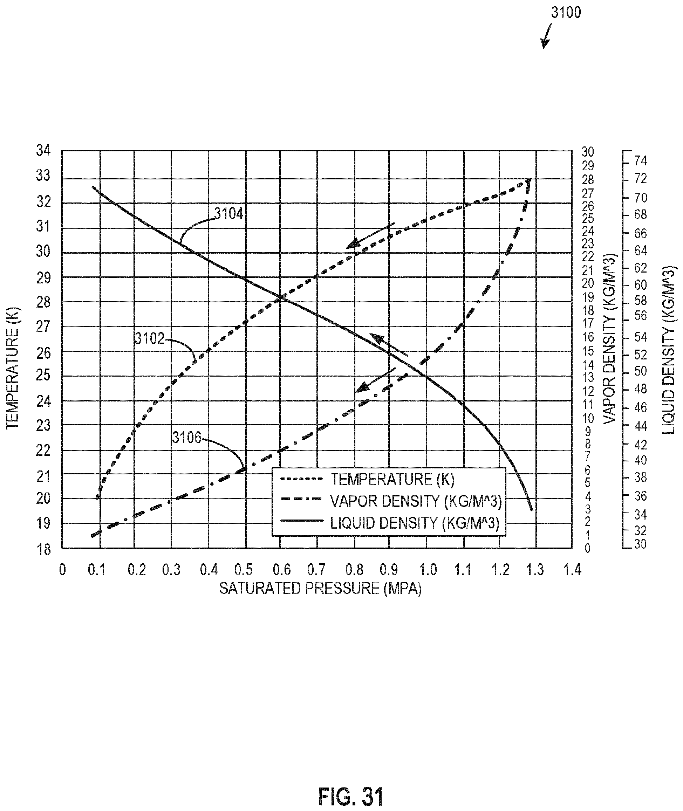

FIG. 31 is an illustration of an example second chart 3100 that represents temperature of LH2 and/or GH2, density of LH2, and density of hydrogen vapor as functions of saturated pressure. The example second chart 3100 includes a first curve 3102 to illustrate temperature (K) of LH2 and/or GH2 as a function of saturated pressure (MPa). The example second chart 3100 includes a second curve 3104 to illustrate LH2 density (kg/m$^3$) as a function of saturated pressure (MPa). The example second chart 3100 includes a third curve 3106 to illustrate hydrogen vapor (GH2) density (kg/m$^3$) as a function of saturated pressure (MPa). Similar to the example first chart 3000, the example second chart 3100 includes arrows that illustrate how the LH2 density, GH2 density, and temperature change as a result of the phase separator 2712 decreasing the saturated pressure.

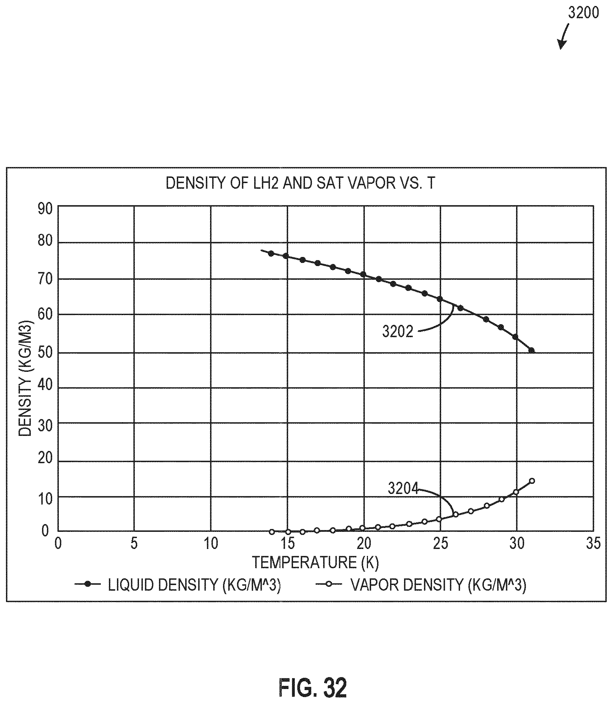

FIG. 32 is an illustration of an example third chart 3200 that represents LH2 and GH2 densities as functions of temperature. The example third chart 3200 includes a first curve 3202 to illustrate LH2 density (kg/m$^3$) as a function of temperature (K). The example third chart 3200 includes a second curve 3204 to illustrate hydrogen vapor density (kg/m$^3$) as a function of temperature (K). The example second and third charts 3100, 3200 collectively show how the phase separator 2712 causes the hydrogen vapor to separate from the LH2 in the filtration structure 2714. According to the second chart 3100, since the sintered metal of the example filtration structure 2714 causes the saturated pressure to decrease, the temperature and the density of the GH2 decreases. According to the third chart 3200, the temperature decrease of the GH2 further causes the density of the GH2 to decrease. Thus, the phase separator 2712 works two fold, via saturated pressure decreases and temperature decreases, to increase the density of LH2, decrease the density of GH2, and ensure the separation of the two phases.

A flowchart representative of example machine readable instructions, which may be executed to configure processor circuitry to implement the controlling device 2814 of FIG. 28, is shown in FIG. 33. The machine readable instructions may be one or more executable programs or portion(s) of an executable program for execution by processor circuitry, such as the processor circuitry 1212 shown in the example processor platform(s) 1200, 2400, and/or 3400 discussed in connection with FIG(S). 12, 24, and/or 34. The program may be embodied in software stored on one or more non-transitory computer readable storage media such as a compact disk (CD), a floppy disk, a hard disk drive (HDD), a solid-state drive (SSD), a digital versatile disk (DVD), a Blu-ray disk, a volatile memory (e.g., Random Access Memory (RAM) of any type, etc.), or a non-volatile memory (e.g., electrically erasable programmable read-only memory (EEPROM), FLASH memory, an HDD, an SSD, etc.) associated with processor circuitry located in one or more hardware devices, but the entire program and/or parts thereof could alternatively be executed by one or more hardware devices other than the processor circuitry and/or embodied in firmware or dedicated hardware. The machine readable instructions may be distributed across multiple hardware devices and/or executed by two or more hardware devices (e.g., a server and a client hardware device). For example, the client hardware device may be implemented by an endpoint client hardware device (e.g., a hardware device associated with a user) or an intermediate client hardware device (e.g., a radio access network (RAN)) gateway that may facilitate communication between a server and an endpoint client hardware device). Similarly, the non-transitory computer readable storage media may include one or more mediums located in one or more hardware devices. Further, although the example program is described with reference to the flowchart illustrated in FIG. 33, many other methods of implementing the example controlling device 2814 may alternatively be used. For example, the order of execution of the blocks may be changed, and/or some of the blocks described may be changed, eliminated, or combined. Additionally or alternatively, any or all of the blocks may be implemented by one or more hardware circuits (e.g., processor circuitry, discrete and/or integrated analog and/or digital circuitry, an FPGA, an ASIC, a comparator, an operational-amplifier (op-amp), a logic circuit, etc.) structured to perform the corresponding operation without executing software or firmware. The processor circuitry may be distributed in different network locations and/or local to one or more hardware devices (e.g., a single-core processor (e.g., a single core central processor unit (CPU)), a multi-core processor (e.g., a multi-core CPU, an XPU, etc.) in a single machine, multiple processors distributed across multiple servers of a server rack, multiple processors distributed across one or more server racks, a CPU and/or a FPGA located in the same package (e.g., the same integrated circuit (IC) package or in two or more separate housings, etc.).

The machine readable instructions described herein may be stored in one or more of a compressed format, an encrypted format, a fragmented format, a compiled format, an executable format, a packaged format, etc. Machine readable instructions as described herein may be stored as data or a data structure (e.g., as portions of instructions, code, representations of code, etc.) that may be utilized to create, manufacture, and/or produce machine executable instructions. For example, the machine readable instructions may be fragmented and stored on one or more storage devices and/or computing devices (e.g., servers) located at the same or different locations of a network or collection of networks (e.g., in the cloud, in edge devices, etc.). The machine readable instructions may require one or more of installation, modification, adaptation, updating, combining, supplementing, configuring, decryption, decompression, unpacking, distribution, reassignment, compilation, etc., in order to make them directly readable, interpretable, and/or executable by a computing device and/or another machine. For example, the machine readable instructions may be stored in multiple parts, which are individually compressed, encrypted, and/or stored on separate computing devices, wherein the parts when decrypted, decompressed, and/or combined form a set of machine executable instructions that implement one or more operations that may together form a program such as that described herein.

In another example, the machine readable instructions may be stored in a state in which they may be read by processor circuitry, but require addition of a library (e.g., a dynamic link library (DLL)), a software development kit (SDK), an application programming interface (API), etc., in order to execute the machine readable instructions on a particular computing device or other device. In another example, the machine readable instructions may need to be configured (e.g., settings stored, data input, network addresses recorded, etc.) before the machine readable instructions and/or the corresponding program(s) can be executed in whole or in part. Thus, machine readable media, as used herein, may include machine readable instructions and/or program(s) regardless of the particular format or state of the machine readable instructions and/or program(s) when stored or otherwise at rest or in transit.

The machine readable instructions described herein can be represented by any past, present, or future instruction language, scripting language, programming language, etc. For example, the machine readable instructions may be represented using any of the following languages: C, C++, Java, C#, Perl, Python, JavaScript, HyperText Markup Language (HTML), Structured Query Language (SQL), Swift, etc.

As mentioned above, the example operations of FIG. 33 may be implemented using executable instructions (e.g., computer and/or machine readable instructions) stored on one or more non-transitory computer and/or machine readable media such as optical storage devices, magnetic storage devices, an HDD, a flash memory, a read-only memory (ROM), a CD, a DVD, a cache, a RAM of any type, a register, and/or any other storage device or storage disk in which information is stored for any duration (e.g., for extended time periods, permanently, for brief instances, for temporarily buffering, and/or for caching of the information). As used herein, the terms non-transitory computer readable medium, non-transitory computer readable storage medium, non-transitory machine readable medium, and non-transitory machine readable storage medium are expressly defined to include any type of computer readable storage device and/or storage disk and to exclude propagating signals and to exclude transmission media. As used herein, the terms "computer readable storage device" and "machine readable storage device" are defined to include any physical (mechanical and/or electrical) structure to store information, but to exclude propagating signals and to exclude transmission media. Examples of computer readable storage devices and machine readable storage devices include random access memory of any type, read only memory of any type, solid state memory, flash memory, optical discs, magnetic disks, disk drives, and/or redundant array of independent disks (RAID) systems. As used herein, the term "device" refers to physical structure such as mechanical and/or electrical equipment, hardware, and/or circuitry that may or may not be configured by computer readable instructions, machine readable instructions, etc., and/or manufactured to execute computer readable instructions, machine readable instructions, etc.

FIG. 33 is a flowchart representative of example machine readable instructions and/or example operations 3300 that can be executed and/or instantiated by processor circuitry to drive flow of hydrogen vapor from the vapor accumulator 2716 and/or the suction adapter 2510 to the onboard LH2 tank 2502. The machine readable instructions and/or the operations 3300 of FIG. 33 begin at block 3302, at which the controlling device 2814 detects the first, second, and third pressure measurements. For example, the pressure loop circuitry 2818 obtains the pressure measurements from the first, second, and third pressure sensors 2802-2806.

At block 3304, the controlling device 2814 determines whether the difference between the first and second pressure measurements satisfies a threshold (e.g., a first threshold). For example, the pressure loop circuitry 2818 determines whether a first pressure differential satisfies the threshold (e.g., the first threshold). When the pressure loop circuitry 2818 determines that the first pressure differential does not satisfy (e.g., is less than) the threshold, then the pressure loop circuitry 2818 determines a target output pressure of the first regulator valve 2808 that does satisfy the threshold and transmit the second pressure measurement and the target output pressure to the position loop circuitry 2820. The operations 3300 then proceed to block 3306, where the controlling device 2814 increases the pressure output of the first regulator valve 2808. For example, the position loop circuitry 2820 determines a target position based on the current pressure and the target pressure and commands the first regulator valve 2808 to open to the target position. The example operations 3300 then return to block 3304.

When the pressure loop circuitry 2818 determines that the first pressure differential does satisfy (e.g., is greater than or equal to) the threshold (e.g., the first threshold), then the example operations 3300 proceed to block 3308, where the controlling device 2814 determines whether the difference between the first and third pressure measurements satisfies the threshold (e.g., a second threshold). For example, the pressure loop circuitry 2818 determines whether a second pressure differential satisfies the threshold (e.g., the second threshold). When the pressure loop circuitry 2818 determines that the second pressure differential does not satisfy (e.g., is less than) the threshold, then the pressure loop circuitry 2818 determines a target output pressure of the second regulator valve 2810 that does satisfy the threshold and transmit the third pressure measurement and the target output pressure to the position loop circuitry 2820. The operations 3300 then proceed to block 3310, where the controlling device 2814 increases the pressure output of the second regulator valve 2810. For example, the position loop circuitry 2820 determines a target position based on the third pressure measurement and the target pressure and commands the second regulator valve 2810 to open to the target position. The example operations 3300 then return to block 3308.

When the pressure loop circuitry 2818 determines that the second pressure differential does satisfy (e.g., is greater than or equal to) the threshold (e.g., the second threshold), then the example operations 3300 proceed to block 3312, where the controlling device 2814 determines whether the difference between the second and third pressure measurements satisfies the threshold (e.g., a third threshold). For example, the pressure loop circuitry 2818 determines whether a third pressure differential satisfies the threshold (e.g., the third threshold). When the pressure loop circuitry 2818 determines that the third pressure differential does not satisfy (e.g., is less than) the threshold, then the pressure loop circuitry 2818 determines a target output pressure of the second regulator valve 2810 that does satisfy the threshold and transmit the third pressure measurement and the target output pressure to the position loop circuitry 2820. The operations 3300 then proceed to block 3314, where the controlling device 2814 increases the pressure output of the second regulator valve 2810. For example, the position loop circuitry 2820 determines a target position based on the third pressure measurement and the target pressure and commands the second regulator valve 2810 to open to the target position. The example operations 3300 then return to block 3312.

When the pressure loop circuitry 2818 determines that the third pressure differential does satisfy (e.g., is greater than or equal to) the threshold (e.g., the third threshold), then the example operations 3300 proceed to block 3316, where the controlling device 2814 determines whether the second phase separating LH2 pump system 2800 is to continue pumping. For example, the position loop circuitry 2820 determines whether a signal to cease operation of the system 2800 has been input to the controlling device 2814. The example input may be from a user of the system 2800, a sensor in the onboard LH2 tank 2502 indicating the LH2 fuel level is substantially low, an automatic shut-off signal due to a failure in the LH2 pump 2504, etc. When the example position loop circuitry 2820 determines that the system 2800 is to continue pumping LH2, then the operations 3300 return to block 3302. When the example position loop circuitry 2820 determines that the system 2800 is not to continue pump LH2, then the operations 3300 end.

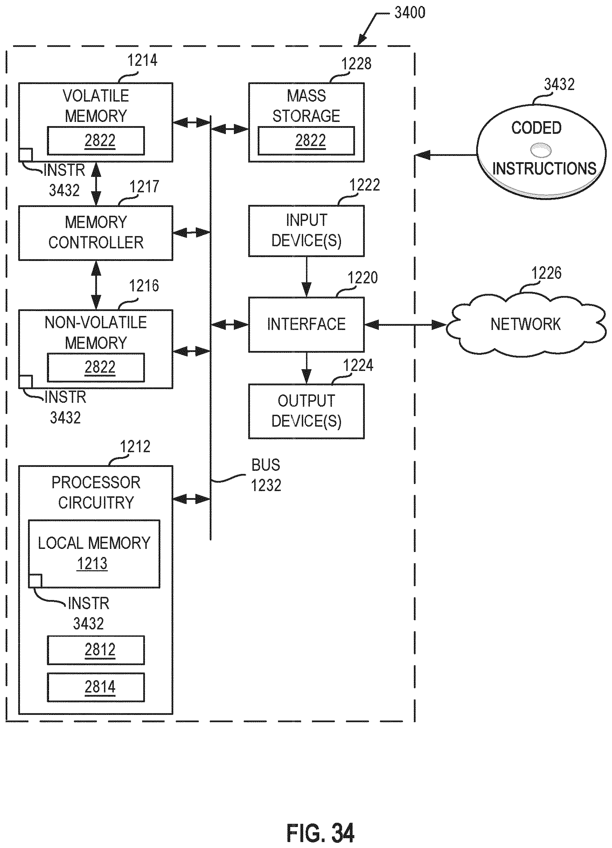

FIG. 34 is a block diagram of an example processor platform 3400 structured to execute and/or instantiate the machine readable instructions and/or operations of FIG. 33 to implement the controlling device 2814 of FIG. 28. The processor platform 3400 can be, for example, full authority digital engine control (FADEC), a cockpit control panel assembly, avionics systems, a supply tank control panel assembly, a laptop, a mobile device (e.g., a cell phone, a smart phone, a tablet such as an iPad™), etc. The processor platform 3400 can be the same as, integrated into, and/or connected to the processor platform(s) 1200 and/or 2400 illustrated in FIGS. 12 and/or 24. As such, repeated reference numbers illustrated in FIG. 34 can be the same as and/or substantially similar to corresponding reference numbers illustrated in FIGS. 12 and/or 24. In this example, the processor circuitry 1212 of the processor platform 3400, the processor platform 2400, and/or the processor platform 1200 implements the example pressure loop circuitry 2818 and the example position loop circuitry 2820. The machine executable instructions 3432, which can be implemented by the machine readable instructions of FIG. 33, can be stored in the mass storage device 1228, in the volatile memory 1214, in the non-volatile memory 1216, and/or on a removable non-transitory computer readable storage medium.

From the foregoing, it will be appreciated that example systems, methods, apparatus, and articles of manufacture have been described above that separate the hydrogen vapor phase from cryogenic liquid hydrogen fuel prior to entering an LH2 pump. Example phase separating LH2 pumping systems described above improve the efficiency and lifespan of an LH2 pump by integrating a phase separator into LH2 and GH2 vacuum jacketed flowlines leading into and out of the LH2 pump. The phase separator removes hydrogen vapor bubbles (e.g., cavities) present in LH2 extracted from onboard LH2 tanks such that cavitation damage does not occur in the LH2 pump, which allows the LH2 pump to provide a consistent flow of compressed LH2 to power systems (e.g., hydrogen powered turbine engines, etc.) and increases the functional longevity of the LH2 pump (e.g., the time between repairs, maintenance, etc.). Furthermore, example phase separating LH2 pumping systems described above improve the weight, performance, and efficiency of integrated tank system(s) 500-900 disclosed herein by increasing the amount of hydrogen vapor returned to the integrated tank system(s) 500-900, which increases the vapor pressure therein. Since vapor pressures are increased by the example phase separating LH2 pumping systems described above, the integrated tank system(s) 500-900 can rely less on a mechanical device and/or system (e.g., thermosiphon loop(s) 702, heating system(s) 704, etc.) to increase the vapor pressure, which can conserve energy and weight. Furthermore, increased vapor pressure in the LH2 tank reduces the amount of boil-off in the integrated tank system(s) 500-900 (due to the relationship between vapor pressure and boiling point), which reduces LH2 fuel loss due to evaporation. Example phase separating LH2 pumping systems described above can also increase the amount of hydrogen fuel (e.g., GH2) that is distributed to other onboard systems (e.g., power systems) from the GH2 return flowline(s) and/or the phase separator, which can reduce the weight, cost, and/or complexity of the integrated tank system(s) 500-900 by removing one or more of the GH2 extraction flowline(s) 424, 426, and/or 428 from the integrated tank system(s) 500-900 disclosed herein.

The integrated cryogenic hydrogen tank systems 500-900 described above can include GH2 extraction flowlines 424, 426, 428, to transmit hydrogen fuel (e.g., GH2) to example fuel cell power systems onboard vehicles, such as the first aircraft 100, the second aircraft 300, etc. However, in some examples, hydrogen vapor (GH2) transferred from the upper portion(s) 404 of the integrated tank system(s) 500-900 does not include sufficient densities to adequately energize example fuel cell power systems described below. Thus, in some examples, LH2 extraction flowlines 422 and/or other LH2 flowline(s) integrated into lower portion(s) 402 of the integrated system(s) 500-900 transmit LH2 to fuel cell power system(s) to provide adequate densities of hydrogen fuel.

In certain examples, a fuel cell power system for a vehicle having a propulsor is provided. The propulsor is configured to generate thrust for the vehicle and further creates a flow of compressed air $\alpha c$. The fuel cell power system generally includes a fuel delivery system for providing a flow of hydrogen fuel and a fuel cell stack (e.g., including proton exchange membrane fuel cells or polymer electrolyte membrane fuel cells) configured to be located remotely from the propulsor and in airflow communication with the propulsor for receiving the flow of compressed air $\alpha c$ from the propulsor. The fuel cell stack further is in fluid communication with the fuel delivery system for receiving the flow of hydrogen fuel from one or more of the integrated tank systems 500-900 via the fuel delivery system.

As will be appreciated, such a configuration can allow for a significant reduction in weight and complexity for the fuel cell stack by eliminating a need for a dedicated airflow compressor and instead utilizing the flow of compressed air $\alpha c$

generated by the propulsor.

Additionally, in certain examples, it will be appreciated that the fuel cell power system can be configured to utilize hydrogen fuel starting at a liquid state. For example, the aircraft including the fuel cell power system can be configured to store the hydrogen fuel in the liquid state, such as within integrated cryogenic hydrogen tank systems 500-900. Such can allow for the hydrogen fuel to be stored in a more power dense manner. However, the fuel cell stack can be configured to utilize the hydrogen fuel in a gaseous state. Accordingly, in some examples, the fuel cell power system further includes a heat exchanger configured to thermally connect the flow of compressed air $\alpha c$ from the propulsor with the flow of hydrogen fuel, which can provide a sufficient amount of heat energy to the flow of compressed air $\alpha c$ to convert the flow of hydrogen fuel from the liquid phase to the gaseous phase.

In such a manner, the fuel cell power system can be configured to utilize heat within the flow of compressed air $\alpha c$ (from the propulsor) to provide the desired phase change of the hydrogen fuel without requiring dedicated heaters.

Referring now to FIG. 35, a perspective view of an example vehicle is provided. Specifically, in the illustration of FIG. 35, the vehicle is configured as an aeronautical vehicle, or aircraft 3510. The aircraft 3510 has a fuselage 3512, wings 3514 attached to the fuselage 3512, and an empennage 3516.

The aircraft 3510 further includes a fuel cell power system 3520 in connection with one or more of the integrated tank system(s) 500-900. In the aircraft 3510 shown in FIG. 35, at least a portion of the integrated tank system(s) 500-900 is/are located in a wing 3514 of the aircraft 3510. In some examples, however, the integrated tank system(s) 500-900 is/are located at another location in the fuselage 3512 or the wing 3514.

The aircraft 3510 further includes a propulsion system 3524 that produces a propulsive thrust sufficient to propel the aircraft 3510 in flight, during taxiing operations, etc. Although the propulsion system 3524 is shown attached to the wing 3514 in FIG. 35, in some examples, the propulsion system 3524 includes one or more aspects coupled to other parts of the aircraft 3510, such as the empennage 3516, the fuselage 3512, both, etc.

The propulsion system 3524 includes an engine, and more specifically includes a pair of engines. More specifically, still, each of the engines in the pair of engines is configured as a gas turbine engine 3526 mounted to one of the respective wings 3514 of the aircraft 3510 in an under-wing configuration through a respective pylon 3528. Each gas turbine engine 3526 can selectively generate a propulsive thrust for the aircraft 3510, and therefore is generally referred to as one or more propulsors 3515. The amount of propulsive thrust is controlled at least in part based on a volume of fuel provided to the gas turbine engines 3526 via a fuel delivery system (not shown). In some examples, the fuel is a hydrogen fuel stored substantially in a liquid phase in the integrated tank system(s) 500-900 as described above with reference to FIGS. 1-12.

As will be appreciated, the fuel cell power system 3520 further includes a fuel cell stack 3530. The fuel cell stack 3530 is located remotely from the propulsors 3515 (e.g., the gas turbine engines 3526 in FIG. 35) and, as will be appreciated from the description below, is in airflow communication with one or more of the propulsors 3515 for receiving a flow of compressed air from one or more of the propulsors. As is depicted in phantom, the fuel cell stack 3530 of the fuel cell power system 3520 is further in fluid communication with the fuel delivery system (and integrated tank system(s) 500-900) for receiving the flow of hydrogen fuel from the fuel delivery system and/or thermal communication with the fuel delivery system for transferring heat with the flow of hydrogen fuel through the fuel delivery system.

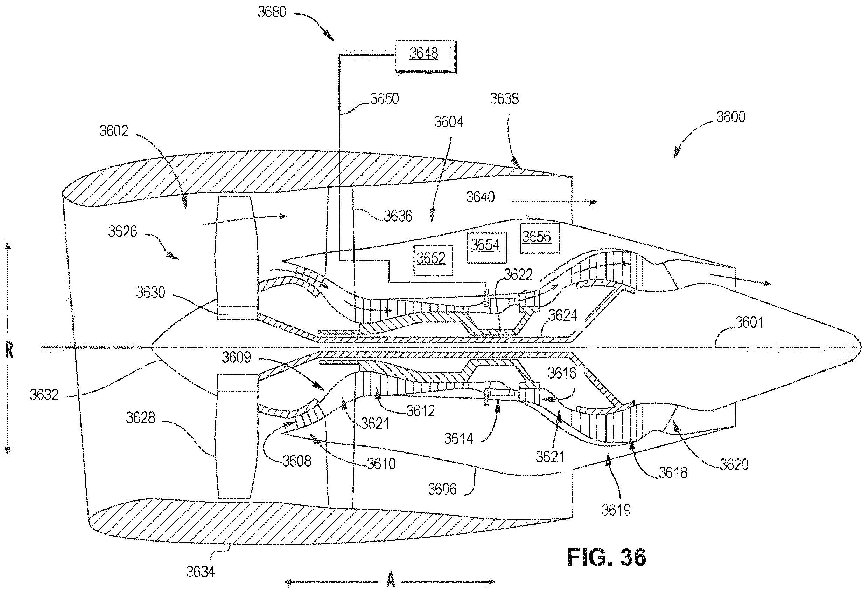

Referring now to FIG. 36, schematic, cross-sectional views of a gas turbine engine in accordance with examples described below. For example, the example gas turbine engine of FIG. 36 can be incorporated into propulsion system 3524 described above with reference to FIG. 35 as one of the gas turbine engines 3526.

In the illustrated example of FIG. 36, the gas turbine engine is configured as a high bypass turbofan 3600. As shown in FIG. 36, the turbofan 3600 defines an axial direction A (extending parallel to a longitudinal centerline 3601 provided for reference), a radial direction R, and a circumferential direction (extending about the axial direction A; not depicted in FIG. 36). In general, the turbofan 3600 includes a fan section 3602 and a turbomachine 3604 disposed downstream from the fan section 3602.

The example turbomachine 3604 includes an outer casing 3606 that is substantially tubular and that defines an annular inlet 3608. The outer casing 3606 encases, in serial flow relationship, a compressor section 3609 including a booster or low-pressure (LP) compressor 3610 and a high-pressure (HP) compressor 3612; a combustion section 3614; a turbine section 3619 including a high-pressure (HP) turbine 3616 and a low-pressure (LP) turbine 3618; and an exhaust section 3620. The compressor section 3609, combustion section 3614, and turbine section 3619 together define at least in part a core air flow path 3621 extending from the annular inlet 3608 to the exhaust section 3620. The turbofan engine further includes one or more drive shafts. More specifically, the turbofan engine includes a high-pressure (HP) shaft or spool 3622 drivingly connecting the high-pressure turbine 3616 to the high-pressure compressor 3612, and a low-pressure (LP) shaft 3624 or spool drivingly connecting the low-pressure turbine 3618 to the low-pressure compressor 3610.

In some examples, the fan section 3602 includes a fan 3626 having a plurality of fan blades 3628 coupled to a disk 3630 in a spaced apart manner. The fan blades 3628 and disk 3630 are together rotatable about the longitudinal axis 3601 by the LP shaft 3624. The disk 3630 is covered by a rotatable front hub 3632 aerodynamically contoured to promote an airflow through the plurality of fan blades 3628. Further, an annular fan casing or outer nacelle 3634 is provided, circumferentially surrounding the fan 3626 and/or at least a portion of the turbomachine 3604. The nacelle 3634 is supported relative to the turbomachine 3604 by a plurality of circumferentially spaced outlet guide vanes 3636. A downstream section 3638 of the nacelle 3634 extends over an outer portion of the turbomachine 3604 so as to define a bypass airflow passage 3640 therebetween.

Referring still to FIG. 36, the turbofan 3600 can be operable via a fuel cell power system 3680. The fuel cell power system 3680 can be configured similarly to the fuel cell power system 3520 of FIG. 35. Accordingly, the fuel cell power system 3680 generally includes a fuel tank 3648 (e.g., the integrated tank system(s) 500-900) and a fuel delivery system 3650. The fuel delivery system 3650 provides a fuel flow from the fuel tank 3648 to the turbofan 3600, and more specifically to a fuel manifold (not labeled) of the combustion section 3614 of the turbomachine 3604 of the turbofan 3600.

Moreover, as is depicted schematically, the turbofan 3600 further includes various systems to aid in the operation of the turbofan 3600 and/or an aircraft including the turbofan 3600. For example, the example turbofan 3600 can include an electric motor (not shown), which can provide electrical power to the turbofan 3600 and/or various other electronic components of the turbofan 3600 and/or an aircraft 3510 including the turbofan 3600.

Further, although not depicted, the turbofan 3600 can include one or more heat exchangers within, e.g., the turbine section 3619 or exhaust section 3620 for extracting waste heat from an airflow therethrough, such that the waste heat can be utilized to add heat to various heat sinks as waste heat during operation. Further, additionally and/or alternatively, the one or more heat exchangers can be configured to help heat hydrogen fuel H2, as explained more in depth below.

Although examples fuel cell power systems are described below as applicable to the turbofan 3600 depicted in FIG. 36, other example engines can use examples fuel cell power systems described below, such as gas turbine engines, such as a turboshaft engine, turboprop engine, turbojet engine, etc. In some examples, the gas turbine engine includes other numbers or arrangements of shafts, compressors, turbines, fans, etc. Furthermore, the gas turbine engine can be a geared gas turbine engine (i.e., including a gearbox between the fan 3626 and shaft driving the fan, such as the LP shaft 3624), a variable pitch gas turbine engine (i.e., including a fan 3626 having a plurality of fan blades 3628 rotatable about their respective pitch axes), etc. Furthermore, example fuel cell power systems can be included with or used by other types of engines such as reciprocating engines. Additionally, in some examples, the turbofan 3600 includes and/or is operably connected to other accessory system(s) that utilize electrical and/or mechanical power.

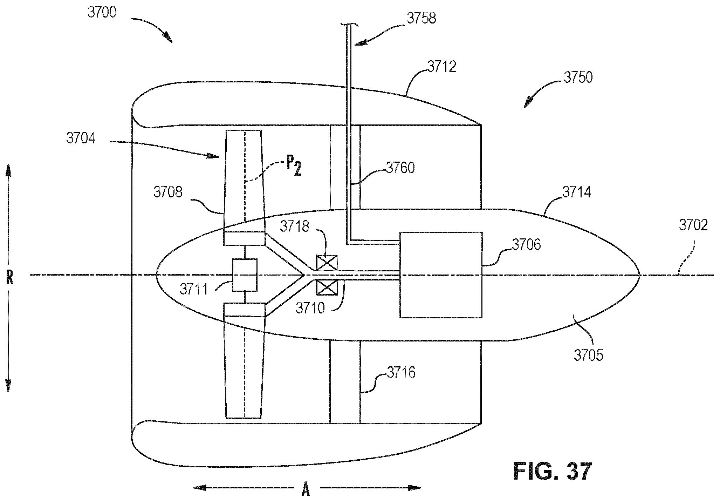

Referring now to FIG. 37, a hybrid-electric propulsion system 3750 having an electric propulsor assembly 3700 in accordance with examples described below is provided. The electric propulsor assembly 3700 can be incorporated into an aircraft, such as the example aircraft 3510 of FIG. 35, e.g., in addition to or instead of one or both of the gas turbine engines 3526.

The electric propulsor assembly 3700 includes an electric motor 3706, a propulsor 3705, and a fan 3704. The electric propulsor assembly 3700 defines an axial direction A extending along a centerline axis 3702 that extends therethrough for reference, as well as a radial direction R. In the example illustration of FIG. 37, the fan 3704 is rotatable about the centerline axis 3702 by the electric motor 3706.

The fan 3704 includes a plurality of fan blades 3708 and a fan shaft 3710. The plurality of fan blades 3708 are attached to/rotatable with the fan shaft 3710 and spaced generally along a circumferential direction of the electric propulsor assembly 3700 (not shown). In some examples, the plurality of fan blades 3708 are attached in a fixed manner to the fan shaft 3710, or alternatively, the plurality of fan blades 3708 are rotatable relative to the fan shaft 3710, such as in the example depicted. For example, the plurality of fan blades 3708 each define a respective pitch axis P2, and for the embodiment depicted are attached to the fan shaft 3710 such that a pitch of each of the plurality of fan blades 3708 can be changed, e.g., in unison, by a pitch change mechanism 3711. Changing the pitch of the plurality of fan blades 3708 can increase an efficiency of the electric propulsor assembly 3700 and/or can allow the electric propulsor assembly 3700 to achieve a desired thrust profile. In such examples, the fan 3704 can be referred to as a variable pitch fan.

Moreover, the electric propulsor assembly 3700 includes a fan casing or outer nacelle 3712, attached to a core 3714 of the electric propulsor assembly 3700 through one or more struts or outlet guide vanes 3716. The outer nacelle 3712 substantially completely surrounds the fan 3704, and particularly the plurality of fan blades 3708. Accordingly, the electric propulsor assembly 3700 can be referred to as a ducted electric fan.

Referring still particularly to FIG. 37, the fan shaft 3710 is mechanically coupled to the electric motor 3706 within the core 3714, such that the electric motor 3706 drives the fan 3704 through the fan shaft 3710. The fan shaft 3710 is supported by one or more bearings 3718, such as one or more roller bearings, ball bearings, and/or another type of bearing. Additionally, the electric motor 3706 can be an in-runner electric motor (e.g., including a rotor positioned radially inward of a stator), or alternatively can be an outrunner electric motor (i.e., including a stator positioned radially inward of a rotor), or alternatively, still, can be an axial flux electric motor (e.g., with the rotor neither outside the stator nor inside the stator, but rather offset from it along the axis of the electric motor).

The electric propulsor assembly 3700 can also be connected to an electric energy storage unit (not shown) and/or an electric machine (also not shown). In some examples, the electric propulsor assembly 3700 is electrically connectable through one or more electric lines 3760 of a power bus 3758. For example, the power bus 3758 can include various switches or other power electronics movable to selectively connect the various components of the hybrid-electric propulsion system 3750 via electronic connections.

It some examples, the electric propulsor assembly 3700 is integrated into an aircraft, e.g., aircraft 3510 of FIG. 35. For example, the electric propulsor assembly 3700 can be configured as a plurality of electric propulsor assemblies and/or can include a plurality of combustion engines (such as turbomachines 3604) and/or an electric motor/generator. In some examples, the electric propulsor assemblies 3700 and/or combustion engine(s) and electric motor/generator(s) can be mounted to the aircraft 3510 at any other suitable location in any other suitable manner (including, e.g., tail mounted configurations). In some examples, the hybrid-electric propulsion system 3750 may not include an electric propulsor assembly 3700 at all.

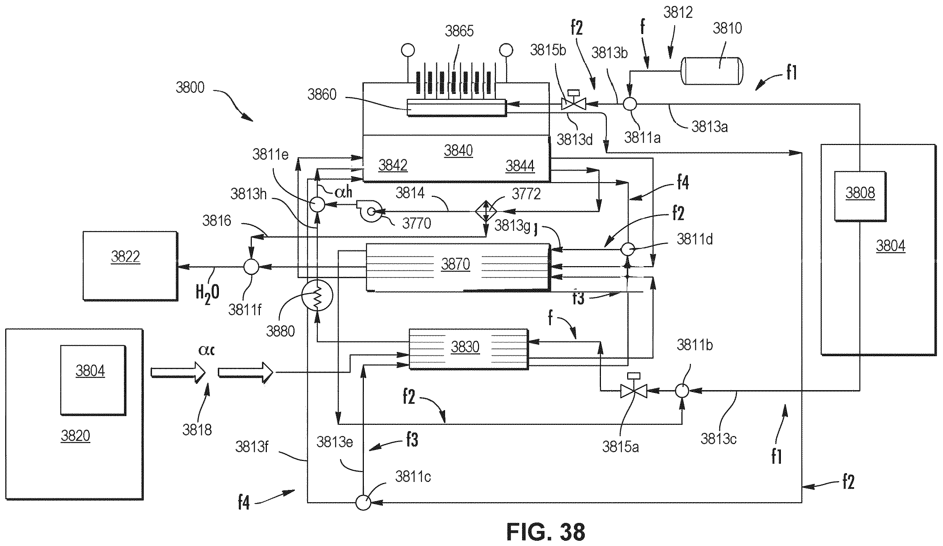

Referring now to FIG. 38, a schematic view of a fuel cell power system 3800 for a vehicle including a propulsor 3820, such as the aircraft 3510 of FIG. 35, and such as the gas turbine engines 3526 of FIG. 35 and/or the turbofan 3600 of FIG. 36. In some examples, the vehicle is another type and/or configuration of an aeronautical vehicle and the engine/propulsor can be mounted to or within the vehicle. Furthermore, the fuel cell power system 3800 can be configured similarly to the fuel cell power system 3680 of FIG. 36 and/or the fuel cell power system 3520 of FIG. 35.

As illustrated in FIG. 38, the fuel cell power system 3800 includes the propulsor 3820 including an engine 3804 for generating a thrust for the vehicle with the propulsor 3820 generating a flow of compressed air $\alpha c$ during operation. Further, the fuel cell power system 3800 also includes a fuel delivery system 3812 for providing a flow of hydrogen fuel from a fuel tank 3810 (and/or one or more of the integrated tank systems 500-900) to a fuel cell stack 3840 located remotely from the propulsor 3820. For example, in some embodiments, the propulsor 3820 is part of a turbomachine, such as the turbomachine 3604 of FIG. 36, the turbomachine 3604 having the outer casing 3606 surrounding the turbomachine 3604 (see FIG. 36), and where the fuel cell stack 3840 is located outside of a casing of the engine or propulsor (see, e.g., casing 3606 in FIG. 36). However, in some examples, the fuel cell stack 3840 can be located separate from the propulsor 3820.

Additionally, the fuel cell power system 3800 is arranged in airflow communication with the propulsor 3820 for receiving the flow of compressed air $\alpha c$ and is also in fluid communication with the fuel delivery system 3812 for receiving the flow of hydrogen fuel. The airflow communication between the fuel cell power system 3800 and the propulsor 3820 can include one or more airflow ducts 3813 (see 3813a-3813h). The one or more airflow ducts 3813 can meet at one or more junctures 3811 (see 3811a-3811f) and can also have one or more valves 3815 (see 3815a-3815b) to control the airflow. The fluid communication with the fuel delivery system 3812 can include one or more inlet/outlet lines.

Generally, the fuel delivery system 3812 is configured to provide a flow of hydrogen fuel to the fuel cell stack 3840 and a compressed airflow delivery system 3818 of the fuel cell power system 3800 is configured to provide a flow of compressed air $\alpha c$ from the propulsor 3820 to the fuel cell stack 3840. The fuel cell stack 3840 is located remotely from the propulsor 3820 as described above and is in airflow communication with the propulsor 3820 through the compressed airflow delivery system 3818 for receiving the flow of compressed air $\alpha c$ from the propulsor 3820. The fuel cell stack 3840 is further in fluid communication with the fuel tank 3810 through the fuel delivery system 3812 for receiving the flow of hydrogen fuel from the fuel delivery system 3812. Additionally or alternatively, the fuel cell stack 3840 can receive hydrogen fuel from the integrated cryogenic hydrogen tank system(s) 500-900 described above. The fuel tank 3810 can be configured to hold the hydrogen fuel at least partially within the liquid phase and can further be configured to provide hydrogen fuel to the fuel cell power system 3800 substantially completely in the liquid phase, such as completely in the liquid phase. For example, the fuel tank 3810 can define a fixed volume, such that as the fuel tank 3810 provides hydrogen fuel to the fuel cell power system 3800 substantially completely in the liquid phase, a volume of the liquid hydrogen fuel in the fuel tank 3810 decreases, and the volume is made up by, e.g., gaseous hydrogen.

Additionally, the fuel cell stack 3840 can be a proton exchange membrane cell stack. As used herein, the term "proton exchange membrane cell stack" refers to a grouping of multiple fuel cells that are connected in series to achieve a useful voltage, and where each fuel cell has multiple layers. In some examples, the outermost layers are flow plates; followed by two sealing layers that are an anode or a cathode and through which hydrogen and oxygen particles flow through; with two gas diffusion layers on either side of a proton conducting electrolyte (e.g., a proton exchange membrane) in the middle of the fuel cell. Generally, the proton exchange membrane fuel stack operates at an optimal temperature of 40-90°C; however, the fuel cell stack 3840 and/or the proton exchange membrane fuel stack itself can be altered to operate at additional temperatures.

The fuel tank 3810 and fuel cell power system 3800 can include a variety of supporting structure to facilitate storing and/or transporting the hydrogen fuel in such a manner. For example, the fuel delivery system 3812 is provided for transporting the hydrogen fuel from the fuel tank 3810 to one or more other components of the fuel cell power system 3800. Although not depicted in FIG. 38, the fuel delivery system 3812 can extend from the fuel tank 3810 and/or integrated tank system(s) 500-900 to the engine 3804 for providing the hydrogen fuel to the engine 3804. Moreover, as will be explained in more detail below, the example fuel cell power system 3800 includes a battery heat exchanger 3860 in thermal communication with the fuel cell stack 3840 and in thermal communication with the fuel delivery system 3812 for transferring heat with the flow of hydrogen fuel through the fuel delivery system 3812.

Additionally, the fuel cell power system 3800 includes a heat exchanger 3830 in communication with the fuel delivery system 3812 and the compressed airflow delivery system 3818 for transferring heat from the flow of compressed air $\alpha c$ to the flow of hydrogen fuel. In such a manner, the flow of compressed air $\alpha c$ can heat the hydrogen fuel from the liquid phase to a gaseous phase, to a supercritical phase, or both. In some examples, the heat exchanger 3830 can be a first heat exchanger, and the fuel cell power system 3800 can further include a second heat exchanger configured to output the hydrogen coolant into first heat exchanger. The fuel cell power system 3800 can be modified to include a third heat exchanger, a fourth heat exchanger, a fifth heat exchanger, etc.

As shown in FIG. 38, the fuel cell power system 3800 also includes a humidifier 3870 to humidify the compressed air $\alpha c$ into humidified compressed air $\alpha h$ and circulating the humidified compressed air $\alpha h$ to the fuel cell stack 3840.

Also as shown, the fuel cell power system 3800 further includes a first valve 3815a in fluid communication with the fuel delivery system 3812 at a location upstream of the heat exchanger 3830 for metering a flow of the hydrogen fuel through the fuel delivery system 3812 to the heat exchanger 3830 and subsequently to the fuel cell stack 3840. The first valve 3815a controls the amount of hydrogen entering the heat exchanger 3830 from the engine 3804 and/or from the fuel tank 3810. Similarly, a second valve 3815b is positioned at a location upstream of the battery heat exchanger 3860 for controlling the flow of the hydrogen fuel into the battery heat exchanger 3860.

Turning now to a fuel power process of the fuel cell power system 3800 specifically, the fuel delivery system 3812 includes one or more airflow ducts 3813 to facilitate the flow as described herein. In some examples, such as the example of FIG. 38, the flow of hydrogen fuel (e.g., primarily in its liquid state) is used as a coolant for various components of the fuel cell power system 3800 (and gas turbine engine) prior to being utilized by the fuel cell stack 3840 to generate electrical power. For example, as will be described, the flow of hydrogen fuel can be used as a coolant for the battery heat exchanger 3860, the fuel cell stack 3840, the humidifier 3870, and the heat exchanger 3830 prior to the hydrogen fuel being used for generating electrical power by the fuel cell stack 3840.

In the illustrated example, a flow f of hydrogen fuel from the fuel tank 3810 is split at a first juncture 3811a into a first flow f1 through a first duct 3813a and a second flow f2 through a second duct 3813b, as shown in FIG. 38. The first flow f1 through the first duct 3813a flows from the fuel tank 3810 to one or more engine heat exchangers 3808, such as a first oil heat exchanger and a second exhaust gas heat exchanger, within the engine 3804 (note that the engine 3804 is depicted schematically in two places for clarity purposes in FIG. 38, as well as in the other figures). This hydrogen fuel returns from the one or more engine heat exchangers 3808 through a third duct 3813c and is rejoined with the second flow f2 at a second juncture 3811b with the third duct 3813c.

The second flow f2 is provided through a second valve 3815b to the battery heat exchanger 3860. In some examples, the fuel cell power system 3800 includes a power output assembly 3865 configured to receive electrical power from the fuel cell stack 3840. In some examples, the power output assembly 3865 can include a battery (not shown) or other similar structure for storing at least a portion of the electrical power generated prior to transferring some or all of such electrical power for useful work. The battery heat exchanger 3860 is in thermal communication with the power output assembly 3865 and can reduce a temperature of the power output assembly 3865. Reduced temperatures can help the power output assembly 3865 operate in a desired and/or more efficient manner and can assist with heating the flow of hydrogen fuel from the liquid state to the gaseous state.

The second flow f2 of hydrogen fuel from the battery heat exchanger 3860 is provided through a fourth duct 3813d, where the second flow f2 splits into another two flows, e.g., a primary flow f3 and a secondary flow f4, at a third juncture 3811c. The primary flow f3 is provided to the heat exchanger 3830 and flows through a fifth duct 3813e. The secondary flow f4 is provided through a sixth duct 3813f to the fuel cell stack 3840 to cool the fuel cell stack 3840, through a stack inlet 3842 and out a stack outlet 4144, before rejoining the primary flow f3 at a fourth juncture 3811d.

Referring still to FIG. 38, the rejoined primary flow f3 and secondary flow f4 (collectively the second flow f2 from the fuel tank 3810) are then provided through the humidifier 3870 to cool the humidifier 3870 and through a seventh duct 3813g and rejoined with the first flow f1 from the fuel tank 3810 at the second juncture 3811b into a rejoined flow f. The rejoined flow f is provided through the first valve 3815a to the heat exchanger 3830 where the fuel is heated, e.g., by compressed air $\alpha c$ through the heat exchanger 3830, described further below, and subsequently provided to the fuel cell stack 3840 as hydrogen fuel for the fuel cell stack 3840.

In some examples, the fuel cell power system 3800 further includes a startup heater 3880. As depicted, the startup heater 3880 is positioned downstream of the heat exchanger 3830 and upstream of the fuel cell stack 3840 for heating the flow f of hydrogen fuel provided to the fuel cell stack 3840 through an eighth duct 3813h. In particular, when the engine 3804 and/or aircraft 3510 is not yet being operated, e.g., when the engine 3804 and/or aircraft 3510 is in startup and/or pre-operation mode, the startup heater 3880 can be used to warm the hydrogen fuel before the hydrogen fuel is provided to the fuel cell stack 3840. Even in embodiments where the vehicle is not in startup and/or pre-operation mode, the startup heater 3880 can be used to heat the hydrogen fuel to a desired temperature before the hydrogen fuel is provided to the fuel cell stack 3840.

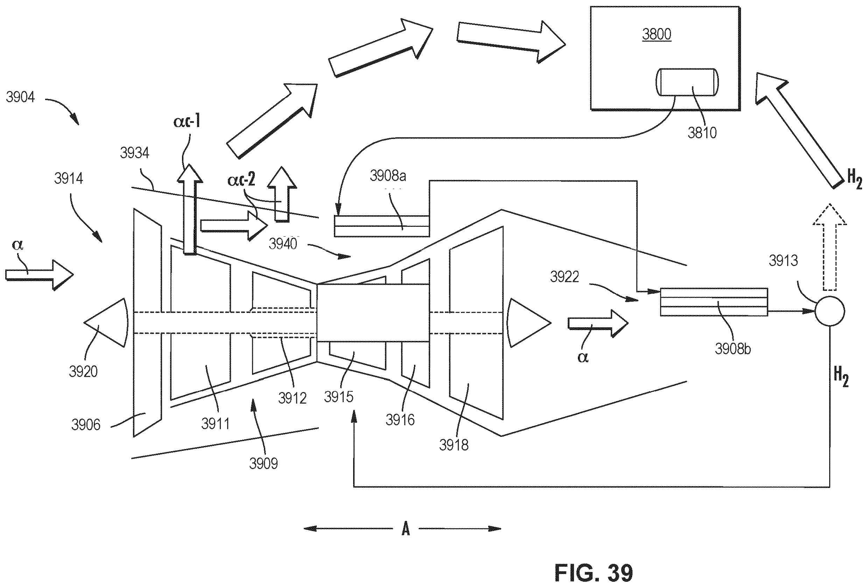

Additionally, the fuel cell power system 3800 includes a recirculation system 3814 directly downstream of the fuel cell stack 3840, where the recirculation system 3814 includes a separator 3772 and a recirculation pump 3770. The recirculation system 3814 can further include an exhaust water system 3816. The separator 3772 separates exhaust water (denoted as $H_2O$) from the hydrogen fuel and ejects it through an exhaust section 3922 as part of the exhaust water system 3816 (see also exhaust section 3922 of FIG. 39). Further, in some examples, the separator 4172 can be a centrifugal separator. The recirculation pump 4170 circulates the hydrogen fuel back into the fuel cell stack 3840, combining with the rejoined flow f at a fifth juncture 3811e, as shown in FIG. 38.

In particular, the hydrogen fuel, as it travels through the fuel cell power system 3800, cools the heat exchanger 3830, along with some other heat exchangers, e.g., the engine heat exchangers 3808 in the engine 3804, in one or more fuel cooled oil coolers of the aircraft 3510, and/or at multiple locations within each fuel cell of the fuel cell stack 3840. The hydrogen fuel can additionally cool at least part of the battery heat exchanger 3860, the humidifier 3870, and/or another component of a vehicle (such as aircraft 3510 of FIG. 35), e.g., by being used to cool air from the bypass airflow passage 3640 and/or the air from the low-pressure compressor 3610 (as shown in FIG. 39, discussed below).

Using the hydrogen fuel from the fuel tank 3810 to cool the fuel cell power system 3800 and/or the aircraft 3510 increases efficiency in the fuel cell power system 3800 and the aircraft 3510 itself. Additionally, the fuel cell power system 3800 can remove the need for an air compressor and/or a coolant pump. Finding a dual purpose for the hydrogen fuel (e.g., to fuel and to cool the vehicle) also eliminates or reduces the need for an outside coolant. The hydrogen fuel can further lower noise and vibrations of the fuel cell power system 3800.

Hydrogen fuel defines a relatively low boiling point, such that when the hydrogen fuel is provided through the fuel delivery system 3812 and/or the cooling system in the liquid phase, hydrogen fuel can freeze a gas within the fuel delivery system 3812. Accordingly, the heat exchanger 3830 is provided to receive a flow of the hydrogen fuel in the liquid phase and heat the hydrogen fuel from the liquid phase to a gaseous phase or to a supercritical phase, such that the heated hydrogen fuel does not freeze the gas within the fuel power process.

Referring still to FIG. 38, the propulsor 3820 can include the engine 3804 having a compressor section (see, e.g., compressor section 3609 of the turbofan 3600 of FIG. 36) in fluid communication with the fuel cell stack 3840. As described above with respect to FIG. 36, the turbomachine 3604 can generally include the compressor section 3609, the combustion section 3614, and the turbine section 4019 arranged in serial flow order. Additionally, in some examples, the propulsor 3820 is a turbo propulsor (e.g., including a turbomachine, such as the example turbomachine 3604 of FIG. 36). In some other examples, the propulsor 3820 is an electric propulsor, e.g., the electric propulsor as arranged according to the electric propulsor assembly 3700 depicted in FIG. 37.

Generally, the compressed airflow process is provided through the compressed airflow delivery system 3818. The compressed airflow delivery system 3818 enters into the fuel cell power system 3800 from the engine 3804 of the propulsor 3820. In some examples, e.g., where the propulsor 3820 includes a turbomachine (e.g., the turbomachine 3604 of FIG. 36), the low-pressure compressor 3610, the bypass airflow passage 3640, or both, can be a source of the compressed air $\alpha c$. The compressed airflow delivery system 3818 flows the compressed air $\alpha c$ into the heat exchanger 3830, the humidifier 3870, and the fuel cell stack 3840, before recirculating it through the humidifier 3870, where a water content of the airflow can be recaptured.

Humidifiers provide heat and humidity to the incoming oxidant or hydrogen fuel stream of fuel cells and can improve an overall system performance and reliability. Without humidification, the fuel cell membrane of the fuel cell stack 3840 can dry out, which can reduce a proton transport in the fuel cell stack 3840 and can decrease an oxygen reduction reaction at a cathode of a fuel cell within the fuel cell stack 3840.

Referring now to FIG. 39, a propulsor 3920 with another example fuel cell power system 3900 is provided. For the example shown, the propulsor 3920 is a turbofan engine 3904 similar to the turbofan 3600 of FIG. 36, and the fuel cell power system 3900 is configured in a similar manner as the fuel cell power system 3800 of FIG. 38. As such, the example turbofan engine 3904 generally includes a turbomachine 3914 defining an axial direction A. As shown schematically in FIG. 39, the turbofan engine 3904 can include, in serial airflow order, a fan 3906, a compressor section 3909 (including a low-pressure compressor 3911 and a high-pressure compressor 3912), a combustor 3915, a high-pressure turbine 3916, and a low-pressure turbine 3918.

The schematic drawing shows that air $\alpha$ enters into the compressor section 3909 and flows out of an exhaust section 3922, which can be similar to the exhaust section 3620 of FIG. 36. In some examples, a first flow of compressed air $\alpha c$-1 from the low-pressure compressor 3911 is provided to the fuel cell power system 3900. Additionally, a bypass airflow passage 3940 is defined with a nacelle 3934, the nacelle 3934 extending over an outer portion of the turbomachine 3914 so as to define the bypass airflow passage 3940 therebetween. The bypass airflow passage 3940 provides a second flow of compressed air $\alpha c$-2 that makes up at least a portion of the compressed air $\alpha c$ that is provided to the fuel cell power system 3900. In some examples, as described below, the second flow of compressed air $\alpha c$-2 from the bypass airflow passage 3940 makes up all of the compressed air $\alpha c$ provided to the fuel cell power system 3900.

Referring still to FIG. 39, the turbomachine 3914 can have one or more engine heat exchangers, such as a first engine heat exchanger 3908a and a second engine heat exchanger 3908b. In some examples, the first engine heat exchanger 3908a is an oil heat exchanger and the second engine heat exchanger 3908b is a waste heat recovery heat exchanger. Hydrogen fuel can flow from a fuel tank 3910 to the first engine heat exchanger 3908a and the second engine heat exchanger 3908b. From the second engine heat exchanger 3908b, the hydrogen fuel flows through a juncture 3913, from where at least a portion of the hydrogen fuel is be sent back to the fuel cell power system 3900 and a second portion of the hydrogen fuel is directed to the combustor 3915. In such a manner, the heat generated by the propulsor 3920, which for the embodiment depicted is the turbomachine 3914, can be used to heat the hydrogen fuel used for power generation by a fuel cell stack of the fuel cell power system 3900 (see, e.g., FIG. 38).

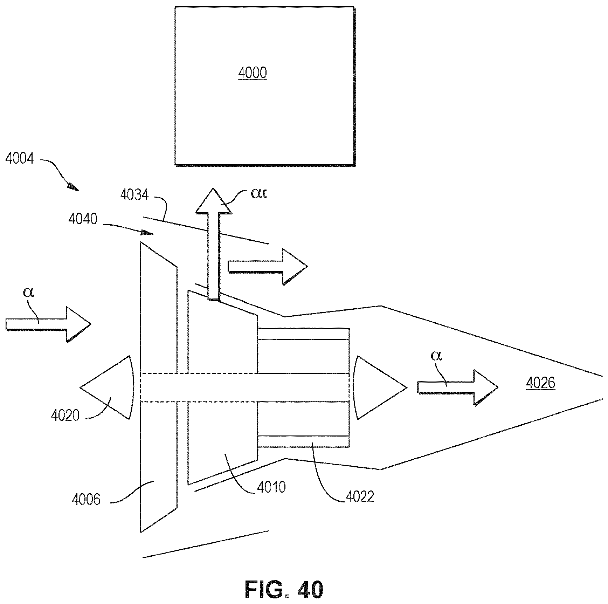

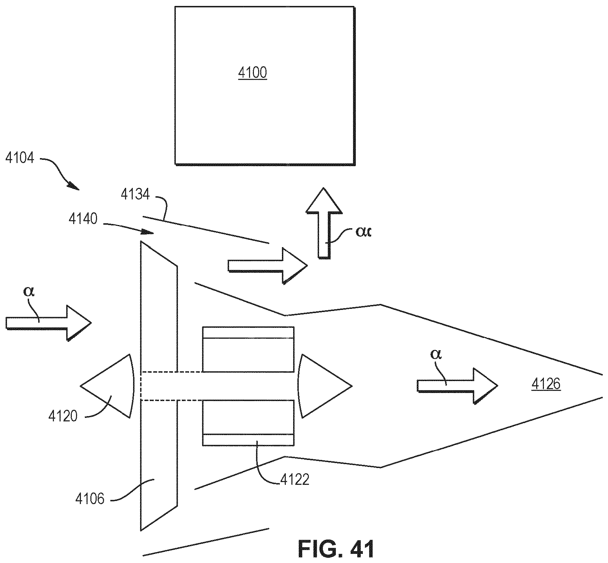

Referring now to FIGS. 40 and 41, simplified schematics of propulsors and fuel cell power systems in accordance with two additional examples are provided. The examples of FIGS. 40 and 41 can be configured in a similar manner as one or more of the propulsors described above with reference to FIGS. 35-39, and similarly the fuel cell power systems 4000, 4100 of FIGS. 40 and 41, respectively, can be configured in a similar manner as one or more of the fuel cell power systems 3800, 3900 of respective FIGS. 38 and 39.

Referring particularly to FIG. 40, a propulsor 4020 with an engine 4004 is shown. Specifically, the propulsor 4020 is an electric propulsor operably coupled to an electric motor 4022. The engine 4004 is simplified to include a fan 4006 and a low-pressure compressor 4010. Additionally, a bypass airflow passage 4040 is defined with a nacelle 4034, the nacelle 4034 extending over an outer portion of the engine 4004 so as to define the bypass airflow passage 4040 therebetween. In the example illustration of FIG. 40, air $\alpha$ from the bypass airflow passage 4040 can be insufficient on its own to meet the needs of the fuel cell power system 4000. Thus, the low-pressure compressor 4010 can provide all, or almost all, of a compressed air $\alpha c$ to the fuel cell power system 4000.

Referring now to FIG. 41, a propulsor 4120 with an engine 4104 is shown. Specifically, the propulsor 4120 is an electric propulsor and is operably coupled to an electric motor 4122. The engine 4104 is simplified to include a fan 4106 and a nacelle 4134 extending over an outer portion of the engine 4104. A bypass airflow passage 4140 is defined with the nacelle 4134, between the nacelle 4134 and the outer portion of the engine 4104. Air $\alpha$ generally flows through the bypass airflow passage 4140, where it can turn into compressed air $\alpha c$. Some of the air $\alpha$ can flow through the propulsor 4120 and electric motor 4122 and exit out a nozzle 4126. In the illustrated example of FIG. 41, the air $\alpha$ from the bypass airflow passage 4140 provides sufficient pressure alone. Therefore, compressed air $\alpha c$ from a low-pressure compressor (not shown) is not necessary and the low-pressure compressor can be eliminated.

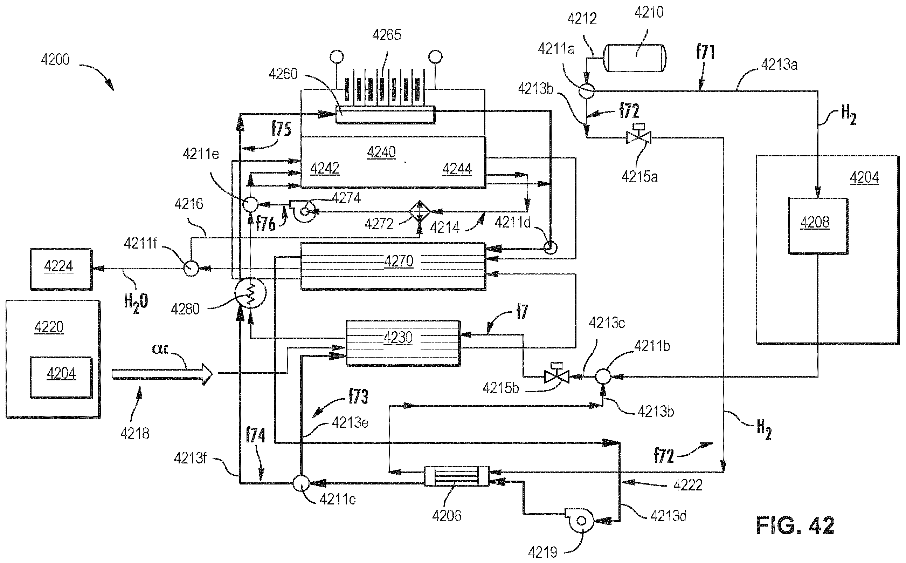

Referring now to FIG. 42, a fuel cell power system 4200 in accordance with another example is provided. The example fuel cell power system 4200 of FIG. 42 can be configured in substantially the same manner as the fuel cell power system 3800 of FIG. 38, and accordingly, the same or similar reference numbers can refer to the same or similar parts.

However, for the example of FIG. 42, the fuel cell power system 4200 further includes at least one hydrogen/coolant heat exchanger 4206 and a coolant pump 4219. With such a configuration, the hydrogen fuel is used to cool down the coolant instead of applying direct cooling to the components of the fuel cell power system 4200 (e.g., a fuel cell stack 4240, a heat exchanger 4230, a humidifier 4270, and a battery heat exchanger 4260). The coolant is then used to cool the temperature of incoming compressed air $\alpha c$ from a propulsor 4220 using the heat exchanger 4230. Additionally, the hydrogen coolant is used to cool the fuel cell stack 4240 and at least part of the battery heat exchanger 4260, such as the battery (not shown).

Referring still to FIG. 42, the fuel cell power system 4200 can have a fuel delivery system 4212, where the fuel delivery system 4212 is similar to the fuel delivery system 3812 of FIG. 38 and a compressed air $\alpha c$ delivery system 4218, where the compressed air $\alpha c$ delivery system 4218 is similar to the compressed airflow delivery system 3818 of FIG. 38. Hydrogen fuel is provided from a fuel tank 4210 and/or one or more of the integrated tank system(s) 5000-900 to a first juncture 4211a. From the first juncture 4211a, the hydrogen fuel is split into two flows: a first flow f71 and a second flow f72. The first flow f71 provides hydrogen fuel through a first duct 4213a to the one or more engine heat exchangers 4208 of an engine 4204 and is returned from the one or more engine heat exchangers 4208 to a second juncture 4211b, where the first flow f71 rejoins the second flow f72.

The second flow f72 provides the hydrogen fuel through a second duct 4213b to a first valve 4215a and into the hydrogen/coolant heat exchanger 4206, before rejoining the first flow f71 at the second juncture 4211b. The rejoined flow, e.g., a flow f7, including the first flow f71 and the second flow f72 then provides the hydrogen fuel through a third duct 4213c to a second valve 4215b and into the heat exchanger 4230, where the heated hydrogen fuel is subsequently provided to the fuel cell stack 4240 for electric power generation, as described above.

After exiting the fuel cell stack 4240 through a stack outlet 4244, the flow f7 flows through the humidifier 4270. The humidifier 4270 humidifies the coolant and circulates it to the coolant pump 4219 through a fourth duct 4213d as part of a coolant cooling system 4222. From the coolant pump 4219, the coolant is then provided to the hydrogen/coolant heat exchanger 4206, before flowing through a third juncture 4211c, where the flow of the coolant is split into a first coolant flow f73 and a second coolant flow f74. The first coolant flow f73 provides the coolant through a fifth duct 4213e to the heat exchanger 4230 and rejoins the second coolant flow f74 before flowing through the humidifier 4270. The second coolant flow f74 provides the coolant through a sixth duct 4213f to a startup heater 4280, and then to both the battery heat exchanger 4260 and the fuel cell stack 4240 in a first stream f75 and a second stream f76, respectively. The first stream f75 and the second stream f76 of the second coolant flow f74 then rejoin upstream of the fourth juncture 4211d, before rejoining the first coolant flow f73 at the fourth juncture 4211d and entering the humidifier 4270.

Additionally, the fuel cell power system 4200 includes a recirculation system 4214 directly downstream of the fuel cell stack 4240, where the recirculation system 4214 includes a separator 4272 and a recirculation pump 4274. The recirculation system 4214 can further include an exhaust water system 4216. The separator 4272 separates exhaust water (denoted as $H_2O$) from the hydrogen fuel and ejects it through an exhaust section 4224 as part of the exhaust water system 4216.

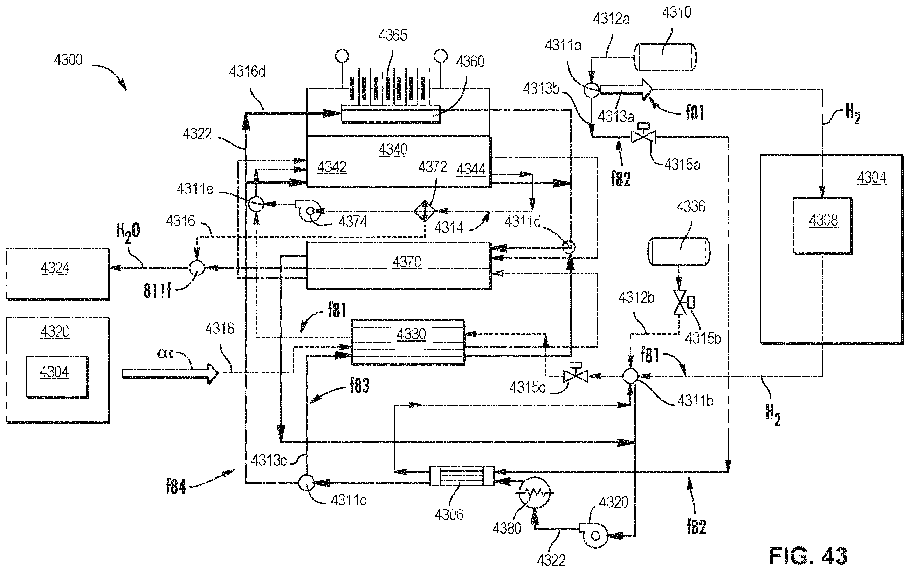

Referring now to FIG. 43, a fuel cell power system 4300 in accordance with another example is provided. The example fuel cell power system 4300 of FIG. 43 can be configured in substantially the same manner as the fuel cell power system 4200 of FIG. 42, and accordingly, the same or similar reference numbers may refer to the same or similar parts.

However, for the embodiment of FIG. 43, a startup heater 4380 is positioned midstream between a hydrogen/coolant heat exchanger 4306 and a coolant pump 4320. The fuel cell power system 4300 can have more than one fuel delivery systems, such as a first fuel delivery system 4312a and a second fuel delivery system 4312b, where the first fuel delivery system 4312a is similar to the fuel delivery system 4212 of FIG. 42. Hydrogen fuel is provided from a fuel tank 4310 to a first juncture 4311a. From the first juncture 4311a, the hydrogen fuel is split into two flows: a first flow f81 and a second flow f82. The first flow f81 provides hydrogen fuel through a first duct 4313a to one or more engine heat exchangers 4308 of an engine 4304 and is returned from the one or more engine heat exchangers 4308 to a second juncture 4311b, where the first flow f81 joins a flow from the second fuel delivery system 4312b.

A coolant cooling system 4322 provides the coolant from the coolant pump 4320 to the startup heater 4380. The startup heater 4380, along with the hydrogen fuel provided from a first valve 4315a through the second duct 4313b is flowed into the hydrogen/coolant heat exchanger 4306. The coolant then reaches a third juncture 4311c, where it splits into two flows: a first coolant flow f83 and a second coolant flow f84. The first coolant flow f83 provides the coolant to a heat exchanger 4330 through a third duct 4313c before rejoining the second coolant flow f84. The second coolant flow f84 provides coolant through a fourth duct 4313d to a battery heat exchanger 4360 and through a fifth duct 4313e to a fuel cell stack 4340 (e.g., in a stack inlet 4342 of the fuel cell stack 4340 and out a stack outlet 4344 of the fuel cell stack 4340). The coolant from the battery heat exchanger 4360 and to the fuel cell stack 4340 is rejoined into the second coolant flow f84, before rejoining the first coolant flow f83 at the fourth juncture 4311d. From the fourth juncture 4311d, the coolant is provided to a humidifier 4370, from which the coolant is then recirculated to the coolant pump 4320 as part of the coolant cooling system 4322.

Also for the embodiment of FIG. 43, the fuel cell power system 4300 further includes a startup hydrogen tank 4336, which stores the hydrogen fuel for the second fuel delivery system 4312b. The startup hydrogen tank 4336 is a high-pressure tank configured for storing gaseous hydrogen fuel used to start the fuel cell power system 4300.

The second fuel delivery system 4312b provides gaseous hydrogen through a second valve 4315b to meet the hydrogen fuel from the first fuel delivery system 4312a at the second juncture 4311b. At least a portion of the hydrogen fuel is provided from the second juncture 4311b to the coolant pump 4320 via the coolant cooling system 4322. The remaining portion of the hydrogen fuel is provided from the second juncture 4311b to a third valve 4315c located upstream of the heat exchanger 4330. The hydrogen fuel then generally follows the same path as described with reference to fuel delivery system 3812 of FIG. 38 as described above.

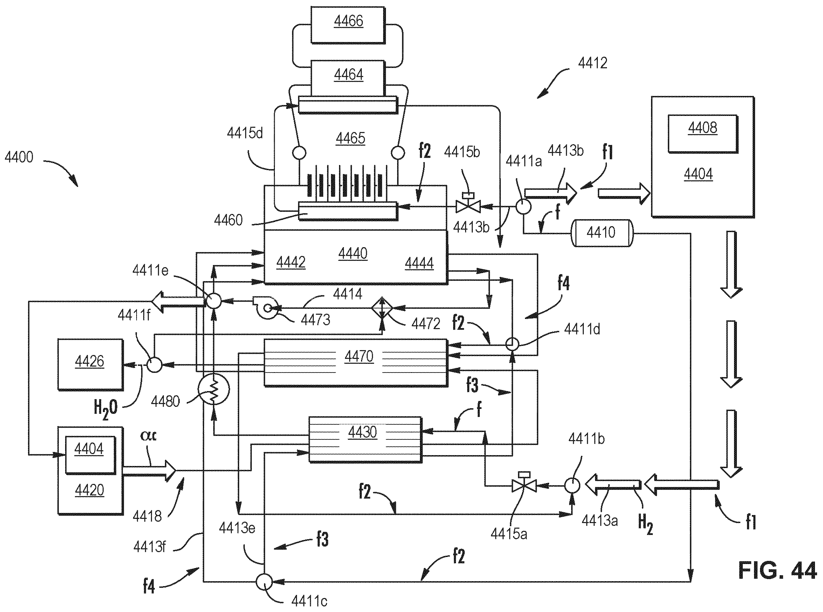

Referring now to FIG. 44, a fuel cell power system 4400 in accordance with another example is provided. The example fuel cell power system 4400 of FIG. 44 can be configured in substantially the same manner as the fuel cell power system of the figures describe above, and accordingly, the same or similar reference numbers may refer to the same or similar parts (e.g., fuel cell stack 4440 in FIG. 44 corresponds to fuel cell stacks 3840, 4240, and 4340 in FIGS. 38, 42, and 43, respectively).

The fuel cell power system 4400 includes a power converter 4464 and at least one electric machine 4466. Similar to the fuel cell power system 3800 of FIG. 38, a fuel delivery system 4412 includes one or more ducts 4413 to facilitate the flow of hydrogen fuel as described herein. A flow f of hydrogen fuel from a fuel tank 4410 and/or the integrated tank system(s) 500-900 is split at a first juncture 4411a into a first flow f1 through a first duct 4413a and a second flow f2 through a second duct 4413b. The first flow f1 through the first duct 4413a flows from the fuel tank 4410 to one or more engine heat exchangers 4408, such as a first oil heat exchanger and a second exhaust heat exchanger, within an engine 4404 (as in other figures, the engine 4404 is depicted schematically in two places for clarity purposes). This hydrogen fuel returns from the one or more heat engine heat exchangers 4408 through a third duct 4413c and is rejoined with the second flow f2 at a second juncture 4411b with the third duct 4413c.

The second flow f2 of hydrogen fuel is provided through a second duct 4413b and a second valve 4415b to a battery heat exchanger 4460. The battery heat exchanger 4460 is in thermal communication with a power output assembly 4465 for reducing a temperature of the power output assembly 4465. The battery heat exchanger 4460 is further in fluid communication with the power converter 4464, which in turn is in electrical communication with the at least one electric machine 4466. The power converter 4464 and the at least one electric machine 4466, or both, are in thermal communication with the fuel delivery system for transferring heat with the flow of hydrogen fuel through the fuel delivery system. The second flow f2 passes through a fourth duct 4415d to the power converter 4464, and is then passed to a third juncture 4411c, where it splits into a primary flow f3 and a secondary flow f4. In such a manner, the hydrogen fuel can cool the power converter 4464 (and although not depicted schematically in FIG. 44, the at least one electric machine 4466). The primary flow f3 is provided to a heat exchanger 4430 and flows through a fifth duct 4413e. The secondary flow f4 is provided through a sixth duct 4413f to a fuel cell stack 4440 to cool the fuel cell stack 4440, through a stack inlet 4442, out a stack outlet 4444, before rejoining the primary flow f3 at a fourth juncture 4411d, from where the second flow f2 (e.g., the combination of the primary flow f3 and the secondary flow f4) flows to a humidifier 4470. The second flow f2 then flows out of the humidifier 4470 and meets the first flow f1 at a second juncture 4411b. From the second juncture 4411b, the flow f (e.g., the combination of the first flow f1 and the second flow f2) flows through the heat exchanger 4430, to a startup heater 4480, and then to a fifth juncture 4411e. From the fifth juncture 4411e, the flow f is fed into the fuel cell stack 4440 and/or to the engine 4404 (e.g., a combustor). The portion of the flow f flowing out of the stack outlet 4444 of the fuel cell stack 4440 undergoes a recirculation cycle, passing through a separator 4472 and a recirculation pump 4473, before going through the fifth juncture 4411e again.

Accordingly, for the example of FIG. 44, the liquid hydrogen fuel is used to cool the power converter 4464, the at least one electric machine 4466, or both, in addition to the components mentioned with respect to other examples. The hydrogen fuel may then be directed to the fuel cell stack 4440.

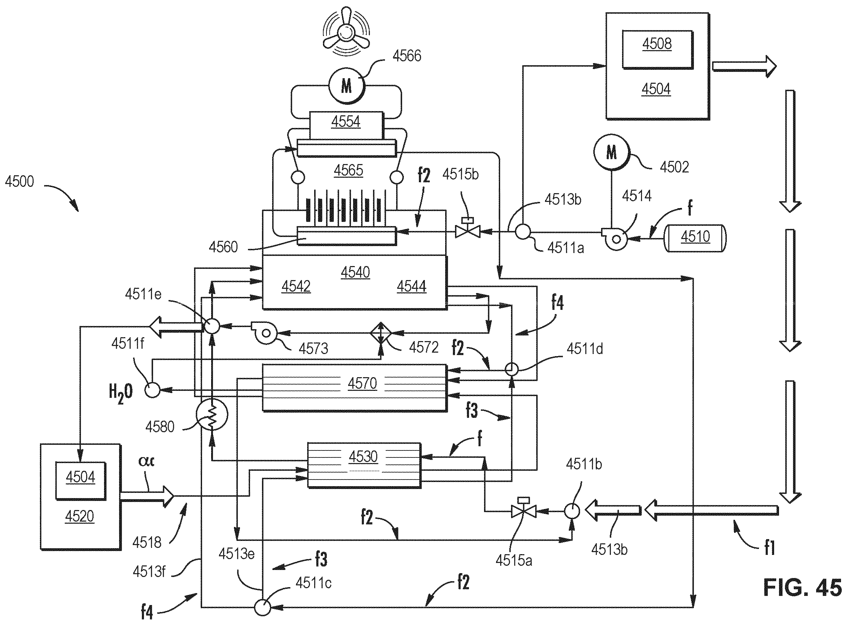

Referring now to FIG. 45, a fuel cell power system 4500 powering a pump motor 4502 is shown. The pump motor 4502 is operably coupled to a liquid hydrogen fuel pump 4514, which is operably coupled with a fuel tank 4510. The fuel cell power system 4500 also includes a power converter 4564 fluidly and/or thermally coupled to a battery heat exchanger 4560 and output power 4565 of the battery heat exchanger 4560. The power converter 4564 is further in electrical communication with the pump motor 4502 and a propulsion motor 4566. Additionally, the same or similar reference numbers can refer to the same or similar parts in earlier figures.

Generally, the fuel cell power system 4500 has a fuel delivery system similar to the fuel delivery system 4412 described above with respect to a fuel delivery system 4412 of FIG. 44. In the embodiment of FIG. 45, however, a flow f flows from the fuel tank 4510 to the liquid hydrogen fuel pump 4514, which is operably coupled to the pump motor 4502, before flowing to a first juncture 4511a, where a first portion f1 of the flow f goes to one or more engine heat exchangers 4508 in an engine 4504. A second portion f2 of the flow f flows through a second duct 4513b and a second valve 4515b to the battery heat exchanger 4560. From the battery heat exchanger 4560, the hydrogen may flow to the power converter 4564 to a third juncture 4511c.

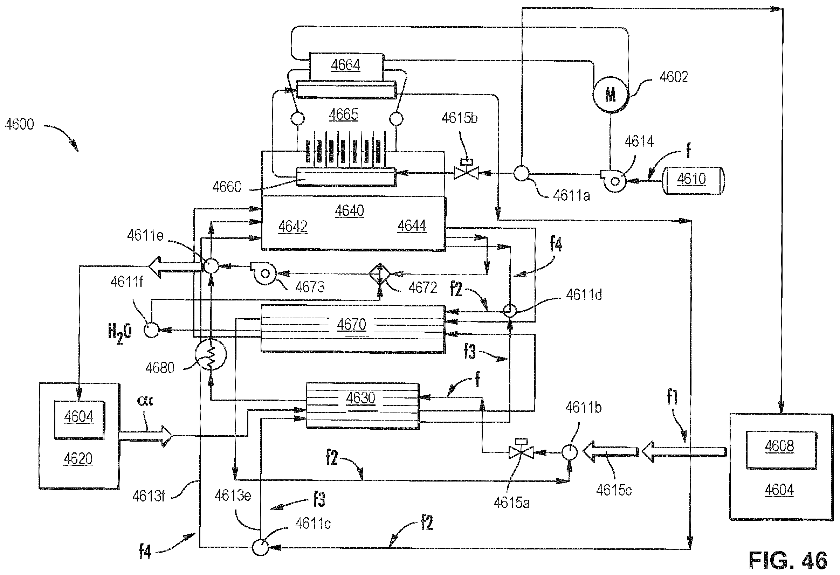

In still other examples, e.g., the example of FIG. 46, a fuel cell power system 4600 includes a liquid hydrogen fuel pump 4614 fluidly coupled to a fuel tank 4610 and operably coupled to a pump motor 4602. The pump motor 4602 is in thermal communication with a power converter 4664, and the power converter 4664 is further in thermal communication with an output power 4665 of a battery heat exchanger 4660. In the fuel cell power system 4600, a first flow f flows from the fuel tank 4610 to the liquid hydrogen fuel pump 4614, and then to a first juncture 4611a, where the flow f separates into a first portion f1 and a second portion f2. The first portion f1 goes to one or more engine heat exchangers 4608 within an engine 4604, and the second portion f2 goes to a second valve 4615b, before flowing to the battery heat exchanger 4660. The second portion f2 then flows to the power converter 4664, which converts the hydrogen fuel to electric power. In some examples, at least a portion of the electric power is provided to the pump motor 4602.

The rest of the fuel cell power system 4600 operates in a similar manner to the fuel cell power systems described in other figures; as such, the same or similar reference numbers may refer to the same or similar parts in earlier figures.

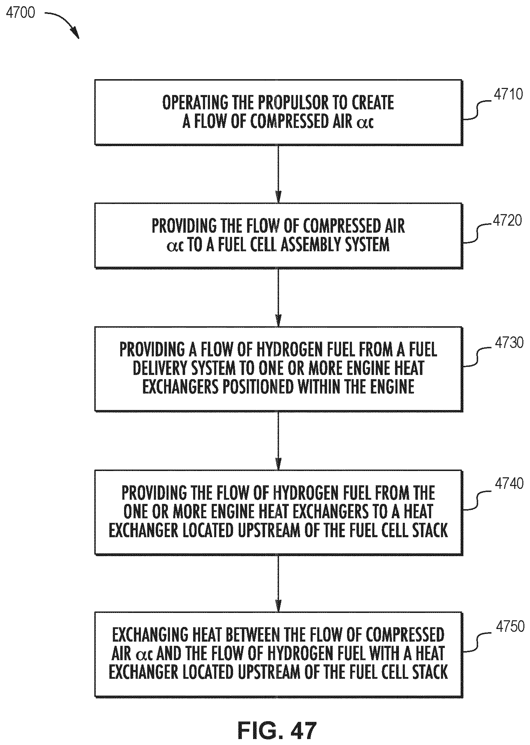

Referring now to FIG. 47, an example method 4700 of operating an aircraft, e.g., the aircraft 3510 of FIG. 35, is illustrated as a flow chart. In some examples, the aircraft 3510 is a hydrogen aircraft. The method 4700 can be used with one or more of the example fuel cell power systems of the present disclosure, such as one or more of the example fuel cell power systems 4200-5000 of FIGS. 42-50, respectively. Similarly, the method 4700 can be used with one or more of the example propulsors described above with reference to FIGS. 40-44 or a combination thereof.

Although the method 4700 is described herein with respect to a hydrogen aircraft and with a fuel cell stack, e.g., a proton exchange membrane fuel cell stack, the method 4700 can additionally and/or alternatively operate with another fuel cell power system for another type of vehicle and/or engine.

At block 4710, the method 4700 includes, operating the propulsor, such as the propulsor 3820 of FIG. 38, to create a flow of compressed air $\alpha c$, e.g., in the low-pressure compressor, the bypass airflow passage, or both. As used herein, "operating" refers to all operational conditions for the propulsor capable of generating a compressed airflow, including flight operations, ground idle operations, startups operations, taxi operations, etc.

At block 4720, the method 4700 includes providing the flow of compressed air $\alpha c$ to the fuel cell power system. As described above, the flow of compressed air $\alpha c$ can be created by a compressor section (e.g., a low-pressure compressor), a bypass airflow passage, or both.

At block 4730, the method 4700 further includes, providing a flow of hydrogen fuel from a fuel delivery system to one or more engine heat exchangers positioned within the engine. The hydrogen fuel is provided from the fuel tank to the engine, where it is heated by the one or more engine heat exchangers of the engine. The hydrogen fuel within the fuel tank is at least partially in a liquid phase, and the fuel cell power system is configured to provide hydrogen fuel from the integrated cryogenic hydrogen tank systems described above substantially completely in the liquid phase. Moreover, for the example method 4700 depicted, it will be appreciated that providing the flow of hydrogen fuel from the integrated tank systems via the fuel delivery system can include metering the flow of hydrogen fuel with a flow metering unit, such as a valve.

Further, as mentioned previously, the flow of hydrogen fuel includes a first flow of hydrogen fuel and a second flow of hydrogen fuel. The method 4700 can additionally include providing the first flow of hydrogen fuel from a first tank in the integrated tank system and providing the second flow of hydrogen fuel from a second tank in the integrated tank system, via the fuel delivery system, directly to a fuel cell stack of the fuel cell power system.

At block 4740, the method 4700 includes providing the flow of hydrogen fuel from the one or more engine heat exchangers to a heat exchanger located upstream of the fuel cell stack. More specifically, as described above in reference to FIG. 38, the flow of hydrogen fuel can be received within the third juncture 3811c, passed through the first valve 3815a and provided into the heat exchanger 3830.

At block 4750, the method 4700 includes exchanging heat between the flow of compressed air and the flow of hydrogen fuel with the heat exchanger located upstream of the fuel cell stack. As the compressed air typically leaves the low-pressure compressor, the bypass airflow passage, or both, extremely hot, the heat exchanger exchanges heat between the hot compressed air and the cold liquid hydrogen fuel. The cooled compressed air is then humidified into humidified compressed air by the humidifier before flowing into the fuel cell stack.

The fuel cell power system operated in accordance with the example method 4700 described above can allow for utilization of a hydrogen fuel as a fuel source for the engine, and more particularly can utilize storage of the hydrogen fuel in a liquid phase, while providing hydrogen fuel in a gaseous phase to the engine for combustion.

In some examples, e.g., as mentioned with respect to the fuel cell power system 3800 in FIG. 38, above, the fuel cell power system can include a recirculation system that includes a separator and a recirculation pump, and the method 4700 can include separating exhaust water $H_2O$ and/or exhaust from the hydrogen fuel. The method 4700 can also include ejecting the exhaust water $H_2O$ and exhaust through the exhaust section of the aircraft.

In some other examples, when the aircraft is in startup and/or pre-operation mode, the method 4700 can include using a startup heater to warm the hydrogen fuel before the hydrogen fuel is flowed to the fuel cell stack. In some examples, the startup heater can further heat at least a portion of the engine and/or the compressed air $\alpha c$. Further, the startup heater can be a forced air heater, where the startup heater provides compressed air to the fuel cell stack. As discussed above, the startup heater is used when the aircraft is not yet operating.

In some other examples, e.g., where the fuel cell system is the fuel cell system 4300 described with reference to FIG. 43, the method 4700 can additionally include providing a third flow of hydrogen fuel from a startup hydrogen tank 4336 to, in serial order, a coolant pump 4320, a startup heater 4380, and a hydrogen/coolant heat exchanger 4306. Providing the third flow of hydrogen fuel can occur prior to providing the flow of hydrogen fuel to the heat exchanger.

Furthermore, in examples where the fuel cell system further includes a power converter and at least one electric machine, e.g., as shown in FIG. 44, the method 4700 can further include flowing at least a portion of the hydrogen fuel from the fuel tank to the power converter, to the at least one electric machine, or both. In some examples, the method 4700 can include cooling the at least one electric machine via thermal communication with the power converter.

In some examples, the fuel cell system includes a pump motor operably coupled to a liquid hydrogen fuel pump and a power converter, as described in FIG. 45. In such examples, the method 4700 can include providing the hydrogen fuel in from the fuel tank to the liquid hydrogen fuel pump, before splitting into at least two flows, one of which feeds to one or more engine heat exchangers and at least one of the others flows to the battery heat exchanger to cool the power converter.

In some other examples, the fuel cell power system includes a power converter and a liquid hydrogen fuel pump fluidly coupled to a fuel tank and operably coupled to a pump motor. This fuel cell power system is shown in FIG. 46. The method 4700 can include providing a flow of hydrogen fuel from the fuel tank to the liquid hydrogen fuel pump. A portion of the flow from the liquid hydrogen fuel pump can then be provided to the battery heat exchanger and power converter. The method 4700 can further include converting the hydrogen fuel to electric power via the power converter, where the electric power operates and/or cools the pump motor.

It should be appreciated that the fuel tanks (e.g., the fuel tanks 3648, 3810, 4210, 4310, 4410, 4510, 4610, etc.) described above may be implemented as one or more of the integrated tank systems 500-900 of FIGS. 5-9. Furthermore, the liquid hydrogen fuel pumps (e.g., the liquid hydrogen fuel pumps 4514, 4614, etc.) may be implemented as the first phase separating LH2 pumping system 2700 and/or the second phase separating LH2 pumping system 2800 of FIGS. 27 and/or 28. As such, the first and/or second LH2 pump system(s) 2700, 2800 can include a GH2 extraction flowline to fluidly couple one or more fuel cell power systems described above (e.g., fuel cell power system 4000, 4100, etc.) to the first, second, and/or third portions 2706, 2708, and/or 2710 and/or the vapor accumulator 2716. Thus, the first phase separating LH2 pumping system 2700 and/or the second phase separating LH2 pumping system 2800 can directly provide hydrogen fuel to fuel cell power systems disclosed herein without the need for a vaporizer or other accessory systems and/or components.

As described above, example fuel cell power systems can be used to power turbine engines on aircraft, such as aircraft 3510 of FIG. 35. The implementation of one or more of the integrated cryogenic hydrogen tank systems 500-900 described with reference to FIGS. 1-12 can improve the performance of the fuel cell power systems onboard the aircraft 3510 or other hydrogen aircraft. For example, larger sizes and/or larger quantities of fuel cell power systems can be used to power the engines since a greater volume of hydrogen fuel is stored onboard the aircraft. When larger fuel cell power systems are used, larger/more powerful engines and/or propulsors can be used to generate more thrust and provide the aircraft with greater velocities. In some examples, multiple LH2 extraction lines 422 of the integrated tank system(s) 500-900 can lead to fuel cell power systems at the engines and to one or more other fuel cell power systems to power auxiliary systems on the aircraft (e.g., engine startup systems, cabin air conditioning and ventilation systems, shaft power for pneumatic and/or hydraulic systems, etc.). In other words, since more hydrogen fuel can be supplied to one or more hydrogen fuel cell power systems described above via the integrated tank system(s) 500-900, more onboard systems can be powered using hydrogen instead of hydrocarbon fuel (e.g., Jet-A).

Example integrated cryogenic hydrogen tank systems described above can experience uncontrolled leakages due to improperly attached bayonet connections, faulty valve components, damaged electronic connections, etc. Since more tanks, flowlines, valves, etc. are utilized in the example integrated tank system(s) 500-900 compared to single-tank hydrogen aircraft, there can be a greater likelihood of hydrogen fuel leakages. Example monitoring systems can be included in the integrated tank system(s) 500-900 to detect such leakages and ensure that the integrated tank system(s) 500-900 operate properly without losing excessive fuel due to one or more leaks.

As mentioned previously, liquid hydrogen can be supplied from the integrated tank system(s) 500-900 to an engine of hydrogen aircraft. In addition to using liquid hydrogen, fuel distribution systems can deliver gaseous hydrogen at required pressure(s) and/or flow rate(s) from the integrated tank system(s) 500-900 to a combustor to meet the transient performance requirements needed to assure that the engine meets both transient and cruise condition requirements. However, the fuel flow rate for an aircraft varies significantly during the flight mission. For example, the highest fuel flow rate is required during takeoff, which is approximately four times the fuel flow rate at cruise altitude.

Methods and apparatus described below incorporate liquid hydrogen (LH2), cryo-compressed hydrogen (CCH2), and/or gaseous hydrogen (GH2) into fuel distribution systems (e.g., a LH2 fuel distribution system, a GH2 fuel distribution system, a CCH2 fuel distribution system, etc.) of a gas turbine engine. Examples described below include a system that continuously monitors the health of the integrated tank system(s) 500-900 and the fuel distribution system(s) of a gas turbine engine associated with an aircraft. In some examples described below, pressure, temperature, and/or liquid level sensors determine the mass flow rate of the hydrogen in and/or out of the from the integrated tank system(s) 500-900 as a function of time and a flowmeter determines the outflow of hydrogen into the combustor of the gas turbine engine. In some examples described below, the system can also determine the outflow of hydrogen vented via a vent valve. Examples described below compare the flow of hydrogen from the from the integrated tank system(s) 500-900 and the outflowing hydrogen to determine a mass loss rate from the fuel distribution system. Examples described below can also be utilized to analyze the health of a fuel distribution system including other hydrogen fuel sources, such as the integrated cryogenic hydrogen tank system(s) 500-900 described above, one or more cryo-compressed hydrogen tank(s), etc.

In some examples described below, the average mass loss rate over a period of time can be compared to a plurality of thresholds. In some examples described below, when the mass loss rate is greater than zero over the period, the health monitoring system can conclude a leak is present in the fuel distribution system. In some such examples described below, the health monitoring system can identify the portion of the system including the leak and isolate the section to prevent additional hydrogen leaking. In some examples described below, when the mass loss rate is negative over the period (e.g., indicating a gain of mass, etc.), the health monitoring system can conclude that the sensors of the system need to be recalibrated. In some examples described below, when the mass loss rate is zero, the health monitoring system can conclude there are no health issues with the engines. In some examples described below, the system can be used to calibrate the flowmeter of the combustor.

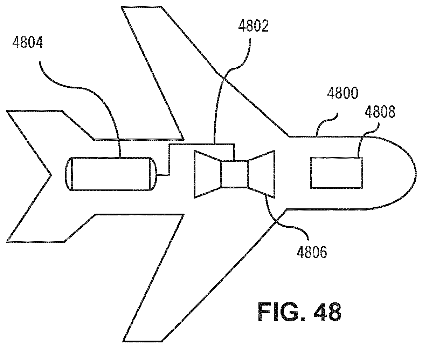

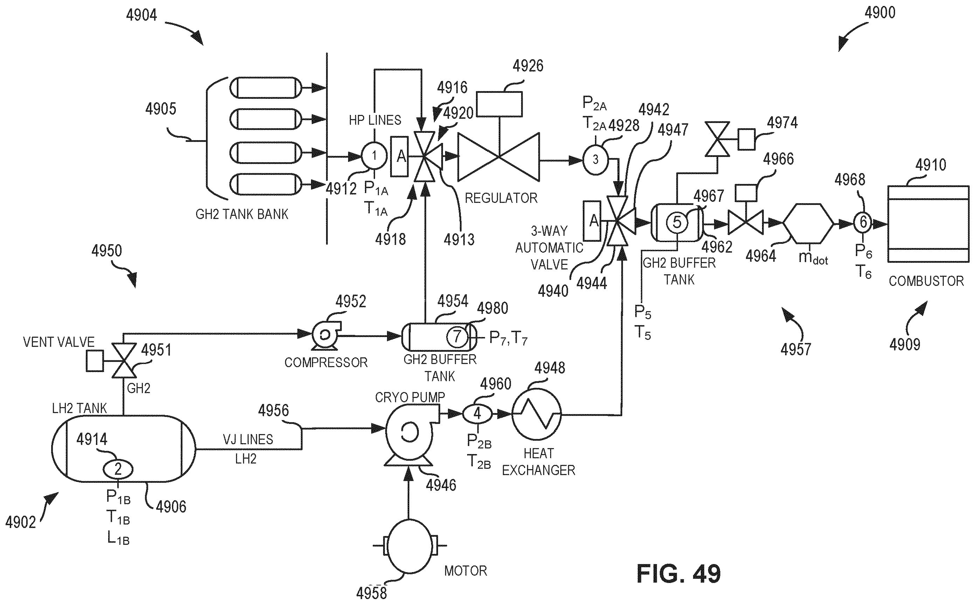

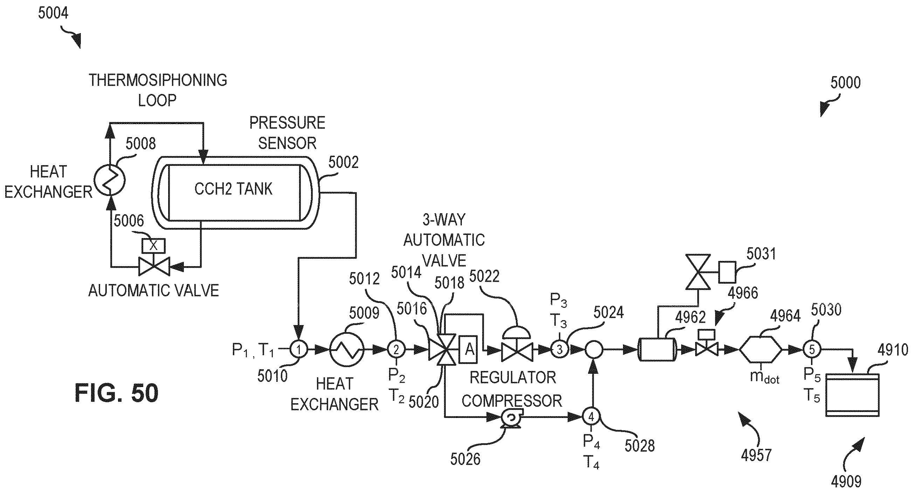

FIG. 48 is an example illustration of an aircraft 4800 including an example fuel distribution system 4802. The fuel distribution system 4802 includes an example tank 4804 of hydrogen (e.g., one or more of the integrated tank system(s) 500-900), which provides fuel to an example gas turbine engine 4806. Example implementations of the fuel distribution system 4802 are described below in conjunction with FIGS. 49 and 50. The example tank 4804 can contain hydrogen in various states, including liquid, gaseous, and cryo-compressed states. The example tank 4804 can be stored in any suitable location on the aircraft (e.g., in the wings, in the fuselage, in an external tank, etc.). In other examples, the tank 4804 can include multiple tanks (herein referred to as a tank bank, etc.), such as the integrated tank system(s) 500-900 described above.

Although the aircraft 4800 shown in FIG. 48 is an airplane, the embodiments described herein may also be applicable to other fixed-wing aircraft, including unmanned aerial vehicles (UAV). The fuel distribution system 4802 can be used to provide hydrogen fuel that will be combusted in an example gas turbine engine 4806 of the aircraft 4800. In the illustrated example of FIG. 48, the aircraft includes a single gas turbine engine (e.g., the gas turbine engine 4806, etc.). In some examples, the aircraft 4800 can include multiple gas turbine engines.

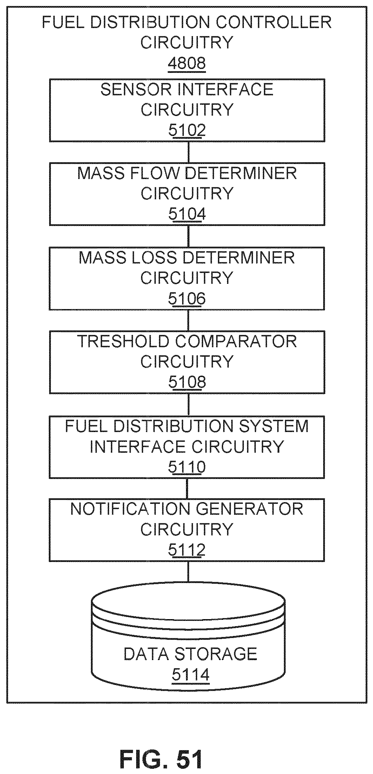

In FIG. 48, the fuel distribution system 4802 is controlled and monitored by example fuel distribution controller circuitry 4808. For example, the fuel distribution controller circuitry 4808 can regulate the flow of hydrogen through the fuel distribution system 4802 via one or more control mechanisms (e.g., valves, etc.) to meet a throttle demand from the aircraft 4800. The fuel distribution controller circuitry 4808 monitors the health of the fuel distribution system 4802. For example, the fuel distribution controller circuitry 4808 can determine an outflow of hydrogen from the tank 4804 and inflow of hydrogen into the gas turbine engine 4806. The fuel distribution controller circuitry 4808 can compare the inflow of hydrogen into the fuel distribution system 4802 to the outflow of hydrogen out of the fuel distribution system 4802 to determine a mass loss rate of the fuel distribution system 4802. In some examples, the fuel distribution controller circuitry 4808 can compare the determined mass loss rate to one or more thresholds to determine the health of the fuel distribution system 4802. In some examples, the fuel distribution controller circuitry 4808 can determine that a leak is present in the fuel distribution system 4802 and/or the sensors of the fuel distribution system need to be recalibrated. An example implementation of the fuel distribution controller circuitry 4808 is described below in conjunction with FIG. 51.

The examples of fuel tanks and/or integrated tank systems described below can also be applicable to other applications where hydrogen is used as a fuel in the aircraft 4800. The embodiments described below also can be applicable to engine(s) other than gas turbine engines. While the gas turbine engine 4806 is an example of a power generator for powering the aircraft 4800 using hydrogen as a fuel, hydrogen may also be used as a fuel for other power generators. For example, a power generator can be a fuel cell (e.g., hydrogen fuel cell power systems described above with reference to FIGS. 35-47, etc.) where the hydrogen is provided to the fuel cell to generate electricity by reacting with air.

FIG. 49 illustrates an example first fuel distribution system 4900 using a liquid hydrogen delivery assembly 4902 and a gaseous hydrogen delivery assembly 4904, which include a GH2 tank bank 4905 and a LH2 tank 4906 (e.g., the integrated tank system(s) 500-900), respectively. In the example of FIG. 49, the GH2 tank bank 4905 and the LH2 tank 4906 fuel an example engine 4909 of an aeronautical vehicle, where the engine can be an aeronautical gas turbine engine (e.g., the gas turbine engine 4806 of FIG. 48, etc.). In other examples, the first fuel distribution system 4900 can be implemented on another land or aeronautical vehicle and the engine can be another type of engine mounted to or within the vehicle in another applicable manner. In the illustrated example of FIG. 49, the first fuel distribution system 4900 delivers fuel to an example combustor 4910. In some examples, the integrated tank system(s) 500-900 can be used in place of or in conjunction with the LH2 tank 4906. As such, example components and/or systems of the LH2 tank 4906 can be included in one or more of the tanks in the integrated tank system(s) 500-900.

The first fuel distribution system 4900 of FIG. 49 includes the GH2 tank bank 4905 to hold a first portion of hydrogen fuel in a gaseous phase, and/or the LH2 tank 4906 to hold a second portion of hydrogen fuel in a liquid phase. In some examples, the GH2 tank bank 4905 can be used to provide gaseous hydrogen during takeoff and climbing, while the LH2 tank 4906 can be switched to during a cruising phase of flight. For example, fuel consumption needs can vary based on a particular phase of the flight (e.g., taxing, takeoff, cruising, etc.). A relatively low hydrogen fuel flow is required during the taxi operation, while the takeoff phase requires the highest consumption of fuel (e.g., about 100% of a maximum hydrogen fuel flow for a given flight path). Meanwhile, the climb phase shows reduced fuel consumption (e.g., between about 50% and about 90% of the maximum hydrogen fuel flow). Cruising is the longest operation during a given flight, with much lower fuel consumption (e.g., between about 25% and about 40% of the maximum hydrogen fuel flow). During approach and landing operations/flight phases, fuel flow is the lowest (e.g., less than about 20%, such as less than about 15% of the maximum hydrogen fuel flow). Using the liquid hydrogen delivery assembly 4902 and an example gaseous hydrogen delivery assembly 4904 shown in FIG. 49 permits varying arrangement(s) of fuel distribution based on a given operation being performed by the aircraft (e.g., taxing, takeoff, cruising, etc.) to match the necessary fuel flows.

The flows from the GH2 tank bank 4905 and the LH2 tank 4906 are tracked by one or more sensor(s), which sense various operability parameters of the first fuel distribution system 4900 of FIG. 49. In the illustrated example of FIG. 49, an example first sensor 4912 is configured to sense flow data (e.g., pressure (P), temperature (T), etc.) relating to the GH2 tank bank 4905 (depicted as $P_1$, $T_1$ in FIG. 49) and an example second sensor 4914 configured to sense flow data (e.g., pressure (P), temperature (T), and liquid level (L), etc.) relating to the LH2 tank 4906 (depicted as $P_2$, $T_2$, $L_2$ in FIG. 49).

The GH2 tank bank 4905 stores a first portion of hydrogen fuel in a gaseous phase and the LH2 tank 4906 stores a second portion of hydrogen fuel in a liquid phase. The GH2 tank bank 4905 can be configured to store the first portion of hydrogen fuel at an increased pressure to reduce a necessary size of the GH2 tank bank 4905 within an aircraft. For example, the GH2 tank bank 4905 can be configured to store the first portion of hydrogen fuel at a pressure from about 100 bar up to about 1,000 bar. The GH2 tank bank 4905 can be configured to store the first portion of the hydrogen fuel at a temperature within about 50°C of an ambient temperature, or between about -50°C and about 100°C. In some examples, the GH2 tank bank 4905 can be configured as a plurality of GH2 tank bank 4905 to reduce an overall size and weight that would otherwise be needed to contain the desired volume of the first portion of hydrogen fuel in the gaseous phase at the desired pressures. Gaseous hydrogen delivery can also include an example three-way boil-off valve 4913 defining an example first input 4916, an example second input 4918, and an example output 4920.

In the example of FIG. 49, the first input 4916 is in fluid communication with the GH2 tank bank 4905 for receiving a flow of the first portion of hydrogen fuel in the gaseous phase from the GH2 tank bank 4905. The second input 4918 is in fluid communication with an example boil-off fuel assembly 4950 for receiving a flow of gaseous hydrogen fuel from an example first GH2 buffer tank 4954 of the boil-off fuel assembly 4950. The three-way boil-off valve 4913 can be configured to combine and/or alternate the flows from the first input 4916 and the second input 4918 to a single flow of gaseous hydrogen through the output 4920. For example, the three-way boil-off valve 4913 can be an active valve, such that an amount of gaseous hydrogen fuel provided from the first input 4916, as compared to the amount of gaseous hydrogen fuel provided from the second input 4918, to the output 4920 can be actively controlled. In the illustrated example of FIG. 49, an example seventh sensor 4980 is configured to sense data (e.g., pressure (P), temperature (T), etc.) relating to the first GH2 buffer tank 4954 (depicted as $P_7$, $T_7$ in FIG. 49).

The example first fuel distribution system 4900 includes a gaseous hydrogen delivery assembly (GHDA) flow regulator 4926. The GHDA flow regulator 4926 can be configured as an actively controlled variable throughput valve configured to provide a variable throughput ranging from 0% (e.g., a completely closed off position) to 100% (e.g., a completely open position), as well as a number of intermediate throughput values therebetween. In FIG. 49, the GHDA flow regulator 4926 includes one or more variable flow valves to provide the variable throughput therethrough. In the illustrated example of FIG. 49, a third sensor 4928 measures flow data (e.g., pressure (P), temperature (T), etc.) downstream of the GHDA flow regulator 4926 (depicted as $P_3$, $T_3$ in FIG. 49).

In the example of FIG. 49, the example first fuel distribution system 4900 includes a three-way regulator valve 4940. The three-way regulator valve 4940 defines an example first input 4942, an example second input 4944, and an example output 4947. The first input 4942 is in fluid communication with the gaseous hydrogen delivery assembly 4904 for receiving a flow of the first portion of hydrogen fuel in the gaseous phase from the GH2 tank bank 4905. The second input 4944 is in fluid communication with the liquid hydrogen delivery assembly 4902 for receiving a flow of the second portion of the hydrogen fuel in the gaseous phase from the LH2 tank 4906. The three-way regulator valve 4940 can be configured to combine and/or alternate the flows from the first input 4942 and the second input 4944 to a single flow of gaseous hydrogen through the output 4947. In the illustrated example of FIG. 49, the three-way regulator valve 4940 is an active three-way regulator valve, including an actuator, such that an amount of hydrogen fuel provided from the first input 4942, as compared to the amount of hydrogen fuel provided from the second input 4944, to the output 4947 can be actively controlled.

In the example of FIG. 49, the second input 4944 of the three-way regulator valve 4940 receives hydrogen fuel originating from a liquid hydrogen delivery assembly 4902 which includes the LH2 tank 4906, an example pump 4946, and an example heat exchanger 4948 downstream of the pump 4946. In some examples, the LH2 tank 4906 can define a fixed volume, such that as the LH2 tank 4906 provides hydrogen fuel to the first fuel distribution system 4900 substantially completely in the liquid phase, a volume of the liquid hydrogen fuel in the LH2 tank 4906 decreases, and the volume is made up by, e.g., gaseous hydrogen fuel. During the normal course of storing a portion of hydrogen fuel in the liquid phase, an amount of the hydrogen fuel can vaporize due to boil-off.

To prevent an internal pressure within the LH2 tank 4906 from exceeding a pressure threshold, the first fuel distribution system 4900 of FIG. 49 allows for a purging of gaseous hydrogen fuel from the LH2 tank 4906. For example, the first fuel distribution system 4900 includes a boil-off fuel assembly 4950 configured to receive gaseous hydrogen fuel from the LH2 tank 4906. The boil-off fuel assembly 4950 generally includes an example vent valve 4951, an example boil-off compressor 4952, and an example first GH2 buffer tank 4954. The first GH2 buffer tank 4954 is in fluid communication with the LH2 tank 4906 and is further in fluid communication with the gaseous hydrogen delivery assembly 4904. During operation, gaseous fuel from the LH2 tank 4906 can be vented from the LH2 tank 4906 by the vent valve 4951, compressed by the boil-off compressor 4952, and provided to the first GH2 buffer tank 4954. The first GH2 buffer tank 4954 stores the gaseous hydrogen fuel at a lower pressure than the pressure of the hydrogen fuel within the GH2 tank bank 4905. For example, the first GH2 buffer tank 4954 can be configured to maintain gaseous hydrogen fuel therein at a pressure of between about 100 bar and about 400 bar. The pressurization of the gaseous hydrogen fuel in the first GH2 buffer tank 4954 can be provided substantially completely by the boil-off compressor 4952. Maintaining the gaseous hydrogen fuel in the first GH2 buffer tank 4954 at the lower pressure can allow for the boil-off compressor 4952 to be relatively small.

The LH2 tank 4906 can be connected to an example vacuum jacketed (VJ) flowline(s) 4956, which is in connection with the pump 4946. In some examples, the VJ flowline(s) 4956 can include a flow control valve. The pump 4946 is configured to provide a flow of hydrogen fuel in the liquid phase from the LH2 tank 4906 through the liquid hydrogen delivery assembly 4902. Operation of the pump 4946 can be modulated (e.g., increased, decreased, etc.) to effectuate a change in a volume of the hydrogen fuel through the liquid hydrogen delivery assembly 4902 and to an example regulator assembly 4957 and the engine 4909. The pump 4946 can be any suitable pump configured to provide a flow of liquid hydrogen fuel. In some examples, the pump 4946 is a cryogenic pump. In some examples, the pump 4946 is the primary pump for the liquid hydrogen delivery assembly 4902 (e.g., provides a majority of a motive force available for providing a flow of liquid hydrogen through the liquid hydrogen delivery assembly 4902, etc.). In some examples, at least about 75% of the motive force available for providing a flow of liquid hydrogen through the liquid hydrogen delivery assembly 4902 can be provided by the pump 4946. The pump 4946 can generally define a maximum pump capacity and a minimum pump capacity (each in kilograms per second). A ratio of the maximum pump capacity to the minimum pump capacity can be referred to as a turndown ratio of the pump 4946. In some examples, the pump 4946 can define a turndown ratio of at least 1:1 and up to about 6:1. In the example of FIG. 49, an example motor 4958 can be used to power the pump 4946.

The heat exchanger 4948 is located downstream of the pump 4946 and a flow control valve (not illustrated) and is configured to convert a portion of the hydrogen fuel through the liquid hydrogen delivery assembly 4902 from the liquid phase to a gaseous phase. In the illustrated example of FIG. 49, an example fourth sensor 4960 is configured to sense flow data (e.g., pressure (P), temperature (T), etc.) downstream of the pump 4946 and upstream of the heat exchanger 4948 (depicted as $P_4$, $T_4$ in FIG. 49). In some examples, the heat exchanger 4948 can be in thermal communication with the engine 4909, and more specifically, with an accessory system of the engine 4909 to provide heat to increase a temperature of the hydrogen fuel through the liquid hydrogen delivery assembly 4902 to increase the temperature of the GH2 to a desired level.

In the example of FIG. 49, the regulator assembly 4957 further includes an example first buffer tank 4962, an example flowmeter 4964, and an example regulator 4966. The second GH2 buffer tank 4962 is configured to vary a mass flow rate of the hydrogen fuel from a fluid inlet to a fluid outlet during at least certain operations. In some examples, the second GH2 buffer tank 4962 can be configured to purge gaseous hydrogen fuel through a vent valve 4974 when an internal pressure of the second GH2 buffer tank 4962 (e.g., a pressure within an internal cavity) exceeds an upper threshold. For example, the second GH2 buffer tank 4962 can accept hydrogen fuel (e.g., at a fluid inlet) at a greater flow rate than provided by the second GH2 buffer tank 4962 (e.g., at a fluid outlet) even when an internal pressure of the second GH2 buffer tank 4962 is at or exceeds an upper bound or upper threshold for the second GH2 buffer tank 4962 (e.g., more rapidly reduce a mass flowrate of hydrogen fuel to the combustor 4910 of the engine 4909, etc.). By virtue of its position within the regulator assembly 4957, the second GH2 buffer tank 4962 is in fluid communication with the liquid hydrogen delivery assembly 4902 and/or the gaseous hydrogen delivery assembly 4904. As such, the second GH2 buffer tank 4962 can be configured to receive hydrogen fuel from the liquid hydrogen delivery assembly 4902 and/or the gaseous hydrogen delivery assembly 4904. An example fifth sensor 4967 measures properties of the hydrogen in the second GH2 buffer tank 4962 (depicted as $P_5$, $T_5$ in FIG. 49).

The flowmeter 4964 of the regulator assembly 4957 can sense data indicative of a mass flow rate of hydrogen fuel through the regulator assembly 4957. For example, the flowmeter 4964 can sense data indicative of one or more of a temperature of the gaseous hydrogen fuel flowing therethrough and a pressure of the gaseous hydrogen fuel flowing therethrough. In some examples, data from the flowmeter 4964 can be utilized to control the regulator 4966 to ensure a desired amount of fuel is provided to the combustor 4910 of the engine 4909. The regulator 4966 can be configured as an actively controlled variable throughput valve configured to provide a variable throughput ranging from 0% (e.g., a completely closed off position) to 100% (e.g., a completely open position), as well as a number of intermediate throughput values therebetween. In some examples, the regulator 4966 is in connection with the combustor 4910 of the engine 4909 via a flow control valve (not illustrated). In the illustrated example of FIG. 49, an example sixth sensor 4968 measures flow data (e.g., pressure (P), temperature (T), etc.) into the combustor 4910 (depicted as $P_6$, $T_6$ in FIG. 49).

FIG. 50 illustrates an example second fuel distribution system 5000 using an example cryogenic compressed hydrogen (CCH2) tank 5002 with an example thermo-syphoning loop 5004 to deliver hydrogen to the example engine 4909 of FIG. 49. In the illustrated example of FIG. 50, the example second fuel distribution system 5000 includes the regulator assembly 4957 of FIG. 49, which includes the example first buffer tank 4962 of FIG. 49, the example flowmeter 4964 of FIG. 49, and the example regulator 4966 of FIG. 49. In the example of FIG. 50, the CCH2 tank 5002 fuels an example engine 4909 of an aeronautical vehicle, where the engine can be an aeronautical gas turbine engine (e.g., the gas turbine engine 4806 of FIG. 48, etc.). In other examples, the second fuel distribution system 5000 can be another land or aeronautical vehicle and the engine can be another type of engine mounted to or within the vehicle another manner. In the illustrated example of FIG. 50, the second fuel distribution system 5000 delivers fuel to an example combustor 4910.

The CCH2 tank 5002 stores hydrogen at cryogenic temperatures (between 40 and 100 K) and relatively high pressures. The CCH2 tank 5002 includes an insulated outer shell that permits hydrogen to be held cryogenic temperatures, which increases the volume of hydrogen that can be stored in the tank 5002. Additionally, the CCH2 tank 5002 holds hydrogen at a comparatively higher pressure than the LH2 tank 4906 of FIG. 49, increasing the comparatively thickness of the walls of the tank 5002. In some examples, the hydrogen in the tank 5002 is stored as GH2. In other examples, the hydrogen can be any suitable mixture of GH2 and LH2. In some examples, the integrated tank system(s) 500-900 can be used in place of or in conjunction with the tank 5002. As such, example components and/or systems of the tank 5002 can be included in one or more of the tanks in the integrated tank system(s) 500-900.

In the example of FIG. 50, the thermo-syphoning loop 5004 includes an example automatic valve 5006 and a first example heat exchanger 5008. In the illustrated example of FIG. 5004, the automatic valve 5006 releases (e.g., bleeds, etc.) portions of the hydrogen of the tank 5002 for warming via the heat exchanger 5008. In the illustrated example of FIG. 50, the function of the heat exchanger 5008 ensures that the hydrogen of the tank 5002 remains at an appropriate temperature and pressure. Additionally or alternatively, the properties of the tank 5002 can be regulated by a heater and/or by regulating the insulation of the tank 5002. In some such examples, the thermo-syphoning loop 5004 can be absent.

In the illustrated example of FIG. 50, the hydrogen flows from the CCH2 tank 5002 to an example heat exchanger 5009, which regulates the temperature of the flow leaving the CCH2 tank 5002. In the illustrated example of FIG. 50, an example first sensor 5010 measures flow data (e.g., pressure (P), temperature (T), etc.) leaving the CCH2 tank 5002 (depicted as $P_1$, $T_1$ in FIG. 50) and an example second sensor 5012 measures flow data (e.g., pressure (P), temperature (T), etc.) leaving the heat exchanger 5009 (depicted as $P_2$, $T_2$ in FIG. 50).

In the example of FIG. 50, the example second fuel distribution system 5000 includes an example three-way automatic valve 5014. The three-way automatic valve 5014 defines an example input 5016, an example first output 5018, and an example second output 5020. The input 5016 is in fluid communication with the heat exchanger 5009 for receiving a flow of hydrogen fuel in the gaseous phase from the CCH2 tank 5002. The first output 5018 flow to an example regulator 5022, whose output is measured by an example third sensor 5024. The third sensor 5024 measures flow data (e.g., pressure (P), temperature (T), etc.) from the regulator 5022 (depicted as $P_3$, $T_3$ in FIG. 50). The second output 5020 is fluidly coupled to an example compressor 5026, whose output is measured by an example fourth sensor 5028. The fourth sensor 5028 measures flow data (e.g., pressure (P), temperature (T), etc.) from the compressor 5026 (depicted as $P_4$, $T_4$ in FIG. 50). The second output 5020 is in fluid communication with a compressor 5026.

The three-way automatic valve 5014 can be an active valve, such that an amount of gaseous hydrogen fuel provided to the first output 5018, as compared to the amount of gaseous hydrogen fuel provided from the second output 5020, from the input 5016, can be actively controlled. In some examples, the three-way automatic valve 5014 can be a passive valve. In the example of FIG. 50, output from the three-way automatic valve 5014 travels to the regulator assembly 4957 (e.g., which includes the second GH2 buffer tank 4962, the flowmeter 4964, and the regulator 4966, etc.) prior to reaching the combustor 4910. Like the sixth sensor 4968 of FIG. 49, an example fifth sensor 5030 measures flow data (e.g., pressure (P), temperature (T), etc.) into the combustor 4910 (depicted as $P_3$, $T_3$ in FIG. 50).

FIG. 51 is a block diagram of the example fuel distribution controller circuitry 4808 of FIG. 48 that can be incorporated into a fuel system developed in accordance with teachings described above. In the example of FIG. 51, the fuel distribution controller circuitry 4808 includes sensor interface circuitry 5102, mass flow determiner circuitry 5104, mass loss determiner circuitry 5106, threshold comparator circuitry 5108, fuel distribution system interface circuitry 5110, notification generator circuitry 5112, and data storage 5114. The example fuel distribution controller circuitry 4808 can be used in conjunction with the first fuel distribution system 4900 of FIG. 49 and/or the second fuel distribution system 5000 of FIG. 50.

The sensor interface circuitry 5102 receives sensor data from the sensors of the fuel distribution system. For example, the sensor interface circuitry 5102 can receive sensor data from the sensors 4912, 4914, 4928, 4960, 4967, 4968, 4980 of the first fuel distribution system 4900 of FIG. 49. For example, the sensor interface circuitry 5102 can receive sensor data from the sensors 5010, 5012, 5028, 5030 of the second fuel distribution system 5000 of FIG. 50. In some examples, the sensor interface circuitry 5102 can transform the received sensor data from a machine-readable format (e.g., a voltage, a current, etc.) to a human-readable format (e.g., a string, a floating-point number, an integer, etc.).

The mass flow determiner circuitry 5104 determines the mass flow of hydrogen through the fuel distribution system via the accessed sensor data. For example, the mass flow determiner circuitry 5104 can determine the mass flow from the GH2 tank bank 4905 using data from the first sensor 4912 to determine the density of the H2 in tank as a function of temperature and pressure:

$$\rho_1(t) = f(P_1(t), T_1(t)) \qquad (1)$$

$$m_1(t) = \rho_1(t)V_{TANKBANK} \qquad (2)$$

wherein $\rho_1$ is the density of the gaseous hydrogen of the GH2 tank bank 4905, t is time, $P_1$ is the pressure for the hydrogen as measured by the first sensor 4912, $T_1$ is the temperature of the hydrogen of the GH2 tank bank 4905 as measured by the first sensor 4912, $m_1(t)$ is the mass of the GH2 tank bank 4905 as a function of time (e.g., the mass flow from the GH2 tank bank 4905 into the first fuel distribution system 4900, etc.), and $V_{TANKBANK}$ is the total volume of the GH2 tank bank 4905. Accordingly, using temperature and pressure sensor data from the first sensor 4912 and the equations (1) and (2), the mass flow determiner circuitry 5104 can determine the mass flow from the GH2 tank bank 4905. In some examples, the density of the tank bank can be the average density of the hydrogen across the different tanks of the GH2 tank bank 4905. In such examples, the density can be determined using sensors associated with the total outflow of the GH2 tank bank 4905. Additionally or alternatively, the density and mass flow from the GH2 tank bank 4905 can be determined on a per tank basis, using flow sensors associated with each tank.

The mass flow determiner circuitry 5104 can determine the mass flow from the LH2 tank 4906 of FIG. 49 using sensor data from the second sensor 4914. For example, the mass flow determiner circuitry 5104 can determine the mass flow from the LH2 tank 4906 using data from the second sensor 4914 to determine the density of the H2 in tank as a function of temperature and liquid level in the LH2 tank 4906:

$$\rho_{2L}(t) = \text{f}(\,T_2(t)) \qquad (3)$$

$$\rho_{2V}(t) = \text{f}(\,T_2(t)) \qquad (4)$$

$$m_2(t) = \rho_{2L}(t)V_{LH2TANK}L_2(t) + \rho_{2V}(t)V_{LH2TANK}(1 - L_2(t)) \qquad (5)$$

wherein $\rho_{2L}$ is the density of the liquid hydrogen of the LH2 tank 4906, $\rho_{2V}$ is the density of the vaporous hydrogen of the LH2 tank 4906, $T_2$ is the temperature of the hydrogen of the LH2 tank 4906 as measured by the second sensor 4914, $m_2(t)$ is the mass of the LH2 tank 4906 as a function of time (e.g., the mass flow from the LH2 tank 4906 into the first fuel distribution system 4900, etc.), $V_{LH2TANK}$ is the volume of the LH2 tank 4906, and $L_2(t)$ is the liquid level of the LH2 tank 4906. Accordingly, using temperature and liquid level sensor data from the second sensor 4914 and the equations (3), (4) and (5), the mass flow determiner circuitry 5104 can determine the mass flow from the LH2 tank 4906. In some examples, the $T_2$ can be assumed to be the saturation temperature of hydrogen.

The mass flow determiner circuitry 5104 can determine the mass flow from the CCH2 tank 5002 of FIG. 50 using sensor data from the first sensor 5010. For example, the mass flow determiner circuitry 5104 can determine the mass flow from the CCH2 tank 5002 using data from the second sensor 4914 to determine the density of the H2 in tank as a function of temperature, pressure, and volume of the CCH2 tank 5002:

$$\rho_1(t) = \text{f}(P_1(t), T_1(t)) \qquad (6)$$

$$m_1(t) = \rho_1(t)V \qquad (7)$$

$$\dot{m}(t_{12}) = \frac{m_1(t_1) - m_1(t_2)}{t_2 - t_1} \qquad (8)$$

wherein $\rho_1(t)$ is the density of the hydrogen in the CCH2 tank 5002 as a function of time, $P_1(t)$ is the pressure of the hydrogen in the CCH2 tank 5002 as a function of time as provided by the first sensor 5010, $T_1(t)$ is the temperature of the hydrogen in the CCH2 tank 5002 as a function of time as provided by the first sensor 5010, $m_1(t)$ is the mass of the hydrogen in the CCH2 tank 5002 as a function of time, V is the volume of the CCH2 tank 5002, $t_1$ is a first time, $t_2$ is a second time, $m_1(t_1)$ is the mass of hydrogen in the CCH2 tank 5002 at the first time, $m_2(t_2)$ is the mass of hydrogen in the CCH2 tank 5002 at the second time, and $\dot{m}(t_{12})$ is the average mass flow rate of hydrogen out of the CCH2 tank 5002 between the first time and the second time. In other examples, the mass flow determiner circuitry 5104 can determine the mass flow rate out of the CCH2 as a function of time by any other suitable means (e.g., a flowmeter, etc.).

In some examples, the mass loss determiner circuitry 5106 can determine the flow of hydrogen into the combustor 4910 (e.g., in the first fuel distribution system 4900 of FIG. 49, in the second fuel distribution system 5000 of FIG. 50, etc.) based on sensor data received from the flowmeter 4964. In some examples, the mass flow determiner circuitry 5104 can determine if a vent valve of the fuel distribution system is open (e.g., the vent valve 4974 associated with the first fuel distribution system 4900 of FIG. 49, a vent valve 5031 associated with the second fuel distribution system 5000 of FIG. 50, etc.), which permits the venting of vaporous H2 from the fuel distribution system (e.g., based on sensor data from the sensor interface circuitry 5102, based on a user input, etc.). The mass flow determiner circuitry 5104 can determine the mass vented from the second GH2 buffer tank 4962 using the properties of the vent valve 4974, the pressure of the second GH2 buffer tank 4962, and the duration of the valve remains open. The mass flow determiner circuitry 5104 can determine the mass of vented hydrogen using pressure data of the second GH2 buffer tank 4962 from data obtained from the fifth sensor 4967:

$$m_{vent}(t_2) = m_{vent}(t_1)$$

$$+ \int_{t_1}^{t_2} \dot{m}\, dt \tag{9},$$

$$= \int_{t_1}^{t_2} k_D A \sqrt{\rho_3 (P_3 - P_{amb})k\left(\frac{2}{k+1}\right)^{\frac{k+1}{k}}}\, dt$$

wherein $t_1$ is a first time when a vent valve 4974 is opened, $t_2$ is a second time when a vent valve 4974 is closed, $m_{vent}$ is mass of hydrogen vented through the vent valve 4974, m is exhaust rate of hydrogen as a function of time, $k_D$ is a discharge coefficient of the nozzle associated with the vent valve 4974 (e.g., ~0.595, etc.), A is the area of the orifice of the vent valve 4974, $\rho_3$ is the density of hydrogen in the second GH2 buffer tank 4962 (e.g., can be determined based on the pressure and temperature of the hydrogen in the second GH2 buffer tank 4962, etc.), $P_3$ is the pressure in the second GH2 buffer tank 4962, $P_{amb}$ is the ambient pressure, and $k$ is 1.41, the specific heat capacity ratio of H2. In some examples, the mass flow exhausted via the vent valve 5031 of FIG. 50 can also be determined via Equation (9). In other examples, the mass flow exhausted via the vent valve 5031 of FIG. 50 can be determined by any suitable means.

The mass loss determiner circuitry 5106 determines the mass loss from the fuel distribution systems 4900, 5000. For example, the mass loss determiner circuitry 5106 can compare the mass inflows (e.g., from the LH2 tank 4906, from the GH2 tank bank 4905, etc.) and mass outflows (e.g., into the combustor 4910, vented from the second GH2 buffer tank 4962, etc.). For example, the mass loss determiner circuitry 5106 can determine the mass balance of the first fuel distribution system 4900 of FIG. 49 based on comparing the hydrogen flow from the LH2 tank 4906 and the GH2 tank bank 4905 and the hydrogen exhausted via the vent valve 4974 and into the combustor 4910:

$$\int_{t_1}^{t_2} \dot{m}_{flow}\, dt = m_2(t_1) - m_2(t_2) + m_1(t_1) - m_1(t_2) + m_5(t_1) - m_5(t_2) +$$
$$m_7(t_1) - m_7(t_2) - m_{vent}(t_2) + m_{vent}(t_1) \tag{10}$$

$$ML(t_2) = m_2(t_1) - m_2(t_2) + m_1(t_1) - m_1(t_2) + m_5(t_1) - m_5(t_2) +$$
$$m_7(t_1) - m_7(t_2) - m_{vent}(t_2) + m_{vent}(t_1) - \int_{t_1}^{t_2} \dot{m}_{flow}\, dt \tag{11},$$

wherein $\dot{m}_{flow}$ is the mass flow rate out of the first fuel distribution system 4900 (as measured by the flowmeter 4964 and/or sixth sensor 4968), $m_1(t_1)$ is the mass of hydrogen associated with the GH2 tank bank 4905 at the first time, $m_1(t_2)$ is the mass of hydrogen associated with the GH2 tank bank 4905 at the second time, $m_2(t_1)$ is the mass of hydrogen associated with the LH2 tank 4906 at the first time, $m_2(t_2)$ is the mass of hydrogen associated with the LH2 tank 4906 at the second time, $m_5(t_1)$ is the mass of hydrogen associated with the first GH2 buffer tank 4954 at the first time, $m_5(t_2)$ is the mass of hydrogen associated with the first GH2 buffer tank 4954 at the second time, $m_7(t_1)$ is the mass of hydrogen associated with the second GH2 buffer tank 4962 at the first time, $m_7(t_2)$ is the mass of hydrogen associated with the second GH2 buffer tank 4962 at the second time, $m_{vent}(t_2)$ is the mass of hydrogen vented through the vent valve 4974 at the second time, $m_{vent}(t_1)$ is mass of hydrogen vented through the vent valve 4974 at the first time, and $ML(t_2)$ is the cumulative mass loss between the first time and the second time.

The mass loss determiner circuitry 5106 can determine the mass balance of the second fuel distribution system 5000 of FIG. 50 based on comparing the hydrogen flow from the CCH2 tank 5002 and the hydrogen exhausted via the vent valve 4974 and into the combustor 4910:

$$\int_{t_1}^{t_2} \dot{m}_{flow}\, dt = m_1(t_1) - m_1(t_2) + m_4(t_1) - m_4(t_2) -$$
$$m_{vent}(t_2) + m_{vent}(t_1) \tag{12}$$

$$ML(t_2) = m_1(t_1) - m_1(t_2) + m_4(t_1) - m_4(t_2) - m_{vent}(t_2) + m_{vent}(t_1) -$$
$$\int_{t_1}^{t_2} \dot{m}_{flow}\, dt \tag{13}$$

wherein $\dot{m}_{flow}$ is the mass flow rate out of the second fuel distribution system 5000 (as measured by the flowmeter 4964 and/or the fifth sensor 5030), $m_1(t_1)$ is the mass of the hydrogen in the CCH2 tank 5002 at the first time, $m_1(t_2)$ is the mass of the hydrogen in the CCH2 tank 5002 at the second time, $m_4(t_1)$ is the mass of hydrogen associated with the fifth sensor 5030 at the first time, $m_{vent}(t_2)$ is the mass of hydrogen vented through the vent valve 4974 at the second time, $m_{vent}(t_1)$ is mass of hydrogen vented through the vent valve 4974 at the first time, $ML(t_2)$ is the cumulative mass loss of the second fuel distribution system 5000 between the first time and the second time, and $m_4(t_2)$ is the mass of hydrogen associated with the fifth sensor 5030 at the second time. As such, the mass loss determiner circuitry 5106 can determine the mass loss rate associated with the first fuel distribution system 4900 of FIG. 49 and/or the second fuel distribution system 5000 of FIG. 50.

The threshold comparator circuitry 5108 compares the determined mass loss rate to one or more thresholds. For example, the threshold comparator circuitry 5108 can determine if the determined mass loss rate satisfies (e.g., exceeds, etc.) a first threshold (e.g., a warning threshold, etc.). Additionally or alternatively, the threshold comparator circuitry 5108 can determine if the determined mass loss rate satisfies (e.g., is less than, etc.) a second threshold (e.g., a recalibration threshold, etc.). In some examples, the first threshold and the second threshold can be the same (e.g., zero, etc.). In such examples, when the mass loss rate is greater than the single threshold, the threshold comparator circuitry 5108 can trigger actions (e.g., issuing a warning, isolating the leak, etc.) associated with satisfying the first threshold and when the mass loss rate is less than the single threshold, the threshold comparator circuitry 5108 can trigger actions associated with satisfying the second threshold (e.g., generating a notification to recalibrate the sensors, etc.).

The fuel distribution system interface circuitry 5110 interfaces with the first fuel distribution system 4900 and/or the second fuel distribution system 5000. For example, if the threshold comparator circuitry 5108 determines the mass loss rate satisfies the first threshold, the fuel distribution system interface circuitry 5110 can, via the sensor data, determine where in the fuel distribution system (e.g., the first fuel distribution system 4900 and/or the second fuel distribution system 5000, etc.). In some examples, the fuel distribution system interface circuitry 5110 can present to a user of the fuel distribution system (e.g., an operator of the aircraft 4800, etc.) an indication of where the detected leak is. Additionally or alternatively, the fuel distribution system interface circuitry 5110 can isolate the detected leak by closing a valve, closing a regulator, routing hydrogen through an alternative part of the fuel distribution system, etc.

The notification generator circuitry 5112 generates an example notification for a user (e.g., a pilot, a technician, an operator, etc.) of the fuel distribution system (e.g., the first fuel distribution system 4900, the second fuel distribution system 5000, etc.). For example, the notification generator circuitry 5112 can generate an audio notification (e.g., an alarm, an audio alert, a verbal alert, etc.), a visual notification (e.g., a dash indicator, a graphic, a text warning, etc.), a tactical notification, and/or any other suitable type of notification. For example, if the threshold comparator circuitry 5108 determines that the mass loss rate satisfies the first threshold, the notification generator circuitry 5112 can alert a user of the fuel distribution system that a leak is occurring. For example, when the threshold comparator circuitry 5108 determines that the mass loss rate satisfies the second threshold, the notification generator circuitry 5112 alerts a user of the sensors of the fuel distribution system may need to be recalibrated.

The data storage 5114 can be used to store any information associated the sensor interface circuitry 5102, the mass flow determiner circuitry 5104, the mass loss determiner circuitry 5106, the threshold comparator circuitry 5108, the fuel distribution system interface circuitry 5110, and/or the notification generator circuitry 5112. The example data storage 5114 of the illustrated example of FIG. 51 can be implemented by any memory, storage device and/or storage disc for storing data such as flash memory, magnetic media, optical media, etc. Furthermore, the data stored in the example data storage 5114 can be in any data format such as binary data, comma delimited data, tab delimited data, structured query language (SQL) structures, image data, etc.

While an example manner of implementing the fuel distribution controller circuitry 4808 of FIG. 48 is illustrated in FIG. 51, one or more of the elements, processes, and/or devices illustrated in FIG. 51 may be combined, divided, re-arranged, omitted, eliminated, and/or implemented in any other way. Further, the example sensor interface circuitry 5102, the example mass flow determiner circuitry 5104, the example mass loss determiner circuitry 5106, the example threshold comparator circuitry 5108, the example fuel distribution system interface circuitry 5110, the example notification generator circuitry 5112, and/or, more generally, the example the fuel distribution controller circuitry 4808 of FIG. 48, may be implemented by hardware alone or by hardware in combination with software and/or firmware. Thus, for example, any of the example sensor interface circuitry 5102, the example mass flow determiner circuitry 5104, the example mass loss determiner circuitry 5106, the example threshold comparator circuitry 5108, the example fuel distribution system interface circuitry 5110, the example notification generator circuitry 5112, and/or, more generally, the example fuel distribution controller circuitry 4808, could be implemented by processor circuitry, analog circuit(s), digital circuit(s), logic circuit(s), programmable processor(s), programmable microcontroller(s), graphics processing unit(s) (GPU(s)), digital signal processor(s) (DSP(s)), application specific integrated circuit(s) (ASIC(s)), programmable logic device(s) (PLD(s)), and/or field programmable logic device(s) (FPLD(s)) such as Field Programmable Gate Arrays (FPGAs). Further still, the example fuel distribution controller circuitry 4808 of FIG. 48 may include one or more elements, processes, and/or devices in addition to, or instead of, those illustrated in FIG. 51, and/or may include more than one of any or all of the illustrated elements, processes, and devices.

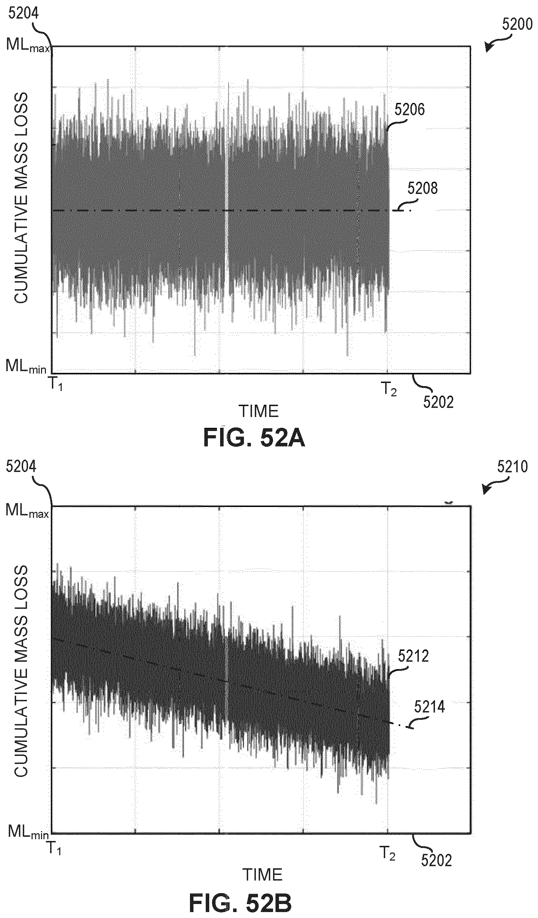

FIG. 52A illustrates an example first diagram 5200 depicting the average mass loss of a fuel distribution system (e.g., the first fuel distribution system 4900 of FIG. 49, the second fuel distribution system 5000 of FIG. 50, etc.). In the illustrated example of FIG. 52A, the first diagram 5200 includes an x-axis 5202 corresponding to time and a y-axis 5204 corresponding to an amount of cumulative fuel loss in the fuel distribution system. The first diagram 5200 illustrates an example first relationship curve 5206 having an example first trend line 5208.

The x-axis 5202 measures the independent variable time, which begins at $T_1$, and ends at $T_2$. In some examples, an elapsed time between $T_1$ and $T_2$ is a period over which an average mass loss and/or cumulative mass loss is determined. The x-axis can be measured in any suitable unit (e.g., seconds, minutes, etc.). The y-axis 5204 measures the cumulative mass loss, which ranges from $ML_{min}$ and $ML_{max}$ which are selected to ensure the first relationship curve 5206 is visible in the first diagram 5200.

The first relationship curve 5206 represents an instantaneous mass loss at a particular time determined via a mass balancing analysis conducted by the mass loss determiner circuitry 5106 of FIG. 51. In the illustrated example of FIG. 52A, the instantaneous values of the first relationship curve 5206 vary over the period between $T_1$ and $T_2$ due to noise in the sensor data (e.g., from the sensors 4912, 4914, 4928, 4960, 4967, 4968, etc.) caused by sensor errors and/or inaccuracy. As such, the average mass and/or the cumulative mass loss can be determined over the period, which is represented by the first trend line 5208. In the illustrated example of FIG. 52A, the first trend line 5208 is zero. As such, the fuel distribution controller circuitry 4808 (e.g., by comparing the determined loss to the first threshold and the second threshold, etc.) can determine that the fuel distribution system (e.g., the first fuel distribution system 4900, the second fuel distribution system 5000, etc.) does not include a leak and/or require sensor recalibration.

FIG. 52B illustrates an example second diagram 5210 depicting an average mass loss of a fuel distribution system (e.g., the first fuel distribution system 4900 of FIG. 49, the second fuel distribution system 5000 of FIG. 50, etc.). In the illustrated example of FIG. 52B, the second diagram 5210 includes the x-axis 5202, the time, and the y-axis 5204, corresponding to an amount of cumulative fuel loss in the fuel distribution system. The example second diagram 5210 illustrates an example second relationship curve 5212 having an example second trend line 5214.

The second relationship curve 5212 represents the instantaneous mass loss at a particular period of time determined via a mass balancing analysis conducted by the mass loss determiner circuitry 5106 of FIG. 51. Like the first relationship curve 5206, the instantaneous value of the second relationship curve 5212 varies due to the received sensor data (e.g., from the sensors 4912, 4914, 4928, 4960, 4967, 4968, etc.) caused by sensor errors and/or inaccuracies. As such, the average mass and/or the cumulative mass loss can be determined over a time period, which is represented by the second trend line 5214. In the illustrated example of FIG. 52B, the second trend line 5214 has a downward slope. As such, the fuel distribution controller circuitry 4808 (e.g., by comparing the determined loss to the first threshold and the second threshold, etc.) can determine that the fuel distribution system (e.g., the first fuel distribution system 4900, the second fuel distribution system 5000, etc.) includes a leak. In some such examples, the fuel distribution controller circuitry 4808 can attempt to identify the location of the leak in the fuel distribution systems 4900, 5000 and attempt to isolate the leak to prevent further hydrogen leakage.

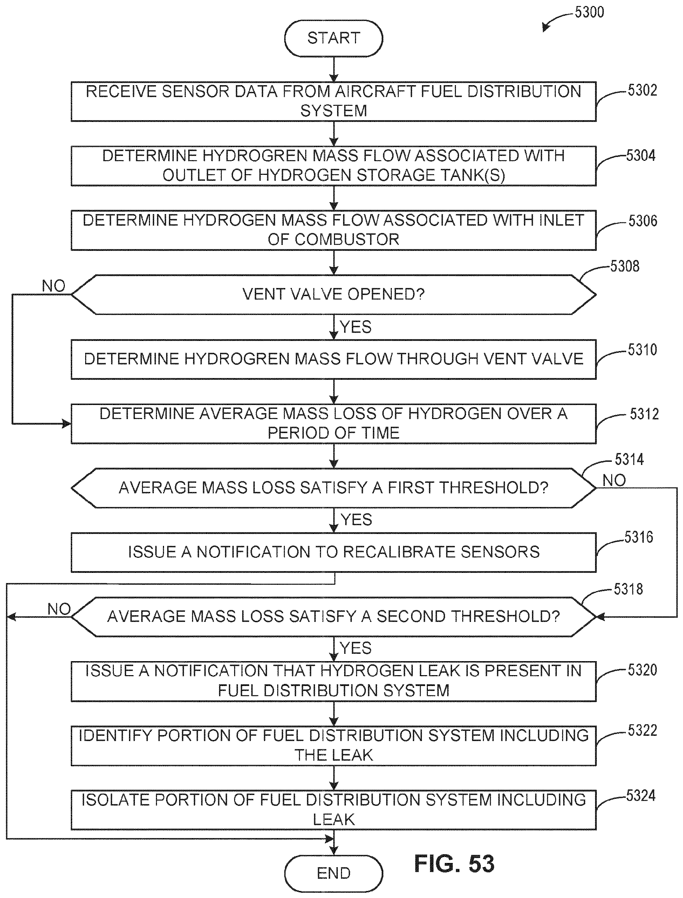

Similar to the example operations of FIGS. 11, 23, and/or 33, the example operations of FIG. 53 may be implemented using executable instructions (e.g., computer and/or machine readable instructions) stored on one or more non-transitory computer and/or machine readable media such as optical storage devices, magnetic storage devices, an HDD, a flash memory, a read-only memory (ROM), a CD, a DVD, a cache, a RAM of any type, a register, and/or any other storage device or storage disk in which information is stored for any duration (e.g., for extended time periods, permanently, for brief instances, for temporarily buffering, and/or for caching of the information). As used herein, the terms non-transitory computer readable medium and non-transitory computer readable storage medium are expressly defined to include any type of computer readable storage device and/or storage disk and to exclude propagating signals and to exclude transmission media.

FIG. 53 is a flowchart representative of example machine readable instructions and/or example operations 5300 that may be executed and/or instantiated by processor circuitry to identify faults in a fuel distribution system (e.g., the first fuel distribution system 4900 of FIG. 49, the second fuel distribution system 5000 of FIG. 50, etc.). The machine readable instructions and/or the operations 5300 of FIG. 53 begin at block 5302, at which the sensor interface circuitry 5102 receives sensor data from the aircraft fuel distribution (e.g., the first fuel distribution system 4900 of FIG. 49, the second fuel distribution system 5000 of FIG. 50, etc.). For example, the sensor interface circuitry 5102 can receive sensor data from the sensors 4912, 4914, 4928, 4960, 4967, 4968 of the first fuel distribution system 4900 of FIG. 49. For example, the sensor interface circuitry 5102 can receive sensor data from the sensors 5010, 5012, 5024, 5028, 5030 of the second fuel distribution system 5000 of FIG. 50. In some examples, the sensor interface circuitry 5102 can transform the received sensor data from a machine-readable format (e.g., a voltage, a current, etc.) to a human-readable format (e.g., a string, a floating-point number, an integer, etc.).

At block 5304, the mass flow determiner circuitry 5104 determines hydrogen mass flow associated with outlet of the hydrogen fuel tanks. For example, when the first fuel distribution system 4900 is being analyzed, the mass flow determiner circuitry 5104 can determine the mass flow from the GH2 fuel tanks using Equations (1) and (2) and/or the mass flow rate from the LH2 tank 4906 using the equations (3), (4), and (5). In some examples, when the second fuel distribution system 5000 is being analyzed, the mass flow determiner circuitry 5104 can determine the mass flow from the CCH2 tank using equations (6) - (8). In other examples, the mass flow rate determiner can determine the mass flow rate from the hydrogen sources from any suitable means.

At block 5306, the mass flow determiner circuitry 5104 determines the hydrogen mass flow associated with the inlet of the combustor (e.g., the combustor 4910 of FIGS. 49 and 50, etc.) For example, the mass flow determiner circuitry 5104 can determine the flow of hydrogen into the combustor 4910 (e.g., in the first fuel distribution system 4900 of FIG. 49, in the second fuel distribution system 5000 of FIG. 50, etc.) based on sensor date received from the flowmeter 4964. In other examples, the mass flow determiner circuitry 5104 can determine the mass flow of hydrogen into the engine by any other suitable means.

At block 5308, the mass flow determiner circuitry 5104 determines whether the valve vent is open. For example, the mass flow determiner circuitry 5104 can determine whether the valve vent is open based on a user input. In some examples, the mass flow determiner circuitry 5104 can determine whether the valve vent is open based on sensor data received from the sensor interface circuitry 5102 and/or any other suitable method. When the mass flow determiner circuitry 5104 determines the valve vent is open, the operations 5300 advance to block 5310. When the mass flow determiner circuitry 5104 determines the valve vent is not open, the operations 5300 advance to block 5312.

At block 5310, the mass flow determiner circuitry 5104 determines the hydrogen mass flow through the vent valve. For example, the mass flow determiner circuitry 5104 can determine the mass vented from the second GH2 buffer tank 4962 using the properties of the vent valve 4974, the pressure of the second GH2 buffer tank 4962, and the duration of the valve remains open. In some examples, the mass flow determiner circuitry 5104 can determine the mass flow through the vent using equation (9). In other examples, the mass flow determiner circuitry 5104 can determine the hydrogen mass flow by any other suitable method.

At block 5312, the mass loss determiner circuitry 5106 determines the average mass loss of hydrogen over a period of time. For example, the mass loss determiner circuitry 5106 can compare the mass inflows (e.g., from the LH2 tank 4906, from the GH2 tank bank 4905, from the CCH2 tank 5002, etc.) and mass outflows (e.g., into the combustor 4910, vented from the second GH2 buffer tank 4962, etc.). For example, the mass loss determiner circuitry 5106 can determine the average mass loss of hydrogen of the first fuel distribution system 4900 using equations (10) and (11) and the second fuel distribution system 5000 using equations (12) and (13). In other examples, the mass loss determiner circuitry 5106 can determine the average mass loss by any other suitable means.

At block 5314, the threshold comparator circuitry 5108 determines whether the average mass loss satisfies a first threshold. For example, the threshold comparator circuitry 5108 can determine whether the average mass loss exceeds the first threshold (e.g., a recalibration threshold, etc.). When the threshold comparator circuitry 5108 determines the mass loss satisfies the first threshold, the operations 5300 advance to block 5318. When the threshold comparator circuitry 5108 determines the mass loss does not satisfy the first threshold, the operations 5300 advance to block 5320.

At block 5316, the notification generator circuitry 5112 issues a notification to recalibrate sensors (e.g., the sensors 4912, 4914, 4928, 4960, 4967, 4968 of FIG. 49, the sensors 5010, 5012, 5024, 5028, 5030 of FIG. 50, etc.). For example, the notification generator circuitry 5112 can generate an audio notification (e.g., an alarm, an audio alert, a verbal alert, etc.), a visual notification (e.g., a dash indicator, a graphic, a text warning, etc.), a tactical notification, and/or any other suitable type of notification to recalibrate.

At block 5318, the threshold comparator circuitry 5108 determines whether the average mass loss satisfies a second threshold. For example, the threshold comparator circuitry 5108 can compare the determined mass loss to a second threshold (e.g., a leak notification threshold, etc.) When the threshold comparator circuitry 5108 determines the mass loss satisfies the second threshold, the operations 5300 advance to block 5320. When the threshold comparator circuitry 5108 determines the mass loss does not satisfy the first threshold, the operations 5300 ends.

At block 5320, the notification generator circuitry 5112 issues a notification that a hydrogen leak is present in the fuel distribution system. For example, the notification generator circuitry 5112 can generate an audio notification (e.g., an alarm, an audio alert, a verbal alert, etc.), a visual notification (e.g., a dash indicator, a graphic, a text warning, etc.), a tactical notification, and/or any other suitable type of notification.

At block 5322, the fuel distribution system interface circuitry 5110 identifies portions of the fuel distribution system including the leak. For example, when the threshold comparator circuitry 5108 determines the mass loss rate satisfies the first threshold, the fuel distribution system interface circuitry 5110 can, via the sensor data, determine where in the fuel distribution system (e.g., the first fuel distribution system 4900 and/or the second fuel distribution system 5000, etc.) the leak has occurred. For example, the location of the leak can be inferred by controlling the valve 4940 of FIG. 49. In some such examples, if a leak is detected in the first fuel distribution system 4900, the first input 4942 (e.g., supply from the GH2 tank bank 4905, etc.) can be closed. In such examples, if the leak persists, the fuel distribution system interface circuitry 5110 can identify that the leak exists in the gaseous hydrogen delivery assembly 4904. Similarly, if a leak persists when the second input 4944 is closed, the fuel distribution system interface circuitry 5110 can identify that the leak exists in the liquid hydrogen delivery assembly 4902.

At block 5324, the fuel distribution system interface circuitry 5110 isolates the portion of the fuel distribution system including the leak. For example, the fuel distribution system interface circuitry 5110 can isolate the detected leak by closing a valve, closing a regulator, disabling the combustor 4910, routing hydrogen through an alternative part of the fuel distribution system, etc. In some examples, if a leak is detected in a portion of the fuel distribution system 4900 that has an alternative path (e.g., back-up path, a redundant path, etc.) available, the fuel distribution system interface circuitry 5110 can close the portion with the leak (e.g., via a valve, etc.) and the hydrogen fuel can be rout through the alternative. In some examples, if a leak is detected in one of the hydrogen delivery assemblies 4902, 4904, the fuel distribution system interface circuitry 5110 can disable said delivery system (e.g., by closing a corresponding one of the inputs 4942, 4944, etc.) until the first fuel distribution system 4900 can be serviced/repaired. The operations 5300 end.

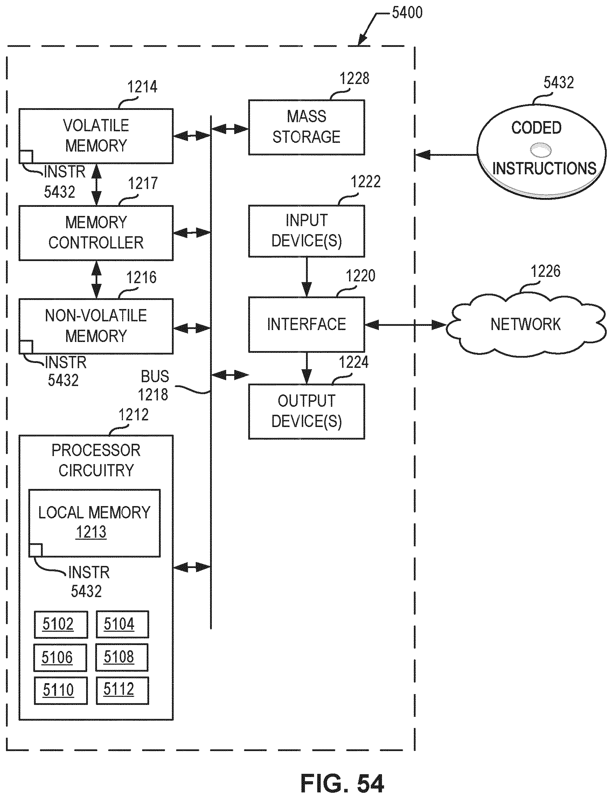

FIG. 54 is a block diagram of an example processor platform 5400 structured to execute and/or instantiate the machine readable instructions and/or operations of FIG. 53 to implement the fuel distribution controller circuitry 4808 of FIGS. 48 and 51. The processor platform 5400 can be, for example, full authority digital engine control (FADEC), a cockpit control panel assembly, avionics systems, a heads-up display (HUD), a mobile device (e.g., a laptop, a smart phone, a tablet such as an iPad™, etc.), etc. The processor platform 5400 can be the same as, integrated with, and/or connected to the processor platforms 1200, 2400, and/or 3400 illustrated in FIGS. 12, 24, and/or 34. As such, repeated reference numbers illustrated in FIG. 54 can be the same as and/or substantially similar to corresponding reference numbers illustrated in FIGS. 12, 24, and 34. In this example, the processor circuitry 1212 of the processor platform 5400, the processor platform 1200, the processor platform 2400, and/or the processor platform 3400 implements the sensor interface circuitry 5102, the mass flow determiner circuitry 5104, the mass loss determiner circuitry 5106, the threshold comparator circuitry 5108, the fuel distribution system interface circuitry 5110, and the notification generator circuitry 5112. The machine executable instructions 5432, which can be implemented by the machine readable instructions of FIG. 53, can be stored in the mass storage device 1228, in the volatile memory 1214, in the non-volatile memory 1216, and/or on a removable non-transitory computer readable storage medium.

Example methods and apparatus described above enable the integrated tank systems(s) 500-900 disclosed herein to be safely implemented in fuel distribution systems (e.g., a LH2 fuel distribution system, a GH2 fuel distribution system, a CCH2 fuel distribution system, etc.) of a gas turbine engine. Examples described above include a system that continuously monitors the health of the integrated cryogenic hydrogen tank system(s) 500-900 and the fuel distribution system(s) of a gas turbine engine associated with an aircraft. Examples described above compare the flow of hydrogen from the from the integrated tank system(s) 500-900 against the flow of hydrogen entering a combustor of the engine to determine whether fuel loss exists in the integrated tank system(s) 500-900 and/or a fuel distribution system.

Example systems, apparatus, and methods described below enable the integrated tank systems(s) 500-900 of FIG. 5-9 to be implemented on an example aircraft without unexpected or uncontrolled hydrogen leaks. In some cases, a cryogenic LH2 tank, a flowline, and/or one or more connections between the tank(s) and the flowlines can have a leak of GH2. Unmonitored and/or uncontrolled GH2 leaks can result in a waste hydrogen fuel, inefficient operation of LH2 storage/delivery systems, interference with other onboard systems/subsystems, safety concerns, and/or other consequences. Examples described below include hydrogen fuel systems including components in which hydrogen is stored or through which hydrogen flows, wherein the components are positioned within compartments to contain and/or vent GH2 leaks originating from the components. In some examples, the compartments contain one or more tanks of the integrated tank system(s) 500-900 of FIGS. 5-9. Example systems described below can detect the hydrogen concentration levels in the compartment over time, contain the leak within the compartment, and release the GH2 and/or introduce air into the compartment to dilute the leak. Thus, example systems, apparatus, and methods described below can prevent GH2 leaks to affect the rest of the aircraft. Furthermore, a leak from one or more tanks in the integrated tank system(s) 500-900 can be isolated in the compartment and safely vented to ensure that leaked GH2 does not come into contact with other components (e.g., electrical wiring, navigational systems, environmental control systems, etc.) or the passengers of the aircraft.

FIG. 55 is a schematic illustration of an example fuel system 5500 for an aircraft (e.g., the aircraft 100, the aircraft 300, etc.) having an engine 5502 (e.g., the engines 140, the turbofan engine 3600, etc.) in accordance teachings disclosed herein. The engine 5502 of the fuel system 5500 includes a combustion section having a combustor 5504.

The fuel system 5500 of FIG. 55 is a hydrogen fuel system configured to store hydrogen fuel and provide the hydrogen fuel to the engine 5502. The fuel system 5500 includes cryogenic liquid hydrogen (LH2) fuel tanks 5506 for holding a first portion of hydrogen fuel in a liquid phase. The LH2 fuel tanks 5506 can be configured to store the first portion of hydrogen fuel substantially completely in the liquid phase. In the illustrated example, the LH2 fuel tanks 5506 include two separate tanks that are not connected. However, in some examples, one of the integrated tank systems 500-900 disclosed herein is included in the fuel system 5500 instead of the example LH2 fuel tanks 5506.

The fuel system 5500 further includes one or more gaseous hydrogen (GH2) fuel tanks 5508 configured to store a second portion of hydrogen fuel in a gaseous phase. The GH2 fuel tanks 5508 store the second portion of hydrogen fuel at an increased pressure (relative to the LH2 fuel tanks 5506), which reduces a size or quantity of the one or more GH2 fuel tanks 5508 within the aircraft. For example, the GH2 fuel tanks 5508 store the second portion of hydrogen fuel at a pressure of at least about 100 bar, such as at least about 200 bar, such as at least about 400 bar, such as at least about 600 bar, such as at least about 700 bar, and up to about 1,000 bar. In some examples, the GH2 fuel tanks 5508 store the second portion of the hydrogen fuel at a temperature within about 50°C of an ambient temperature, or between about -50°C and about 100°C. Although multiple GH2 fuel tanks 5508 are illustrated in FIG. 55, in some examples, only one GH2 fuel tank 5508 is included in the fuel system 5500.

In some examples, a substantial portion of the total hydrogen fuel storage capacity of the fuel system 5500 is provided by the LH2 fuel tanks 5506. In some examples, the LH2 fuel is provided by one or more of the integrated tank systems 500-900 of FIGS. 5-9. As such, descriptions made in connection with the LH2 tanks 5600 can apply to the integrated tank system(s) 500-900. In some examples, the fuel system 5500 defines a maximum fuel storage capacity. The LH2 fuel tanks 5506 may provide more than 50% of the maximum fuel storage capacity (in kilograms), with the remaining portion provided by the GH2 fuel tanks 5508. In some examples, the LH2 fuel tanks 5506 provide at least about 60% of the maximum fuel storage capacity, such as at least about 70% of the maximum fuel storage capacity, such as at least about 80% of the maximum fuel storage capacity, such as up to about 98% of the maximum fuel storage capacity, such as up to about 95% of the maximum fuel storage capacity. In such examples, the GH2 fuel tanks 5508 provide the remaining fuel storage capacity, such as at least about 2% of the maximum fuel storage capacity, such as at least about 5% of the maximum fuel storage capacity, such as at least about 10% of the maximum fuel storage capacity, such as at least about 15% of the maximum fuel storage capacity, such as at least about 20% of the maximum fuel storage capacity, such as up to 50% of the maximum fuel storage capacity, such as up to about 40% of the maximum fuel storage capacity.

The fuel system 5500 further includes a fuel delivery assembly 5510 to transmit hydrogen fuel to the engine 5502. The fuel delivery assembly 5510 includes a LH2 delivery assembly 5512 fluidly coupled to the LH2 fuel tanks 5506, a GH2 delivery assembly 5514 fluidly coupled to the GH2 fuel tank 5508, and a regulator assembly 5516 fluidly coupled to both the LH2 delivery assembly 5512 and the GH2 delivery assembly 5514 for providing hydrogen fuel to the engine 5502.

The LH2 delivery assembly 5512 includes a pump 5518 and a heat exchanger 5520 located downstream of the pump 5518. The pump 5518 cryogenically pressurizes the LH2 fuel such that the first portion of hydrogen fuel flows from the LH2 fuel tanks 5506 through the LH2 delivery assembly 212. Operation of the pump 5518 can compress the first portion of hydrogen fuel in the LH2 delivery assembly 5512 before the hydrogen fuel flows into the regulator assembly 5516 and engine 5502. In some examples, the pump 5518 cryogenically compresses the LH2 fuel into a supercritical state, otherwise referred to as cryo-compressed hydrogen (CCH2). In some examples, the pump 5518 can be another type of cryogenic pump configured to provide a flow of LH2 fuel. In some examples, the pump 5518 is implemented as the LH2 pump 2504 included in the first and/or second phase separating LH2 pumping systems 2700, 2800 described above in connection with FIGS. 25-34.

In the illustrated example of FIG. 55, the pump 5518 and the vapor pressure in the LH2 fuel tanks 5506 provide the motive force necessary for driving the LH2 fuel through the LH2 delivery assembly 5512. In some examples, the pump 5518 provides a portion of the force, and the vapor pressure of the LH2 fuel tanks 5506 provides the remaining portion. For example, the pump 5518 provides at least about 75% of the motive force available to drive the flow of the LH2 through the LH2 delivery assembly 5512, such as at least about 80%, such as at least about 85%, such as at least about 90%, such as at least about 95%, such as about 100%.

In some examples, given the difficulty of pumping LH2 at relatively low temperatures to maintain its liquid phase, the pump 5518 is not capable of operating across a wide range of capacities. For example, the pump 5518 may have a maximum pump capacity and a minimum pump capacity (each in kilograms per second). A ratio of the maximum pump capacity to the minimum pump capacity is referred to herein as a "turndown ratio" of the pump 5518. In some examples, the pump 5518 has a turndown ratio of at least 1:1 and up to about 6:1. For example, the pump 5518 has a turndown ratio of at least about 2:1, such as at least about 3:1, and up to about 5:1. The effect of such a configuration on the fuel system 5500 will be described in greater detail below.

The heat exchanger 5520 is included in the fuel system 5500 to convert the LH2 in the LH2 delivery assembly 5512 from the liquid phase to a gaseous phase. In some examples, the heat exchanger 5520 is coupled to the engine 5502 such that heat transfers from an accessory system of the engine 5502 to the LH2. The heat exchanger 5520 enables an amount of heat to transfer to the LH2 that is sufficient enough to convert the LH2 to the gaseous phase.

As mentioned previously, LH2 tanks (e.g., the fuel tanks 5506, the integrated tank system(s) 500-900, etc.) contain LH2 substantially completely in the liquid phase. However, a portion of the volume of the fuel tanks 5506 contains hydrogen vapor due to boil-off the LH2. Thus, the fuel system 5500 includes a boil-off assembly 5540 to prevent a vapor pressure within the fuel tanks 5506 from exceeding a pressure threshold. The example boil-off assembly 5540 allows the hydrogen vapor to purge from the LH2 fuel tanks 5506. More specifically, the boil-off fuel assembly 5540 allows excess GH2 in the LH2 fuel tanks 5506 to be used as GH2 fuel for the engine 5502.

The boil-off fuel assembly 5540 includes a boil-off compressor 5542 and a boil-off tank 5544. The boil-off compressor 5542 is fluidly coupled to the LH2 fuel tanks 5506, and the boil-off tank 5544 is fluidly coupled to the boil-off compressor 5542. The boil-off tank 5544 is further coupled to the GH2 delivery assembly 5514. During operation, the boil-off fuel assembly 5540 receives GH2 from the LH2 fuel tanks 5506, the boil-off compressor 5542 compresses the GH2, and

**EP 4 365 086 B1**

the boil-off tank 5544 provides pressurized GH2 fuel to other systems and/or assemblies (e.g., the GH2 delivery assembly 5514).

In some examples, the boil-off tank 5544 stores the GH2 fuel at a lower pressure than that of the GH2 fuel tank 5508. For example, the boil-off tank 5544 holds GH2 fuel at a pressure of between about 100 bar and about 400 bar, such as between 130 bar and about 300 bar. In some examples, a volume of the boil-off tank 5544 is smaller than a volume of the GH2 fuel tanks 5508 due to the smaller pressures. The boil-off compressor 5542 may substantially completely pressurize the GH2 fuel in the boil-off tank 5544. Thus, the boil-off compressor 5542 can increase or maintain the pressure of the GH2 fuel in the boil-off tank 5544 based on a back vapor pressure in the LH2 fuel tanks 5506. Furthermore, the size of the boil-off compressor 5542 can be relatively smaller than the pump 5518 due to the smaller output pressure requirements.

The GH2 delivery assembly 5514 of FIG. 55 includes a three-way boil-off valve 5546 defining a first input 5548, a second input 5550, and an output 552. The first input 5548 is fluidly coupled to the GH2 fuel tank 5508 to receive a first portion of the GH2 fuel. In the illustrated example, the second input 5550 is fluidly coupled to the boil-off fuel assembly 5540 to receive a second portion of the GH2 fuel from the boil-off tank 5544. The three-way boil-off valve 5546 can combine and/or alternate the flows from the first input 5548 and the second input 5550 to a single flow of GH2 through the output 5552. In the illustrated example, the three-way boil-off valve 5546 is an active valve, such that flowrates of GH2 fuel through the first input 5548 and the second input 5550 are actively controlled via electronic control signals to achieve a flowrate through the output 5552. In other examples, the three-way boil-off valve 5546 is passively controlled via pressures in the GH2 tanks 5508 and the boil-off tank 5544.

In the illustrated example of FIG. 55, the regulator assembly 5516 further includes a GH2 delivery assembly flow regulator ("GHDA flow regulator 5554"). The GHDA flow regulator 5554 may be configured as an actively controlled variable throughput valve configured to provide a variable throughput ranging from 0% (e.g., a completely closed off position) to 100% (e.g., a completely open position), as well as a number of intermediate throughput values therebetween. More specifically, the GHDA flow regulator 5554 includes a valve portion 5556 and an actuator 5558. The actuator 5558 is mechanically coupled to the valve portion 5556 to provide the variable throughput therethrough.

In the illustrated example, the regulator assembly 5516 is fluidly coupled to both the LH2 delivery assembly 5512 and the GH2 delivery assembly 5514 for providing GH2 fuel to the engine 5502, and more specifically, to the combustor 5504 of the engine 5502.

In the illustrated example of FIG. 55, the regulator assembly 5516 includes a three-way regulator valve 5560. The three-way regulator valve 5560 defines a first input 5562, a second input 5564, and an output 5566. The first input 5562 is fluidly coupled to the GH2 delivery assembly 5514 to receive a portion of the GH2 fuel from the GH2 tanks 5508 and/or the boil-off tank 5544. The second input 5564 is fluidly coupled to the LH2 delivery assembly 5512 to receive a portion of the GH2 fuel from the LH2 tanks 5506. The three-way regulator valve 5560 can combine and/or alternate the flows from the first input 5562 and the second input 5564 to a single flow of GH2 through the output 5566. In the illustrated example, the three-way regulator valve 5560 is an active valve, including an actuator 268, such that such that flowrates of GH2 fuel through the first input 5562 and the second input 5564 are actively controlled via electronic control signals to achieve a flowrate through the output 5566. In other examples, the three-way regulator valve 5560 is passively controlled via pressures in the GH2 delivery assembly 5514 and the LH2 delivery assembly 5512.

In the illustrated example, the regulator assembly 5516 further includes a regulator assembly flow regulator 5570 ("RA flow regulator 5570"). The RA flow regulator 5570 may be configured as an actively controlled variable throughput valve configured to provide a variable throughput ranging from 0% (e.g., a completely closed off position) to 100% (e.g., a completely open position), as well as a number of intermediate throughput values therebetween. More specifically, the RA flow regulator 5570 includes a valve portion 5574 and an actuator 5576. The actuator 5576 is mechanically coupled to the valve portion 5574 to provide the variable throughput therethrough.

Furthermore, the fuel system 5500 includes a buffer tank 5578 to receive GH2 fuel upstream of the RA flow regulator 5570. The buffer tank 5578 can collect GH2 and reduce a pressure input to the RA flow regulator 5570 such that excessive damage or wear does not occur. In some examples, the buffer tank 5578 includes a pressure sensor to measure the pressure in the buffer tank 5578 and/or a flowmeter to measure the flowrate exiting the buffer tank 5578. The buffer tank 5578 may also include a regulator valve to automatically adjust the output flowrate based on the measured pressures and/or flowrates and target pressures and/or flowrates.

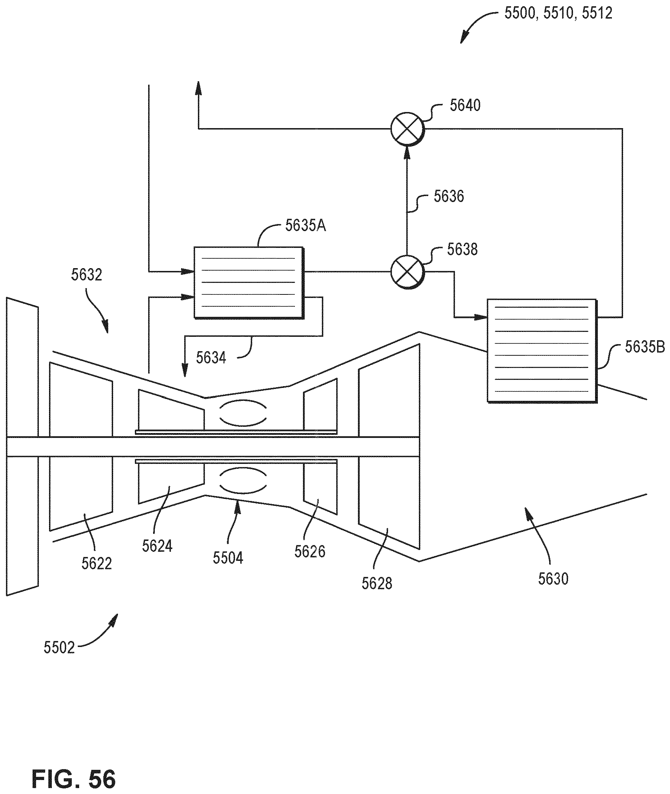

Referring now to FIG. 56, a schematic view of the engine 5502 included in the fuel system 5500 is provided. The engine 5502 illustrated in FIG. 56 includes a low-pressure (LP) compressor 5622, a highpressure (HP) compressor 5624, the combustor 5504, a HP turbine 5626, a LP turbine 5628, and an exhaust section 5630. The engine 5502 of FIG. 56 can also include one or more accessory systems for improving performance, such as a fuel injection system, a turbine cooling system, etc.

Typically, the engine 5502 includes accessory systems to improve certain operating mechanisms. In the illustrated example, the engine 5502 includes a lubrication system 5632 to provide, maintain, and recycle a lubricant used to reduce wear between rotating components in contact and/or in close proximity to each other. The lubrication system 5632 includes a recirculation assembly 5634 to receive a lubricant (e.g., oil, etc.) from a relatively hot section of the

64

engine 5502 (e.g., the HP turbine 5626, the HP compressor 5624, etc.), cool the lubricant, and provide the lubricant back to the engine 5502 at a lower temperature. In some examples, the recirculation assembly 5634 recycles the lubricant back to the same section of the engine 5502, such as the HP turbine 5626, the HP compressor 5624, etc. In some examples, the recirculation assembly 5634 provides the lubricant to a different section of the engine 5502, such as the LP turbine 5628, the LP compressor 5622, etc. It should be appreciated, that that the lubrication system 5632 is an example accessory system illustrated in FIG. 56 included to exemplify that a system with a relatively hot fluid (e.g., lubricant, etc.) transmits the fluid to the heat exchanger 5520 to provide heat to the LH2 fuel in the fuel system 5500. In some examples, the heat exchanger 5220 is coupled to a thermal transport bus that transmits a heat exchange fluid from a heat source (e.g., the exhaust section, etc.) to a heat sink (e.g., the heat exchanger 5520).

In the illustrated example of FIG. 56, the heat exchanger 5520 of the fuel system 5500 (e.g., the LH2 delivery assembly 5512) is a first heat exchanger 5635A fluidly coupled to the recirculation assembly 5634 of the lubrication system 5632. In some examples, heat from the lubrication oil flowing through the recirculation assembly 5634 transfers to the LH2 flowing through the LH2 delivery assembly 5512 via the heat exchanger 5520. Furthermore, the example fuel system 5500 illustrated in FIG. 56 includes a second heat exchanger 5635B to provide additional heat to the LH2 delivery assembly 5512. In some examples, the second heat exchanger 5635B is located downstream of the first heat exchanger 5635A such that additional heat transfer is sufficient to convert (or vaporize) the LH2 fuel to GH2 fuel.

However, it should be appreciated, that the fuel system 5500 may selectively use the second heat exchanger 5635B based on operating conditions of the engine 5502. In other words, during certain stages of operation, the additional heat may be needed to sufficiently vaporize the LH2 fuel. For example, during high thrust operations, the LH2 fuel flows at high rates, which inhibits a heat transfer rate in the first heat exchanger 5635A. Additionally, during startup operations, the lubrication oil is relatively cool, which requires a larger amount of heat transfer than is possible with the first heat exchanger 5635A alone. In some examples, the second heat exchanger 5635B is coupled to the exhaust section 5630 of the engine 5502 to transfer waste heat from exhaust gases to the LH2 fuel in the LH2 delivery assembly 5512 and downstream of the first heat exchanger 5635A.

The fuel system 5500 of the illustrated example of FIG. 56 includes a bypass line 5636, a first bypass valve 5638, and a second bypass valve 5640. Thus, the fuel system 5500 can cause the flow of the LH2 fuel to fully, or partially, bypass the second heat exchanger 5635B when the first heat exchanger 5635A is able to sufficiently vaporize the LH2 fuel due to a temperature of the lubricant and/or the flowrate of the LH2 fuel.

In some examples, the heat exchanger 5520 and a portion of the LH2 delivery assembly 5512 are positioned within an outer casing of the engine 5502. In some examples, the heat exchanger 5520 and the LH2 delivery assembly 5512 are positioned outside of the casing and proximate to the engine 5502. As such, the heat exchanger 5520 of the LH2 delivery assembly 5512 may be located remotely from the engine 5502 (e.g., on the wing of the aircraft), and an intermediate thermal transport bus may transport heat from the engine 5502 to the heat exchanger 5520 via a heat transfer fluid.

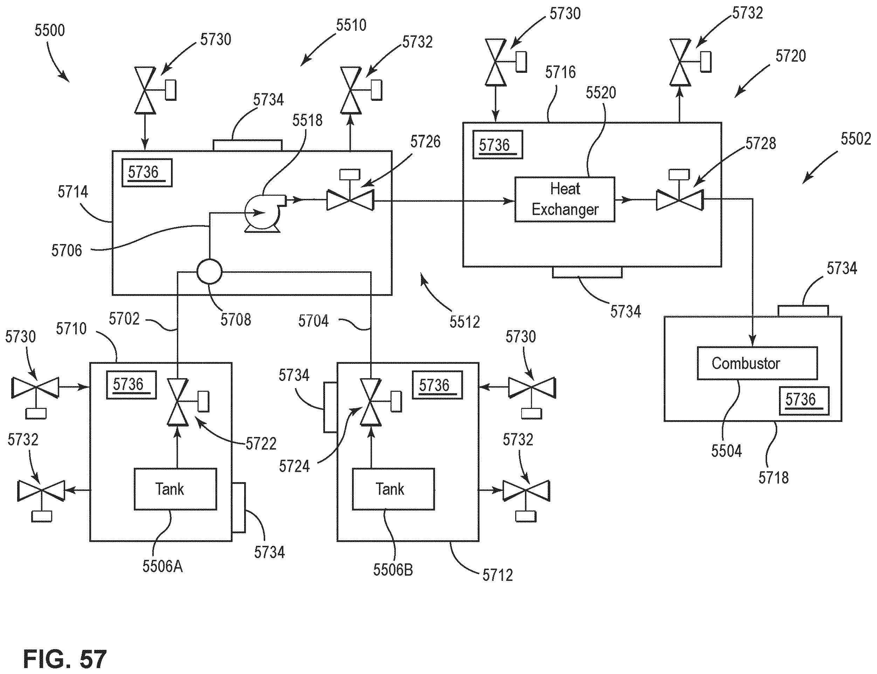

FIG. 57 illustrates a schematic view of the hydrogen fuel system 5500, particularly illustrating certain components of the fuel system 5500. Specifically, FIG. 57 illustrates the LH2 fuel tanks 5506 (e.g., a first LH2 fuel tank 5506A and a second LH2 fuel tank 5506B), the pump 5518, the heat exchanger 5520, and the combustor 5504.

The fuel system 5500 of FIG. 55 includes a first branch fluid conduit 5702 fluidly coupled to the first LH2 fuel tank 5506A. The fuel system 5500 of FIG. 55 also includes a second branch fluid conduit 5704 fluidly coupled to the second LH2 fuel tank 5506B. The first and second branch fluid conduits 5702, 5704 are fluidly coupled to a main fluid conduit 5706 via a junction 5708. The main fluid conduit 5706 continues through the pump 5518 and the heat exchanger 5520 to the combustor 5504. Thus, the first branch fluid conduit 5702 and the main fluid conduit 5706 allow hydrogen to be delivered from the first LH2 tank 5506A to the combustor 5504. Similarly, the second branch fluid conduit 5704 and the main fluid conduit 5706 allow hydrogen to be delivered from the second LH2 tank 5506B to the combustor 5504. However, in some examples, the first and second LH2 tanks 5506A, 5506B are included in one of the integrated tank systems 500-900 of FIGS. 5-9 such that LH2 fuel can be transmitted from the first and second tanks 5506A, 5506B simultaneously via one of the first branch fluid conduit 5702 or the second branch fluid conduit 5704.

The fuel system 5500 of FIG. 57 includes a first compartment 5710 to configured to isolate internal gases (e.g., air, GH2, etc.) from external gases (e.g., air, etc.). The first compartment 5710 encloses, contains, and/or otherwise surrounds the first tank 5506A. The first compartment 5710 allows the first tank 5506A to be selectively isolated from other compartments, the aircraft 100, and/or the engine 5502. Thus, if the first tank 5506A were to leak uncontrollably, the first compartment 5710 can be closed to contain the leak. In the illustrated example, the fuel system 5500 includes a second compartment 5712 to enclose the second tank 5506B, a third compartment 5714 to enclose the pump 5518, a fourth compartment 5716 to enclose the heat exchanger 5520, and a fifth compartment 5718 to enclose the combustor 5504. In some examples, the fourth compartment 5716 is positioned within a nacelle 5720 of the engine 5502. In some examples, the fifth compartment 5718 is positioned within the core of the engine 5502.

In the illustrated example of FIG. 57, the first, second, third, fourth, and fifth compartments 5710-5718 are substantially similar. As such, details disclosed in connection with the first compartment 5710 can also apply to the second, third, fourth, and fifth compartments 5712-5718 and vice versa. Additionally, other components of the fuel system 5500 (e.g., valves, junctions, flowlines, etc.) may also be positioned in the first, second, third, fourth, and/or fifth compartments 5710-5718. Moreover, in some examples, multiple components are positioned in the same compartment. For example, the integrated tank system(s) 500-900 can be positioned within the first compartment 5710. In another example, each tank (e.g., first tank 400a, second tank 400b, the third tank 400c, etc.) of the integrated tank system(s) 500-900 are positioned within separate compartments. In some examples, the first group of tanks 902 is positioned within a compartment (e.g., the first compartment 5710, etc.), and the second group of tanks 904 is positioned within another compartment (e.g., the second compartment 5712, etc.).

In some examples, the fuel system 5500 includes a phase separating LH2 pumping system (e.g., the first phase separating LH2 pumping system 2700 of FIG. 27, the second phase separating LH2 pumping system 2800 of FIG. 28, etc.). As mentioned previously, the phase separating LH2 pumping system includes a phase separator (e.g., the phase separator 2712, etc.), an LH2 pump (e.g., the LH2 pump 2504, etc.), a LH2 extraction flowline (e.g., the LH2 flowline 2506, etc.), and a GH2 return flowline (e.g., the GH2 flowline 2508, etc.). In some examples, the phase separating LH2 pumping system is positioned within the third compartment 5714 or another compartment (e.g., the second compartment 5712, etc.) in addition to or in place of the pump 5518. In some examples, the LH2 pump 2504, the second LH2 portion 2704, and the third GH2 portion 2710 are positioned within the third compartment 5714 or another compartment. In some examples, the phase separator 2712, the first LH2 portion 2702, the second LH2 portion 2704, and the second GH2 portion 2708 are included in the third compartment 5714 or another compartment. Additionally or alternatively, another combination of the elements (e.g., the first LH2 portion 2702, the second LH2 portion 2704, the first GH2 portion 2706, the second GH2 portion 2708, the third GH2 portion 2710, the phase separator 2712, the LH2 pump 2504, etc.) of the first and/or second phase separating LH2 pump system 2700, 2800 can be included in the third compartment 5714 or another compartment.

The hydrogen fuel system 5500 of FIG. 57 includes a first control valve 5722 positioned within the first compartment 5710 and fluidly coupled to the first tank 5506A and the first branch conduit 5702. The first control valve 5722 can selectively allow or prohibit the flow of LH2 fuel from the first tank 5506A and the first compartment 5710. In the illustrated example, the fuel system 5500 includes a second control valve 5724 positioned within the second compartment 5712, a third control valve 5726 positioned within the third compartment 5714, and a fourth control valve 5728 positioned within the fourth compartment 5716. In the illustrated example, the first, second, third, and fourth control valves 5722-5728 are substantially similar. As such, details disclosed in connection with the first control valve 5722 can also apply to the second, third, and fourth control valves 5724-5728 and vice versa. For example, similarly to the first control valve 5722, the third control valve 5726 is fluidly coupled to the pump 5518 to selectively allow or prohibit flow of LH2 from the third compartment 5714 to the fourth compartment 5716. In some examples, multiple control valves are included in each compartment.

The fuel system 5500 of FIG. 57 includes a ventilation device 5730 coupled to each one of the first, second, third, and fourth compartments 5710-5716. The ventilation device 5730 can allow air to flow into the corresponding compartment to dilute a hydrogen leak. For example, when a hydrogen leak is detected within the first compartment 5710 (e.g., due to a leak from the first LH2 tank 5506A), the corresponding ventilation device 5730 is opened to provide air flow to the first compartment 5710, which dilutes or reduces the hydrogen concentration within the first compartment 5710.

The fuel system 5500 of FIG. 57 includes a ventilation valve 5732 ("vent valve 5732") associated with and/or coupled to each one of the first, second, third, and fourth compartments 5710-5716. The vent valve 5732 can discharge hydrogen from the corresponding compartment to release leaked hydrogen and/or reduce the pressure associated with a hydrogen leak. Reducing the pressure and/or releasing the leaked hydrogen can further dilute the hydrogen leak and/or can cause air to flow into the corresponding compartment via the ventilation device 5730. For example, if a leak is present within the first compartment 5710, the corresponding vent valve 5732 opens to discharge hydrogen from the leaking first LH2 tank 5506A. In some examples, the vent valves 5732 are coupled to flowlines leading to the atmosphere outside of the aircraft 100 and/or the turbofan engine 5502. In some examples, the vent valves 5732 are electronically actuated valves, such as solenoid valves.

The fuel system 5500 of FIG. 57 includes a quick release panel 5734 coupled to each one of the first, second, third, fourth, and fifth compartments 5710-5718. The quick release panel 5734 is a portion of the corresponding compartment that is frangible and can be opened rapidly (e.g., more rapidly than the ventilation devices 5730 and/or the vent valves 5732) to provide air to the corresponding compartment and/or release hydrogen from the corresponding compartment. In some examples, when the pressure in the first compartment 5710 is less than the surrounding pressure during a hydrogen leak, the air enters the first compartment 5710 from the atmosphere via the quick release panel 5734. In some examples, when the pressure in the first compartment 5710 is greater than the surrounding pressure during a hydrogen leak, the hydrogen/air mixture exits the first compartment 5710 to the atmosphere via the quick release panel 5734. In some examples, air enters the corresponding compartment from within the aircraft 100. Similarly, in some examples, the hydrogen exits the corresponding compartment into the aircraft 100.

As illustrated in FIG. 57, the fuel system 5500 includes a hydrogen sensor 5736 coupled to and/or positioned within each one of first, second, third, fourth, and fifth compartments 5710-5718. The hydrogen sensor 5736 can detect a level of hydrogen concentration within the corresponding compartment. In some examples, the hydrogen sensor 5736 is configured to generate data indicative of the level of hydrogen present within the corresponding compartment. In some examples, the hydrogen sensor 5736 is configured to generate data indicative of a hydrogen level increase over time within the corresponding compartment. Thus, if the hydrogen sensor 5736 detects that the hydrogen level in a compartment rises too quickly for the ventilation device 5730 or vent valve 5732 to have an effect, the quick release panel 5734 can be opened to rapidly dilute the hydrogen concentration within the corresponding compartment. As such, the hydrogen sensor 5736 may be a type of sensing device able to detect and/or measure hydrogen levels over time, such an optical fiber surface plasmon resonance (SPR) sensors, electrochemical hydrogen sensors, micro electro-mechanical system (MEMS) hydrogen sensors, thin film sensors, thick film sensors, and/or the like.

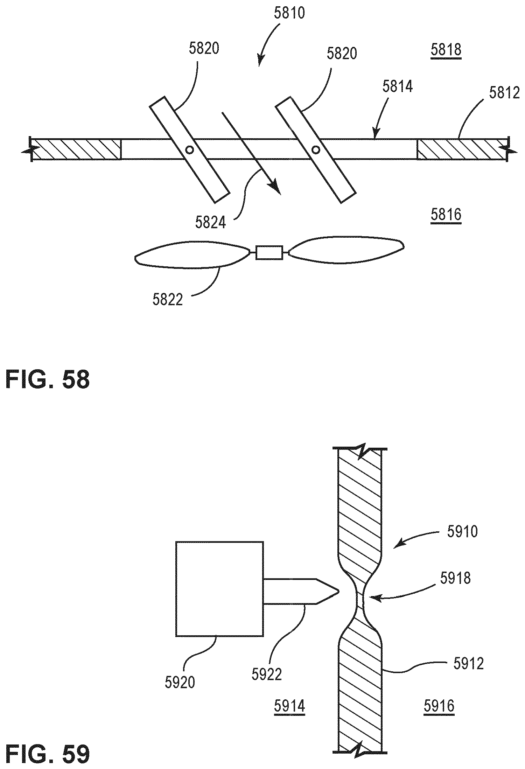

FIG. 58 illustrates an example ventilation device 5810 associated with (e.g., coupled to, integrated into, etc.) the first, second, third, and/or fourth compartments 5710-5716. The ventilation device 5810 of FIG. 58 can be implemented as the ventilation device 5730 in the fuel system 5500 of FIG. 57. As shown, the ventilation device 5810 includes a wall 5812 defining a portion of a compartment (e.g., the first compartment 5710 of FIG. 57). The wall 5812 of the ventilation device 5810 has an opening 5814 to allow for fluid (e.g., air, GH2, etc.) to flow between an interior 5816 of the compartment and an exterior 5818 of the compartment.

The ventilation device 5810 also includes one or more louvers 5820 to selectively allow or restrict flow through the opening 5814. The louvers 5820 are positioned within the opening 5814 and rotatably coupled to the wall 5812. Thus, the louvers 5820 can be moved between a fully closed position and fully opened position. In some examples, the louvers 5820 are in either the fully closed position or the fully opened position. In other examples, the louvers 5820 are adjustable to various positions between the fully closed position and the fully opened position. Although, two louvers 5820 are illustrated in FIG. 58, the ventilation device 5810 can include another number (e.g., one, three, five, etc.) of louvers 5820. In the illustrated example, the ventilation device 5810 includes a fan 5822 to draw air 5824 into the interior 5816. The fan 5822 may be positioned adjacent to the opening 5814 to ensure the fan 5822 sucks a sufficient amount of air 5824 into the interior 5816. When fan 5822 draws the sufficient amount air 5824 into the compartment, the GH2 content present within the interior 5816 becomes diluted. In other examples, the ventilation device 5810 has other configurations that causes air to flow into the compartment, such as multiple fans 5822, the fan 5822 positioned in the exterior 5818 of the compartment, retractable plates instead of the louvers 5820, etc.

FIG. 59 illustrates an example quick release panel 5910 associated with (e.g., coupled to, integrated into, etc.) the first, second, third, fourth, and/or fifth compartments 5710-5718. The quick release panel 5910 of FIG. 59 can be implemented as the quick release panel 5734 in the fuel system 5500 of FIG. 57. As shown, the quick release panel 5910 includes a wall 5912 defining a portion of a compartment (e.g., the first compartment 5710 of FIG. 57). The wall 5912 of the quick release panel 5734 separates a compartment interior 5914 from a compartment exterior 5916. In the illustrated example, the quick release panel 5910 includes a frangible portion 5918 to quickly allow flow between the interior 5914 and the exterior 5916. The frangible portion 5918 is a thinned region of the wall 5912 that can be punctured or severed relatively quickly. In some examples, the frangible portion 5918 can be punctured to allow air to flow from the exterior 5916 into the interior 5914. In other examples, the leaked hydrogen flows from the interior 5914 to the exterior 5916 via an opening created in the frangible portion 5918.

The quick release panel 5910 of FIG. 59 includes a quick release panel actuator 5920 to cause the frangible portion 5918 to open. In the illustrated example, the quick release panel actuator 5920 is positioned adjacent to the wall 5912. The quick release panel actuator 5920 of FIG. 59 is operatively coupled to a stake 5922. When activated, the actuator 5920 drives the stake 5922 through the frangible portion 5918 to create an opening in the frangible portion 5918 and the compartment wall 5912. As such, the quick release panel actuator 5920 may correspond to a hydraulic actuator, a pneumatic actuator, an electric actuator, an explosively powered actuator, and/or the like. However, in some examples, the frangible portion 5918 of the quick release panel 5910 is configured to open when the pressure within the compartment interior 5914 exceeds the pressure threshold value. In other words, the quick release panel 5910 may open passively due to increased pressures within the compartment interior 5914 without the need for the quick release panel actuator 5920.

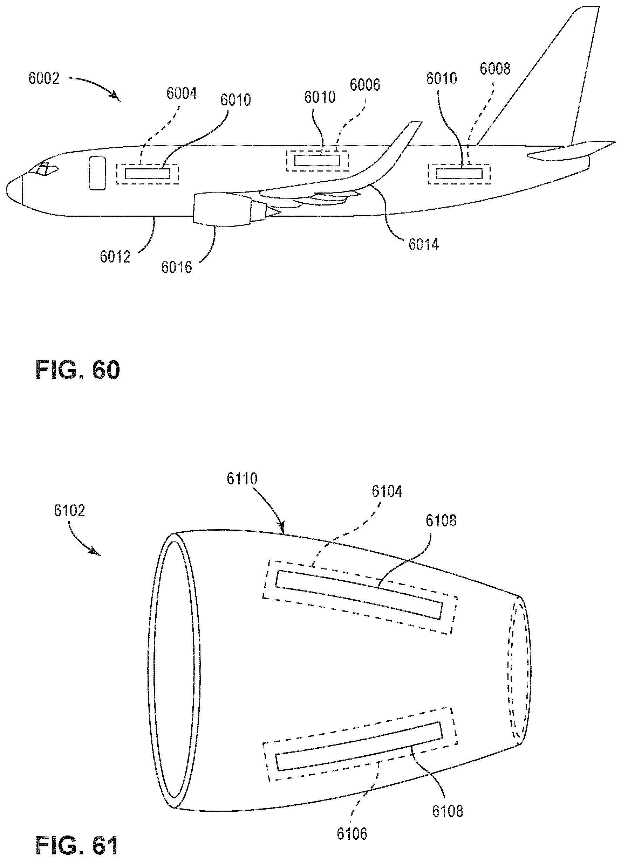

FIG. 60 illustrates an example aircraft 6002 including a first compartment 6004, a second compartment 6006, and a third compartment 6008. The first, second, and third compartments 6004-6008 of FIG. 60 can be implemented as the first, second, and/or third compartments 5710-5714 of FIG. 57. The first, second, and third compartments 6004-6008 each include a quick release panels 6010, which may also be implemented as the quick release panel 5734 of FIG. 57 and/or the quick release panel 5910 of FIG. 59. In some examples, the aircraft 6002 corresponds to the aircraft 100 of FIG. 1. In some examples, the first, second, and third compartments 6004-6008 contain the first, second, and third tanks 400a-400c of the third, fourth, or fifth integrated tank systems 700-900 of FIGS. 7-9.

As shown in the illustrated example, the first, second, and third compartments 6004-6008 are positioned at various locations within a fuselage 6012 of the aircraft 6002. The quick release panels 6010 are coupled to each one of the first, second, and third compartments 6004-6008. In some examples, the quick release panels 6010 are disposed on the fuselage 6012 and connected to the first, second, and third compartments 6004-6008. In other examples, the quick release panels 6010 are located within the fuselage 6012. In some examples, the quick release panels 6010 are disposed on the first, second, and third compartments 6004-6008. In some examples, one or more of the first, second, and/or third compartments 6004-6008 and the associated quick release panels 6010 are located on and/or within a wing 6014 of the aircraft 6002. In some examples, a different number of compartments (e.g., one, three, five, etc.) are included in the fuselage 6012. In some examples, the first, second, and/or third compartment(s) 6004-6008 are implemented as the fourth compartment 5716 of FIG. 57. Thus, the first, second, and/or third compartments 6004-6008 and the associated quick release panel(s) 6010 may be located in an engine 6016 of the aircraft 6002.

FIG. 61 illustrates an example engine 6102 including a fourth compartment 6104 and a fifth compartment 6106. The fourth and/or fifth compartments 6104, 6106 can be implemented as the fourth compartment 5716 of FIG. 57. The fourth and fifth compartments 6104, 6106 also include quick release panels 6108, which may be implemented as the quick release panels 5734 of FIG. 57 and/or the quick release panel 5910 of FIG. 59. The engine 6102 includes a nacelle 6110 to encase the engine 6102 and/or frame the internal components of the engine 6102. In the illustrated example, the fourth and fifth compartments 6104, 6106 are disposed and/or located within the nacelle 6110. Furthermore, the quick release panels 6108 are disposed on the nacelle 6110 and coupled to the fourth and fifth compartments 6104, 6106. In some examples, the fourth and fifth compartments 6104, 6106 are disposed within the nacelle 6110. Thus, the quick release panels 6108 may be located within the nacelle 6110 and/or disposed on the fourth and/or fifth compartments 6104, 6106. In some examples, a different number of compartments (e.g., one, three, five, etc.) are included in the engine 6102. In some examples, the fourth and/or fifth compartments 6104, 6106 are located on or within the fuselage 6012 and/or the wing 6014 of FIG. 60.

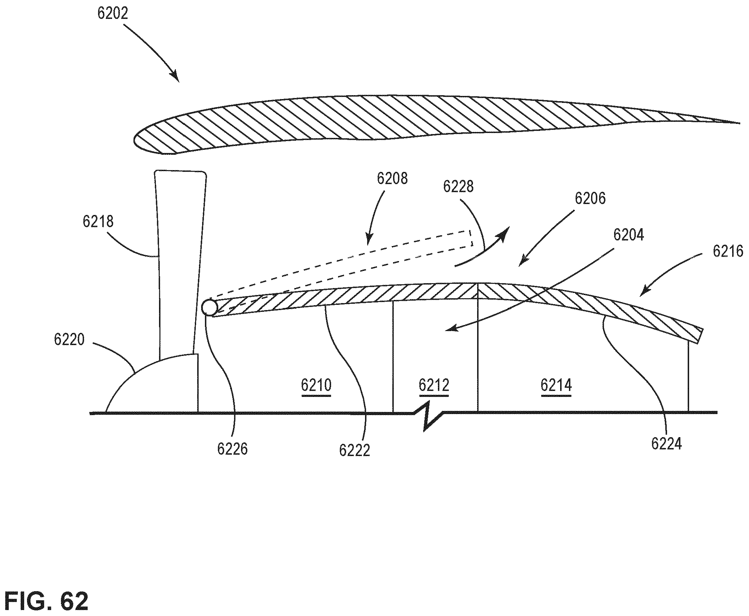

FIG. 62 illustrates a cross sectional portion of an example engine 6202 including an example sixth compartment 6204 positioned within a core 6206 of the engine 6202. The sixth compartment 6204 of FIG. 62 may be implemented as the fifth compartment 5718 of FIG. 57. The engine 6202 also includes a quick release panel 6208 to quickly discharge GH2 from the core 6206 and/or introduce air into the core 6206 to dilute a hydrogen leak. As shown in FIG. 62, the core 6206 includes a compressor 6210, a combustor 6212, and a turbine 6214 disposed or positioned within a core casing 6216. The combustor 6212 of FIG. 62 may be implemented as the combustor 5504 of FIGS. 55-57.

As illustrated in FIG. 62, the engine 6202 is a turbofan engine with fan blades 6218 coupled to a fan rotor hub 6220. However, the engine 6202 may be another type of gas turbine engine, such as a turboprop, a turbojet, and/or the like. In the illustrated example, the quick release panel 6208 is coupled to and/or integrated into the core casings 6216. More specifically, the core casing 6216 includes a first casing portion 6222 encasing the compressor 6210 and the combustor 6212 and a second casing portion 6224 encasing the turbine 6214. The quick release panel 6208 is coupled to the first casing portion 6222 at a pivot joint 6226. In some examples, when the quick release panel 6208 is in a closed position, the quick release panel 6208 aligned, flush, and/or integrated with the rest of the first casing portion 6222. In some examples, the quick release panel 6208 is rotatable about the pivot joint 6226 and relative to the rest of the first casing portion 6222 and the second casing portion 6224. Thus, when the quick release panel 6208 pivots (as shown in phantom in FIG. 10), the sixth compartment 6204 opens, which allows hydrogen 6228 to exit the combustor 6212. In some examples, the quick release panel 6208 of FIG. 62 includes an actuator similar to the quick release panel actuator 5920 of FIG. 59 to cause the pivoting motion of the quick release panel 6208 about the pivot joint 6226.

In some examples, the quick release panel 6208 is a first quick release panel and the pivot joint 6226 is a first pivot joint. In such examples, the engine 6202 includes a plurality of quick release panels that are coupled to a plurality of pivot joints and are distributed circumferentially about the core 6206. The plurality of quick release panels may actuate substantially simultaneously to release hydrogen from multiple areas of the core 6206 and/or the combustor 6212. Alternatively, the second casing portion 6224 may be encase the combustor 6212 and include the quick release panel 6208. In some examples, the quick release panel 6208 has another functionality as described herein, such as a frangible portion that is punctured or opened.

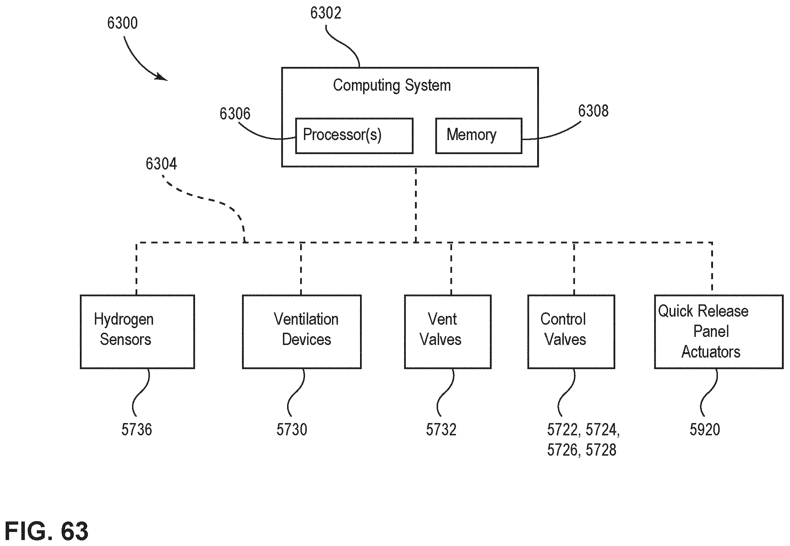

FIG. 63 is a schematic illustration of an example system 6300 for detecting hydrogen leaks within a vehicle. In general, the system 6300 will be described herein with reference to the aircraft 100, the turbofan engine 5502, and the hydrogen fuel system 5500 described above with reference to FIGS. 55-62. However, it should be appreciated that the disclosed system 6300 may be implemented in another vehicle (e.g., the aircraft 300 of FIG. 3), another engine (e.g., the turbofan engine 3600 of FIG. 36), and/or another fuel storage/delivery system (e.g., the integrated tank system(s) 500-900 of FIG(S). 5-9, the second phase separating LH2 pumping system 2800 of FIG. 28, etc.).

As shown in FIG. 63, the system 6300 includes certain components of the hydrogen fuel system 5500. In the illustrated example, the system 6300 includes the control valves 5722-5728, the ventilation devices 5730, the vent valves 5732, the hydrogen sensors 5736, and the quick release panel actuators 5920 of FIGS. 55-62.

The system 6300 includes a computing system 6302 communicatively coupled to one or more components of the aircraft 100, the engine 5502, and/or the hydrogen fuel system 5500 to allow the components therein to be electronically or automatically controlled. In the illustrated example, the computing system 6302 is communicatively coupled to the hydrogen sensors 5736 via communicative link(s) 6304. As such, the computing system 6302 obtains data from the hydrogen sensors 5736 indicating the level of hydrogen present within the compartments 5710-5718. In some examples, the hydrogen sensors 5736 measure the concentration of hydrogen molecules present within a portion of the air in the compartment (e.g., the first compartment 5710). In some examples, the computing system 6302 determines the level of hydrogen present in the compartment based on a concentration measurement obtained from the hydrogen sensors 5736. In some examples, the computing system 6302 determines a rate of change of the level of hydrogen present within the compartment (e.g., the first compartment 5710) based on concentration measurements obtained over time from the hydrogen sensors 5736.

Furthermore, the computing system 6302 is communicatively coupled to the control valves 5722-5728, the ventilation devices 5730, the vent valves 5732, and the quick release panel actuators 5920 via the communicative link(s) 6304. Thus, the computing system 6302 is configured to control operation of the control valves 5722-5728, the ventilation devices 5730, the vent valves 5732, and the quick release panel actuators 5920 based on measurement data from the hydrogen sensors 5736 to reduce the hydrogen concentration within the compartment(s) 5710-5718. In some examples, the computing system 6302 is communicatively coupled to another component of the aircraft 100, the turbofan engine 5502, and/or the hydrogen fuel system 5500.

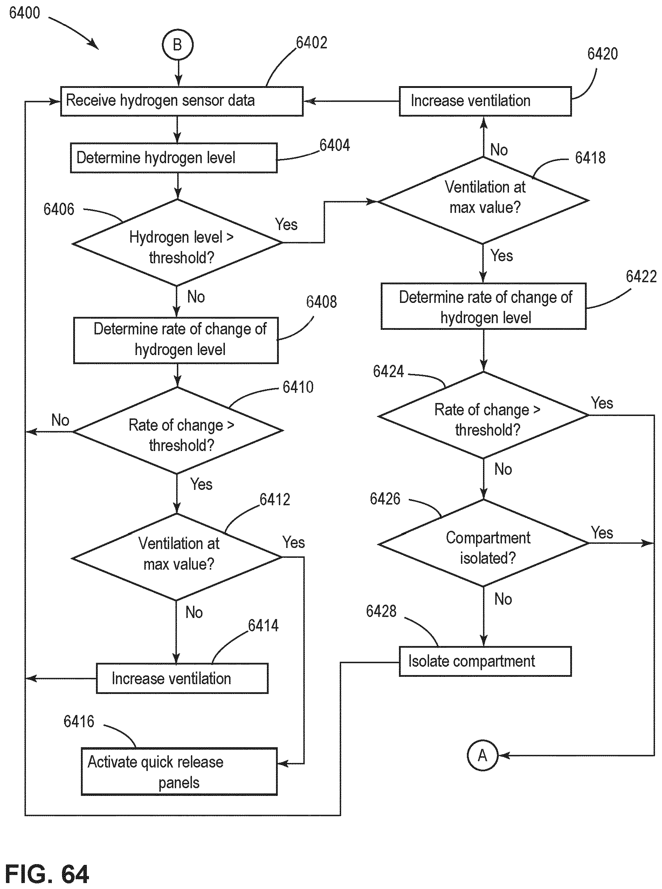

The computing system 6302 includes one or more processor(s) 6306 and associated memory device(s) 6308 configured to perform a variety of computer-implemented functions. The processor(s) 6306 may be implemented as an example processor platform. For example, the processor(s) 6306 can be the same as, integrated with, and/or connected to the processor platforms 1200, 2400, 3400, and/or 5400 illustrated in FIGS. 12, 24, 34, and/or 54. As such, the processor(s) 6306 may be structured to execute and/or instantiate the machine readable instructions and/or operations of FIGS. 64-66 to implement the fuel system 5500 of FIGS. 55-57 and/or the computing system 6302 of FIG. 63. The processor(s) 6306 can be, for example, full authority digital engine control (FADEC), a cockpit control panel assembly, avionics systems, a heads-up display (HUD), a mobile device (e.g., a laptop, a smart phone, a tablet such as an iPad™, etc.), etc. Additionally, the memory device(s) 6308 of the computing system 6302 may generally comprise memory element(s) including, but not limited to, a computer readable medium (e.g., random access memory RAM)), a computer readable non-volatile medium (e.g., a flash memory), a floppy disk, a compact disk-read only memory (CD-ROM), a magneto-optical disk (MOD), a digital versatile disk (DVD) and/or other suitable memory elements. Such memory device(s) 360 may generally be configured to store suitable computer-readable instructions that, when implemented by the processor(s) 6306 to configure the computing system 6302 to perform various computer-implemented functions, such as the machine-readable instructions of FIGS. 64-66. Additionally or alternatively, the computing system 6302 may also include a communications circuit or module, one or more input/output channels, a data/control bus and/or the like.

The various functions of the computing system 6302 may be performed by a single processor-based device or may be distributed across any number of processor-based devices, in which instance such devices may be considered to form part of the computing system 6302. For instance, the functions of the computing system 6302 may be distributed across multiple application-specific controllers or computing devices, such as a hydrogen fuel system controller, an engine controller, such as a FADEC, and/or other subsystem controllers.

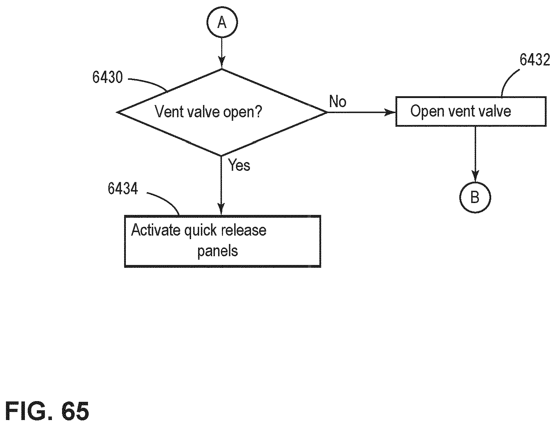

Referring now to FIGS. 64 and 65, a flow diagram of example control logic 6400 that may be executed by the computing system 6302 or another computing system (e.g., the controlling device 804 of FIGS. 8 and 9, etc.) for diluting hydrogen leaks within a vehicle is illustrated in accordance with aspects of the present subject matter. Specifically, the control logic 6400 shown in FIGS. 64 and 65 is representative of machine-readable instructions that can be executed to detect hydrogen leaks within a vehicle, reduce the level of hydrogen within the compartment(s) of the vehicle, and/or reduce the magnitude of the leak such that the vehicle continues to operate properly. In some examples, the control logic 6400 in the system 6300 to allow for real-time detection of hydrogen leaks without requiring substantial computing resources and/or processing time. In other examples, the control logic 6400 is used in another system, application, and/or the like for detecting and diluting hydrogen leaks within a vehicle, such as the controlling device 804.

For purposes of clarity, the control logic 6400 is described below in connection with the first compartment 5710 of the fuel system 5500. It should be appreciated that the control logic 6400 can simultaneously be implemented with another compartment of the fuel system 5500, such as the second, third, fourth, and/or fifth compartments 5712-5718. Thus, the control logic 6400 can be executed to detect hydrogen leaks and simultaneously initiate the appropriate control actions in all of the compartments of the fuel system 5500 to dilute the hydrogen leaks.

At block 6402, the computing system 6302 receives hydrogen concentration data from the hydrogen sensors 5736 indicating the level of hydrogen present within compartment(s) of a vehicle. Specifically, the computing system 6302 obtains hydrogen level data from the hydrogen sensors 5736 via the communicative link(s) 6304 indicating the level of hydrogen present within the first compartments 5710.

At block 6404, the computing system 6302 analyzes or otherwise processes the hydrogen sensor data to determine the level of hydrogen present within the first compartment 5710. For example, the processor(s) 6306 can calculate the parts per million of hydrogen compounds and/or atoms in the air based on the hydrogen sensor data, the volume of the first compartment 5710, and/or a rate of increase of hydrogen levels.

At block 6406, the computing system 6302 determines whether the level of hydrogen present within the compartment satisfies a first threshold value (e.g., a hydrogen concentration threshold, etc.). For example, the computing system 6302 compares the level of hydrogen present within the first compartment 5710 determines whether the level is

greater than the first threshold value. When computing system 6302 determines that the hydrogen levels do exceed the first threshold value, the control logic 6400 proceeds to block 6418. When the computing system 6302 determines that the hydrogen levels do not exceed the first threshold value, the control logic 6400 proceeds to block 6408.

**[0454]** At block 6408, the computing system 6302 determines the rate of change of the level of hydrogen present within the compartment based on the received hydrogen sensor data. For example, the computing system 6302 analyzes or otherwise processes hydrogen sensor data obtained over time to determine the rate of change of the hydrogen levels within the first compartment 5710.

**[0455]** At block 6410, the computing system 6302 compares the determined rate of change of the level of hydrogen present within the compartment to a second threshold value (e.g., a rate of change threshold, etc.). For example, the computing system 6302 compares the rate of change of hydrogen levels within the first compartment 5710 to the second threshold value. When the computing system 6302 determines that the rate of change of hydrogen levels within the first compartment 5710 does exceeds the second threshold value, the control logic 6400 proceeds to block 6412. Conversely, when the computing system 6302 determines that the rate of change of hydrogen levels within the first compartment 5710 does not exceed the second threshold value, the control logic 6400 returns to block 6402.

**[0456]** At block 6412, the computing system 6302 determines whether the ventilation for the compartment is at the maximum ventilation value. For example, the computing system 6302 analyzes the operation of the ventilation device 5730 associated with the first compartment 5710 to determine whether the ventilation device 5730 is operating at a maximum level (e.g., the fan 5822 is operating at a maximum speed). When the computing system 6302 determines that the ventilation device 5730 of the first compartment 5710 is not operating at the maximum level, the control logic 6400 proceeds to block 6414. Conversely, when the computing system 6302 determines that the ventilation device 5730 of the first compartment 5710 is operating at the maximum level, the control logic 6400 proceeds to block 6416.

**[0457]** At block 6414, the computing system 6302 increases the ventilation provided to the compartment. For example, the computing system 6302 is causes the louvers 5820 of the ventilation device 5810 of FIG. 58 to open to a larger degree. Additionally or alternatively, the computing system 6302 can cause the fan 5822 to operate at a higher speed. Following the operations of block 6414, the control logic 6400 returns to 6402.

**[0458]** At block 6416, the computing system 6302 activates the quick release panel associated with the compartment. For example, the computing system 6302 sends a control signal to the quick release panel actuator 5920 such that the quick release panel 5734 associated with the first compartment 5710 opens. Causing the quick release panel 5734 to open rapidly provides a large quantity of air to the first compartment 5710 and/or discharges leaked hydrogen from the first compartment 5710.

**[0459]** At block 6418, the computing system 6302 determines whether the ventilation for the compartment is at the maximum ventilation value. For example, the computing system 6302 can perform the same or substantially the same operations as those associated with block 6412. When the computing system 6302 determines that the first compartment 5710 is not venting hydrogen sufficiently, the control logic 6400 proceeds to block 6420. Conversely, when the computing system 6302 determines that the first compartment 5710 is venting hydrogen sufficiently, the control logic 6400 proceeds to 6422.

**[0460]** At block 6420, the computing system 6302 increases the ventilation provided to the compartment. For example, the computing system 6302 can perform the same or substantially the same operations as those associated with block 6414. Following completion of block 6420, the control logic 6400 returns to block 6402.

**[0461]** At block 6422, the computing system 6302 determines the rate of change of the hydrogen levels within the compartment based on the received hydrogen sensor data. For example, the computing system 6302 can perform the same or substantially the same operations as those associated with block 6408.

**[0462]** At block 6424, the computing system 6302 determines whether the rate of change of the hydrogen levels within the compartment satisfy the second threshold value. For example, the computing system 6302 can perform the same or substantially the same operations as those associated with block 6410. When the rate of change of hydrogen levels within the first compartment 5710 does exceed the second threshold, the control logic 6400 proceeds to block 6430 of FIG. 65. Conversely, when the rate of change of hydrogen levels within the first compartment 5710 does not exceed the second threshold, the control logic 6400 proceeds to block 6426.

**[0463]** At block 6426, the computing system 6302 determines whether the compartment is isolated. For example, the computing system 6302 determines whether the first control valve 5722 of the first compartment 5710 is in the closed position. When the computing system 6302 determines that the first compartment 5710 is isolated, the control logic 6400 proceeds to block 6430 of FIG. 65. Conversely, when the computing system 6302 determines that the first compartment 5710 is not isolated, the control logic 6400 proceeds to block 6428.

**[0464]** At block 6428, the computing system 6302 isolates the compartment. For example, the computing system 6302 causes the first control valve 5722 to close and prevent the flow of hydrogen from the first LH2 fuel tank 5506A and the first compartment 5710. The computing system 6302 can also close the ventilation device 5730 to further isolate the first compartment 5710. In some examples, the computing system 6302 causes the second control valve 5724 to open and allow the flow of hydrogen from the second LH2 fuel tank 5506B, which maintains operation of the engine 5502 after the

first compartment 5710 is isolated. Following completion of block 6428, the control logic 6400 returns to block 6402.

As shown in FIG. 65, at block 6430, the computing system 6302 determines whether the vent valve associated with the compartment is open. For example, the computing system 6302 determines whether the vent valve 5732 associated with the first compartment 5710 is in an open position. When the computing system 6302 determines that the vent valve 5732 is not open, the control logic 6400 proceeds to block 6432. Conversely, when the computing system 6302 determines that the vent valve 5732 is open, the control logic 6400 proceeds to block 6434.

At block 6432, the computing system 6302 opens the vent valve associated with the compartment. For example, the computing system 6302 sends a control signal to the vent valve 5732 associated with the first compartment 5710 that causes the vent valve 5732 to open. Such opening of the vent valve 5732 reduces the pressure in the first compartment 5710, which reduces the magnitude of the leak therein. Following completion of block 6432, the control logic 6400 returns to block 6402.

At block 6434, the computing system activates the quick release panel associated with the compartment. For example, the computing system 6302 performs operations that are the same and/or similar to those associate with block 6416 of FIG. 64. Following completion of block 6434, the control logic 6400 returns to block 6402.

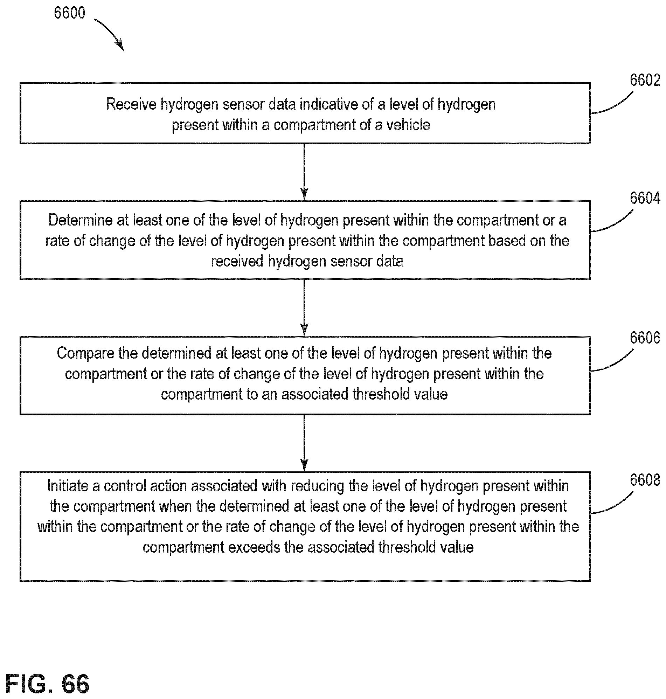

FIG. 66 illustrates a flow diagram of an example method 6600 for detecting hydrogen leaks within a vehicle in accordance with teachings of the above disclosure. The example method 6600 is described below in connection with the aircraft 100, the turbofan engine 5502, and the hydrogen fuel system 5500. However, it should be appreciated that the method 6600 may generally be implemented with another aircraft (e.g., the aircraft 300 of FIG. 3, etc.), another gas turbine engine (e.g., the turbofan engine 3600 of FIG. 36, etc.), and/or another hydrogen fuel storage/delivery system (e.g., the integrated tank system(s) 500-900 of FIG(S). 5-9, etc.). Furthermore, FIG. 66 depicts steps of the method 6600 in a particular order for purposes of illustration and discussion. However, the steps of the method 6600 described below can be executed in any other order or arrangement. As such, various steps of the method 6600 described below can be omitted, rearranged, combined, and/or adapted in various ways without deviating from the scope of the present disclosure.

At block 6602, the method 6600 includes receiving, with a computing system, hydrogen sensor data indicative of a level of hydrogen present within the compartment. For example, as described above, the computing system 6302 may receive hydrogen sensor data from the hydrogen sensors 5736. The received data is, in turn, indicative of the level of hydrogen present within the compartments 5710-5718 in which components of the hydrogen fuel system 5500 are present.

At block 6604, the method 6600 includes determining, with the computing system, at least one of the level of hydrogen present within the compartment or a rate of change of the level of hydrogen present within the compartment based on the data generated by the hydrogen sensor. For example, as described above, the computing system 6302 determines the level of hydrogen present within the compartments 5710-5718 and/or the rate of change of the level of hydrogen present within the compartments 5710-5718 based on the received hydrogen sensor data.

At block 6606, the method 6600 includes comparing, with the computing system, the determined at least one of the level of hydrogen present within the compartment or the rate of change of the level of hydrogen present within the compartment to an associated threshold value. For example, as described above, the computing system 6302 compares the determined level of hydrogen present within the compartments 5710-5718 and/or the rate of change of the level of hydrogen present within the compartments 5710-5718 to an associated threshold value(s).

At block 6608, the method 6600 includes initiating, with the computing system, a control action associated with reducing the level of hydrogen present within the compartment when the determined at least one of the level of hydrogen present within the compartment or the rate of change of the level of hydrogen present within the compartment exceeds the associated threshold value. For example, as described above, when the determined the level of hydrogen present within the compartments 5710-5718 and/or the rate of change of the level of hydrogen present within the compartments 5710-5718 exceeds the associated threshold value(s), the computing system 6302 initiates one or more control actions associated with reducing the level of hydrogen present within the compartments 5710-5718.From the foregoing, it should be appreciated that example integrated cryogenic hydrogen tank systems ("integrated tank systems") are disclosed herein that enable multiple cryogenic tanks to operate as a single vessel on a hydrogen aircraft. Example integrated tank systems disclosed herein can include example LH2 refueling systems to refuel the LH2 tanks of the example integrated tank systems substantially simultaneously via one refueling line. Furthermore, example integrated tank systems disclosed herein can include example phase separating LH2 pump systems to extract LH2 from the LH2 tanks of the example integrated tank systems substantially simultaneously via one extraction line. In some examples, the example integrated tank systems disclosed herein can include extraction lines to transmit LH2 and/or GH2 to hydrogen fuel cell power systems for electronically powering various onboard systems. Example integrated cryogenic hydrogen tank systems disclosed herein can further include monitoring systems to detect the health and safety of cryogenic hydrogen tanks, flowlines, fuel supply systems, and/or fuel consumption systems associated with disclosed examples. In some examples, the example integrated tank systems disclosed herein can include example fuel systems for detecting and diluting hydrogen leaks that may occur from the example integrated tank systems. As such, it should be appreciated that other example systems, apparatus, and methods are disclosed herein that improve the functionality and efficiency of the example integrated cryogenic hydrogen tank systems disclosed herein.

The following claims are hereby incorporated into this Detailed Description by this reference. Although certain example systems, methods, apparatus, and articles of manufacture have been disclosed herein, the scope of coverage of this patent is not limited thereto. On the contrary, this patent covers all systems, methods, apparatus, and articles of manufacture fairly falling within the scope of the claims of this patent.

**Claims**

1. A system to integrate multiple cryogenic tanks on an aircraft, the system comprising:

   a first cryogenic tank (400a) coupled to a second cryogenic tank (400b) via a liquid hydrogen, LH2, transfer flowline (502) and a gaseous hydrogen, GH2, transfer flowline (504), the LH2 transfer flowline (502) and the GH2 transfer flowline (504) to maintain a fuel level and a vapor pressure across the system, the fuel level corresponding to a liquid hydrogen;
   an inlet port (420) connected to one of the first cryogenic tank (400a) or the second cryogenic tank (400b);
   an LH2 extraction flowline (422) connected to at least one of the first or second cryogenic tanks (400a, 400b) to supply the liquid hydrogen to a fuel management system;
   a pressure safety system (602) coupled to at least one of the first or second cryogenic tanks (400a, 400b) via a GH2 extraction flowline;
   a first isolation valve in the LH2 transfer flowline (502) to enable or inhibit flow of the liquid hydrogen between the first and second cryogenic tanks (400a, 400b); and
   a second isolation valve in the GH2 transfer flowline (504) to enable or inhibit flow of hydrogen vapor between the first and second cryogenic tanks (400a, 400b).

2. The system of claim 1, wherein the LH2 transfer flowline (502), the GH2 transfer flowline (504), and the LH2 extraction flowline (422) are vacuum jacketed flowlines.

3. The system of any preceding claim, wherein the pressure safety system (602) includes a pressure safety valve and a burst disc, the pressure safety valve to release the vapor pressure in the first and second cryogenic tanks (400a, 400b) when the vapor pressure satisfies a safety threshold, the burst disc to rupture when the pressure safety valve malfunctions.

4. The system of any preceding claim, further including a thermosiphon loop integrated into one of the first or second cryogenic tanks (400a, 400b) to regulate the vapor pressure of the system.

5. The system of any preceding claim, further including a heating system in one of the first or second cryogenic tanks (400a, 400b) to regulate the vapor pressure of the system.

6. The system of any preceding claim, wherein the first cryogenic tank (400a) is included in a first group of cryogenic tanks, and the second cryogenic tank (400b) is included in a second group of cryogenic tanks, further including:

   a first set of LH2 transfer flowlines and GH2 transfer flowlines to couple the first group of cryogenic tanks in series;
   a second set of LH2 transfer flowlines and GH2 transfer flowlines to couple the second group of cryogenic tanks in series;
   a third set of LH2 transfer flowlines and GH2 transfer flowlines to couple the first and second groups of cryogenic tanks in parallel; and
   a plurality of isolation valves in the first set, the second set, and the third set of LH2 transfer flowlines and GH2 transfer flowlines to enable or inhibit flow between the first and second groups of tanks.

7. The system of claim 6, wherein the pressure safety system (602) is a first pressure safety system coupled to the first group of cryogenic tanks via a plurality of first GH2 extraction flowlines, further including a second pressure safety system coupled to the second group of cryogenic tanks via a plurality of second GH2 extraction flowlines.

8. The system of any preceding claim, wherein the LH2 extraction flowline (422) is a first LH2 extraction flowline connected to the first cryogenic tank (400a), further including a second LH2 extraction flowline connected to the second cryogenic tank (400b).

9. The system of any preceding claim, further comprising:
   a controlling device including processor circuitry to execute machine-readable instructions to at least:

   monitor a first vapor pressure in the first cryogenic tank (400a) and a second vapor pressure in the second cryogenic tank (400b);
   determine whether the first or second vapor pressure satisfies a threshold; and
   in response to determining that the first or second vapor pressure does not satisfy the threshold, close the first and second isolation valves.

10. A method comprising:

    opening a first isolation valve coupled to a liquid hydrogen, LH2, transfer flowline (502) and a second isolation valve coupled to a gaseous hydrogen, GH2, transfer flowline (504), the LH2 and GH2 transfer flowlines (502, 504) interconnected between a first tank and a second tank;
    detecting a first vapor pressure of the first tank and a second vapor pressure of the second tank;
    determining whether the first and second vapor pressures satisfy a threshold; and
    closing the first and second isolation valves when the first vapor pressure or the second vapor pressure does not satisfy the threshold.

11. The method of claim 10, wherein the threshold is a first threshold, further including:

    determining whether the first or second vapor pressures satisfies a second threshold; and
    at least one of:

    opening an automatic valve of a thermosiphon loop when the first or second vapor pressures does not satisfy the second threshold, the thermosiphon loop to increase a vapor pressure in the first and second tanks; or
    activating a heating system in the first or second tanks when the first or second vapor pressures does not satisfy the second threshold, the heating system to increase a vapor pressure in the first and second tanks.

12. The method of claim 10 or 11, wherein the first tank is included in a first group of tanks connected in series, the second tank is included in a second group of tanks connected in series, the first and second groups of tanks connected in parallel.

**Patentansprüche**

1. System zum Integrieren mehrerer kryogener Tanks in einem Flugzeug, wobei das System umfasst:

   einen ersten kryogenen Tank (400a), der mit einem zweiten kryogenen Tank (400b) über eine Durchflussleitung (502) zum Transfer von Flüssigwasserstoff, LH2, und eine Durchflussleitung (504) zum Transfer von gasförmigen Wasserstoff, GH2, gekoppelt ist, wobei die Durchflussleitung (502) zum LH2-Transfer und die Durchflussleitung (504) zum GH2-Transfer einen Kraftstoffpegel und einen Dampfdruck über das System hinweg aufrechterhalten, wobei der Kraftstoffpegel einem Flüssigwasserstoff entspricht;
   eine Einlassöffnung (420), die mit dem ersten kryogenen Tank (400a) oder dem zweiten kryogenen Tank (400b) verbunden ist;
   eine Durchflussleitung (422) zur LH2-Entnahme, die mit mindestens dem ersten oder zweiten kryogenen Tank (400a, 400b) verbunden ist, um den Flüssigwasserstoff einem Kraftstoffmanagementsystem zuzuführen;
   ein Drucksicherheitssystem (602), das über eine Durchflussleitung zur GH2-Entnahme mit mindestens dem ersten oder zweiten kryogenen Tank (400a, 400b) verbunden ist;
   ein erstes Absperrventil in der Durchflussleitung (502) zum LH2-Transfer, um den Fluss des Flüssigwasserstoffs zwischen dem ersten und dem zweiten kryogenen Tank (400a, 400b) zu ermöglichen oder zu unterbinden; und
   ein zweites Absperrventil in der Durchflussleitung (504) zum GH2-Transfer, um den Fluss von Wasserstoffdampf zwischen dem ersten und dem zweiten kryogenen Tank (400a, 400b) zu ermöglichen oder zu unterbinden.

2. System nach Anspruch 1, wobei die Durchflussleitung (502) zum LH2-Transfer, die Durchflussleitung (504) zum GH2-Transfer und die Durchflussleitung (422) zur LH2-Entnahme vakuumummantelte Durchflussleitungen sind.

3. System nach einem der vorhergehenden Ansprüche, wobei das Drucksicherheitssystem (602) ein Drucksicherheitsventil und eine Berstscheibe enthält, wobei das Drucksicherheitsventil den Dampfdruck in dem ersten und dem zweiten kryogenen Tank (400a, 400b) ablässt, wenn der Dampfdruck einen Sicherheitsschwellenwert erfüllt, und die Berstscheibe bricht, wenn das Drucksicherheitsventil nicht funktioniert.

4.  System nach einem der vorhergehenden Ansprüche, das ferner eine Thermosiphonschleife enthält, die in dem ersten oder zweiten kryogenen Tank (400a, 400b) integriert ist, um den Dampfdruck des Systems zu regulieren.

5.  System nach einem der vorhergehenden Ansprüche, das ferner ein Heizsystem in dem ersten oder zweiten kryogenen Tank (400a, 400b) enthält, um den Dampfdruck des Systems zu regulieren.

6.  System nach einem der vorhergehenden Ansprüche, wobei der erste kryogene Tank (400a) in einer ersten Gruppe von kryogenen Tanks enthalten ist und der zweite kryogene Tank (400b) in einer zweiten Gruppe von kryogenen Tanks enthalten ist, ferner enthaltend:

    einen ersten Satz von Durchflussleitungen zum LH2-Transfer und Durchflussleitungen zum GH2-Transfer, um die erste Gruppe von kryogenen Tanks in Reihe zu schalten;
    einen zweiten Satz von Durchflussleitungen zum LH2-Transfer und Durchflussleitungen zum GH2-Transfer, um die zweite Gruppe von kryogenen Tanks in Reihe zu schalten;
    einen dritten Satz von Durchflussleitungen zum LH2-Transfer und Durchflussleitungen zum GH2-Transfer, um die erste und die zweite Gruppe von kryogenen Tanks parallel zu schalten; und
    einer Mehrzahl von Absperrventilen in dem ersten Satz, dem zweiten Satz und dem dritten Satz von Durchflussleitungen zum LH2-Transfer und Durchflussleitungen zum GH2-Transfer, um den Fluss zwischen der ersten und der zweiten Gruppe von Tanks zu ermöglichen oder zu unterbinden.

7.  System nach Anspruch 6, wobei das Drucksicherheitssystem (602) ein erstes Drucksicherheitssystem ist, das über eine Mehrzahl von ersten Durchflussleitungen zur GH2-Entnahme mit der ersten Gruppe kryogener Tanks gekoppelt ist, ferner enthaltend ein zweites Drucksicherheitssystem, das über eine Mehrzahl von zweiten Durchflussleitungen zur GH2-Entnahme mit der zweiten Gruppe kryogener Tanks gekoppelt ist.

8.  System nach einem der vorhergehenden Ansprüche, wobei die Durchflussleitung zur LH2-Entnahme (422) eine erste Durchflussleitung zur LH2-Entnahme ist, die mit dem ersten kryogenen Tank (400a) verbunden ist, ferner enthaltend eine zweite Durchflussleitung zur LH2-Entnahme, die mit dem zweiten kryogenen Tank (400b) verbunden ist.

9.  System nach einem der vorhergehenden Ansprüche, ferner umfassend:
    eine Steuervorrichtung, die eine Prozessorschaltung enthält, um maschinenlesbare Anweisungen auszuführen, um zumindest:

    einen ersten Dampfdrucks in dem ersten kryogenen Tank (400a) und einen zweiten Dampfdrucks in dem zweiten kryogenen Tank (400b) zu überwachen;
    zu bestimmen, ob der erste oder zweite Dampfdruck einen Schwellenwert erfüllt; und
    als Reaktion auf das Bestimmen, dass der erste oder zweite Dampfdruck den Schwellenwert nicht erfüllt, das erste und zweite Absperrventil zu schließen.

10. Verfahren, umfassend:

    Öffnen eines ersten Absperrventils, das mit einer Durchflussleitung (502) zum Transfer von Flüssigwasserstoff, LH2, gekoppelt ist, und eines zweiten Absperrventils, das mit einer Durchflussleitung (504) zum Transfer von gasförmigem Wasserstoff, GH2, verbunden ist, wobei die Durchflussleitungen zum LH2-Transfer und zum GH2-Transfer (502, 504) zwischen einem ersten Tank und einem zweiten Tank miteinander verbunden sind;
    Erfassen eines ersten Dampfdrucks des ersten Tanks und eines zweiten Dampfdrucks des zweiten Tanks;
    Bestimmen, ob der erste und der zweite Dampfdruck einen Schwellenwert erfüllen; und
    Schließen des ersten und zweiten Absperrventils, wenn der erste Dampfdruck oder der zweite Dampfdruck den Schwellenwert nicht erfüllt.

11. Verfahren nach Anspruch 10, wobei der Schwellenwert ein erster Schwellenwert ist, ferner enthaltend:
    Bestimmen, ob der erste oder zweite Dampfdruck einen zweiten Schwellenwert erfüllt; und mindestens eines von:
    Öffnen eines automatischen Ventils einer Thermosiphonschleife, wenn der erste oder zweite Dampfdruck den zweiten Schwellenwert nicht erfüllt, wobei die Thermosiphonschleife einen Dampfdruck in dem ersten und zweiten Tanks erhöht; oder

Aktivieren eines Heizsystems in dem ersten oder zweiten Tank, wenn der erste oder zweite Dampfdruck den zweiten Schwellenwert nicht erfüllt, wobei das Heizsystem den Dampfdruck in dem ersten und zweiten Tank erhöht.

**12.** Verfahren nach Anspruch 10 oder 11, wobei der erste Tank in einer ersten Gruppe von in Reihe geschalteten Tanks enthalten ist, der zweite Tank in einer zweiten Gruppe von in Reihe geschalteten Tanks enthalten ist und die erste und zweite Gruppe von Tanks parallel geschaltet sind.

**Revendications**

**1.** Système permettant d'intégrer de multiples réservoirs cryogéniques sur un aéronef, le système comprenant :

un premier réservoir cryogénique (400a) couplé à un second réservoir cryogénique (400b) via une conduite d'écoulement de transfert d'hydrogène liquide, LH2, (502) et une conduite d'écoulement de transfert d'hydrogène gazeux, GH2, (504), la conduite d'écoulement de transfert de LH2 (502) et la conduite d'écoulement de transfert de GH2 (504) étant destinées à maintenir un niveau de combustible et une pression de vapeur dans l'ensemble du système, le niveau de combustible correspondant à de l'hydrogène liquide ;
un orifice d'entrée (420) relié à l'un du premier réservoir cryogénique (400a) ou du second réservoir cryogénique (400b) ;
une conduite d'écoulement d'extraction de LH2 (422) reliée à au moins l'un du premier et du second réservoirs cryogéniques (400a, 400b) pour fournir l'hydrogène liquide à un système de gestion de combustible ;
un système de sécurité de pression (602) couplé à au moins l'un du premier et du second réservoirs cryogéniques (400a, 400b) via une conduite d'écoulement d'extraction de GH2 ;
une première soupape d'isolement dans la conduite d'écoulement de transfert de LH2 (502) pour permettre ou empêcher l'écoulement de l'hydrogène liquide entre le premier et le second réservoirs cryogéniques (400a, 400b) ; et
une seconde soupape d'isolement dans la conduite d'écoulement de transfert de GH2 (504) pour permettre ou empêcher l'écoulement de vapeur d'hydrogène entre le premier et le second réservoirs cryogéniques (400a, 400b).

**2.** Système de la revendication 1, dans lequel la conduite d'écoulement de transfert de LH2 (502), la conduite d'écoulement de transfert de GH2 (504) et la conduite d'écoulement d'extraction de LH2 (422) sont des conduites d'écoulement à chemise sous vide.

**3.** Système de l'une quelconque des revendications précédentes, dans lequel le système de sécurité de pression (602) comprend une soupape de sécurité de pression et un disque de rupture, la soupape de sécurité de pression étant destinée à libérer la pression de vapeur dans le premier et le second réservoirs cryogéniques (400a, 400b) lorsque la pression de vapeur satisfait un seuil de sécurité, le disque de rupture étant destiné à se rompre lorsque la soupape de sécurité de pression présente un dysfonctionnement.

**4.** Système de l'une quelconque des revendications précédentes, comprenant en outre une boucle thermosiphon intégrée dans l'un du premier et du second réservoirs cryogéniques (400a, 400b) pour réguler la pression de vapeur du système.

**5.** Système de l'une quelconque des revendications précédentes, comprenant en outre un système de chauffage dans l'un du premier et du second réservoirs cryogéniques (400a, 400b) pour réguler la pression de vapeur du système.

**6.** Système de l'une quelconque des revendications précédentes, dans lequel le premier réservoir cryogénique (400a) est inclus dans un premier groupe de réservoirs cryogéniques, et le second réservoir cryogénique (400b) est inclus dans un second groupe de réservoirs cryogéniques, comprenant en outre :

un premier ensemble de conduites d'écoulement de transfert de LH2 et de conduites d'écoulement de transfert de GH2 pour coupler le premier groupe de réservoirs cryogéniques en série ;
un deuxième ensemble de conduites d'écoulement de transfert de LH2 et de conduites d'écoulement de transfert de GH2 pour coupler le second groupe de réservoirs cryogéniques en série ;
un troisième ensemble de conduites d'écoulement de transfert de LH2 et de conduites d'écoulement de transfert de GH2 pour coupler le premier et le second groupes de réservoirs cryogéniques en parallèle ; et

une pluralité de soupapes d'isolement dans le premier ensemble, le deuxième ensemble et le troisième ensemble de conduites d'écoulement de transfert de LH2 et de conduites d'écoulement de transfert de GH2 pour permettre ou empêcher l'écoulement entre le premier et le second groupes de réservoirs.

7. Système de la revendication 6, dans lequel le système de sécurité de pression (602) est un premier système de sécurité de pression couplé au premier groupe de réservoirs cryogéniques via une pluralité de premières conduites d'écoulement d'extraction de GH2, comprenant en outre un second système de sécurité de pression couplé au second groupe de réservoirs cryogéniques via une pluralité de secondes conduites d'écoulement d'extraction de GH2.

8. Système de l'une quelconque des revendications précédentes, dans lequel la conduite d'écoulement d'extraction de LH2 (422) est une première conduite d'écoulement d'extraction de LH2 reliée au premier réservoir cryogénique (400a), comprenant en outre une seconde conduite d'écoulement d'extraction de LH2 reliée au second réservoir cryogénique (400b).

9. Système de l'une quelconque des revendications précédentes, comprenant en outre :
un dispositif de commande comprenant des circuits de processeur destinés à exécuter des instructions lisibles par machine pour au moins :

surveiller une première pression de vapeur dans le premier réservoir cryogénique (400a) et une seconde pression de vapeur dans le second réservoir cryogénique (400b) ;
déterminer si la première ou la seconde pression de vapeur satisfait un seuil ; et
en réponse à la détermination que la première ou la seconde pression de vapeur ne satisfait pas le seuil, fermer la première et la seconde soupapes d'isolement.

10. Procédé comprenant :

l'ouverture d'une première soupape d'isolement couplée à une conduite d'écoulement de transfert d'hydrogène liquide, LH2, (502), et d'une seconde soupape d'isolement couplée à une conduite d'écoulement de transfert d'hydrogène gazeux, GH2, (504), les conduites d'écoulement de transfert de LH2 et de GH2 (502, 504) étant reliées entre elles entre un premier réservoir et un second réservoir;
la détection d'une première pression de vapeur du premier réservoir et d'une seconde pression de vapeur du second réservoir;
la détermination de si la première et la seconde pressions de vapeur satisfont un seuil ; et
la fermeture de la première et la seconde soupapes d'isolement lorsque la première pression de vapeur ou la seconde pression de vapeur ne satisfait pas le seuil.

11. Procédé de la revendication 10, dans lequel le seuil est un premier seuil, comprenant en outre :

la détermination de si la première ou la seconde pression de vapeur satisfait un second seuil ; et
au moins l'une parmi :

l'ouverture d'une soupape automatique d'une boucle thermosiphon lorsque la première ou la seconde pression de vapeur ne satisfait pas le second seuil, la boucle thermosiphon étant destinée à augmenter une pression de vapeur dans le premier et le second réservoirs ; ou
l'activation d'un système de chauffage dans le premier ou le second réservoir lorsque la première ou la seconde pression de vapeur ne satisfait pas le second seuil, le système de chauffage étant destiné à augmenter la pression de vapeur dans le premier et le second réservoirs.

12. Procédé de la revendication 10 ou 11, dans lequel le premier réservoir est inclus dans un premier groupe de réservoirs reliés en série, le second réservoir est inclus dans un second groupe de réservoirs reliés en série, le premier et le second groupes de réservoirs étant reliés en parallèle.

FIG. 1

FIG. 2

EP 4 365 086 B1

FIG. 3

**FIG. 4**

EP 4 365 086 B1

FIG. 5

FIG. 6

FIG. 7

EP 4 365 086 B1

FIG. 8

EP 4 365 086 B1

FIG. 9

FIG. 10

EP 4 365 086 B1

FIG. 11

FIG. 12

FIG. 13

FIG. 14

FIG. 15

FIG. 16

**FIG. 17**

FIG. 18A

FIG. 18B

FIG. 18C

FIG. 19

EP 4 365 086 B1

FIG. 20A

FIG. 20B

FIG. 20C

EP 4 365 086 B1

2100

GENERATE PRESSURE DIFFERENTIAL BETWEEN CRYOGENIC
REFUELING SYSTEM AND ONBOARD CRYOGENIC FUEL TANK — 2102

OPEN CRYOGENIC VALVE — 2104

SUB-COOL CRYOGENIC FUEL — 2106

MEASURE TEMPERATURE OVER TIME OF CRYOGENIC FUEL IN PRIMARY
FLOWLINE — 2108

DETERMINE DENSITY OVER TIME OF CRYOGENIC FUEL BASED ON
TEMPERATURE AND THERMODYNAMIC PROPERTIES OF CRYOGENIC
FUEL — 2110

MEASURE VOLUMETRC FLOWRATE OVER TIME OF CRYOGENIC FUEL IN
PRIMARY FLOWLINE — 2112

DETERMINE MASS OF CRYOGENIC FUEL SUPPLIED TO ONBOARD
CRYOGENIC FUEL TANK OVER TIME BASED ON FLOWRATE(S), TIME
PERIOD(S) OF FLOW, AND DENSITY — 2114

IS ONBOARD TANK AT MAXIMUM MASS CAPACITY OF CRYOGENIC
FUEL? — 2116

NO

YES

CLOSE CRYOGENIC VALVE — 2118

FIG. 21

2200

SEPARATE CRYOGENIC FUEL FLOW INTO PRIMARY FLOWLINE AND AUXILIARY FLOWLINE ⟋ 2202

REDUCE PRESSURE AND TEMPERATURE IN AUXILIARY FLOWLINE ⟋ 2204

DIRECT PRIMARY FLOWLINE AND AUXILIARY FLOWINE TO CRYOGENIC HEAT EXCHANGER ⟋ 2206

TRANSFER HEAT FROM PRIMARY FLOWLINE TO AUXILIARY FLOWLINE ⟋ 2208

DIRECT PRIMARY FLOWLINE TO TEMPERATURE SENSOR AND ONBOARD CYROGENIC FUEL TANK; DIRECT AUXILIARY FLOWLINE TO VAPORIZOR ⟋ 2210

FIG. 22

FIG. 23

FIG. 24

FIG. 25

FIG. 26

FIG. 27

EP 4 365 086 B1

CONTROLLING DEVICE 2814

PROCESSOR CIRCUITRY 2816

PRESSURE LOOP CIRCUITRY 2818

POSITION LOOP CIRCUITRY 2820

STORAGE DEVICE(S) 2822

INTERFACE CIRCUITRY 2824

FIG. 28

EP 4 365 086 B1

FIG. 29

EP 4 365 086 B1

FIG. 30

FIG. 31

FIG. 32

3300

START

3302

DETECT FIRST, SECOND, AND THIRD PRESSURE MEASUREMENTS

3304

DOES DIFFERENCE BETWEEN FIRST AND SECOND PRESSURE MEASUREMENTS SATISFY THRESHOLD?          YES

NO          3306

INCREASE PRESSURE OUTPUT OF FIRST REGULATOR VALVE

3308

DOES DIFFERENCE BETWEEN FIRST AND THIRD PRESSURE MEASUREMENTS SATISFY THRESHOLD?          YES

NO          3310

INCREASE PRESSURE OUTPUT OF SECOND REGULATOR VALVE

3312

DOES DIFFERENCE BETWEEN SECOND AND THIRD PRESSURE MEASEUREMENTS SATISFY THRESHOLD?          YES

NO          3314

INCREASE PRESSURE OUTPUT OF SECOND REGULATOR VALVE

3316

YES          CONTINUE PUMPING LIQUID HYDROGEN?

NO

END

FIG. 33

FIG. 34

FIG. 35

FIG. 36

FIG. 37

FIG. 38

EP 4 365 086 B1

**FIG. 39**

EP 4 365 086 B1

**FIG. 40**

**FIG. 41**

FIG. 42

FIG. 43

EP 4 365 086 B1

FIG. 44

FIG. 45

EP 4 365 086 B1

120

FIG. 46

4700

| OPERATING THE PROPULSOR TO CREATE A FLOW OF COMPRESSED AIR αc | 4710 |

↓

| PROVIDING THE FLOW OF COMPRESSED AIR αc TO A FUEL CELL ASSEMBLY SYSTEM | 4720 |

↓

| PROVIDING A FLOW OF HYDROGEN FUEL FROM A FUEL DELIVERY SYSTEM TO ONE OR MORE ENGINE HEAT EXCHANGERS POSITIONED WITHIN THE ENGINE | 4730 |

↓

| PROVIDING THE FLOW OF HYDROGEN FUEL FROM THE ONE OR MORE ENGINE HEAT EXCHANGERS TO A HEAT EXCHANGER LOCATED UPSTREAM OF THE FUEL CELL STACK | 4740 |

↓

| EXCHANGING HEAT BETWEEN THE FLOW OF COMPRESSED AIR αc AND THE FLOW OF HYDROGEN FUEL WITH A HEAT EXCHANGER LOCATED UPSTREAM OF THE FUEL CELL STACK | 4750 |

FIG. 47

4804

4802

4800

4808

4806

FIG. 48

FIG. 49

FIG. 50

FUEL DISTRIBUTION CONTROLLER
CIRCUITRY
4808

SENSOR INTERFACE
CIRCUITRY
5102

MASS FLOW DETERMINER
CIRCUITRY
5104

MASS LOSS DETERMINER
CIRCUITRY
5106

TRESHOLD COMPARATOR
CIRCUITRY
5108

FUEL DISTRIBUTION SYSTEM
INTERFACE CIRCUITRY
5110

NOTIFICATION GENERATOR
CIRCUITRY
5112

DATA STORAGE
5114

FIG. 51

**FIG. 52A**

**FIG. 52B**

5300

START

RECEIVE SENSOR DATA FROM AIRCRAFT FUEL DISTRIBUTION SYSTEM — 5302

DETERMINE HYDROGREN MASS FLOW ASSOCIATED WITH OUTLET OF HYDROGEN STORAGE TANK(S) — 5304

DETERMINE HYDROGEN MASS FLOW ASSOCIATED WITH INLET OF COMBUSTOR — 5306

VENT VALVE OPENED? — 5308
NO
YES

DETERMINE HYDROGREN MASS FLOW THROUGH VENT VALVE — 5310

DETERMINE AVERAGE MASS LOSS OF HYDROGEN OVER A PERIOD OF TIME — 5312

AVERAGE MASS LOSS SATISFY A FIRST THRESHOLD? — 5314
NO
YES

ISSUE A NOTIFICATION TO RECALIBRATE SENSORS — 5316

AVERAGE MASS LOSS SATISFY A SECOND THRESHOLD? — 5318
NO
YES

ISSUE A NOTIFICATION THAT HYDROGEN LEAK IS PRESENT IN FUEL DISTRIBUTION SYSTEM — 5320

IDENTIFY PORTION OF FUEL DISTRIBUTION SYSTEM INCLUDING THE LEAK — 5322

ISOLATE PORTION OF FUEL DISTRIBUTION SYSTEM INCLUDING LEAK — 5324

END

**FIG. 53**

5400

1214

VOLATILE
MEMORY

INSTR
5432

1217

MEMORY
CONTROLLER

1216

NON-VOLATILE
MEMORY

INSTR
5432

BUS
1218

1212

PROCESSOR
CIRCUITRY

LOCAL MEMORY
1213

INSTR
5432

| 5102 | 5104 |
| 5106 | 5108 |
| 5110 | 5112 |

1228

MASS
STORAGE

1222

INPUT
DEVICE(S)

1220

INTERFACE

1224

OUTPUT
DEVICE(S)

5432

CODED
INSTRUCTIONS

1226

NETWORK

**FIG. 54**

FIG. 55

FIG. 56

**FIG. 57**

132

FIG. 58

FIG. 59

FIG. 60

FIG. 61

FIG. 62

FIG. 63

6400

6402

(B)

Receive hydrogen sensor data ← Increase ventilation 6420

Determine hydrogen level 6404

6406

Hydrogen level > threshold? — Yes → Ventilation at max value? 6418

No

No

Determine rate of change of hydrogen level 6408

Yes

Determine rate of change of hydrogen level 6422

6410

No ← Rate of change > threshold?

6424

Rate of change > threshold? — Yes

Yes

No

6412

Ventilation at max value? — Yes

6426

Compartment isolated? — Yes →

No

No

6414

Increase ventilation 6428

Isolate compartment

6416

Activate quick release panels

(A)

FIG. 64

A

6432

6430

Vent valve open? → No → Open vent valve

Yes

6434

Activate quick release panels

B

# FIG. 65

6600

6602
Receive hydrogen sensor data indicative of a level of hydrogen
present within a compartment of a vehicle

6604
Determine at least one of the level of hydrogen present within the compartment or a
rate of change of the level of hydrogen present within the compartment based on the
received hydrogen sensor data

6606
Compare the determined at least one of the level of hydrogen present within the
compartment or the rate of change of the level of hydrogen present within the
compartment to an associated threshold value

6608
Initiate a control action associated with reducing the level of hydrogen present within
the compartment when the determined at least one of the level of hydrogen present
within the compartment or the rate of change of the level of hydrogen present within the
compartment exceeds the associated threshold value

## FIG. 66

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2466188 A2

- US 2009071171 A1